(19) Europäisches Patentamt
European Patent Office
Office européen des brevets

(11) **EP 3 870 527 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **19816498.0**

(22) Anmeldetag: **23.10.2019**

(51) Internationale Patentklassifikation (IPC):
**B65G 1/04** *(2006.01)* **B65G 1/137** *(2006.01)*

(52) Gemeinsame Patentklassifikation (CPC):
**B65G 1/1378; B65G 1/0485**

(86) Internationale Anmeldenummer:
**PCT/AT2019/060352**

(87) Internationale Veröffentlichungsnummer:
**WO 2020/082101 (30.04.2020 Gazette 2020/18)**

(54) **LAGER- UND KOMMISSIONIERSYSTEM SOWIE KOMMISSIONIERVERFAHREN FÜR AUTOMATISCH UND MANUELL ZU KOMMISSIONIERENDE WAREN**

STORAGE AND COMMISSIONING SYSTEM AND METHOD FOR AUTOMATIC AND MANUAL COMMISSIONING OF GOODS

SYSTÈME DE STOCKAGE ET DE PRÉPARATION DE COMMANDES ET PROCÉDÉ DE PRÉPARATION AUTOMATIQUE ET MANUELLE DE COMMANDES D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.10.2018 AT 509172018**

(43) Veröffentlichungstag der Anmeldung:
**01.09.2021 Patentblatt 2021/35**

(60) Teilanmeldung:
**23157833.7**

(73) Patentinhaber: **TGW Logistics Group GmbH 4614 Marchtrenk (AT)**

(72) Erfinder:
• **AHAMMER, Christian 4623 Gunskirchen (AT)**
• **HASLEHNER, Christoph 4731 Prambachkirchen (AT)**
• **SCHRÖPF, Harald 4600 Wels (AT)**

(74) Vertreter: **Burger, Hannes Anwälte Burger & Partner Rechtsanwalt GmbH Rosenauerweg 16 4580 Windischgarsten (AT)**

(56) Entgegenhaltungen:
**WO-A1-2015/118171 WO-A1-2017/198280 US-A1- 2013 223 959**

**Beschreibung**

Die Erfindung betrifft ein Verfahren zum Kommissionieren von Waren von Quell-Ladehilfsmitteln in oder auf Ziel-Ladehilfsmittel in einem Lager- und Kommissioniersystem, bei dem Waren in oder auf Quell-Ladehilfsmitteln in einem Lagerbereich bereitgestellt werden und Aufträge zum Kommissionieren von Waren erfasst werden. Weiterhin werden die für diese Aufträge benötigten Waren bestimmt, wobei wenigstens ein Auftrag der Aufträge mehrere Auftragszeilen umfasst und wobei jede Auftragszeile zumindest eine Ware nach ihrer Warentype und ihrer zu kommissionierenden Stückzahl spezifiziert. Weiterhin betrifft die Erfindung ein Lager- und Kommissioniersystem zum Kommissionieren von Waren von Quell-Ladehilfsmitteln in oder auf Ziel-Ladehilfsmittel mit einem Lagerbereich zum Bereitstellen der Waren in oder auf Quell-Ladehilfsmitteln und einem Steuerungssystem zum Erfassen von Aufträgen zum Kommissionieren von Waren und zum Bestimmen der für diese Aufträge benötigten Waren, wobei wenigstens ein Auftrag der Aufträge mehrere Auftragszeilen umfasst und wobei jede Auftragszeile zumindest eine Ware nach ihrer Warentype und ihrer zu kommissionierenden Stückzahl spezifiziert.

Beispielsweise offenbart die EP 2 297 005 B1 in diesem Zusammenhang ein Lagersystem und ein Verfahren zum Betreiben desselben, wobei auf Anlieferungsgebinden mehrere unterschiedliche Verpackungseinheiten als Lagereinheiten in einem Warenlager gelagert sind. Die Eigenschaften der Verpackungseinheiten werden in einer Datenbank erfasst, und die Eigenschaften der Verpackungseinheit werden verwendet, um eine Fördereigenschaft zu bestimmen. Ein Computer ordnet die Verpackungseinheiten einer Klassifikationsgruppe zu. Die Verpackungseinheiten werden entsprechend der Klassifikationsgruppe im Lagersystem verteilt, zwischengelagert und auf Auslieferungsgebinde geladen.

Es werden von den Packeinheitentypen jene Eigenschaften erfasst, die wesentliche Auswirkungen auf deren Förder- und Lagerungsmethode zeigen. Die Packeinheiten können danach anhand der Klassifikationsgruppe koordiniert vollautomatisiert oder teilautomatisiert im Lagersystem verteilt und gelagert werden. In die zweite Klassifikationsgruppe fallen jene Packeinheiten, die im Lagersystem zwischen einer Aufgabe- und Abgabestation teilautomatisiert verteilt und gelagert werden können. Die Packeinheiten der ersten Klassifikationsgruppe können ohne zusätzliches Ladehilfsmittel im Lagersystem sowohl verteilt als auch gelagert werden, während die Packeinheiten der zweiten Klassifikationsgruppe von Vorratseinheiten in Ladungsträger manuell umgeladen und mittels dieser verteilt und gelagert werden.

Das bekannte System zielt darauf ab, die Beförderung und Lagerung von Verpackungseinheiten in einem Lagersystem zu verbessern. Durch das Aufkommen des E-Commerce beziehungsweise der direkten Belieferung von Endkunden im Versandhandel - vorwiegend mit Waren geringer Stückzahl - hat sich jedoch der Kommissionierbereich eines Lager- und Kommissioniersystems zum "Hot Spot" entwickelt, also zu einem Bereich der leistungstechnisch kritisch ist. Die EP 2 297 005 B1 spricht dieses Problem jedoch nicht oder nur ungenügend an.

Die WO 2017/198280 A1 offenbart ein Verfahren zum Kommissionieren von Waren von Quell-Ladehilfsmitteln in oder auf Ziel-Ladehilfsmittel in einem Lager- und Kommissioniersystem gemäß dem Oberbegriff des Anspruchs 1 sowie ein Lager- und Kommissioniersystem gemäß dem Oberbegriff des Anspruchs 21.

Eine Aufgabe der Erfindung ist es, ein verbessertes Verfahren zum Kommissionieren von Waren beziehungsweise ein verbessertes Lager- und Kommissioniersystem zum Kommissionieren von Waren anzugeben. Insbesondere soll die Bearbeitung von Kundenaufträgen effizienter gestaltet werden.

Die Aufgabe der Erfindung wird durch ein Verfahren zum Kommissionieren von Waren von Quell-Ladehilfsmitteln in oder auf Ziel-Ladehilfsmittel in einem Lager- und Kommissioniersystem gelöst, umfassend die Schritte

a) Bereitstellen der Waren in oder auf Quell-Ladehilfsmitteln in einem Lagerbereich,

b) Erfassen von Aufträgen zum Kommissionieren von Waren und Bestimmen der für diese Aufträge benötigten Waren, wobei wenigstens ein Auftrag der Aufträge mehrere Auftragszeilen umfasst und wobei jede Auftragszeile zumindest eine Ware nach ihrer Warentype und ihrer zu kommissionierenden Stückzahl spezifiziert,

c) Ermitteln der Zugehörigkeit der für die Bearbeitung des genannten Auftrags benötigten Waren zu Warentypengruppen, welche jeweils mehrere Warentypen umfassen, wobei eine erste Warentypengruppe Warentypen enthält, die automatisch handhabbar sind, und eine zweite Warentypengruppe Warentypen enthält, die nicht oder nur eingeschränkt automatisch, jedoch manuell handhabbar sind,

d) Bestimmen eines ersten Auftragsteils, dessen zumindest eine Ware der ersten Warentypengruppe angehört und demnach automatisch handhabbar ist, und eines zweiten Auftragsteils, dessen zumindest eine Ware der zweiten Warentypengruppe angehört und demnach nicht oder nur eingeschränkt automatisch, jedoch manuell handhabbar ist,

e) Auslagern eines ersten Quell-Ladehilfsmittels mit der zumindest einen Ware des ersten Auftragsteils aus dem Lagerbereich des Lager- und Kommissioniersystems, Transportieren des ersten Quell-Ladehilfsmittels (direkt) zu einer ersten automatischen Kommissionierstation, Bereitstellen des ersten Quell-Ladehilfsmittels an der ersten automatischen Kommissionierstation und automatisches Entnehmen der zumindest einen Ware des ersten Auftragsteils vom ersten Quell-Ladehilfsmittel an der ersten automatischen Kommissionierstation,

f) Auslagern eines zweiten Quell-Ladehilfsmittels mit der zumindest einen Ware des zweiten Auftragsteils aus dem Lagerbereich des Lager- und Kommissioniersystems, Transportieren des zweiten Quell-Ladehilfsmittels (direkt) zu einer ersten manuellen Kommissionierstation, Bereitstellen des zweiten Quell-Ladehilfsmittels an der ersten manuellen Kommissionierstation und manuelles Entnehmen der zumindest einen Ware des zweiten Auftragsteils vom zweiten Quell-Ladehilfsmittel an der ersten manuellen Kommissionierstation und

g) Abgeben (beziehungsweise Laden) der zumindest einen Ware des ersten Auftragsteils und der zumindest einen Ware des zweiten Auftragsteils in oder auf ein Ziel-Ladehilfsmittel, wobei das erste Quell-Ladehilfsmittel mit der zumindest einen Ware des ersten Auftragsteils dem zweiten Auftragsteil zugeteilt wird, zu einer ersten manuellen Kommissionierstation transportiert und dort bereitgestellt wird und in Folge die zumindest eine genannte Ware des zweiten Auftragsteils manuell in oder auf ein Ziel-Ladehilfsmittel geladen wird, wenn für die zumindest eine Ware des ersten Auftragsteils in der betreffenden Auftragszeile eine Stückzahl angegeben ist, welche einen Stückzahl-Schwellwert überschreitet.

Weiterhin wird die Aufgabe der Erfindung durch ein Lager- und Kommissioniersystem zum Kommissionieren von Waren von Quell-Ladehilfsmitteln in oder auf Ziel-Ladehilfsmittel gelöst, umfassend

einen Lagerbereich zum

- Bereitstellen der Waren in oder auf Quell-Ladehilfsmitteln,

ein Steuerungssystem zum

- Erfassen von Aufträgen zum Kommissionieren von Waren und zum Bestimmen der für diese Aufträge benötigten Waren, wobei wenigstens ein Auftrag der Aufträge mehrere Auftragszeilen umfasst und wobei jede Auftragszeile zumindest eine Ware nach ihrer Warentype und ihrer zu kommissionierenden Stückzahl spezifiziert,
- Ermitteln der Zugehörigkeit der für die Bearbeitung des genannten Auftrags benötigten Waren zu Warentypengruppen, welche jeweils mehrere Warentypen umfassen, wobei eine erste Warentypengruppe Warentypen enthält, die automatisch handhabbar sind, und eine zweite Warentypengruppe Warentypen enthält, die nicht oder nur eingeschränkt automatisch, jedoch manuell handhabbar sind, und
- Bestimmen eines ersten Auftragsteils, dessen zumindest eine Ware der ersten Warentypengruppe angehört und demnach automatisch handhabbar ist und eines zweiten Auftragsteils, dessen zumindest eine Ware der zweiten Warentypengruppe angehört und demnach nicht oder nur eingeschränkt automatisch, jedoch manuell handhabbar ist, und

eine Fördertechnik zum

- Auslagern eines ersten Quell-Ladehilfsmittels mit der zumindest einen Ware des ersten Auftragsteils aus dem Lagerbereich des Lager- und Kommissioniersystems, Transportieren des ersten Quell-Ladehilfsmittels (direkt) zu einer ersten automatischen Kommissionierstation, Bereitstellen des ersten Quell-Ladehilfsmittels an der ersten automatischen Kommissionierstation, an der die zumindest eine Ware des ersten Auftragsteils vom ersten Quell-Ladehilfsmittel automatisch entnehmbar ist, und
- Auslagern eines zweiten Quell-Ladehilfsmittels mit der zumindest einen Ware des zweiten Auftragsteils aus dem Lagerbereich des Lager- und Kommissioniersystems, Transportieren des zweiten Quell-Ladehilfsmittels (direkt) zu einer ersten manuellen Kommissionierstation und Bereitstellen des zweiten Quell-Ladehilfsmittels an der ersten manuellen Kommissionierstation, an der die zumindest eine Ware des zweiten Auftragsteils vom zweiten Quell-Ladehilfsmittel manuell entnehmbar ist,

wobei die erste automatische Kommissionierstation für ein automatisches Abgeben (beziehungsweise Laden) der zumindest einen Ware des ersten Auftragsteils und die erste manuelle Kommissionierstation für ein manuelles Abgeben (beziehungsweise Laden) der zumindest einen Ware des zweiten Auftragsteils in oder auf ein Ziel-Ladehilfsmittel ausgebildet ist,
wobei das Steuerungssystem zusätzlich dazu ausgebildet ist, das erste Quell-Ladehilfsmittel mit der zumindest einen Ware des ersten Auftragsteils dem zweiten Auftragsteil zuzuteilen, mithilfe der Fördertechnik zu der ersten manuellen Kommissionierstation zu transportieren und dort bereitzustellen und in Folge ein Laden der zumindest einen genannten Ware des zweiten Auftragsteils manuell in oder auf ein Ziel-Ladehilfsmittel anzuweisen, wenn für die zumindest eine Ware des ersten Auftragsteils in der betreffenden Auftragszeile eine Stückzahl angegeben ist, welche einen Stückzahl-Schwellwert überschreitet.

Durch die vorgeschlagenen Maßnahmen kann die Kommissionierung bei hohem Automatisierungsgrad weitgehend störungsfrei erfolgen. Die Ausführung von Kundenaufträgen wird damit deutlich verbessert, insbesondere bei einer Einzelstück-Kommissionierung. Auch wird mit den vorgeschlagenen Maßnahmen vermieden, dass Waren einer Auftragszeile mit einer hohen Stückzahl, die zwar grundsätzlich automatisch kommissionierbar sind und daher dem ersten Auftragsteil angehören, deren automatische Kommissionierung aber aufgrund der hohen Stückzahl ungünstig ist, zu einer ersten automatischen Kommissionierstation transportiert und dort bereitgestellt werden. Diese Waren werden dem zweiten Auftragsteil zugeordnet und in Folge manuell kommissioniert.

Bei dieser Variante macht man sich den Umstand zunutze, dass menschliche Kommissionierer beim Kommissioniervorgang häufig mehrere Waren gleichzeitig manipulieren, das heißt von einem Quell-Ladehilfsmittel in oder auf ein Ziel-Ladehilfsmittel umladen, wohingegen Roboter häufig nur eine oder nur einige wenige Waren gleichzeitig manipulieren beziehungsweise umladen können. Dem Menschen kommt hier nicht nur zugute, dass er über zwei Hände und zwei Arme verfügt, wohingegen Roboter zumeist nur einen Arm beziehungsweise Greifer aufweisen, sondern auch, dass Menschen in der Lage sind, Waren während des Umladevorgangs übereinander zu stapeln und somit den Kommissioniervorgang zu beschleunigen.

Dies stellt eine Abkehr von jenem Prinzip dar, nach dem ein Roboter möglichst hohe Stückzahlen kommissionieren soll. Insgesamt kann auf diese Weise jedoch die Zeit, die für die Abarbeitung eines Kommissionierauftrags nötig ist, bei nur geringer Fehlerrate kurz gehalten werden.

Vorteilhaft ist es, wenn Warentypen, bei denen eine Fehlerrate bei automatischer Handhabung kleiner gleich einem ersten Schwellwert ist, der ersten Warentypengruppe zugeteilt werden und Warentypen, bei denen eine Fehlerrate bei automatischer Handhabung größer als der erste Schwellwert ist, der zweiten Warentypengruppe zugeteilt werden, wobei als Fehlerrate der Quotient der bei der (automatischen) Kommissionierung auftretenden Fehlhandhabungen dividiert durch die Gesamtanzahl der (automatischen) Handhabungen vorgesehen ist.

Die Begriffe "Handhabung" oder "Manipulation" umfassen insbesondere die Entnahme einer Ware von einem Quell-Ladehilfsmittel, die Abgabe einer Ware in oder auf ein Ziel-Ladehilfsmittel oder das Umladen einer Ware von einem Quell-Ladehilfsmittel in oder auf ein Ziel-Ladehilfsmittel.

Als "Umladen" wird generell das Entnehmen einer Ware von einem Quell-Ladehilfsmittel und das Abgeben/Laden dieser Ware in oder auf ein Ziel-Ladehilfsmittel bezeichnet.

"Automatische Handhabung" umfasst demzufolge insbesondere die automatische Entnahme einer Ware von einem Quell-Ladehilfsmittel, die automatische Abgabe einer Ware in oder auf ein Ziel-Ladehilfsmittel oder das automatische Umladen einer Ware von einem Quell-Ladehilfsmittel in oder auf ein Ziel-Ladehilfsmittel. Während des Kommissioniervorgangs umfasst die "automatische Handhabung" insbesondere die automatische Entnahme einer Ware des ersten Auftragsteils von einem ersten Quell-Ladehilfsmittel, die automatische Abgabe einer Ware des ersten Auftragsteils in oder auf ein erstes Ziel-Ladehilfsmittel oder das automatische Umladen einer Ware des ersten Auftragsteils von einem ersten Quell-Ladehilfsmittel in oder auf ein erstes Ziel-Ladehilfsmittel. "Automatisch handhabbar" sind Waren dann, wenn sie für eine "automatische Handhabung" geeignet sind beziehungsweise wenn eine bestimmte Fehlerrate bei "automatischer Handhabung" nicht überschritten wird.

"Manuelle Handhabung" umfasst demzufolge insbesondere die manuelle Entnahme einer Ware von einem Quell-Ladehilfsmittel, die manuelle Abgabe einer Ware in oder auf ein Ziel-Ladehilfsmittel oder das manuelle Umladen einer Ware von einem Quell-Ladehilfsmittel in oder auf ein Ziel-Ladehilfsmittel. Während des Kommissioniervorgangs umfasst die "manuelle Handhabung" insbesondere die manuelle Entnahme einer Ware des zweiten Auftragsteils von einem zweiten Quell-Ladehilfsmittel, die manuelle Abgabe einer Ware des zweiten Auftragsteils in oder auf ein erstes oder zweites Ziel-Ladehilfsmittel oder das manuelle Umladen einer Ware des zweiten Auftragsteils von einem zweiten Quell-Ladehilfsmittel in oder auf ein erstes oder zweites Ziel-Ladehilfsmittel. "Manuell handhabbar" sind Waren insbesondere dann, wenn sie nicht oder nur schwer automatisch handhabbar sind.

Eine "Fehlhandhabung" ist eine Handhabung (also eine Entnahme einer Ware von einem Quell-Ladehilfsmittel, eine Abgabe einer Ware in oder auf ein Ziel-Ladehilfsmittel oder ein Umladen einer Ware von einem Quell-Ladehilfsmittel in oder auf ein Ziel-Ladehilfsmittel), welche nicht in der erwarteten oder geplanten Weise ausgeführt wird oder abgebrochen wird.

Insbesondere können die folgenden Maßzahlen als Fehlerrate vorgesehen sein:

- der Quotient der Anzahl der fehlgeschlagenen automatischen Entnahmen von Waren von einem ersten Quell-Ladehilfsmittel dividiert durch die Gesamtanzahl an (fehlgeschlagenen und erfolgreichen) automatischen Entnahmen von Waren von einem ersten Quell-Ladehilfsmittel oder
- der Quotient der Anzahl der fehlgeschlagenen automatischen Abgaben von Waren in oder auf ein Ziel-Ladehilfsmittel dividiert durch die Gesamtanzahl an (fehlgeschlagenen und erfolgreichen) automatischen Abgaben von Waren in oder auf ein Ziel-Ladehilfsmittel oder
- der Quotient der Anzahl der fehlgeschlagenen automatischen Umladevorgänge von Waren von einem Quell-Ladehilfsmittel in oder auf ein Ziel-Ladehilfsmittel dividiert durch die Gesamtanzahl an (fehlgeschlagenen und erfolgreichen) automatischen Umladevorgängen von Waren von einem Quell-Ladehilfsmittel in oder auf ein Ziel-Ladehilfsmittel oder

- eine von den obigen Quotienten abgeleitete Maßzahl.

Während des Kommissioniervorgangs ist als Fehlerrate insbesondere

- der Quotient der Anzahl der an der ersten automatischen Kommissionierstation fehlgeschlagenen automatischen Entnahmen von Waren des ersten Auftragsteils von einem ersten Quell-Ladehilfsmittel dividiert durch die Gesamtanzahl der an der ersten automatischen Kommissionierstation (fehlgeschlagenen und erfolgreichen) automatischen Entnahmen von Waren des ersten Auftragsteils von einem ersten Quell-Ladehilfsmittel oder
- der Quotient der Anzahl der an der ersten automatischen Kommissionierstation fehlgeschlagenen automatischen Abgaben von Waren des ersten Auftragsteils in oder auf ein erstes Ziel-Ladehilfsmittel dividiert durch die Gesamtanzahl der an der ersten automatischen Kommissionierstation (fehlgeschlagenen und erfolgreichen) automatischen Abgaben von Waren des ersten Auftragsteils in oder auf ein erstes Ziel-Ladehilfsmittel oder
- der Quotient der Anzahl der an der ersten automatischen Kommissionierstation fehlgeschlagenen automatischen Umladevorgänge von Waren des ersten Auftragsteils von einem ersten Quell-Ladehilfsmittel in oder auf ein erstes Ziel-Ladehilfsmittel dividiert durch die Gesamtanzahl der an der ersten automatischen Kommissionierstation (fehlgeschlagenen und erfolgreichen) automatischen Umladevorgängen von des ersten Auftragsteils von einem ersten Quell-Ladehilfsmittel in oder auf ein erstes Ziel-Ladehilfsmittel oder
- eine von den obigen Quotienten abgeleitete Maßzahl vorgesehen.

Generell kann im Rahmen dieser Offenbarung unter einer "von einem (die Fehlerrate definierenden) Quotienten abgeleitete Maßzahl" beispielsweise ein mathematischer Term verstanden werden, welcher den besagten Quotienten enthält.

Der erste Schwellwert kann zum Beispiel 10% betragen. Dementsprechend bedeutet "automatisch handhabbar" im Rahmen der Erfindung nicht unbedingt, dass alle Waren der ersten Warentypengruppe fehlerfrei durch einen Roboter manipuliert werden können. Vielmehr ist eine geringe Fehlerrate unter Umständen zugelassen. In der Regel sind automatisch handhabbare Waren auch manuell handhabbar. Ausnahmen sind jedoch denkbar, beispielsweise wenn eine Ware aufgrund ihres Gewichts und/oder ihrer Größe nicht von einer Person manipulierbar ist und/oder eine Ware aus ergonomischen Gesichtspunkten nicht manipuliert werden soll.

In ähnlicher Weise bedeutet "nicht automatisch handhabbar" oder "nur manuell handhabbar" im Rahmen der Erfindung auch nicht unbedingt, dass die Waren der zweiten Warentypengruppe überhaupt nicht automatisch handhabbar sind. Vielmehr ist eine automatische Handhabung möglich, beispielsweise durch einen Roboter, jedoch muss mit einer erhöhten Fehlerrate gerechnet werden. Beispielsweise kann die Eignung, ob eine Warentype automatisch handhabbar ist oder nicht, empirisch festgestellt und in einer Datenbank abrufbar hinterlegt sein, zum Beispiel über ein Flag, das die Zugehörigkeit einer Warentype zu einer Warentypengruppe anzeigt.

Im Endeffekt sind Waren der ersten Warentypengruppe mit hoher Wahrscheinlichkeit fehlerfrei oder bei nur geringer Fehlerrate automatisch handhabbar, wohingegen Waren der zweiten Warentypengruppe mit hoher Wahrscheinlichkeit nicht fehlerfrei oder nur bei sehr hoher Fehlerrate automatisch handhabbar wären, und daher manuell kommissioniert werden.

Vorteilhaft werden die Abläufe an der ersten automatischen Kommissionierstation durch ein Überprüfungssystem überwacht, und eine (insbesondere im Zuge des Kommissioniervorgangs oder auch unabhängig davon ausgeführte) Handhabung wird vom Überprüfungssystem dann als Fehlhandhabung klassifiziert, wenn die Handhabung in ungeplanter Weise ausgeführt oder abgebrochen wird und fehlschlägt.

Das Überwachungssystem kann insbesondere optische Sensoren (z.B. eine Kamera), taktile Sensoren (z.B. Drucksensoren an einem Robotergreifer) und eine mit den Sensoren verbundene Auswerteeinheit (z.B. einen Mikrocontroller) aufweisen, wobei letztere die Sensorsignale auswertet und die eigentliche Klassifizierung der Handhabungen durchführt.

Eine fehlgeschlagene Handhabung liegt zum Beispiel dann vor, wenn eine Ware von einem Quell-Ladehilfsmittel entnommen werden soll, diese aber ungeplant zurück in das Quell-Ladehilfsmittel oder zu Boden fällt. Ein Vorgang kann auch dann fehlerhaft sein, wenn zwar eine Ware der gewünschten Warentype vom Quell-Ladehilfsmittel entnommen wird, nicht jedoch die gewünschte Ware (d.h. nicht konkret die gewünschte Ware) und/oder nicht die gewünschte Anzahl an Waren.

Eine Fehlhandhabung liegt beispielsweise auch dann vor, wenn eine Ware in oder auf ein Ziel-Ladehilfsmittel abgegeben werden soll, diese aber nicht im Ziel-Ladehilfsmittel gelangt. Ein Vorgang kann auch dann fehlerhaft sein, wenn die Ware zwar in das Ziel-Ladehilfsmittel abgegeben wird, diese aber an einer unerwünschten Stelle und/oder in einer unerwünschten Lage zu liegen kommt.

Eine Fehlhandhabung liegt beim Umladen dann vor, wenn die Entnahme einer Ware vom Quell-Ladehilfsmittel oder die Abgabe der Ware in das Ziel-Ladehilfsmittel fehlschlägt.

Vorteilhaft ist es auch, wenn eine dritte Warentypengruppe vorgesehen wird und Warentypen, bei denen eine Fehlerrate bei automatischer Handhabung (also bei der automatischen Entnahme einer Ware von einem ersten Quell-Ladehilfsmittel, der automatischen Abgabe einer Ware in oder auf ein erstes Ziel-Ladehilfsmittel oder beim automatischen Umladen einer Ware von einem ersten Quell-Ladehilfsmittel in oder auf ein erstes Ziel-Ladehilfsmittel), insbesondere an der ersten automatischen Kommissionierstation, kleiner einem ersten Schwellwert ist, der ersten Warentypengruppe zugeteilt werden, Warentypen, bei denen eine Fehlerrate bei automatischer Handhabung (also bei der automatischen Entnahme einer Ware von einem ersten Quell-Ladehilfsmittel, der automatischen Abgabe einer Ware in oder auf ein erstes Ziel-Ladehilfsmittel oder beim automatischen Umladen einer Ware von einem ersten Quell-Ladehilfsmittel in oder auf ein erstes Ziel-Ladehilfsmittel), insbesondere an der ersten automatischen Kommissionierstation, größer einem zweiten Schwellwert ist, der zweiten Warentypengruppe zugeteilt werden, und die übrigen Warentypen, bei denen die Fehlerrate größer gleich dem ersten Schwellwert und kleiner gleich dem zweiten Schwellwert ist, einer dritten Warentypengruppe zugeteilt werden, wobei Waren der dritten Warentypengruppe in einem Auftrag wahlweise dem ersten Auftragsteil oder dem zweiten Auftragsteil zugeordnet werden können.

Bei dieser Ausführungsvariante wird dem Umstand Rechnung getragen, dass Waren bei akzeptabler Fehlerrate automatisch oder auch manuell kommissionierbar sind. Diese Waren der dritten Warentypengruppe werden bedarfsweise dem ersten Auftragsteil oder dem zweiten Auftragsteil zugeordnet, beispielsweise um die Auslastung der ersten automatischen Kommissionierstation(en) und der ersten manuellen Kommissionierstation(en) gezielt beeinflussen zu können. Dies ist insbesondere dann von Vorteil, wenn ein Auftrag unverhältnismäßig viele Waren der ersten Warentypengruppe, jedoch sehr wenige Waren der zweiten Warentypengruppe aufweist, oder unverhältnismäßig wenige Waren der ersten Warentypengruppe, jedoch sehr viele Waren der zweiten Warentypengruppe. Durch die vorgeschlagenen Maßnahmen kann eine ungleiche Belastung der ersten automatischen Kommissionierstation(en) und der ersten manuellen Kommissionierstation(en), die durch das angesprochene Ungleichgewicht der ersten und zweiten Warentypengruppe zu erwarten wäre, durch entsprechende Zuteilung der Waren der dritten Warentypengruppe ganz oder zumindest zum Teil ausgeglichen werden. Der erste Schwellwert kann zum Beispiel 5% und der zweite Schwellwert zum Beispiel 15% betragen.

In einer günstigen Variante des Verfahrens ist einer Warentype eine Fehlerrate zugeordnet. Auf diese Weise kann die Planung des Verfahrens zum Kommissionieren von Waren noch differenzierter erfolgen. Insbesondere können Auftragszeilen vorteilhaft anhand ihrer Fehlerrate sortiert werden.

In einem "Lager- und Kommissioniersystem" können Waren zum Beispiel an einem Wareneingang angeliefert und übernommen werden und sodann gegebenenfalls umgepackt und in einem Lager eingelagert werden. Die Waren können auch gemäß einem Auftrag kommissioniert werden, das heißt aus dem Lager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff. Ein Lager- und Kommissioniersystem kann auch eine oder mehrere Sortiereinrichtungen aufweisen, mit Waren in eine vorgegebene oder vorgebbare Reihenfolge gebracht werden können.

"Waren" sind allgemein Objekte des Warenhandels und werden am Warenübernahmebereich angeliefert und am Warenübergabebereich gemäß einem Auftrag zu einem Kunden abtransportiert. Die Zuordnung zu einem Auftrag kann für bereits gelagerte Waren erfolgen oder im Prinzip auch schon davor. Unter einer "Ware" wird im Rahmen der Erfindung insbesondere ein einzeln handhabbares Objekt beziehungsweise eine einzeln handhabbare Gruppe von Objekten verstanden.

Eine "Warentype" gibt die Art einer Ware an. Beispielsweise kann als Warentype: "Bandnudeln, 1 kg" oder "Mineralwasser 1l" vorgesehen sein. Die Warentype kann insbesondere auch Kleidungsstücke umfassen. Beispielsweise kann als Warentype: "Hemd, weiß, Größe 42" oder "Jeanshose, Größe 34/34" oder "Socke, schwarz, Größe 43" vorgesehen sein.

Das "Warensortiment" gibt die Gesamtheit der im Lager- und Kommissioniersystem gelagerten Warentypen an. Das Warensortiment kann mit Hilfe von Schwellwerten einer Fehlerrate in Warentypengruppen eingeteilt werden. Die erste Warentypengruppe kann darüber hinaus mit Hilfe von "Untergruppen-Schwellwerten" in weitere Warentypenuntergruppen eingeteilt werden.

Eine "Warentypengruppe" ist eine Gruppe mehrere Warentypen. Eine "erste Warentypengruppe" fasst dabei jene Warentypen zusammen, die automatisch handhabbar sind, und eine "zweite Warentypengruppe" enthält Warentypen, die nicht oder nur eingeschränkt automatisch, jedoch manuell handhabbar sind. Eine "dritte Warentypengruppe" enthält - sofern vorhanden - Warentypen, die sowohl automatisch als auch manuell handhabbar sind.

Eine "Warentypenuntergruppe" unterteilt die erste Warentypengruppe, wobei eine "erste Warentypenuntergruppe" jene Warentypen zusammenfasst, die mit einem Greifer einer ersten Art automatisch handhabbar sind, und eine "zweite Warentypenuntergruppe" jene Warentypen, die mit einem Greifer einer zweiten Art automatisch handhabbar sind. Eine "dritte Warentypenuntergruppe " enthält - sofern vorhanden - Warentypen, die sowohl mit dem Greifer der ersten Art als auch mit dem Greifer der zweiten Art automatisch handhabbar sind. Beispielsweise kann der Greifer der ersten Art als Sauggreifer ausgebildet sein und ein Greifer der zweiten Art als mechanischer Greifer (z.B. als Greifzange oder als Roboterhand).

Eine "Auftragszeile" spezifiziert eine Ware (zumindest) nach ihrer Warentype und ihrer zu kommissionierenden Stückzahl. Beispielsweise kann eine Auftragszeile: "1 Stück, Bandnudeln, 1 kg" oder "10 Stück, Mineralwasser 1l" beinhalten. Die Ware kann grundsätzlich unterschiedlicher Art sein und insbesondere auch Kleidungsstücke umfassen. Beispielsweise kann eine Auftragszeile daher auch: "1 Stück, Hemd, weiß, Größe 42" oder "3 Stück, Jeanshose, Größe 34/34" oder "10 Stück, Socke, schwarz, Größe 43" beinhalten.

Zumindest ein "Auftrag zum Kommissionieren von Waren" (kurz "Kommissionierauftrag") umfasst im Rahmen der Erfindung mehrere Auftragszeilen, deren zugeordnete (verschiedene) Waren in einem Lagerbereich gelagert werden. Beispielsweise können Socken in ersten Ladehilfsmitteln lagern, die als Behälter ausgebildet sind. Hemden können dagegen in zweiten Ladehilfsmitteln lagern, die als Hängetaschen ausgebildet sind. Ein Auftrag kann grundsätzlich auch nur durch Auslagerung eines einzigen Behälters erfüllt werden, wenn dieser den ersten und zweiten Auftragteil enthält. Im Kommissionierbetrieb können neben Aufträgen mit zwei Auftragteilen und damit zumindest zwei Auftragszeilen darüber hinaus auch Aufträge erfasst und bearbeitet werden, welche eine einzige Auftragszeile umfassen.

Zumindest ein Auftrag enthält generell einen "ersten Auftragteil", dessen Waren automatisch manipuliert werden und einen "zweiten Auftragteil", dessen Waren manuell manipuliert werden. Der erste Auftragteil kann in einen "ersten Auftrags-Subteil" und einen "zweiten Auftrags-Subteil" unterteilt werden. Die Waren des ersten Auftrags-Subteils werden mit Hilfe eines Greifers der ersten Art automatisch manipuliert, die Waren des zweiten Auftrags-Subteils werden mit Hilfe eines Greifers der zweiten Art manipuliert. Der erste Auftragteil und der zweite Auftragteil können jeweils eine Ware oder mehrere Waren umfassen. Auch der erste Auftrags-Subteil und der zweite Auftrags-Subteil können jeweils eine Ware oder mehrere Waren umfassen.

Unter "Kommissionieren" ist im Rahmen der Erfindung das Zusammenstellen von Waren für einen Kommissionierauftrag zu verstehen, im engeren Sinn das Beladen eines Ziel-Ladehilfsmittels mit der Ware der ersten Auftragszeile und/oder der Ware der zweiten Auftragszeile.

"Artikelrein" bedeutet, dass die in einem Quell-Ladehilfsmittel gelagerten Waren dieselbe Warentype aufweisen. Beispielsweise enthält ein erstes Ladehilfsmittel die Ware "A" und ein zweites Ladehilfsmittel die Ware "B" usw. Andererseits können die Ladehilfsmittel durch Trennwände in mehrere Aufnahmefächer unterteilt werden und unterschiedliche Warentypen aufnehmen, wobei im ersten Aufnahmefach eine Ware "A" und im zweiten Aufnahmefach eine Ware "B" aufgenommen werden kann. Die in einem Lagerbereich oder in einem Ladehilfsmittel "gemischt" oder "nicht artikelrein" gelagerten Waren weisen dagegen unterschiedliche Warentypen auf.

Ein "Lagerplatz" ist ein Bereich im Lager- und Kommissioniersystem, an dem eine Ware gelagert werden kann. Ein "Lagerbereich" ist demnach ein Bereich im Lager- und Kommissioniersystem, welcher eine Vielzahl an Lagerplätzen zum Lagern der Waren aufweist. Beispielsweise kann der Lagerbereich als ortsfestes oder mobiles Lagerregal ausgebildet sein, das eine Vielzahl an Lagerplätzen nebeneinander und übereinander bereitstellt. Denkbar ist aber auch, dass der Lagerbereich ein Bereich am Fußboden des Lager- und Kommissioniersystems ist, der für das Abstellen und Lagern einer Ware vorgesehen beziehungsweise reserviert ist. Geh- und Fahrbereiche sind demnach keine Lagerbereiche, können aber an diese anschließen.

Unter einem "Warenübernahmebereich" ist jener Bereich zu verstehen, in dem dem Lager- und Kommissioniersystem Waren zugeführt werden, also insbesondere ein Wareneingang. Im Speziellen können angelieferte Warenträger (z.B. Paletten, Kartons, etc.) manuell oder automatisiert vereinzelt werden. Man spricht bei diesem Vorgang auch von "Depalettieren".

Unter einem "Warenübergabebereich" ist jener Bereich zu verstehen, in dem Waren aus dem Lager- und Kommissioniersystem abgeführt werden, also insbesondere ein Warenausgang.

Ein "Ladehilfsmittel" dient generell der Lagerung und dem Transport von Waren im Lager- und Kommissioniersystem und kann insbesondere als Behälter, Karton, Tablar, Palette, Beutel (insbesondere als "Polybag"), Tasche, Sack, Hängetasche oder Regal ausgebildet sein. An dieser Stelle wird angemerkt, dass nicht alle Ladehilfsmittel im Lager- und Kommissioniersystem dieselben Eigenschaften aufweisen müssen, sondern die Ladehilfsmittel auch unterschiedlich ausgebildet sein können. Die Ladehilfsmittel können zudem mehrere Aufnahmebereiche / Aufnahmefächer aufweisen.

Ein "Quell-Ladehilfsmittel" ist ein Ladehilfsmittel, das der Aufnahme der Waren beim Einlagervorgang dient (d.h. an einem Warenübernahmebereich), der Lagerung der Waren im Lagerbereich, sowie dem Transport der Waren an eine Kommissionierstation. Das Quell-Ladehilfsmittel kann insbesondere als Behälter, Karton, Tablar, Palette, Beutel (insbesondere als "Polybag"), Tasche, Sack, Hängetasche oder Regal ausgebildet sein.

Ein "Ziel-Ladehilfsmittel" dient der Aufnahme der Waren beim Kommissioniervorgang und kann ebenfalls als Behälter, Karton, Tablar, Palette, Beutel (insbesondere als "Polybag"), Tasche, Sack, Hängetasche oder Regal ausgebildet sein. Das Ziel-Ladehilfsmittel kann insbesondere als "Versandladehilfsmittel" fungieren und dem Abtransport von Waren aus dem Lager- und Kommissioniersystem dienen. Das Ziel-Ladehilfsmittel kann aber auch als "Zwischenladehilfsmittel" fungieren, in dem kommissionierte und für den Versand bestimmte Waren zwischengelagert werden, bevor sie in ein Versandladehilfsmittel umgeladen werden. Generell ist auch anzumerken, dass das erste Ziel-Ladehilfsmittel nicht zwingend dem ersten Auftragsteil zugeordnet ist und das zweite Ziel-Ladehilfsmittel nicht zwingend dem zweiten Auftragsteil zugeordnet ist. Eine solche Zuordnung kann aber vorgenommen werden.

Das Transportieren von Quell- und Ziel-Ladehilfsmitteln innerhalb des Lager- und Kommissioniersystems erfolgt durch eine "Fördertechnik", welche "ortsfeste Fördertechnik" und/oder "automatisiert betriebene Förderfahrzeuge" aufweisen kann.

"Ortsfeste Fördertechnik" benötigt zum Warentransport fix verbaute Einrichtungen. Beispielsweise benötigt ein Heber einen Rahmen, an dem eine Hubplattform bewegt wird. Die Hubplattform alleine ist dagegen nicht funktionsfähig. Ortsfeste Fördertechnik ist insbesondere dadurch gekennzeichnet, dass sie ohne das Lösen von Befestigungen nicht aus dem Lager- und Kommissioniersystem entfernt werden kann. Unter ortsfester Fördertechnik sind insbesondere Rollenförderer, Bandförderer, Gurtförderer, Kettenförderer und dergleichen zu verstehen. Ein autonomes Flurförderfahrzeug kann dagegen ohne das Lösen von Befestigungen aus dem Lager- und Kommissioniersystem entfernt werden. Ortsfeste Fördertechnik kann insbesondere auch eine "Hängebahn" aufweisen, an der Hängetaschen hängend gelagert und/oder transportiert werden können.

Unter "automatisiert betriebenen Förderfahrzeugen" sind im Rahmen der Erfindung selbstfahrende beziehungsweise fahrerlose Förderfahrzeuge zum Warentransport zu verstehen, welche entlang fix vorgegebener Bahnen fahren oder welche frei geführt sind, also ohne fixer Spurführung. Eine fixe Spurführung kann am Boden der Fahrfläche vorgegeben sein, etwa mit Hilfe von optischen Farbstreifen, mit magnetischen Streifen, mit Markierungs-Tags oder auch mit Schienen. Ein automatisiert betriebenes Förderfahrzeug weist insbesondere eine Transportplattform auf, auf der die zu transportierenden Waren temporär aufgenommen werden. Anstelle der Transportplattform oder zusätzlich dazu kann das automatisiert betriebene Förderfahrzeug auch eine (teleskopierbare) Hängestange beziehungsweise Hängebahn zur Aufnahme von Hängetaschen aufweisen. Beispielsweise kann die Transportplattform/Hängestange fix am Förderfahrzeug befestigt sein, die Transportplattform/Hängestange kann aber auch vertikal und/oder seitlich relativ zu einem Fahrgestell des Förderfahrzeugs beweglich sein, um beispielsweise Waren in ein Lagerregal einlagern und aus dem Lagerregal auslagern zu können. Am Fahrgestell sind Räder angeordnet, von denen wenigstens eines angetrieben ist. Weiterhin umfasst ein automatisiert betriebenes Förderfahrzeug auch eine elektronische Steuerung zum Empfang von Befehlen von einer übergeordneten (zentralen) Steuerung und zum Steuern/Regeln der Bewegungen des automatisiert betriebenen Förderfahrzeugs.

Ein "Regalbediengerät" ist ein automatisiert betriebenes Förderfahrzeug, das auf Schienen fährt und als Einebenen-Regalbediengerät (auch "Shuttle" genannt) oder als Mehrebenen-Regalbediengerät ausgeführt sein kann. Regalbediengeräte benötigen für ihren Betrieb Elemente ortsfester Fördertechnik (nämlich die Schienen). Aus diesem Grund werden Regalbediengeräte im Rahmen der Erfindung der ortsfesten Fördertechnik zugerechnet.

Ein "autonomes Flurförderfahrzeug" ist ein schienenungebundenes, automatisiert betriebenes (fahrerloses) Förderfahrzeug. Wenigstens eines der Räder ist lenkbar, sofern das autonome Förderfahrzeug nicht über Räder verfügt, mit denen auch eine Seitwärtsbewegung ausgeführt werden kann (z.B. Mecanum-Räder). Ein autonomes Flurförderfahrzeug umfasst auch Sensoren zum Erfassen der Umgebung des Flurförderfahrzeugs und zur Orientierung im Raum. Solche autonomen Flurförderfahrzeuge sind dem Fachmann unter "Autonomous Guided Vehicles", kurz "AGV" bekannt.

Eine "Kommissionierstation" ist eine Station beziehungsweise ein Bereich oder Platz, an der oder dem Waren in ein Ziel-Ladehilfsmittel geladen werden können. Für die Steuerung des Kommissioniervorgangs der Waren kann die Kommissionierstation eine Kommissionierstations-Steuerung aufweisen. Denkbar wäre aber auch, dass der Kommissioniervorgang alternativ oder zusätzlich von einer zentralen Steuerung des Lager- und Kommissioniersystems angesteuert wird.

Eine "automatische Kommissionierstation" ist eine Kommissionierstation, an welcher der Kommissioniervorgang, also das Umladen von Waren von einem Quell-Ladehilfsmittel in ein Ziel-Ladehilfsmittel, von einem Roboter automatisch ausgeführt wird. Die Mitwirkung des Menschen beschränkt sich dabei im Wesentlichen auf die Programmierung und Überwachung des Roboters. Der Roboter kann durch eine eigene Roboter-Steuerung oder durch eine Kommissionierstations-Steuerung der automatischen Kommissionierstation angesteuert werden. Denkbar wäre aber auch, dass der Kommissioniervorgang alternativ oder zusätzlich von einer zentralen Steuerung des Lager- und Kommissioniersystems angesteuert wird.

Eine "automatische Kommissionier-Substation" ist eine automatische Kommissionierstation, deren Roboter mit einem Greifer einer bestimmten Art ausgestattet ist. Beispielsweise ist eine "erste automatische Kommissionier-Substation" mit einem Greifer einer ersten Art ausgestattet, eine "zweite automatische Kommissionier-Substation" mit einem Greifer einer zweiten Art.

Eine "manuelle Kommissionierstation" ist eine Kommissionierstation, an welcher der Kommissioniervorgang, also das Umladen von Waren von einem Quell-Ladehilfsmittel in ein Ziel-Ladehilfsmittel, von einem Arbeiter ausgeführt wird. Dieser manuelle Kommissioniervorgang kann jedoch rechnergestützt sein. Beispielsweise kann der Arbeiter mit Hilfe einer Ausgabeeinheit (z.B. einem Display oder einer Sprachausgabe-Einheit) angewiesen werden, einen bestimmten Vorgang auszuführen. Über eine Eingabeeinheit (z.B. eine Tastatur, ein Touch-Display oder eine Spracheingabe-Einheit) und/oder eine Erfassungseinheit (z.B. einen Scanner) kann der Arbeiter eine Rückmeldung abgeben. Eine beliebige Kombination der genannten Funktionseinheiten ist natürlich möglich. Die genannten Funktionseinheiten können durch eine Kommissionierstations-Steuerung der manuellen Kommissionierstation angesteuert werden. Denkbar wäre aber auch, dass die genannten Funktionseinheiten alternativ oder zusätzlich von einer zentralen Steuerung des Lager- und Kommissioniersystems angesteuert werden.

Generell kann ein Lager- und Kommissioniersystem eine (einzige) automatische Kommissionierstation und eine (einzige) manuelle Kommissionierstation aufweisen, oder es sind im Lager- und Kommissioniersystem mehrere automatische Kommissionierstationen und mehrere manuelle Kommissionierstationen vorhanden. In gleicher Weise kann ein Lager- und Kommissioniersystem eine (einzige) erste automatische Kommissionier-Substation oder mehrere erste automatische Kommissionier-Substationen aufweisen sowie eine (einzige) zweite automatische Kommissionier-Substation oder mehrere zweite automatische Kommissionier-Substationen.

Eine "Andienposition" ist generell eine Position, an der ein Ladehilfsmittel angedient beziehungsweise bereitgestellt wird. An dieser Position ist eine Entnahme einer Ware aus einem Quell-Ladehilfsmittel und/oder eine Abgabe einer Ware in ein Ziel-Ladehilfsmittel möglich. Beispielsweise kann die Andienposition durch eine Halteposition für ein Ladehilfsmittel auf einer Fördertechnik gebildet sein.

Ein "mobiles Regal" ist ein bewegliches Regal, das nicht an einen bestimmten Ort fixiert ist. Ein mobiles Regal kann insbesondere Räder zum leichteren Transport umfassen. Ein mobiles Regal kann insbesondere auch zum Transport von Hängetaschen ausgebildet sein und eine "mobile Lager-Hängebahn" aufweisen, also eine bewegliche Hängebahn, die nicht einem bestimmten Ort fixiert ist.

Ein "Steuerungssystem" dient allgemein der Ansteuerung der Elemente des Lager- und Kommissioniersystems, insbesondere der Fördertechnik des Lager- und Kommissioniersystems. Das Steuerungssystem kann mehrere Steuer-Komponenten umfassen, die untereinander verbunden und gegebenenfalls hierarchisch gegliedert sind. Beispielsweise kann das Steuerungssystem einen Auftragsrechner umfassen, welcher der Erfassung eines Auftrags und zur Vorbereitung desselben dient. Insbesondere umfasst das Steuerungssystem auch die Steuerungen der Kommissionierstationen.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es bei dem offenbarten Lager- und Kommissioniersystem, wenn die Fördertechnik

- zum Transport der ersten Quell-Ladehilfsmitteln zwischen dem Lagerbereich und der ersten automatischen Kommissionierstation und/oder
- zum Transport der zweiten Quell-Ladehilfsmitteln zwischen dem Lagerbereich und der ersten manuellen Kommissionierstation und/oder
- zum Transport der ersten Ziel-Ladehilfsmitteln zwischen der ersten automatischen Kommissionierstation und der ersten manuellen Kommissionierstation oder zwischen der ersten automatischen Kommissionierstation und der zweiten automatischen oder manuellen Kommissionierstation und/oder
- zum Transport der zweiten Ziel-Ladehilfsmitteln zwischen der ersten manuellen Kommissionierstation und der zweiten automatischen oder manuellen Kommissionierstation und/oder
- zum Transport der ersten Ziel-Ladehilfsmitteln von der ersten automatischen Kommissionierstation, von der ersten manuellen Kommissionierstation oder von der zweiten automatischen oder manuellen Kommissionierstation und/oder
- zum Transport der zweiten Ziel-Ladehilfsmitteln von der zweiten automatischen oder manuellen Kommissionierstation und/oder
- zum Transport der dritten Ziel-Ladehilfsmitteln von der zweiten automatischen oder manuellen Kommissionierstation

ausgebildet ist.

Allgemeiner formuliert bedeutet dies, dass die Fördertechnik zum An- und Abtransport von Quell-Ladehilfsmitteln an die und von den automatischen/manuellen Kommissionierstationen und zum An- und Abtransport von Ziel-Ladehilfsmitteln an die und von den automatischen/manuellen Kommissionierstationen ausgebildet ist. Auf diese Weise können die Quell-Ladehilfsmittel und die Ziel-Ladehilfsmittel automatisch zu und von den automatischen/manuellen Kommissionierstationen transportiert werden. Dadurch steigt der Automatisierungsgrad im Lager- und Kommissioniersystem.

Vorteilhaft ist die Fördertechnik auch für den Transport von dritten Quell-Ladehilfsmitteln zwischen dem Lagerbereich und der ersten automatischen Kommissionierstation ausgebildet, wenn eine erste Kommissionier-Substation und eine zweite Kommissionier-Substation der ersten automatischen Kommissionierstation vorgesehen sind.

Weiterhin ist an der ersten automatischen Kommissionierstation vorteilhaft ein Knickarmroboter oder ein Portalroboter mit Greifer vorgesehen. Auf diese Weise können Waren des ersten Auftragsteils sehr gezielt von einem Quell-Ladehilfsmittel entnommen werden. Diese Variante ist daher dann besonders gut geeignet, wenn im Quell-Ladehilfsmittel viele Waren lagern.

Günstig ist es weiterhin, wenn das Verhältnis zwischen der Anzahl der ersten automatischen Kommissionierstationen und der Anzahl der ersten manuellen Kommissionierstationen kleiner gleich 1 ist. Auf diese Weise können eine Vielzahl an unterschiedlichen Waren kommissioniert werden, da durch die ersten manuellen Kommissionierstationen gut auf Veränderungen reagiert werden kann. Das heißt, diese Variante eignet sich besonders dann, wenn im Lagerbereich viele unterschiedliche Warentypen lagern.

Günstig ist es aber auch, wenn das Verhältnis zwischen der Anzahl der ersten automatischen Kommissionierstationen und der Anzahl der ersten manuellen Kommissionierstationen größer gleich 1 ist. Auf diese Weise kann der Kommissioniervorgang hochautomatisiert erfolgen, da eine Vielzahl an ersten automatischen Kommissionierstationen zur Verfügung steht. Diese Variante eignet sich besonders dann, wenn im Lagerbereich eher weniger unterschiedliche Warentypen lagern.

Günstig ist es bei dem offenbarten Verfahren, wenn die zumindest eine Ware des ersten Auftragsteils im Schritt g) an der ersten automatischen Kommissionierstation automatisch in oder auf ein erstes Ziel-Ladehilfsmittel geladen wird, das mit der zumindest einen Ware des ersten Auftragsteils beladene erste Ziel-Ladehilfsmittel zur ersten manuellen Kommissionierstation transportiert wird und die zumindest eine Ware des zweiten Auftragsteils an der ersten manuellen Kommissionierstation manuell in das erste Ziel-Ladehilfsmittel hinzu geladen wird. Auf diese Weise kann eine besonders hohe Packungsdichte im ersten Ziel-Ladehilfsmittel erreicht werden, da ein menschlicher Kommissionierer üblicherweise umfangreichere Fähigkeiten beim Beladen eines Ladehilfsmittels aufweist als ein Roboter. Insbesondere ist ein menschlicher Kommissionierer in der Lage, Waren im ersten Ziel-Ladehilfsmittel umzuschlichten, wobei ihm besonders zugutekommt, dass er über zwei Hände verfügt.

Günstig ist es auch, wenn die zumindest eine Ware des zweiten Auftragsteils im Schritt g) an der ersten manuellen Kommissionierstation manuell in oder auf ein erstes Ziel-Ladehilfsmittel geladen wird, das mit der zumindest einen Ware des zweiten Auftragsteils beladene erste Ziel-Ladehilfsmittel zur ersten automatischen Kommissionierstation transportiert wird und die zumindest eine Ware des ersten Auftragsteils an der ersten automatischen Kommissionierstation automatisch in das erste Ziel-Ladehilfsmittel hinzu geladen wird. Auf diese Weise kann ein hoher Automatisierungsgrad im Lager- und Kommissioniersystem erreicht werden, da das Hinzuladen der zumindest einen Ware des zweiten Auftragsteils in das erste Ladehilfsmittel automatisch erfolgt.

Günstig ist es darüber hinaus, wenn die zumindest eine Ware des ersten Auftragsteils im Schritt g) an der ersten automatischen Kommissionierstation automatisch in oder auf ein erstes Ziel-Ladehilfsmittel geladen wird, die zumindest eine Ware des zweiten Auftragsteils an der ersten manuellen Kommissionierstation manuell in oder auf ein zweites Ziel-Ladehilfsmittel geladen wird, das mit der zumindest einen Ware des ersten Auftragsteils beladene erste Ziel-Ladehilfsmittel und das mit der zumindest einen Ware des zweiten Auftragsteils beladene zweite Ziel-Ladehilfsmittel entweder zu einer zweiten automatischen Kommissionierstation oder zu einer zweiten manuellen Kommissionierstation transportiert werden und

i) die zumindest eine Ware des zweiten Auftragsteils an der zweiten automatischen/manuellen Kommissionierstation automatisch/manuell in das erste Ziel-Ladehilfsmittel geladen wird oder

ii) die zumindest eine Ware des ersten Auftragsteils an der zweiten automatischen/manuellen Kommissionierstation automatisch/manuell in das zweite Ziel-Ladehilfsmittel geladen wird.

Bei diesen Varianten werden sowohl der erste als auch der zweite Auftragsteil zuerst in oder auf ein erstes beziehungsweise zweites Ziel-Ladehilfsmittel verladen. In einem weiteren Schritt wird dann die zumindest eine Ware des zweiten Auftragsteils zum ersten Ziel-Ladehilfsmittel hinzu geladen (Fall i), oder es wird die zumindest eine Ware des ersten Auftragsteils in einem weiteren Schritt zum zweiten Ziel-Ladehilfsmittel hinzu geladen (Fall ii). Dieses Zusammenführen von Warenströmen ist auch unter dem Begriff "Konsolidieren" bekannt.

In obigem Zusammenhang ist es bei dem vorgestellten Verfahren von Vorteil, wenn

- im Fall i) alle im oder auf dem zweiten Ziel-Ladehilfsmittel geladenen Waren des zweiten Auftragsteils an der zweiten automatischen Kommissionierstation automatisch und auf einmal (d.h. in einem Schritt) in oder auf das erste Ziel-Ladehilfsmittel abgegeben werden oder
- im Fall ii) alle im oder auf dem ersten Ziel-Ladehilfsmittel geladenen Waren des ersten Auftragsteils an der zweiten automatischen Kommissionierstation automatisch und auf einmal (d.h. in einem Schritt) in oder auf das zweite Ziel-Ladehilfsmittel abgegeben werden.

Demzufolge ist es bei dem vorgestellten Lager- und Kommissioniersystem von Vorteil, wenn an der zweiten automatischen Kommissionierstation eine Mechanik zum automatischen Abgeben des gesamten Inhalts

- des ersten Ziel-Ladehilfsmittels in das zweite Ziel-Ladehilfsmittel und/oder
- des zweiten Ziel-Ladehilfsmittels in das erste Ziel-Ladehilfsmittel auf einmal (d.h. in einem Schritt) vorgesehen ist.

Beispielsweise kann dazu eine Kippmechanik, Abwurfmechanik oder Abstreifmechanik eingesetzt werden.

Die zumindest eine Ware des zweiten Auftragsteils wird dann im Fall i) an der zweiten automatischen Kommissionierstation mit Hilfe einer Kippmechanik vom zweiten Ziel-Ladehilfsmittel in das erste Ziel-Ladehilfsmittel gekippt oder mit Hilfe einer Abwurfmechanik vom zweiten Ziel-Ladehilfsmittel in oder auf das erste Ziel-Ladehilfsmittel abgeworfen oder mit Hilfe einer Abstreifmechanik vom zweiten Ziel-Ladehilfsmittel in oder auf das erste Ziel-Ladehilfsmittel abgestreift.

Die zumindest eine Ware des ersten Auftragsteils wird dann im Fall ii) an der zweiten automatischen Kommissionierstation mit Hilfe einer Kippmechanik vom ersten Ziel-Ladehilfsmittel in das zweite Ziel-Ladehilfsmittel gekippt oder mit Hilfe einer Abwurfmechanik vom ersten Ziel-Ladehilfsmittel in das zweite Ziel-Ladehilfsmittel abgeworfen oder mit Hilfe einer Abstreifmechanik vom ersten Ziel-Ladehilfsmittel in oder auf das zweite Ziel-Ladehilfsmittel abgestreift.

Auf diese Weise kann ein besonders hoher Automatisierungsgrad beim Kommissionierverfahren erzielt werden, da die Beladung des ersten oder zweiten Ziel-Ladehilfsmittels mit den Waren des ersten oder zweiten Auftragsteils an der zweiten automatischen Kommissionierstation automatisch und in einem Schritt erfolgt (im Gegensatz zu einem Greifroboter, welcher die Waren in der Regel Stück für Stück von einem Quell-Ladehilfsmittel entnimmt und in oder auf dem Ziel-Ladehilfsmittel ablegt). Somit werden selbst jene Waren des zweiten Auftragsteils, die eigentlich nur manuell kommissioniert werden können, an der zweiten automatischen Kommissionierstation automatisch kommissioniert. Diese Ausführungsvariante eignet sich insbesondere für unempfindliche Waren, beispielsweise in Folienbeutel, insbesondere in Form von sogenannten "Polybags", abgefüllte Waren.

Auch wenn ein Greifroboter Waren in der Regel Stück für Stück kommissioniert, kann dennoch vorgesehen sein, dass dieser ein Quell-Ladehilfsmittel als Ganzes ergreift und dessen Inhalt in ein Ziel-Ladehilfsmittel kippt. Desgleichen kann vorgesehen sein, dass ein Roboter mit seinem Arm mehrere Waren auf einmal von einem Quell-Ladehilfsmittel in ein Ziel-Ladehilfsmittel abstreift. Denkbar ist auch, dass der Roboter ein Quell-Ladehilfsmittel als Ganzes ergreift, über das Ziel-Ladehilfsmittel bewegt und den Inhalt des Quell-Ladehilfsmittels durch Betätigung einer Bodenöffnung in das Ziel-Ladehilfsmittel abwirft. Auf diese Weise kann ebenfalls eine Kippmechanik, Abstreifmechanik oder Abwurfmechanik realisiert sein.

Weiterhin ist es günstig, wenn die zumindest eine Ware des ersten Auftragsteils im Schritt g) an der ersten automatischen Kommissionierstation automatisch in oder auf ein erstes Ziel-Ladehilfsmittel geladen wird, die zumindest eine Ware des zweiten Auftragsteils an der ersten manuellen Kommissionierstation manuell in oder auf ein zweites Ziel-Ladehilfsmittel geladen wird, das mit der zumindest einen Ware des ersten Auftragsteils beladene erste Ziel-Ladehilfsmittel und das mit der zumindest einen Ware des zweiten Auftragsteils beladene zweite Ziel-Ladehilfsmittel entweder zu einer zweiten automatischen Kommissionierstation oder zu einer zweiten manuellen Kommissionierstation transportiert werden und die zumindest eine Ware des ersten Auftragsteils sowie die zumindest eine Ware des zweiten Auftragsteils an der zweiten automatischen/manuellen Kommissionierstation automatisch/manuell in oder auf ein drittes Ziel-Ladehilfsmittel geladen werden. Bei dieser Varianten werden sowohl der erste als auch der zweite Auftragsteil wiederum zuerst in oder auf ein erstes beziehungsweise zweites Ziel-Ladehilfsmittel verladen. In einem weiteren Schritt werden dann die Waren des ersten und zweiten Auftragsteils in oder auf ein drittes Ziel-Ladehilfsmittel verladen. Auch bei diesem Vorgang kann wiederum von "Konsolidieren" gesprochen werden.

Von Vorteil ist es, wenn

- alle im oder auf dem zweiten Ziel-Ladehilfsmittel geladenen Waren des zweiten Auftragsteils an der zweiten automatischen Kommissionierstation automatisch und auf einmal (d.h. in einem Schritt) in oder auf das dritte Ziel-Ladehilfsmittel abgegeben werden und/oder
- alle im oder auf dem ersten Ziel-Ladehilfsmittel geladenen Waren des ersten Auftragsteils an der zweiten automatischen Kommissionierstation automatisch und auf einmal (d.h. in einem Schritt) in oder auf das dritte Ziel-Ladehilfsmittel abgegeben werden.

Demzufolge ist es bei dem vorgestellten Lager- und Kommissioniersystem von Vorteil, wenn an der zweiten automatischen Kommissionierstation eine Mechanik zum automatischen Abgeben des gesamten Inhalts

- des ersten Ziel-Ladehilfsmittels in das dritte Ziel-Ladehilfsmittel und/oder
- des zweiten Ziel-Ladehilfsmittels in das dritte Ziel-Ladehilfsmittel auf einmal (d.h. in einem Schritt) vorgesehen ist.

Beispielsweise kann dazu wiederum eine Kippmechanik, Abwurfmechanik oder Abstreifmechanik eingesetzt werden.

Die zumindest eine Ware des zweiten Auftragsteils wird dann an der zweiten automatischen Kommissionierstation mit Hilfe einer Kippmechanik vom zweiten Ziel-Ladehilfsmittel in das dritte Ziel-Ladehilfsmittel gekippt oder mit Hilfe einer Abwurfmechanik vom zweiten Ziel-Ladehilfsmittel in oder auf das dritte Ziel-Ladehilfsmittel abgeworfen oder mit Hilfe einer Abstreifmechanik vom zweiten Ziel-Ladehilfsmittel in oder auf das dritte Ziel-Ladehilfsmittel abgestreift.

Die zumindest eine Ware des ersten Auftragsteils wird dann an der zweiten automatischen Kommissionierstation mit Hilfe einer Kippmechanik vom ersten Ziel-Ladehilfsmittel in das dritte Ziel-Ladehilfsmittel gekippt oder mit Hilfe einer Abwurfmechanik vom ersten Ziel-Ladehilfsmittel in das dritte Ziel-Ladehilfsmittel abgeworfen oder mit Hilfe einer Abstreifmechanik vom ersten Ziel-Ladehilfsmittel in oder auf das dritte Ziel-Ladehilfsmittel abgestreift.

Auf diese Weise kann wiederum ein besonders hoher Automatisierungsgrad beim Kommissionierverfahren erzielt werden, da die Beladung des ersten oder zweiten Ziel-Ladehilfsmittels mit den Waren des ersten oder zweiten Auftragsteils an der zweiten automatischen Kommissionierstation automatisch und in einem Schritt erfolgt (im Gegensatz zu einem Greifroboter, welcher die Waren in der Regel Stück für Stück von einem Quell-Ladehilfsmittel entnimmt und in oder auf dem Ziel-Ladehilfsmittel ablegt). Somit werden selbst jene Waren des zweiten Auftragsteils, die eigentlich nur manuell kommissioniert werden können, an der zweiten automatischen Kommissionierstation automatisch kommissioniert. Diese Ausführungsvariante eignet sich wiederum insbesondere für unempfindliche Waren, beispielsweise in Folienbeutel, insbesondere in Form von sogenannten "Polybags", abgefüllte Waren.

Auch wenn ein Greifroboter Waren in der Regel Stück für Stück kommissioniert, kann auch in diesem Fall vorgesehen sein, dass dieser ein Quell-Ladehilfsmittel als Ganzes ergreift und dessen Inhalt in ein Ziel-Ladehilfsmittel kippt. Desgleichen kann vorgesehen sein, dass ein Roboter mit seinem Arm mehrere Waren auf einmal von einem Quell-Ladehilfsmittel in ein Ziel-Ladehilfsmittel abstreift. Denkbar ist auch, dass der Roboter ein Quell-Ladehilfsmittel als Ganzes ergreift, über das Ziel-Ladehilfsmittel bewegt und den Inhalt des Quell-Ladehilfsmittels durch Betätigung einer Bodenöffnung in das Ziel-Ladehilfsmittel abwirft. Auf diese Weise kann ebenfalls eine Kippmechanik, Abstreifmechanik oder Abwurfmechanik realisiert sein.

Vorteilhaft erfolgt eine Zuteilung der Warentypen zu der ersten Warentypengruppe und zu der zweiten Warentypengruppe

I) vor oder bei Durchführung des Schritts a) und/oder

II) bei Durchführung eines der Schritte e) oder f) oder g) und/oder

III) unabhängig von den Schritten b) bis g).

Gemäß der ersten Ausführungsvariante I) erfolgt die Zuteilung einer Warentype zu einer Warentypengruppe also vor oder beim Einlagern einer Ware dieser Warentype, jedenfalls aber vor dem Ermitteln der Zugehörigkeit der für die Bearbeitung eines Auftrags benötigten Waren zu Warentypengruppen im Schritt c). Die Zuteilung einer Warentype zu einer Warentypengruppe erfolgt in diesem Fall somit initial und vor dem eigentlichen Kommissioniervorgang, beispielsweise mit Hilfe von empirischen Versuchen, durch Erfahrung mit ähnlichen Warentypen oder auch indem der Lieferant einer Ware Informationen zur automatischen Handhabbarkeit dieser Ware bereitstellt.

Gemäß der zweiten Ausführungsvariante II) erfolgt die Zuteilung einer Warentype zu einer Warentypengruppe beim Kommissioniervorgang, also "online". Die Zuteilung einer Warentype zu einer Warentypengruppe erfolgt in diesem Fall somit adaptiv, das heißt eine ursprünglich manuell handhabbare Warentype kann als automatisch handhabbar klassifiziert werden und umgekehrt.

Gemäß der dritten Ausführungsvariante III) erfolgt die Zuteilung einer Warentype zu einer Warentypengruppe parallel zu einem Kommissioniervorgang, also "offline". Die Zuteilung einer Warentype zu einer Warentypengruppe erfolgt somit auch in diesem Fall adaptiv, das heißt eine ursprünglich manuell handhabbare Warentype kann als automatisch handhabbar klassifiziert werden und umgekehrt. Beispielsweise können hierfür automatische Kommissionierstationen eingerichtet werden, die nur zu Testzwecken genutzt werden. Denkbar ist aber auch, dass (erste) automatische Kommissionierstationen genutzt werden, die für die Kommissionierung gerade nicht benötigt werden, beispielsweise in Zeiten geringer Leistungsanforderung (etwa in der Nacht).

Günstig ist es in obigem Zusammenhang, wenn eine Warentype zumindest einer Ware des ersten Auftragsteils, welche vorerst der ersten Warentypengruppe zugeteilt ist, im Fall II) der zweiten Warentypengruppe neu zugeteilt wird, wenn die Fehlerrate bei der automatischen Handhabung dieser zumindest einen Ware an der ersten automatischen Kommissionierstation (also bei der automatischen Entnahme einer Ware des ersten Auftragsteils von einem ersten Quell-Ladehilfsmittel, der automatischen Abgabe einer Ware des ersten Auftragsteils in oder auf ein erstes Ziel-Ladehilfsmittel oder beim automatischen Umladen einer Ware des ersten Auftragsteils von einem ersten Quell-Ladehilfsmittel in oder auf ein erstes Ziel-Ladehilfsmittel) den ersten Schwellwert überschreitet. Bei dieser Ausführungsvariante werden Warentypen, die ursprünglich der ersten Warentypengruppe zugeteilt sind, bei denen sich jedoch herausstellt, dass sie nicht oder nur schwer automatisch handhabbar sind, nachträglich der zweiten Warentypengruppe zugeteilt. Das Kommissionierverfahren ist also adaptiv, das heißt es wird an real vorliegende Gegebenheiten angepasst.

Vorteilhaft erfolgt eine Zuteilung der Warentypen zu der ersten Warentypengruppe und zu der zweiten Warentypengruppe und zu der dritten Warentypengruppe

I) vor oder bei Durchführung des Schritts a) und/oder

II) bei Durchführung eines der Schritte e) oder f) oder g) und/oder

III) unabhängig von den Schritten b) bis g).

Gemäß der ersten Ausführungsvariante I) erfolgt die Zuteilung einer Warentype zu einer Warentypengruppe wiederum vor oder beim Einlagern einer Ware dieser Warentype, jedenfalls aber vor dem Ermitteln der Zugehörigkeit der für die Bearbeitung eines Auftrags benötigten Waren zu Warentypengruppen im Schritt c). Die Zuteilung einer Warentype zu einer Warentypengruppe erfolgt in diesem Fall somit wieder initial und vor dem eigentlichen Kommissioniervorgang, beispielsweise mit Hilfe von empirischen Versuchen, durch Erfahrung mit ähnlichen Warentypen oder auch indem der Lieferant einer Ware Informationen zur automatischen Handhabbarkeit dieser Ware bereitstellt.

Gemäß der zweiten Ausführungsvariante II) erfolgt die Zuteilung einer Warentype zu einer Warentypengruppe wiederum beim Kommissioniervorgang, also "online". Die Zuteilung einer Warentype zu einer Warentypengruppe erfolgt in diesem Fall somit adaptiv, das heißt eine ursprünglich manuell handhabbare Warentype kann als automatisch handhabbar klassifiziert werden und umgekehrt.

Gemäß der dritten Ausführungsvariante III) erfolgt die Zuteilung einer Warentype zu einer Warentypengruppe wiederum parallel zu einem Kommissioniervorgang, also "offline". Die Zuteilung einer Warentype zu einer Warentypengruppe erfolgt somit auch in diesem Fall adaptiv, das heißt eine ursprünglich manuell handhabbare Warentype kann als automatisch handhabbar klassifiziert werden und umgekehrt. Beispielsweise können hierfür automatische Kommissionierstationen eingerichtet werden, die nur zu Testzwecken genutzt werden. Denkbar ist aber auch, dass (erste) automatische Kommissionierstationen genutzt werden, die für die Kommissionierung gerade nicht benötigt werden, beispielweise in Zeiten geringer Leistungsanforderung (etwa in der Nacht).

Günstig ist es in obigem Zusammenhang, wenn eine Warentype zumindest einer Ware des ersten Auftragsteils, welche vorerst der ersten Warentypengruppe zugeteilt ist, im Fall II) der zweiten Warentypengruppe neu zugeteilt wird, wenn die Fehlerrate bei der automatischen Handhabung dieser zumindest einen Ware an der ersten automatischen Kommissionierstation (also bei der automatischen Entnahme einer Ware des ersten Auftragsteils von einem ersten Quell-Ladehilfsmittel, der automatischen Abgabe einer Ware des ersten Auftragsteils in oder auf ein erstes Ziel-Ladehilfsmittel oder beim automatischen Umladen einer Ware des ersten Auftragsteils von einem ersten Quell-Ladehilfsmittel in oder auf ein erstes Ziel-Ladehilfsmittel) den zweiten Schwellwert überschreitet, und der dritten Warentypengruppe neu zugeteilt wird, wenn die Fehlerrate bei der automatischen Handhabung dieser zumindest einen Ware an der ersten automatischen Kommissionierstation (also bei der automatischen Entnahme einer Ware des ersten Auftragsteils von einem ersten Quell-Ladehilfsmittel, der automatischen Abgabe einer Ware des ersten Auftragsteils in oder auf ein erstes Ziel-Ladehilfsmittel oder beim automatischen Umladen einer Ware des ersten Auftragsteils von einem ersten Quell-Ladehilfsmittel in oder auf ein erstes Ziel-Ladehilfsmittel) den ersten Schwellwert, nicht jedoch den zweiten Schwellwert überschreitet. Bei dieser Ausführungsvariante werden Warentypen, die ursprünglich der ersten Warentypengruppe zugeteilt sind, bei denen sich jedoch herausstellt, dass sie nicht oder nur schwer automatisch handhabbar sind, nachträglich der zweiten oder dritten Warentypengruppe zugeteilt, je nachdem wie hoch die Fehlerrate bei der (automatischen) Handhabung der jeweiligen Warentype der ersten Warentypengruppe ist. Das Kommissionierverfahren ist also wiederum adaptiv, das heißt es wird an real vorliegende Gegebenheiten angepasst.

In einer weiteren günstigen Variante des Verfahrens verbleibt die zumindest eine Ware des ersten Auftragsteils, welche die Neuzuteilung der Warentype dieser Ware zur zweiten Warentypengruppe bewirkt, beim ersten Auftragsteil. Bei dieser Variante wirkt sich die Neuzuteilung einer Warentype einer Ware des ersten Auftragsteils zur zweiten Warentypengruppe also nicht auf den aktuellen Kommissioniervorgang aus. Die Neuzuteilung der Warentype der Ware des ersten Auftragsteils zur zweiten Warentypengruppe führt erst dann zu einer Änderung im Ablauf des Kommissionierverfahrens, wenn der Schritt c) (Ermitteln der Zugehörigkeit der für die Bearbeitung eines Auftrags benötigten Waren zu Warentypengruppen) nach der genannten Neuzuteilung zum nächsten Mal ausgeführt wird. Vorteilhaft wird der aktuelle Kommissioniervorgang durch die genannte Neuzuteilung nicht gestört. Insbesondere bietet sich eine solche Vorgangsweise dann an, wenn ein Umleiten der Ware des ersten Auftragsteils, welche die genannte Neuzuteilung der Warentype zur zweiten Warentypengruppe bewirkt, zu einer ersten manuellen Kommissionierstation nicht möglich ist oder mit erheblichen Nachteilen verbunden ist.

Günstig ist es aber auch, wenn die zumindest eine Ware des ersten Auftragsteils, welche die Neuzuteilung der Warentype dieser Ware zur zweiten Warentypengruppe bewirkt, dem zweiten Auftragsteil zugeteilt und entsprechend kommissioniert wird. Bei dieser Variante wirkt sich die Neuzuteilung einer Warentype einer Ware des ersten Auftragsteils zur zweiten Warentypengruppe direkt auf den aktuellen Kommissioniervorgang aus. Die Neuzuteilung der Warentype der Ware des ersten Auftragsteils zur zweiten Warentypengruppe führt unmittelbar auch zu einer Neuzuteilung der betreffenden Ware zum zweiten Auftragsteil. Vorteilhaft wird die genannte Neuzuteilung sofort wirksam. Insbesondere bietet sich eine solche Vorgangsweise dann an, wenn jene Ware, welche die genannte Neuzuteilung der Warentype zur zweiten Warentypengruppe bewirkt, zu einer erheblichen Störung im Ablauf des aktuellen Kommissioniervorgangs führen würde, wenn sie nach wie vor beim ersten Auftragsteil verbleiben würde.

Vorteilhaft ist es auch, wenn eine Ware des ersten Auftragsteils dem zweiten Auftragsteil zugeordnet und zu einer ersten manuellen Kommissionierstation gefördert wird (und die Warentype dieser Ware insbesondere bei der ersten Warentypengruppe verbleibt), wenn die Anzahl an Fehlhandhabungen (genau) dieser Ware an der ersten automatischen Kommissionierstation einen Fehlhandhabungs-Schwellwert überschreitet. Auf diese Weise wird vermieden, dass Waren des ersten Auftragsteils, die in Ausnahmefällen an der ersten automatischen Kommissionierstation nicht in angemessener Zeit automatisch gehandhabt werden können, die betreffende erste automatische Kommissionierstation blockieren. Stattdessen werden diese Waren des ersten Auftragsteils an eine erste manuelle Kommissionierstation gefördert. Eine Zuteilung dieser Ware zur zweiten oder dritten Warentypengruppe ist bei dieser Ausführungsvariante im Grunde nicht vorgesehen, da es sich um die Behandlung einer Ausnahmesituation handelt. Es kann jedoch passieren, dass diese Ware auch das Überschreiten des ersten Schwellwerts verursacht (beispielsweise wenn schon viele andere grenzwertige Handhabungen in einem Beobachtungszeitraum erfolgt sind) und es daher zu einer Neuzuordnung der Warentype der betreffenden Ware kommt.

Vorteilhaft wird der erste Schwellwert anhand einer (verfügbaren) Kapazität einer Gruppe von Kommissionierstationen ermittelt, welche zumindest eine erste automatische Kommissionierstation und zumindest eine erste manuelle Kommissionierstation umfasst und welche für die Ausführung mehrerer Aufträge in einem vorgebbaren Zeitraum verfügbar ist.

Bei dieser Variante wird nach einem ersten Schwellwert gesucht, welcher an die Kapazitäten der ersten automatischen und manuellen Kommissionierstationen der Gruppe angepasst ist, sodass es nach Möglichkeit zu keiner Schieflast im Lager- und Kommissioniersystem kommt, das heißt zu einem Ungleichgewicht der (prozentuellen) Auslastung der ersten automatischen und manuellen Kommissionierstationen der Gruppe.

Die "Kapazität" (genauer die "verfügbare Kapazität") ist die Menge an Handhabungen, die in einem vorgebbaren Zeitraum ausgeführt werden können. Eine "benötigte Kapazität" ist dagegen jene Menge an Handhabungen, die in einem vorgebbaren Zeitraum für die Ausführung einer bestimmten Menge an Aufträgen nötig ist.

Die Kapazität, die der Ermittlung des ersten Schwellwerts zugrunde gelegt wird, kann die maximale Menge an Handhabungen sein, die in einem vorgebbaren Zeitraum ausgeführt werden können. Sie kann aber grundsätzlich auch auf einen geringeren Wert festgesetzt werden, beispielsweise auf 90% (relative Auslastung) der genannten maximalen Menge an Handhabungen. Die Kapazitäten der ersten automatischen Kommissionierstationen und der ersten manuellen Kommissionierstationen können auch auf unterschiedliche relative Auslastungen festgesetzt werden. Auch eine Aufteilung anhand eines Relativwerts, welcher die Verteilung der absoluten oder relativen Kapazität auf die ersten automatischen Kommissionierstationen und die ersten manuellen Kommissionierstationen angibt, wäre möglich, z.B. 30% manuelle Handhabungen und 70% automatische Handhabungen.

Besonders vorteilhaft ist es in obigem Zusammenhang, wenn

- mehrere Aufträge zum Kommissionieren von Waren erfasst und die für diese Aufträge benötigten Waren bestimmt (und vorteilhaft anhand ihrer Fehlerrate sortiert) werden,
- eine für die Ausführung dieser Aufträge in einem vorgebbaren Zeitraum erste benötigte Kapazität der ersten automatischen Kommissionierstationen der Gruppe für die Kommissionierung der Waren der ersten Warentypengruppe und eine in diesem Zeitraum zweite benötigte Kapazität der ersten manuellen Kommissionierstationen der Gruppe für die Kommissionierung der Waren der zweiten Warentypengruppe für verschiedene erste Schwellwerte berechnet wird,
- eine in diesem Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird und
- jener erste Schwellwert für die Ausführung der genannten Aufträge gewählt wird, für welchen die geringste Abweichung zwischen der ersten benötigten Kapazität und der ersten verfügbaren Kapazität sowie zwischen der zweiten benötigten Kapazität und der zweiten verfügbaren Kapazität ermittelt wird.

Beispielsweise kann für die Ermittlung der geringsten Abweichung die Summe der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann die kleinste der genannten und für verschiedene erste Schwellwerte berechnete Summen. Es gilt dann:

$$\text{Geringste Abweichung} = \text{Minimum}(\text{erste verfügbare Kapazität} - \text{erste benötigte Kapazität} + \text{zweite verfügbare Kapazität} - \text{zweite benötigte Kapazität})$$

Für die Ermittlung der geringsten Abweichung kann beispielsweise auch das Produkt aus der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann das kleinste der genannten und für verschiedene erste Schwellwerte berechneten Produkte. Es gilt dann:

$$\text{Geringste Abweichung} = \text{Minimum}((\text{erste verfügbare Kapazität} - \text{erste benötigte Kapazität})$$
$$\text{x (zweite verfügbare Kapazität} - \text{zweite benötigte Kapazität}))$$

Vorteilhaft ist es weiterhin, wenn der erste Schwellwert und der zweite Schwellwert anhand einer Kapazität einer Gruppe von Kommissionierstationen ermittelt werden, welche zumindest eine erste automatische Kommissionierstation und zumindest eine erste manuelle Kommissionierstation umfasst und welche für die Ausführung mehrerer Aufträge in einem vorgebbaren Zeitraum verfügbar ist.

Bei dieser Variante wird nicht nur nach einem ersten Schwellwert gesucht, welcher an die Kapazitäten der ersten automatischen und manuellen Kommissionierstationen der Gruppe angepasst ist, sondern zusätzlich auch ein zweiter Schwellwert. Nach Möglichkeit soll es dabei zu keiner Schieflast im Lager- und Kommissioniersystem kommen, das heißt zu einem Ungleichgewicht der (prozentuellen) Auslastung der ersten automatischen und manuellen Kommissionierstationen der Gruppe.

Die "Kapazität" (genauer die "verfügbare Kapazität") ist wiederum die Menge an Handhabungen, die in einem vorgebbaren Zeitraum ausgeführt werden können. Eine "benötigte Kapazität" ist dagegen wieder jene Menge an Handhabungen, die in einem vorgebbaren Zeitraum für die Ausführung einer bestimmten Menge an Aufträgen nötig ist.

Die Kapazität, die der Ermittlung der beiden Schwellwerte zugrunde gelegt wird, kann wiederum die maximale Menge an Handhabungen sein, die in einem vorgebbaren Zeitraum ausgeführt werden können. Sie kann aber grundsätzlich auch auf einen geringeren Wert festgesetzt werden, beispielsweise auf 90% (relative Auslastung) der genannten maximalen Menge an Handhabungen. Die Kapazitäten der ersten automatischen Kommissionierstationen und der ersten manuellen Kommissionierstationen können auch auf unterschiedliche relative Auslastungen festgesetzt werden. Auch eine Aufteilung anhand eines Relativwerts, welcher die Verteilung der absoluten oder relativen Kapazität auf die ersten automatischen Kommissionierstationen und die ersten manuellen Kommissionierstationen angibt, wäre wiederum möglich, z.B. 30% manuelle Handhabungen und 70% automatische Handhabungen.

Besonders vorteilhaft ist es in obigem Zusammenhang, wenn

- mehrere Aufträge zum Kommissionieren von Waren erfasst und die für diese Aufträge benötigten Waren bestimmt (und vorteilhaft anhand ihrer Fehlerrate sortiert) werden,
- die (vorteilhaft nach Fehlerrate sortierte) dritte Warentypengruppe bei einem dritten Schwellwert in voraussichtlich automatisch zu kommissionierende Waren mit einer Fehlerrate kleiner gleich dem dritten Schwellwert und voraussichtlich manuell zu kommissionierende Waren mit einer Fehlerrate größer dem dritten Schwellwert aufgeteilt wird,
- eine für die Ausführung dieser Aufträge in einem vorgebbaren Zeitraum erste benötigte Kapazität der ersten automatischen Kommissionierstationen der Gruppe für die Kommissionierung der Waren der ersten Warentypengruppe inklusive der voraussichtlich automatisch zu kommissionierenden Waren der dritten Warentypengruppe und eine in diesem Zeitraum zweite benötigte Kapazität der ersten manuellen Kommissionierstationen der Gruppe für die Kommissionierung der Waren der zweiten Warentypengruppe inklusive der voraussichtlich manuell zu kommissionierenden Waren der dritten Warentypengruppe für verschiedene dritte Schwellwerte (das heißt für verschiedene Aufteilungen der dritten Warentypengruppe) berechnet wird,
- eine in diesem Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird,
- jener dritte Schwellwert (das heißt jene Aufteilung der dritten Warentypengruppe) für die Ausführung der genannten Aufträge gewählt wird, für welche die geringste Abweichung zwischen der ersten benötigten Kapazität und der ersten verfügbaren Kapazität sowie der zwischen der zweiten benötigten Kapazität und der zweiten verfügbaren Kapazität ermittelt wird und
- der erste Schwellwert in einem gewählten ersten Reserve-Abstand unterhalb des dritten Schwellwerts und der zweite Schwellwert in einem gewählten zweiten Reserve-Abstand oberhalb des dritten Schwellwerts gesetzt wird.

Für die Ermittlung der geringsten Abweichung kann beispielsweise wiederum die Summe der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann die kleinste der genannten und für verschiedene dritte Schwellwerte berechnete Summen. Es gilt dann:

$$\text{Geringste Abweichung} = \text{Minimum(erste verfügbare Kapazität - erste benötigte Kapazität +}$$

$$\text{zweite verfügbare Kapazität - zweite benötigte Kapazität)}$$

Für die Ermittlung der geringsten Abweichung kann beispielsweise auch wieder das Produkt aus der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann das kleinste der genannten und für verschiedene dritte Schwellwerte berechneten Produkte. Es gilt dann:

$$\text{Geringste Abweichung} = \text{Minimum((erste verfügbare Kapazität - erste benötigte Kapazität)}$$

$$\text{x (zweite verfügbare Kapazität - zweite benötigte Kapazität))}$$

Der erste Reserve-Abstand legt die Größe des Teils der dritten Warentypengruppe fest, welcher die voraussichtlich automatisch zu kommissionierenden Waren umfasst, und damit die Reserve, um auf ungeplante und unerwartete Abweichungen der real ablaufenden Ausführung der genannten Aufträge an den ersten automatischen Kommissionierstationen von der Berechnung reagieren zu können.

Der zweite Reserve-Abstand legt die Größe des Teils der dritten Warentypengruppe fest, welcher die voraussichtlich manuell zu kommissionierenden Waren umfasst, und damit die Reserve, um auf ungeplante und unerwartete Abweichungen der real ablaufenden Ausführung der genannten Aufträge an den ersten manuellen Kommissionierstationen von der Berechnung reagieren zu können.

Besonders vorteilhaft ist es auch, wenn eine Teilmenge an auszuführenden Aufträgen anhand einer Kapazität einer Gruppe von Kommissionierstationen ermittelt wird, welche zumindest eine erste automatische Kommissionierstation und zumindest eine erste manuelle Kommissionierstation umfasst und welche für die Ausführung dieser Teilmenge an auszuführenden Aufträgen in einem vorgebbaren Zeitraum verfügbar ist. Bei dieser Variante wird nach einer passenden Teilmenge an Aufträgen gesucht, die aus der Gesamtheit der anstehenden und abzuarbeitenden Aufträge ausgewählt wird und in einem vorgebbaren Zeitraum voraussichtlich oder im Wesentlichen von der Gruppe von Kommissionierstationen abgearbeitet werden kann.

In obigen Zusammenhang ist es weiterhin von Vorteil, wenn

- mehrere Aufträge zum Kommissionieren von Waren erfasst und die für diese Aufträge benötigten Waren bestimmt werden,
- eine für die Ausführung dieser Aufträge erste benötigte Kapazität der ersten automatischen Kommissionierstationen der Gruppe für die Kommissionierung der Waren der ersten Warentypengruppe (gegebenenfalls inklusive der voraussichtlich automatisch zu kommissionierenden Waren der dritten Warentypengruppe mit einer Fehlerrate kleiner gleich dem dritten Schwellwert) und eine in diesem Zeitraum zweite benötigte Kapazität der ersten manuellen Kommissionierstationen der Gruppe für die Kommissionierung der Waren der zweiten Warentypengruppe (gegebenenfalls inklusive der voraussichtlich manuell zu kommissionierenden Waren der dritten Warentypengruppe mit einer Fehlerrate größer dem dritten Schwellwert) für verschiedene Teilmengen der genannten Aufträge (insbesondere bei vorgegebenem ersten oder dritten Schwellwert) berechnet wird,
- eine in einem vorgebbaren Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird und
- jene Teilmenge an genannten Aufträgen im gewählten Zeitraum ausgeführt wird, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird.

Für die Ermittlung der geringsten Abweichung kann beispielsweise wiederum die Summe der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann die kleinste der genannten und für verschiedene Teilmengen berechneten Summen. Es gilt dann:

$$\text{Geringste Abweichung} = \text{Minimum(erste verfügbare Kapazität - erste benötigte Kapazität +}$$

$$\text{zweite verfügbare Kapazität - zweite benötigte Kapazität)}$$

Für die Ermittlung der geringsten Abweichung kann beispielsweise auch wieder das Produkt aus der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann das kleinste der genannten und für verschiedene Teilmengen berechneten Produkte. Es gilt dann:

$$\text{Geringste Abweichung} = \text{Minimum}((\text{erste verfügbare Kapazität} - \text{erste benötigte Kapazität})$$

$$\text{x (zweite verfügbare Kapazität} - \text{zweite benötigte Kapazität}))$$

Günstig ist es, wenn die Teilmenge an auszuführenden Aufträgen bei vorgegebenem ersten (oder dritten) Schwellwert ermittelt wird. Dadurch sind über die Bestimmung der Teilmenge an Aufträgen hinaus an sich keine wesentlichen Planungsschritte mehr erforderlich, und es kann unmittelbar mit der Ausführung der Aufträge der genannten Teilmenge begonnen werden.

Besonders vorteilhaft ist es auch, wenn der erste Schwellwert anhand einer Kapazität einer Gruppe von ersten automatischen und manuellen Kommissionierstationen für eine Teilmenge an auszuführenden Aufträgen ermittelt wird, wobei die besagte Teilmenge an auszuführenden Aufträgen zuvor anhand der Kapazität der Gruppe der ersten automatischen und manuellen Kommissionierstationen ermittelt wurde. Bei dieser Variante wird in einem ersten Schritt nach einer passenden Teilmenge an Aufträgen gesucht, die aus der Gesamtheit der anstehenden und abzuarbeitenden Aufträge ausgewählt wird und in einem vorgebbaren Zeitraum voraussichtlich oder im Wesentlichen von der Gruppe von ersten automatischen und manuellen Kommissionierstationen abgearbeitet werden kann. In einem zweiten Schritt wird nach einem ersten Schwellwert gesucht, welcher an die Kapazitäten der erstem automatischen und manuellen Kommissionierstationen der Gruppe angepasst ist.

Konkret kann also vorgesehen sein, dass

- eine Teilmenge an auszuführenden Aufträgen anhand einer Kapazität einer Gruppe von Kommissionierstationen ermittelt wird, welche zumindest eine erste automatische Kommissionierstation und zumindest eine erste manuelle Kommissionierstation umfasst und welche für die Ausführung dieser Teilmenge an auszuführenden Aufträgen in einem vorgebbaren Zeitraum verfügbar ist, und
- der erste Schwellwert für diese Teilmenge an auszuführenden Aufträgen anhand der Kapazität der Gruppe von Kommissionierstationen ermittelt wird.

Denkbar ist auch, dass

- mehrere Aufträge zum Kommissionieren von Waren erfasst und die für diese Aufträge benötigten Waren bestimmt werden,
- eine für die Ausführung dieser Aufträge in einem vorgebbaren Zeitraum erste benötigte Kapazität der ersten automatischen Kommissionierstationen der Gruppe für die Kommissionierung der Waren der ersten Warentypengruppe und eine in diesem Zeitraum zweite benötigte Kapazität der ersten manuellen Kommissionierstationen der Gruppe für die Kommissionierung der Waren der zweiten Warentypengruppe für verschiedene Teilmengen der genannten Aufträge berechnet wird,
- eine in einem vorgebbaren Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird,
- jene Teilmenge an genannten Aufträgen im gewählten Zeitraum ausgeführt wird, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird, wobei
- eine für die Ausführung der ermittelten Teilmenge an auszuführenden Aufträgen im gewählten Zeitraum erste benötigte Kapazität der ersten automatischen Kommissionierstationen der Gruppe für die Kommissionierung der Waren der ersten Warentypengruppe und eine in diesem Zeitraum zweite benötigte Kapazität der ersten manuellen Kommissionierstationen der Gruppe für die Kommissionierung der Waren der zweiten Warentypengruppe für verschiedene erste Schwellwerte berechnet wird,
- eine in diesem Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird und
- jener erste Schwellwert für die Ausführung der ermittelten Teilmenge an auszuführenden Aufträgen gewählt wird, für welchen die geringste Abweichung zwischen der ersten benötigten Kapazität und der ersten verfügbaren Kapazität sowie zwischen der zweiten benötigten Kapazität und der zweiten verfügbaren Kapazität ermittelt wird.

Besonders vorteilhaft ist es zudem, wenn der erste Schwellwert und der zweite Schwellwert anhand einer Kapazität einer Gruppe von ersten automatischen und manuellen Kommissionierstationen für eine Teilmenge an auszuführenden Aufträgen ermittelt wird, wobei die besagte Teilmenge an auszuführenden Aufträgen zuvor anhand der Kapazität der Gruppe der ersten automatischen und manuellen Kommissionierstationen ermittelt wurde. Bei dieser Variante wird in einem ersten Schritt wiederum nach einer passenden Teilmenge an Aufträgen gesucht, die aus der Gesamtheit der anstehenden und abzuarbeitenden Aufträge ausgewählt wird und in einem vorgebbaren Zeitraum voraussichtlich oder im Wesentlichen von der Gruppe von ersten automatischen und manuellen Kommissionierstationen abgearbeitet werden kann. In einem zweiten Schritt wird nach einem ersten Schwellwert und einem zweiten Schwellwert gesucht, welcher an die Kapazitäten der ersten automatischen und manuellen Kommissionierstationen der Gruppe angepasst ist.

Konkret kann also vorgesehen sein, dass

- eine Teilmenge an auszuführenden Aufträgen anhand einer Kapazität einer Gruppe von Kommissionierstationen ermittelt wird, welche zumindest eine erste automatische Kommissionierstation und zumindest eine erste manuelle Kommissionierstation umfasst und welche für die Ausführung dieser Teilmenge an auszuführenden Aufträgen in einem vorgebbaren Zeitraum verfügbar ist, und
- der erste Schwellwert und der zweite Schwellwert für diese Teilmenge an auszuführenden Aufträgen anhand der Kapazität der Gruppe von Kommissionierstationen ermittelt werden.

Denkbar ist auch, dass

- mehrere Aufträge zum Kommissionieren von Waren erfasst und die für diese Aufträge benötigten Waren bestimmt werden,
- eine für die Ausführung dieser Aufträge in einem vorgebbaren Zeitraum erste benötigte Kapazität der ersten automatischen Kommissionierstationen der Gruppe für die Kommissionierung der Waren der ersten Warentypengruppe und eine in diesem Zeitraum zweite benötigte Kapazität der ersten manuellen Kommissionierstationen der Gruppe für die Kommissionierung der Waren der zweiten Warentypengruppe für verschiedene Teilmengen der genannten Aufträge berechnet wird,
- eine in einem vorgebbaren Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird und
- jene Teilmenge an genannten Aufträgen im gewählten Zeitraum ausgeführt wird, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird, wobei
- die dritte Warentypengruppe bei einem dritten Schwellwert in voraussichtlich automatisch zu kommissionierende Waren mit einer Fehlerrate kleiner gleich dem dritten Schwellwert und voraussichtlich manuell zu kommissionierende Waren mit einer Fehlerrate größer dem dritten Schwellwert aufgeteilt wird,
- eine für die Ausführung der ermittelten Teilmenge an auszuführenden Aufträgen im gewählten Zeitraum erste benötigte Kapazität der ersten automatischen Kommissionierstationen der Gruppe für die Kommissionierung der Waren der ersten Warentypengruppe inklusive der voraussichtlich automatisch zu kommissionierenden Waren der dritten Warentypengruppe und eine in diesem Zeitraum zweite benötigte Kapazität der ersten manuellen Kommissionierstationen der Gruppe für die Kommissionierung der Waren der zweiten Warentypengruppe inklusive der voraussichtlich manuell zu kommissionierenden Waren der dritten Warentypengruppe für verschiedene dritte Schwellwerte berechnet wird,
- eine in diesem Zeitraum erste verfügbare Kapazität der ersten automatischen Kommissionierstationen der Gruppe und eine in diesem Zeitraum zweite verfügbare Kapazität der ersten manuellen Kommissionierstationen der Gruppe ermittelt wird,
- jener dritte Schwellwert für die Ausführung der ermittelten Teilmenge an auszuführenden Aufträgen gewählt wird, für welche die geringste Abweichung zwischen der ersten benötigten Kapazität und der ersten verfügbaren Kapazität sowie der zwischen der zweiten benötigten Kapazität und der zweiten verfügbaren Kapazität ermittelt wird und
- der erste Schwellwert in einem gewählten ersten Reserve-Abstand unterhalb des dritten Schwellwerts und der zweite Schwellwert in einem gewählten zweiten Reserve-Abstand oberhalb des dritten Schwellwerts gesetzt wird.

Vorteilhaft ist es weiterhin, wenn eine Teilmenge der genannten Aufträge durch zufällige Auswahl von einigen der mehreren Aufträge bestimmt wird. Auf diese Weise soll vermieden werden, dass für die Teilmengen nur Aufträge mit hohem Anteil an automatisch zu kommissionierenden Waren oder nur Aufträge mit hohem Anteil an manuell zu kommissionierenden Waren ausgewählt werden und es dann zu einer Schieflast in dem Lager- und Kommissioniersystem kommen könnte. Stattdessen werden die Aufträge zufällig und damit im Hinblick auf die Art der Kommissionierung (automatisch oder manuell) mehr oder minder gleichverteilt ausgewählt.

Von Vorteil ist es aber auch, wenn

- ein Verfügbarkeits-Anteil der ersten verfügbaren Kapazität (also der Kapazität der ersten automatischen Kommissionierstationen) durch Division der ersten verfügbaren Kapazität durch die Summe aus der ersten und der zweiten verfügbaren Kapazität (also durch die Summe der Kapazität der ersten automatischen Kommissionierstationen und der ersten manuellen Kommissionierstationen) berechnet wird,
- für jeden der mehreren Aufträge ein Bedarfs-Anteil für die erste benötigte Kapazität (also der von den ersten automatischen Kommissionierstationen benötigten Kapazität) durch Division der ersten benötigten Kapazität durch die Summe aus der ersten und der zweiten benötigten Kapazität (also durch die Summe der von den ersten automatischen Kommissionierstationen und den ersten manuellen Kommissionierstationen benötigten Kapazität) berechnet wird und
- der Anteil an Aufträgen mit einem Bedarfs-Anteil über dem Verfügbarkeits-Anteil maximal um 10% vom Anteil an Aufträgen mit einem Bedarfs-Anteil unter dem Verfügbarkeits-Anteil abweicht.

Auf diese Weise soll eine möglichst passende Auswahl an Aufträgen erreicht werden. Insbesondere kann auf diese Weise eine Ungleichheit zwischen der ersten verfügbaren Kapazität der ersten automatischen Kommissionierstationen und der zweiten verfügbaren Kapazität der ersten manuellen Kommissionierstationen gut berücksichtigt werden. Das heißt, der Bedarf für die Aufträge der Teilmenge wird mit Hilfe der vorgeschlagenen Ausführungsvariante gut an die Verfügbarkeit im Lager- und Kommissioniersystem angepasst.

Von Vorteil ist es zudem auch, wenn die genannten mehreren Aufträge anhand eines Sortierparameters sortiert werden und bei der Bestimmung einer Teilmenge eine Gleichverteilung hinsichtlich des Sortierparameters angestrebt wird, wobei als Sortierparameter

- eine in einem Auftrag vorhandene Stückzahl an Waren der ersten Warentypengruppe (gegebenenfalls inklusive der voraussichtlich automatisch zu kommissionierenden Waren der dritten Warentypengruppe mit einer Fehlerrate kleiner gleich dem dritten Schwellwert) vorgesehen ist oder
- ein in einem Auftrag vorhandener relativer Anteil an Waren der ersten Warentypengruppe (gegebenenfalls inklusive der voraussichtlich automatisch zu kommissionierenden Waren der dritten Warentypengruppe mit einer Fehlerrate kleiner gleich dem dritten Schwellwert) vorgesehen ist, welcher durch Division der Stückzahl an Waren der ersten Warentypengruppe eines Auftrag durch die Stückzahl aller Waren dieses Auftrags berechnet wird.

Auf diese Weise soll vermieden werden, dass für die Teilmengen nur Aufträge mit hoher Stückzahl oder nur Aufträge mit niedriger Stückzahl ausgewählt werden und es dann zu einer ungünstigen Auslastung im Lager- und Kommissioniersystem kommen könnte. Menschliche Kommissionierer manipulieren beim Kommissioniervorgang häufig mehrere Waren gleichzeitig, das heißt laden mehrere Waren in einem Schritt von einem Quell-Ladehilfsmittel in oder auf ein Ziel-Ladehilfsmittel um, wohingegen Roboter häufig nur eine oder nur einige wenige Waren gleichzeitig manipulieren beziehungsweise umladen können. Insofern ist eine Ungleichverteilung der Aufträge im Hinblick auf die Stückzahl ungünstig, weswegen die Aufträge bei dieser Ausführungsvariante im Hinblick auf die Stückzahl gleichverteilt ausgewählt werden.

Günstig ist es darüber hinaus, wenn für eine Teilmenge Aufträge mit höherer Priorität bevorzugt ausgewählt werden, wobei die Aufträge dazu vorteilhaft nach einer Priorität sortiert werden, nach der die Aufträge ausgeführt werden sollen. Auf diese Weise soll verhindert werden, dass Aufträge, die schnell ausgeführt werden müssen, aufgrund von anderen Auswahlkriterien erst verspätet zur Kommissionierung gelangen.

Besonders vorteilhaft ist es auch, wenn das erste Quell-Ladehilfsmittel mit der zumindest einen Ware des ersten Auftragsteils dem zweiten Auftragsteil zugeteilt wird, zu einer ersten manuellen Kommissionierstation transportiert und dort bereitgestellt wird und in Folge die zumindest eine genannte Ware des zweiten Auftragsteils manuell in oder auf ein erstes oder zweites Ziel-Ladehilfsmittel geladen wird,

- wenn die Abgabe mehrerer Waren der zweiten Warentypengruppe des zweiten Auftragsteils in das erste oder zweite Ziel-Ladehilfsmittel an der ersten manuellen Kommissionierstation schneller erfolgt als die Abgabe derselben Anzahl an Waren des ersten Auftragsteils in das erste Ziel-Ladehilfsmittel an der ersten automatischen Kommissionierstation oder
- wenn bereits alle Waren der zweiten Warentypengruppe des zweiten Auftragsteils an der ersten manuellen Kommissionierstation in erste oder zweite Ziel-Ladehilfsmittel geladen wurden.

Auf diese Weise kann die Zeit, die für die Abarbeitung eines Kommissionierauftrags nötig ist, gering gehalten werden, da Waren des ersten Auftragsteils, die nicht nur automatisch sondern grundsätzlich auch manuell kommissionierbar sind, über die erste manuelle Kommissionierstation kommissioniert werden, wenn die Kommissionierung des zweiten Auftragsteils schneller erfolgt als die Kommissionierung des ersten Auftragsteils oder der zweite Auftragsteil überhaupt fertig kommissioniert ist.

Besonders vorteilhaft ist es darüber hinaus, wenn dem ersten Auftragsteil zumindest eine Ware der dritten Warentypengruppe zugeteilt wird, zu einer ersten automatischen Kommissionierstation transportiert und dort automatisch in erste Ziel-Ladehilfsmittel geladen wird,

- wenn die Beladung der ersten Ziel-Ladehilfsmittel mit mehreren Waren der ersten Warentypengruppe des ersten Auftragsteils an der ersten automatischen Kommissionierstation schneller erfolgt als die Beladung der ersten oder zweiten Ziel-Ladehilfsmittel mit derselben Anzahl an Waren des zweiten Auftragsteils an der ersten manuellen Kommissionierstation oder

- wenn bereits alle Waren der ersten Warentypengruppe des ersten Auftragsteils an der ersten automatischen Kommissionierstation in erste Ziel-Ladehilfsmittel geladen wurden. Auf diese Weise wird die Zeit, die für die Abarbeitung eines Kommissionierauftrags nötig ist, ebenfalls gering gehalten, da noch nicht kommissionierte Waren der dritten Warentypengruppe dem ersten Auftragsteil zugerechnet werden, wenn die Kommissionierung der Waren der ersten Warentypengruppe schneller erfolgt als die Kommissionierung der Waren der zweiten Warentypengruppe oder alle Waren der ersten Warentypengruppe bereits kommissioniert sind. Dadurch werden erste manuelle Kommissionierstationen entlastet, da Waren der dritten Warentypengruppe an diesen ersten manuellen Kommissionierstationen nicht oder nur zu einem geringen Teil kommissioniert werden müssen.

Besonders vorteilhaft ist es aber auch, wenn dem zweiten Auftragsteil zumindest eine Ware der dritten Warentypengruppe zugeteilt wird, diese zumindest eine Ware zu einer ersten manuellen Kommissionierstation transportiert und dort bereitgestellt wird und in Folge die zumindest eine genannte Ware des zweiten Auftragsteils manuell in erste oder zweite Ziel-Ladehilfsmittel geladen wird,

- wenn die Beladung der ersten oder zweiten Ziel-Ladehilfsmittel mit mehreren Waren der zweiten Warentypengruppe des zweiten Auftragsteils an der ersten manuellen Kommissionierstation schneller erfolgt als die Beladung der ersten Ziel-Ladehilfsmittel mit derselben Anzahl an Waren des ersten Auftragsteils an der ersten automatischen Kommissionierstation oder

- wenn bereits alle Waren der zweiten Warentypengruppe des zweiten Auftragsteils an der ersten manuellen Kommissionierstation in erste oder zweite Ziel-Ladehilfsmittel geladen wurden.

Auf diese Weise wird die Zeit, die für die Abarbeitung eines Kommissionierauftrags nötig ist, ebenfalls gering gehalten, da noch nicht kommissionierte Waren der dritten Warentypengruppe dem zweiten Auftragsteil zugerechnet werden, wenn die Kommissionierung der Waren der zweiten Warentypengruppe schneller erfolgt als die Kommissionierung der Waren der ersten Warentypengruppe oder alle Waren der zweiten Warentypengruppe bereits kommissioniert sind. Dadurch werden erste automatische Kommissionierstationen entlastet, da Waren der dritten Warentypengruppe an diesen ersten automatischen Kommissionierstationen nicht oder nur zu einem geringen Teil kommissioniert werden müssen.

Sehr vorteilhaft ist es außerdem, wenn

- dem zweiten Auftragsteil zumindest eine Ware der dritten Warentypengruppe zugeteilt wird, diese zumindest eine Ware zu einer ersten manuellen Kommissionierstation transportiert und dort bereitgestellt wird und in Folge die zumindest eine genannte Ware des zweiten Auftragsteils manuell in erste oder zweite Ziel-Ladehilfsmittel geladen wird, solange Waren der dritten Warentypengruppe vorhanden sind und wenn die Beladung der ersten oder zweiten Ziel-Ladehilfsmittel mit mehreren Waren der zweiten Warentypengruppe des zweiten Auftragsteils an der ersten manuellen Kommissionierstation schneller erfolgt als die Beladung der ersten Ziel-Ladehilfsmittel mit derselben Anzahl an Waren des ersten Auftragsteils an der ersten automatischen Kommissionierstation oder wenn bereits alle Waren der zweiten Warentypengruppe des zweiten Auftragsteils an der ersten manuellen Kommissionierstation in erste oder zweite Ziel-Ladehilfsmittel geladen wurden, und dann

- zumindest eine Ware des ersten Auftragsteils dem zweiten Auftragsteil zugeteilt wird, zu einer ersten manuellen Kommissionierstation transportiert und dort bereitgestellt wird und in Folge die zumindest eine genannte Ware des zweiten Auftragsteils manuell in erste oder zweite Ziel-Ladehilfsmittel geladen wird, wenn die Beladung der ersten oder zweiten Ziel-Ladehilfsmittel mit mehreren Waren der zweiten Warentypengruppe des zweiten Auftragsteils an der ersten manuellen Kommissionierstation schneller erfolgt als die Beladung der ersten Ziel-Ladehilfsmittel mit derselben Anzahl an Waren des ersten Auftragsteils an der ersten automatischen Kommissionierstation oder wenn

20

bereits alle Waren der zweiten Warentypengruppe des zweiten Auftragsteils an der ersten manuellen Kommissionierstation in erste oder zweite Ziel-Ladehilfsmittel geladen wurden.

Auf diese Weise können erste automatische Kommissionierstationen besonders gut entlastet werden, sofern die Abarbeitung des Kommissionierauftrags an der ersten manuellen Kommissionierstation besonders schnell erfolgt. Außerdem kann die Zeit, die für die Abarbeitung eines Kommissionierauftrags nötig ist, auch dann gering gehalten werden, wenn dieser im Verhältnis zu den Waren der zweiten Warentypengruppe besonders wenige Waren der ersten Warentypengruppe enthält.

Umgekehrt ist es auch von Vorteil, wenn

- dem ersten Auftragsteil zumindest eine Ware der dritten Warentypengruppe zugeteilt wird, diese zumindest eine Ware zu einer ersten automatischen Kommissionierstation transportiert und dort bereitgestellt wird und in Folge die zumindest eine genannte Ware des ersten Auftragsteils automatisch in ein erstes Ziel-Ladehilfsmittel geladen wird, solange Waren der dritten Warentypengruppe vorhanden sind und wenn die Beladung der ersten Ziel-Ladehilfsmittel mit mehreren Waren der ersten Warentypengruppe des ersten Auftragsteils an der ersten automatischen Kommissionierstation schneller erfolgt als die Beladung der ersten oder zweiten Ziel-Ladehilfsmittel mit derselben Anzahl an Waren des zweiten Auftragsteils an der ersten manuellen Kommissionierstation oder wenn bereits alle Waren der ersten Warentypengruppe des ersten Auftragsteils an der ersten automatischen Kommissionierstation in erste Ziel-Ladehilfsmittel geladen wurden, und dann
- zumindest eine Ware des zweiten Auftragsteils dem ersten Auftragsteil zugeteilt wird, zu einer ersten automatischen Kommissionierstation transportiert und dort bereitgestellt wird und in Folge die zumindest eine genannte Ware des ersten Auftragsteils automatisch in ein erstes Ziel-Ladehilfsmittel geladen wird, wenn die Beladung der ersten Ziel-Ladehilfsmittel mit mehreren Waren der ersten Warentypengruppe des ersten Auftragsteils an der ersten automatischen Kommissionierstation schneller erfolgt als die Beladung der ersten oder zweiten Ziel-Ladehilfsmittel mit derselben Anzahl an Waren des zweiten Auftragsteils an der ersten manuellen Kommissionierstation oder wenn bereits alle Waren der ersten Warentypengruppe des ersten Auftragsteils an der ersten automatischen Kommissionierstation in erste Ziel-Ladehilfsmittel geladen wurden.

Auf diese Weise können erste manuelle Kommissionierstationen besonders gut entlastet werden, sofern die Abarbeitung des Kommissionierauftrags an der ersten automatischen Kommissionierstation besonders schnell erfolgt. Außerdem kann die Zeit, die für die Abarbeitung eines Kommissionierauftrags nötig ist, auch dann gering gehalten werden, wenn dieser im Verhältnis zu den Waren der ersten Warentypengruppe besonders wenige Waren der zweiten Warentypengruppe enthält. Bei der Zuteilung von Waren des zweiten Auftragsteils zum ersten Auftragsteil ist darauf zu achten, dass die genannten Waren grundsätzlich automatisch kommissionierbar sind. Konkret trifft dies zu, wenn die Fehlerrate der Warentype der betreffenden Waren unter einem Zuteil-Schwellwert liegt, insbesondere unter dem ersten Schwellwert.

Alternativ oder zusätzlich ist es auch von Vorteil,

- wenn das Bereitstellen mehrerer Waren des ersten Auftragsteils an der ersten automatischen Kommissionierstation (und das Auslagern und das Transportieren der genannten Waren) sortiert nach der in den Auftragszeilen für die Waren des ersten Auftragsteils angegebenen Stückzahl erfolgt, wobei das Bereitstellen (und das Auslagern und das Transportieren) der Waren des ersten Auftragsteils von niedrigen zu aufsteigenden Stückzahlen hin erfolgt und
- wenn das Bereitstellen mehrerer Waren des zweiten Auftragsteils an der ersten manuellen Kommissionierstation (und das Auslagern und das Transportieren der genannten Waren) sortiert nach der in den Auftragszeilen für die Waren des zweiten Auftragsteils angegebenen Stückzahl erfolgt, wobei das Bereitstellen (und das Auslagern und das Transportieren) der Waren des zweiten Auftragsteils von hohen zu absteigenden Stückzahlen hin erfolgt.

Bei dieser Variante läuft das Kommissionierverfahren optimiert im Hinblick auf die in den Auftragszeilen enthaltene Stückzahl ab. Läuft die Kommissionierung an den ersten manuellen Kommissionierstationen schneller als erwartet ab, so können dem zweiten Auftragsteil "übrig gebliebene" Waren des ersten Auftragsteils zugeordnet und in Folge manuell kommissioniert werden. Das heißt, es kommt zu einer Umleitung der Warenströme von einer ersten automatischen zu einer ersten manuellen Kommissionierstation. Durch die besondere Vorgangsweise sind von der Neuzuordnung Auftragszeilen mit eher höheren Stückzahlen betroffen, welche für die manuelle Kommissionierung günstig sind, wohingegen Auftragszeilen mit einer geringeren Stückzahl pro Warentype bereits vorteilhaft an der ersten automatischen Kommissionierstation abgearbeitet wurden. Umgekehrt können dem ersten Auftragsteil "übrig gebliebene" Waren des zweiten Auftragsteils zugeordnet und in Folge automatisch kommissioniert werden, wenn die Kommissionierung an den ersten manuellen Kommissionierstationen langsamer als erwartet abläuft. Durch die besondere Vorgangsweise sind von der Neuzuordnung dann Auftragszeilen mit eher niedrigen Stückzahlen betroffen, die für die automatische Kommissionierung günstig sind.

Dies stellt ebenfalls eine Abkehr von jenem Prinzip dar, nach dem ein Roboter möglichst hohe Stückzahlen kommissionieren soll. Insgesamt kann auf diese Weise jedoch die Zeit, die für die Abarbeitung eines Kommissionierauftrags nötig ist, bei nur geringer Fehlerrate kurz gehalten werden.

Bei der Zuteilung von Waren des zweiten Auftragsteils zum ersten Auftragsteil ist darauf zu achten, dass die genannten Waren grundsätzlich automatisch kommissionierbar sind. Konkret trifft dies zu, wenn die Fehlerrate der Warentype der betreffenden Waren unter einem Zuteil-Schwellwert liegt, insbesondere unter dem ersten Schwellwert.

Der optimierte Ablauf des Kommissionierverfahrens kann grundsätzlich ohne die Bestimmung eines Stückzahl-Schwellwerts im Rahmen einer Planung des Kommissionierverfahrens erfolgen. Dennoch kann die weiter oben offenbarte Bestimmung eines Stückzahl-Schwellwerts auch in Kombination mit dieser Variante des Kommissionierverfahrens von Vorteil sein. In diesem Fall erfolgt die Aufteilung der Waren im Rahmen einer Planung anhand eines Stückzahl-Schwellwerts, und bei der Ausführung des Plans erfolgt das Bereitstellen von Waren sortiert nach Stückzahlen. Dadurch kann das Kommissionierverfahren auch dann noch optimal weiterlaufen, wenn es bei der Ausführung des Kommissionierverfahrens zu einer Abweichung vom Plan kommt.

In einer besonderen Ausführungsvariante werden die Auftragszeilen in nachfolgenden (tieferen) Sortierebenen noch nach einem anderen Sortierkriterium als nach der Stückzahl sortiert, beispielsweise nach ihrer Fehlerrate, nach dem Gewicht einer Ware oder nach der Größe oder dem Volumen einer Ware. Weisen mehrere Auftragszeilen dieselbe Stückzahl auf, so können diese zum Beispiel nach dem Gewicht einer Ware sortiert werden, mehrere Waren mit derselben Stückzahl und demselben Gewicht nach dem Volumen einer Ware und mehrere Waren mit derselben Stückzahl, demselben Gewicht und demselben Volumen nach ihrer Fehlerrate. Das heißt, die Sortierung erfolgt nach dem Schema Stückzahl → Gewicht → Volumen → Fehlerrate. Selbstverständlich ist auch eine andere Aufteilung der Sortierebenen möglich, beispielsweise Stückzahl → Fehlerrate → Gewicht → Volumen.

Durch die vorgeschlagenen Maßnahmen können schwere, große und/oder voluminöse Waren zuerst im Ziel-Ladehilfsmittel abgelegt werden und befinden sich im Ziel-Ladehilfsmittel daher weiter unten, was für die Beförderung des Ziel-Ladehilfsmittels von Vorteil ist.

Die genannte Sortierung kann sich generell auf einen (einzelnen) Auftrag beziehen oder auf eine Gruppe von Aufträgen. Bezieht sich die Sortierung auf eine Gruppe von Aufträgen, so kann das sortierte Bereitstellen über Auftragsgrenzen hinweg beziehungsweise ohne Berücksichtigung von Auftragsgrenzen erfolgen. Das heißt, an einer ersten automatischen oder manuellen Kommissionierstation werden die Aufträge nicht sequentiell, sondern quasi-parallel entsprechend der Sortierung der Auftragszeilen abgearbeitet.

Vorteilhaft ist es auch,

- wenn das Entnehmen mehrerer Waren des ersten Auftragsteils von zumindest einem ersten Quell-Ladehilfsmittel und das Abgeben dieser Waren in oder auf zumindest ein erstes Ziel-Ladehilfsmittel (das heißt das Umladen mehrerer Waren des ersten Auftragsteils von zumindest einem ersten Quell-Ladehilfsmittel in oder auf zumindest ein erstes Ziel-Ladehilfsmittel) sortiert nach der in den Auftragszeilen für die Waren des ersten Auftragsteils angegebenen Stückzahl erfolgt, wobei das Entnehmen und Abgeben (beziehungsweise das Umladen) von niedrigen zu aufsteigenden Stückzahlen hin erfolgt und

- wenn das Entnehmen mehrerer Waren des zweiten Auftragsteils von zumindest einem zweiten Quell-Ladehilfsmittel und das Abgeben dieser Waren in oder auf zumindest ein erstes oder zweites Ziel-Ladehilfsmittel (das heißt das Umladen mehrerer Waren des zweiten Auftragsteils von zumindest einem zweiten Quell-Ladehilfsmittel in oder auf zumindest ein erstes oder zweites Ziel-Ladehilfsmittel) sortiert nach der in den Auftragszeilen für die Waren des zweiten Auftragsteils angegebenen Stückzahl erfolgt, wobei das Entnehmen und Abgeben (beziehungsweise das Umladen) von hohen zu absteigenden Stückzahlen hin erfolgt.

Bei dieser Variante wird nicht auf das Bereitstellen eines Quell-Ladehilfsmittels Bezug genommen, sondern auf das Abgeben der in einem Quell-Ladehilfsmittel enthaltenen Waren an sich. Diese Ausführungsvariante ist insbesondere dann von Relevanz, wenn ein Quell-Ladehilfsmittel Waren unterschiedlicher Warentypen enthält.

Darüber hinaus ist es von Vorteil, wenn die Zuteilung mehrerer Waren der dritten Warentypengruppe zum ersten Auftragsteil oder zum zweiten Auftragsteil sortiert nach der in den Auftragszeilen für diese Waren angegebenen Stückzahl erfolgt, wobei die Zuteilung von Waren der dritten Warentypengruppe zum ersten Auftragsteil von niedrigen zu aufsteigenden Stückzahlen hin erfolgt und die Zuteilung von Waren der dritten Warentypengruppe zum zweiten Auftragsteil von hohen zu absteigenden Stückzahlen hin erfolgt. Bei dieser Variante macht man sich wiederum den Umstand zunutze, dass menschliche Kommissionierer beim Kommissioniervorgang häufig mehrere Waren gleichzeitig manipulieren, wohingegen Roboter häufig nur eine oder nur einige wenige Waren gleichzeitig manipulieren können. Dazu werden dem ersten Auftragsteil bevorzugt Auftragszeilen der dritten Warentypengruppe mit vergleichsweise geringer Stückzahl pro Auftragszeile zugeordnet, wohingegen dem zweiten Auftragsteil bevorzugt Auftragszeilen der dritten Warentypengruppe mit vergleichsweise hoher Stückzahl pro Auftragszeile zugeordnet werden. Durch die vorgeschlagenen Maßnahmen wird wiederum eine vorteilhafte Betriebsweise der ersten automatischen und manuellen Kommissionierstationen erreicht, wenn es zu einer Umleitung der Warenströme von einer ersten automatischen zu einer ersten manuellen Kommissionierstation kommt oder umgekehrt. Das heißt, stellt sich heraus, dass die Kommissionierung des zweiten Auftragsteils schneller erfolgt als die Kommissionierung des ersten Auftragsteils, werden dem zweiten Auftragsteil Auftragszeilen mit einer höheren Stückzahl pro Warentype zugeordnet, welche für die manuelle Kommissionierung von Vorteil sind. Stellt sich dagegen heraus, dass die Kommissionierung des ersten Auftragsteils schneller erfolgt als die Kommissionierung des zweiten Auftragsteils, werden dem ersten Auftragteil Auftragszeilen mit einer vergleichsweise geringen Stückzahl pro Warentype zugeordnet, welche für die automatische Kommissionierung von Vorteil sind. Dies stellt eine Abkehr von jenem Prinzip dar, nach dem ein Roboter möglichst hohe Stückzahlen kommissionieren soll. Insgesamt kann auf diese Weise jedoch die Zeit, die für die Abarbeitung eines Kommissionierauftrags nötig ist, bei nur geringer Fehlerrate kurz gehalten werden.

Weiterhin ist es von Vorteil,

- wenn einer Warentype eine Fehlerrate zugeordnet ist,
- wenn das Bereitstellen mehrerer Waren des ersten Auftragsteils an der ersten automatischen Kommissionierstation (und das Auslagern und das Transportieren der genannten Waren) sortiert nach der in den Auftragszeilen für die Waren des ersten Auftragsteils angegebenen Fehlerrate oder sortiert nach einem Parameter, der aus der besagten Fehlerrate und der in den Auftragszeilen für die Waren des ersten Auftragsteils angegebenen Stückzahl abgeleitet ist, erfolgt, wobei das Bereitstellen (und das Auslagern und das Transportieren) der Waren des ersten Auftragsteils bei einer Sortierung nach der Fehlerrate von niedrigen zu aufsteigenden Fehlerraten hin oder bei einer Sortierung nach dem genannten Parameter von niedrigen zu aufsteigenden Parametern hin erfolgt und
- wenn das Bereitstellen mehrerer Waren des zweiten Auftragsteils an der ersten manuellen Kommissionierstation (und das Auslagern und das Transportieren der genannten Waren) sortiert nach der in den Auftragszeilen für die Waren des zweiten Auftragsteils angegebenen Fehlerrate oder sortiert nach einem Parameter, der aus der besagten Fehlerrate und der in den Auftragszeilen für die Waren des zweiten Auftragsteils angegebenen Stückzahl abgeleitet ist, erfolgt, wobei das Bereitstellen (und das Auslagern und das Transportieren) der Waren des zweiten Auftragsteils bei einer Sortierung nach der Fehlerrate von hohen zu absteigenden Fehlerraten hin oder bei einer Sortierung nach dem Parameter von hohen zu absteigenden Parametern hin erfolgt.

Bei dieser Variante wird die Kommissionierung der Waren des ersten Auftragsteils an der ersten automatischen Kommissionierstation mit niedriger Fehlerrate oder niedrigem, von der Fehlerrate und der Stückzahl abgeleiteten, Parameter begonnen. An der ersten manuellen Kommissionierstation wird die Kommissionierung der Waren des zweiten Auftragsteils dagegen mit hoher Fehlerrate oder hohem, von der Fehlerrate und der Stückzahl abgeleiteten, Parameter begonnen. Durch die vorgeschlagenen Maßnahmen wird nun unter anderem dann eine vorteilhafte Betriebsweise der ersten manuellen Kommissionierstationen erreicht, wenn es zu einer Umleitung der Warenströme von einer ersten automatischen Kommissionierstation zu einer ersten manuellen Kommissionierstation kommt. Das heißt, stellt sich heraus, dass die Kommissionierung des zweiten Auftragsteils schneller erfolgt als die Kommissionierung des ersten Auftragsteils und Waren des ersten Auftragsteils zu einer ersten manuellen Kommissionierstation geleitet werden, dann ist die Wahrscheinlichkeit hoch, dass an der ersten manuellen Kommissionierstation Auftragszeilen mit höherer Fehlerrate zu bearbeiten sind, welche für die automatische Kommissionierung nachteilig sind, wohingegen Auftragszeilen mit geringer Fehlerrate bereits vorteilhaft an der ersten automatischen Kommissionierstation abgearbeitet wurden. Denkbar ist natürlich auch, dass Waren des zweiten Auftragsteils zu einer ersten automatischen Kommissionierstation geleitet werden, wenn die Kommissionierung des ersten Auftragsteils schneller erfolgt als die Kommissionierung des zweiten Auftragsteils. In diesem Fall sind an der ersten automatischen Kommissionierstation Auftragszeilen mit geringerer Fehlerrate zu bearbeiten, welche für die automatische Kommissionierung von Vorteil sind, wohingegen Auftragszeilen mit höherer Fehlerrate bereits vorteilhaft an der ersten manuellen Kommissionierstation abgearbeitet wurden. Insgesamt kann auf diese Weise die Zeit, die für die Abarbeitung eines Kommissionierauftrags benötigt wird, bei nur geringer Fehlerrate kurz gehalten werden.

Ein Parameter, der aus der besagten Fehlerrate und der in den Auftragszeilen für die Waren gespeicherten Stückzahl abgeleitet ist, kann generell als mathematischer Term verstanden werden, welcher die Fehlerrate und die Stückzahl enthält, und beispielsweise das Produkt der Stückzahl und der Fehlerrate sein oder die (gewichtete) Summe aus Stückzahl und Fehlerrate, beispielsweise

$$\text{Fehlerrate x Stückzahl}$$

oder

$$0,5 \text{ x Fehlerrate} + 1,0 \text{ x Stückzahl.}$$

Weitere Sortierparameter, die in die genannte gewichtete Summe einfließen können, sind das Gewicht, die Größe und/oder das Volumen einer Ware. Um dimensionslose Kennzahlen zu erhalten, können normierte Werte verwendet werden, also das auf ein Normvolumen bezogene Volumen einer Ware oder das auf ein Normgewicht bezogene Gewicht einer Ware. Der Sortierung kann zum Beispiel die gewichtete Summe 1,0 x Fehlerrate + 0,4 x Stückzahl + 0,2 x normiertes Volumen + 0,2 x normiertes Gewicht zugrunde gelegt werden.

In einer besonderen Ausführungsvariante werden die Auftragszeilen in nachfolgenden (tieferen) Sortierebenen noch nach einem anderen Sortierkriterium als nach der Fehlerrate oder dem genannten, abgeleiteten Parameter sortiert, beispielsweise nach dem Gewicht einer Ware oder nach der Größe oder dem Volumen einer Ware. Weisen mehrere Auftragszeilen dieselbe Fehlerrate auf, so können diese zum Beispiel nach dem Gewicht einer Ware sortiert werden, mehrere Waren mit derselben Stückzahl und demselben Gewicht nach dem Volumen einer Ware. Das heißt, die Sortierung erfolgt nach dem Schema Fehlerrate → Gewicht → Volumen. Selbstverständlich ist auch eine andere Aufteilung der Sortierebenen möglich, beispielsweise Fehlerrate → Volumen → Gewicht.

Durch die vorgeschlagenen Maßnahmen können schwere, große und/oder voluminöse Waren wiederum zuerst im Ziel-Ladehilfsmittel abgelegt werden und befinden sich im Ziel-Ladehilfsmittel daher weiter unten, was für die Beförderung des Ziel-Ladehilfsmittels von Vorteil ist.

Die Sortierung kann sich generell auf einen (einzelnen) Auftrag beziehen oder auf eine Gruppe von Aufträgen. Bezieht sich die Sortierung auf eine Gruppe von Aufträgen, so kann das sortierte Bereitstellen über Auftragsgrenzen hinweg beziehungsweise ohne Berücksichtigung von Auftragsgrenzen erfolgen. Das heißt, an einer ersten automatischen oder manuellen Kommissionierstation werden die Aufträge nicht sequentiell, sondern quasi-parallel entsprechend der Sortierung der Auftragszeilen erledigt.

Darüber hinaus ist es besonders vorteilhaft,

- wenn einer Warentype eine Fehlerrate zugeordnet ist,
- wenn das Entnehmen mehrerer Waren des ersten Auftragsteils von zumindest einem ersten Quell-Ladehilfsmittel und das Abgeben dieser Waren in oder auf zumindest ein erstes Ziel-Ladehilfsmittel (das heißt das Umladen mehrerer Waren des ersten Auftragsteils von zumindest einem ersten Quell-Ladehilfsmittel in oder auf zumindest ein erstes Ziel-Ladehilfsmittel) sortiert nach der in den Auftragszeilen für die Waren des ersten Auftragsteils angegebenen Fehlerrate oder sortiert nach einem Parameter, der aus der besagten Fehlerrate und der in den Auftragszeilen für die Waren des ersten Auftragsteils angegebenen Stückzahl abgeleitet ist, erfolgt, wobei das Entnehmen und Abgeben (beziehungsweise das Umladen) bei einer Sortierung nach der Fehlerrate von niedrigen zu aufsteigenden Fehlerraten hin oder bei einer Sortierung nach dem genannten Parameter von niedrigen zu aufsteigenden Parametern hin erfolgt und
- wenn das Entnehmen mehrerer Waren des zweiten Auftragsteils von zumindest einem zweiten Quell-Ladehilfsmittel und das Abgeben dieser Waren in oder auf zumindest ein erstes oder zweites Ziel-Ladehilfsmittel (das heißt das Umladen mehrerer Waren des zweiten Auftragsteils von zumindest einem zweiten Quell-Ladehilfsmittel in oder auf zumindest ein erstes oder zweites Ziel-Ladehilfsmittel) sortiert nach der in den Auftragszeilen für die Waren des zweiten Auftragsteils angegebenen Fehlerrate oder sortiert nach einem Parameter, der aus der besagten Fehlerrate und der in den Auftragszeilen für die Waren des zweiten Auftragsteils angegebenen Stückzahl abgeleitet ist, erfolgt, wobei das Entnehmen und Abgeben (beziehungsweise das Umladen) bei einer Sortierung nach der Fehlerrate von hohen zu absteigenden Fehlerraten hin oder bei einer Sortierung nach dem Parameter von hohen zu absteigenden Parametern hin erfolgt.

Bei dieser Variante wird ebenfalls nicht auf das Bereitstellen eines Quell-Ladehilfsmittels Bezug genommen, sondern auf das Abgeben der in einem Quell-Ladehilfsmittel enthaltenen Waren an sich. Diese Ausführungsvariante ist daher insbesondere dann wiederum von Relevanz, wenn ein Quell-Ladehilfsmittel Waren unterschiedlicher Warentypen enthält.

Besonders vorteilhaft ist es auch,

- wenn einer Warentype eine Fehlerrate zugeordnet ist und
- wenn die Zuteilung mehrerer Waren der dritten Warentypengruppe zum ersten Auftragsteil oder zum zweiten Auftragsteil sortiert nach der in den Auftragszeilen für diese Waren angegebenen Fehlerrate oder sortiert nach einem Parameter, der aus der besagten Fehlerrate und der in den Auftragszeilen für diese Waren angegebenen Stückzahl abgeleitet ist, erfolgt, wobei die Zuteilung von Waren der dritten Warentypengruppe zum ersten Auftragsteil bei einer Sortierung nach der Fehlerrate von niedrigen zu aufsteigenden Fehlerraten hin oder bei einer Sortierung nach dem genannten Parameter von niedrigen zu aufsteigenden Parametern hin erfolgt und die Zuteilung von Waren der dritten Warentypengruppe zum zweiten Auftragsteil bei einer Sortierung nach der Fehlerrate von hohen zu absteigenden Fehlerraten hin oder bei einer Sortierung nach dem genannten Parameter von hohen zu absteigenden Parametern hin erfolgt.

Bei dieser Variante wird wiederum nicht auf das Bereitstellen eines Quell-Ladehilfsmittels Bezug genommen, sondern auf das Abgeben der in einem Quell-Ladehilfsmittel enthaltenen Waren an sich. Diese Ausführungsvariante ist daher insbesondere dann wiederum von Relevanz, wenn ein Quell-Ladehilfsmittel Waren unterschiedlicher Warentypen enthält.

Günstig ist es weiterhin, wenn die Waren der ersten Warentypengruppe artikelrein in den ersten Quell-Ladehilfsmitteln lagern. Auf diese Weise kann die automatische Kommissionierung mit besonders niedriger Fehlerrate erfolgen, da beispielsweise ein Roboter beliebige Waren vom ersten Quell-Ladehilfsmittel entnehmen kann und nicht gezielt eine Ware einer geforderten Warentype entnehmen muss.

Besonders vorteilhaft ist es bei dem vorgestellten Verfahren darüber hinaus, wenn

- die erste Warentypengruppe eine erste Warentypenuntergruppe umfasst, die Warentypen enthält, die mit einem Greifer einer ersten Art automatisch handhabbar sind, und eine zweite Warentypenuntergruppe umfasst, die Warentypen enthält, die nicht oder nur eingeschränkt mit dem Greifer der ersten Art automatisch, jedoch mit einem Greifer einer anderen, zweiten Art automatisch handhabbar sind,
- im Schritt c) zusätzlich die Zugehörigkeit der für die Bearbeitung des genannten Auftrags benötigten Waren zur ersten Warentypenuntergruppe und zur zweiten Warentypenuntergruppe ermittelt wird und
- im Schritt d) zusätzlich ein erster Auftrags-Subteil des ersten Auftragsteils bestimmt wird, dessen zumindest eine Ware der ersten Warentypenuntergruppe angehört und demnach mit einem Greifer der ersten Art automatisch handhabbar ist, und ein zweiter Auftrags-Subteil des ersten Auftragsteils bestimmt wird, dessen zumindest eine Ware der zweiten Warentypenuntergruppe angehört und demnach nicht oder nur eingeschränkt mit dem Greifer der ersten Art, jedoch mit dem Greifer der zweiten Art automatisch handhabbar ist.

Demzufolge ist es bei dem offenbarten Lager- und Kommissioniersystem auch von Vorteil, wenn

- die erste Warentypengruppe eine erste Warentypenuntergruppe umfasst, die Warentypen enthält, die mit einem Greifer einer ersten Art automatisch handhabbar sind, und eine zweite Warentypenuntergruppe umfasst, die Warentypen enthält, die nicht oder nur eingeschränkt mit dem Greifer der ersten Art automatisch, jedoch mit einem Greifer einer anderen, zweiten Art automatisch handhabbar sind und

das Steuerungssystem zusätzlich zum

- Ermitteln der Zugehörigkeit der für die Bearbeitung des genannten Auftrags benötigten Waren zur ersten Warentypenuntergruppe und zur zweiten Warentypengruppe ausgebildet ist und
- Bestimmen eines ersten Auftrags-Subteils des ersten Auftragsteils ausgebildet ist, dessen zumindest eine Ware der ersten Warentypenuntergruppe angehört und demnach mit einem Greifer der ersten Art automatisch handhabbar ist, und zum Bestimmen eines zweiten Auftrags-Subteils des ersten Auftragsteils ausgebildet ist, dessen zumindest eine Ware der zweiten Warentypenuntergruppe angehört und demnach nicht oder nur eingeschränkt mit dem Greifer der ersten Art, jedoch mit dem Greifer der zweiten Art automatisch handhabbar ist.

Bei dieser Ausführungsvariante wird die erste Warentypengruppe und der erste Auftragsteil (also die Warentypen oder Waren, die automatisch handhabbar sind) in Warentypenuntergruppen und Auftrags-Subteile unterteilt. Warentypen einer ersten Warentypenuntergruppe und Waren eines ersten Auftrags-Subteils sind dabei mit einem Greifer einer ersten Art automatisch handhabbar. Warentypen einer zweiten Warentypenuntergruppe und Waren eines zweiten Auftrags-Subteils sind ebenfalls automatisch handhabbar, jedoch mit einem Greifer einer zweiten Art. Beispielsweise kann der Greifer der ersten Art als Sauggreifer ausgebildet sein und ein Greifer der zweiten Art als mechanischer Greifer (z.B. als Greifzange oder als Roboterhand). Denkbar ist weiterhin, dass eine dritte Warentypenuntergruppe vorgesehen wird, deren Warentypen sowohl mit dem Greifer der ersten Art als auch mit dem Greifer der zweiten Art automatisch handhabbar sind. Die Waren der dritten Warentypenuntergruppe können in einem Auftrag in Folge wahlweise dem ersten Auftrags-Subteil oder dem zweiten Auftrags-Subteil zugeordnet werden. Beide Auftrags-Subteile gehören dabei wiederum dem ersten Auftragsteil an.

Günstig ist es bei dem vorgestellten Verfahren in obigem Zusammenhang, wenn

- die erste automatische Kommissionierstation mit dem Greifer der ersten Art und dem Greifer der zweiten Art ausgestattet ist,

- anstelle des Schritts e) ein erstes Quell-Ladehilfsmittel mit der zumindest einen Ware des ersten Auftrags-Subteils aus dem Lagerbereich des Lager- und Kommissioniersystems ausgelagert wird, das erste Quell-Ladehilfsmittel zur ersten automatischen Kommissionierstation transportiert wird, das erste Quell-Ladehilfsmittel an der ersten automatischen Kommissionierstation bereitgestellt wird und die zumindest eine Ware des ersten Auftrags-Subteils an der ersten automatischen Kommissionierstation mit dem Greifer der ersten Art automatisch vom ersten Quell-Ladehilfsmittel entnommen wird und

- außerdem ein drittes Quell-Ladehilfsmittel mit der zumindest einen Ware des zweiten Auftrags-Subteils aus dem Lagerbereich des Lager- und Kommissioniersystems ausgelagert wird, das dritte Quell-Ladehilfsmittel zur ersten automatischen Kommissionierstation transportiert wird, das dritte Quell-Ladehilfsmittel an der ersten automatischen Kommissionierstation bereitgestellt wird und die zumindest eine Ware des zweiten Auftrags-Subteils an der ersten automatischen Kommissionierstation mit dem Greifer der zweiten Art automatisch vom dritten Quell-Ladehilfsmittel entnommen wird und

- die zumindest eine Ware des ersten Auftrags-Subteils und die zumindest eine Ware des zweiten Auftrags-Subteils in oder auf ein Ziel-Ladehilfsmittel abgegeben (beziehungsweise geladen) wird.

Demzufolge ist es bei dem offenbarten Lager- und Kommissioniersystem auch von Vorteil, wenn

- die erste automatische Kommissionierstation mit dem Greifer der ersten Art und dem Greifer der zweiten Art ausgestattet ist und

die Fördertechnik zum

- Auslagern eines ersten Quell-Ladehilfsmittels mit der zumindest einen Ware des ersten Auftrags-Subteils aus dem Lagerbereich des Lager- und Kommissioniersystems ausgebildet ist, zum Transportieren des ersten Quell-Ladehilfsmittels zur ersten automatischen Kommissionierstation ausgebildet ist und zum Bereitstellen des ersten Quell-Ladehilfsmittels an der ersten automatischen Kommissionierstation ausgebildet ist, an der die zumindest eine Ware des ersten Auftrags-Subteils mit dem Greifer der ersten Art automatisch vom ersten Quell-Ladehilfsmittel entnehmbar ist, und zum

- Auslagern eines dritten Quell-Ladehilfsmittels mit der zumindest einen Ware des zweiten Auftrags-Subteils aus dem Lagerbereich des Lager- und Kommissioniersystems ausgebildet ist, zum Transportieren des dritten Quell-Ladehilfsmittels zu ersten automatischen Kommissionierstation ausgebildet ist und zum Bereitstellen des dritten Quell-Ladehilfsmittels an der ersten automatischen Kommissionierstation ausgebildet ist, an der die zumindest eine Ware des zweiten Auftrags-Subteils mit dem Greifer der zweiten Art automatisch vom dritten Quell-Ladehilfsmittel entnehmbar ist, wobei

- die erste automatische Kommissionierstation für ein automatisches Abgeben (beziehungsweise Laden) der zumindest einen Ware des ersten Auftrags-Subteils mit dem Greifer der ersten Art und für ein automatisches Abgeben (beziehungsweise Laden) der zumindest einen Ware des zweiten Auftrags-Subteils mit dem Greifer der zweiten Art in oder auf ein Ziel-Ladehilfsmittel ausgebildet ist.

Bei dieser Variante umfasst die erste automatische Kommissionierstation (zumindest) zwei verschiedene Greifer, die je nach Bedarf eingesetzt werden können. Beispielsweise kann die erste automatische Kommissionierstation einen Sauggreifer und einen mechanischen Greifer (z.B. eine Greifzange oder eine Roboterhand) aufweisen. Der Greifer der ersten Art wird für die Handhabung der Waren des ersten Auftrags-Subteils beziehungsweise für die Handhabung von Warentypen der ersten Warentypenuntergruppe eingesetzt. Der Greifer der zweiten Art wird dagegen für die Handhabung der Waren des zweiten Auftrags-Subteils beziehungsweise für die Handhabung von Warentypen der zweiten Warentypenuntergruppe eingesetzt.

Günstig ist es bei dem vorgestellten Verfahren aber auch, wenn

- die erste automatische Kommissionierstation eine erste automatische Kommissionier-Substation und eine zweite automatische Kommissionier-Substation umfasst, wobei die erste automatische Kommissionier-Substation mit einem Greifer einer ersten Art und die zweite automatische Kommissionier-Substation mit einem Greifer einer anderen, zweiten Art ausgestattet ist,

- anstelle des Schritts e) ein erstes Quell-Ladehilfsmittel mit der zumindest einen Ware des ersten Auftrags-Subteils aus dem Lagerbereich des Lager- und Kommissioniersystems ausgelagert wird, das erste Quell-Ladehilfsmittel zur ersten automatischen Kommissionier-Substation transportiert wird, das erste Quell-Ladehilfsmittel an der ersten automatischen Kommissionier-Substation bereitgestellt wird und die zumindest eine Ware des ersten Auftrags-Subteils an der ersten automatischen Kommissionier-Substation mit dem Greifer der ersten Art automatisch vom ersten Quell-Ladehilfsmittel entnommen wird und

- außerdem ein drittes Quell-Ladehilfsmittel mit der zumindest einen Ware des zweiten Auftrags-Subteils aus dem Lagerbereich des Lager- und Kommissioniersystems ausgelagert wird, das dritte Quell-Ladehilfsmittel zur zweiten automatischen Kommissionier-Substation transportiert wird, das dritte Quell-Ladehilfsmittel an der zweiten automatischen Kommissionier-Substation bereitgestellt wird und die zumindest eine Ware des zweiten Auftrags-Subteils an der zweiten automatischen Kommissionier-Substation mit dem Greifer der zweiten Art automatisch vom dritten Quell-Ladehilfsmittel entnommen wird und
- die zumindest eine Ware des ersten Auftrags-Subteils und die zumindest eine Ware des zweiten Auftrags-Subteils in oder auf ein Ziel-Ladehilfsmittel abgegeben (beziehungsweise geladen) wird.

Demzufolge ist es bei dem offenbarten Lager- und Kommissioniersystem auch von Vorteil, wenn

- die erste automatische Kommissionierstation eine erste automatische Kommissionier-Substation und eine zweite automatische Kommissionier-Substation umfasst, wobei die erste automatische Kommissionier-Substation mit einem Greifer einer ersten Art und die zweite automatische Kommissionier-Substation mit einem Greifer einer anderen, zweiten Art ausgestattet ist und

die Fördertechnik zum

- Auslagern eines ersten Quell-Ladehilfsmittels mit der zumindest einen Ware des ersten Auftrags-Subteils aus dem Lagerbereich des Lager- und Kommissioniersystems ausgebildet ist, zum Transportieren des ersten Quell-Ladehilfsmittels zur ersten automatischen Kommissionier-Substation ausgebildet ist und zum Bereitstellen des ersten Quell-Ladehilfsmittels an der ersten automatischen Kommissionier-Substation ausgebildet ist, an der die zumindest eine Ware des ersten Auftrags-Subteils mit dem Greifer der ersten Art automatisch vom ersten Quell-Ladehilfsmittel entnehmbar ist, und zum
- Auslagern eines dritten Quell-Ladehilfsmittels mit der zumindest einen Ware des zweiten Auftrags-Subteils aus dem Lagerbereich des Lager- und Kommissioniersystems ausgebildet ist, zum Transportieren des dritten Quell-Ladehilfsmittels zur zweiten automatischen Kommissionier-Substation ausgebildet ist und zum Bereitstellen des dritten Quell-Ladehilfsmittels an der zweiten automatischen Kommissionier-Substation ausgebildet ist, an der die zumindest eine Ware des zweiten Auftrags-Subteils mit dem Greifer der zweiten Art automatisch vom dritten Quell-Ladehilfsmittel entnehmbar ist, wobei
- die erste automatische Kommissionier-Substation für ein automatisches Abgeben (beziehungsweise Laden) der zumindest einen Ware des ersten Auftrags-Subteils mit dem Greifer der ersten Art und die zweite automatische Kommissionier-Substation für ein automatisches Abgeben (beziehungsweise Laden) der zumindest einen Ware des zweiten Auftrags-Subteils mit dem Greifer der zweiten Art in oder auf ein Ziel-Ladehilfsmittel ausgebildet ist.

Die erste automatische Kommissionierstation kann also automatische Kommissionier-Substationen aufweisen, die mit verschiedenartigen Greifern ausgestattet sind. Beispielsweise kann die erste automatische Kommissionier-Substation einen Sauggreifer und die zweite automatische Kommissionier-Substation einen mechanischen Greifer (z.B. eine Greifzange oder eine Roboterhand) aufweisen. Der Greifer der ersten Art wird wiederum für die Handhabung der Waren des ersten Auftrags-Subteils beziehungsweise für die Handhabung von Warentypen der ersten Warentypenuntergruppe eingesetzt, der Greifer der zweiten Art wiederum für die Handhabung der Waren des zweiten Auftrags-Subteils beziehungsweise für die Handhabung von Warentypen der zweiten Warentypenuntergruppe.

Vorteilhaft ist es bei Existenz von Warentypenuntergruppen, wenn eines der für die Warentypengruppen genannten Verfahren rekursiv ausgeführt wird, wobei

- die erste automatische Kommissionier-Substation an die Stelle der ersten automatischen Kommissionierstation tritt,
- die zweite automatische Kommissionier-Substation an die Stelle der ersten manuellen Kommissionierstation tritt,
- eine automatische Handhabung der Waren mit dem Greifer der ersten Art (an der ersten automatischen Kommissionier-Substation) an die Stelle einer automatischen Handhabung der Waren an der ersten automatischen Kommissionierstation tritt,
- eine automatische Handhabung der Waren mit dem Greifer der zweiten Art (an der zweiten automatischen Kommissionier-Substation) an die Stelle einer manuellen Handhabung der Waren an der ersten manuellen Kommissionierstation tritt,
- der erste Auftrags-Subteil an die Stelle des ersten Auftragsteils tritt,
- der zweite Auftrags-Subteil an die Stelle des zweiten Auftragsteils tritt,
- die erste Warentypenuntergruppe an die Stelle der ersten Warentypengruppe tritt,
- die zweite Warentypenuntergruppe an die Stelle der zweiten Warentypengruppe tritt,
- die dritte Warentypenuntergruppe an die Stelle der dritten Warentypengruppe tritt,

- ein erster Untergruppen-Schwellwert an die Stelle des ersten Schwellwerts tritt,
- ein zweiter Untergruppen-Schwellwert an die Stelle des zweiten Schwellwerts tritt,
- ein dritter Untergruppen-Schwellwert an die Stelle des dritten Schwellwerts tritt,
- eine Fehlerrate für die Handhabung von Waren mit dem Greifer der ersten Art an die Stelle der Fehlerrate für die Handhabung von Waren an der ersten automatischen Kommissionierstation tritt und
- das dritte Quell-Ladehilfsmittel an die Stelle des zweiten Quell-Ladehilfsmittels tritt.

Die für die unterschiedliche Handhabung des ersten und zweiten Auftragsteils, die unterschiedliche Versorgung und unterschiedliche Betriebsweise der ersten automatischen Kommissionierstation und der ersten manuellen Kommissionierstation, die unterschiedliche Berechnung und Verwendung des ersten bis dritten Schwellwerts und die unterschiedliche Bestimmung und Verwendung der ersten bis dritten Warentypengruppe wird bei dieser Variante also rekursiv auf die unterschiedliche Handhabung des ersten und zweiten Auftrags-Subteils, die unterschiedliche Versorgung und unterschiedliche Betriebsweise der ersten automatischen Kommissionier-Substation und der zweiten automatischen Kommissionier-Substation, die unterschiedliche Berechnung und Verwendung des ersten bis dritten Untergruppen-Schwellwerts und die unterschiedliche Bestimmung und Verwendung der ersten bis dritten Warentypenuntergruppe angewandt. Mit anderen Worten werden die entsprechende Verfahrensvarianten einmal für den ersten und den zweiten Auftragsteil, die erste automatische Kommissionierstation und die erste manuelle Kommissionierstation, für den ersten bis dritten Schwellwert und für die erste bis dritte Warentypengruppe ausgeführt und einmal für den ersten und den zweiten Auftrags-Subteil, die erste automatische Kommissionier-Substation und die zweite automatische Kommissionier-Substation, für den ersten bis dritten Untergruppen-Schwellwert und für die erste bis dritte Warentypenuntergruppe. Dadurch können die im Lager- und Kommissioniersystem ablaufenden Prozesse besonders ökonomisch genutzt werden.

Somit ist es möglich, dass die zumindest eine Ware des ersten Auftrags-Subteils im Schritt g) mit dem Greifer der ersten Art automatisch in oder auf ein erstes Ziel-Ladehilfsmittel geladen wird, und die zumindest eine Ware des zweiten Auftrags-Subteils mit dem Greifer der zweiten Art automatisch in das erste Ziel-Ladehilfsmittel hinzu geladen wird.

Insbesondere ist es dabei möglich, dass die zumindest eine Ware des ersten Auftrags-Subteils im Schritt g) an der ersten automatischen Kommissionier-Substation mit dem Greifer der ersten Art automatisch in oder auf ein erstes Ziel-Ladehilfsmittel geladen wird, das mit der zumindest einen Ware des ersten Auftrags-Subteils beladene erste Ziel-Ladehilfsmittel zur zweiten automatischen Kommissionier-Substation transportiert wird und die zumindest eine Ware des zweiten Auftrags-Subteils an der zweiten automatischen Kommissionier-Substation mit dem Greifer der zweiten Art automatisch in das erste Ziel-Ladehilfsmittel hinzu geladen wird.

Weiterhin ist es möglich, dass die zumindest eine Ware des zweiten Auftrags-Subteils im Schritt g) mit dem Greifer der zweiten Art automatisch in oder auf ein erstes Ziel-Ladehilfsmittel geladen wird und die zumindest eine Ware des ersten Auftrags-Subteils mit dem Greifer der ersten Art automatisch in das erste Ziel-Ladehilfsmittel hinzu geladen wird.

Insbesondere ist es dabei möglich, dass die zumindest eine Ware des zweiten Auftrags-Subteils im Schritt g) an der zweiten automatischen Kommissionier-Substation mit dem Greifer der zweiten Art automatisch in oder auf ein erstes Ziel-Ladehilfsmittel geladen werden, das mit der zumindest einen Ware des zweiten Auftrags-Subteils beladene erste Ziel-Ladehilfsmittel zur ersten automatischen Kommissionier-Substation transportiert wird und die zumindest eine Ware des ersten Auftrags-Subteils an der ersten automatischen Kommissionier-Substation mit dem Greifer der ersten Art automatisch in das erste Ziel-Ladehilfsmittel hinzu geladen wird.

Weiterhin ist es möglich, dass die zumindest eine Ware des ersten Auftrags-Subteils im Schritt g) mit dem Greifer der ersten Art automatisch in oder auf ein erstes Ziel-Ladehilfsmittel geladen wird (insbesondere an der ersten automatischen Kommissionier-Substation), die zumindest eine Ware des zweiten Auftrags-Subteils mit dem Greifer der zweiten Art automatisch in oder auf ein zweites Ziel-Ladehilfsmittel geladen wird (insbesondere an der zweiten automatischen Kommissionier-Substation), das mit der zumindest einen Ware des ersten Auftrags-Subteils beladene erste Ziel-Ladehilfsmittel und das mit der zumindest einen Ware des zweiten Auftrags-Subteils beladene zweite Ziel-Ladehilfsmittel entweder zu einer zweiten automatischen Kommissionierstation oder zu einer zweiten manuellen Kommissionierstation transportiert werden und

i) die zumindest eine Ware des zweiten Auftrags-Subteils an der zweiten automatischen/manuellen Kommissionierstation automatisch/manuell in das erste Ziel-Ladehilfsmittel geladen wird oder

ii) die zumindest eine Ware des ersten Auftrags-Subteils an der zweiten automatischen/manuellen Kommissionierstation automatisch/manuell in das zweite Ziel-Ladehilfsmittel geladen wird.

Insbesondere ist dabei möglich, dass

- im Fall i) alle im oder auf dem zweiten Ziel-Ladehilfsmittel geladenen Waren des zweiten Auftrags-Subteils an der zweiten automatischen Kommissionierstation automatisch und auf einmal (d.h. in einem Schritt) in oder auf das erste Ziel-Ladehilfsmittel abgegeben werden oder

- im Fall ii) alle im oder auf dem ersten Ziel-Ladehilfsmittel geladenen Waren des ersten Auftrags-Subteils an der zweiten automatischen Kommissionierstation automatisch und auf einmal (d.h. in einem Schritt) in oder auf das zweite Ziel-Ladehilfsmittel abgegeben werden.

Weiterhin ist es möglich, dass die zumindest eine Ware des ersten Auftrags-Subteils im Schritt g) mit dem Greifer der ersten Art automatisch in oder auf ein erstes Ziel-Ladehilfsmittel geladen wird (insbesondere an der ersten automatischen Kommissionier-Substation), die zumindest eine Ware des zweiten Auftrags-Subteils mit dem Greifer der zweiten Art automatisch in oder auf ein zweites Ziel-Ladehilfsmittel geladen wird (insbesondere an der zweiten automatischen Kommissionier-Substation), das mit der zumindest einen Ware des ersten Auftrags-Subteils beladene erste Ziel-Ladehilfsmittel und das mit der zumindest einen Ware des zweiten Auftrags-Subteils beladene zweite Ziel-Ladehilfsmittel entweder zu einer zweiten automatischen Kommissionierstation oder zu einer zweiten manuellen Kommissionierstation transportiert werden und die zumindest eine Ware des ersten Auftrags-Subteils sowie die zumindest eine Ware des zweiten Auftrags-Subteils an der zweiten automatischen/manuellen Kommissionierstation automatisch/manuell in oder auf ein drittes Ziel-Ladehilfsmittel geladen werden.

Insbesondere ist dabei möglich, dass

- alle im oder auf dem zweiten Ziel-Ladehilfsmittel geladenen Waren des zweiten Auftrags-Subteils an der zweiten automatischen Kommissionierstation automatisch und auf einmal (d.h. in einem Schritt) in oder auf das dritte Ziel-Ladehilfsmittel abgegeben werden und/oder
- alle im oder auf dem ersten Ziel-Ladehilfsmittel geladenen Waren des ersten Auftrags-Subteils an der zweiten automatischen Kommissionierstation automatisch und auf einmal (d.h. in einem Schritt) in oder auf das dritte Ziel-Ladehilfsmittel abgegeben werden.

Weiterhin ist es möglich, dass Warentypen, bei denen eine Fehlerrate bei automatischer Handhabung mit dem Greifer der ersten Art kleiner gleich einem ersten Untergruppen-Schwellwert ist, der ersten Warentypenuntergruppe zugeteilt werden und Warentypen, bei denen eine Fehlerrate bei automatischer Handhabung mit dem Greifer der ersten Art größer als der erste Untergruppen-Schwellwert ist, der zweiten Warentypenuntergruppe zugeteilt werden, wobei als Fehlerrate der Quotient der bei der Kommissionierung auftretenden Fehlhandhabungen mit dem Greifer der ersten Art dividiert durch die Gesamtanzahl der Handhabungen mit dem Greifer der ersten Art vorgesehen ist.

Weiterhin ist es möglich, dass einer Warentype eine Fehlerrate für eine automatische Handhabung mit dem Greifer der ersten Art zugeordnet ist.

Weiterhin ist es möglich, dass eine Zuteilung der Warentypen zu der ersten Warentypenuntergruppe und zu der zweiten Warentypenuntergruppe

I) vor oder bei Durchführung des Schritts a) erfolgt und/oder
II) bei Durchführung eines der Schritte e) oder f) oder g) erfolgt und/oder
III) unabhängig von den Schritten b) bis g) erfolgt.

Insbesondere ist es dabei möglich, dass eine Warentype zumindest einer Ware des ersten Auftrags-Subteils, welche vorerst der ersten Warentypenuntergruppe zugeteilt ist, im Fall II) der zweiten Warentypenuntergruppe neu zugeteilt wird, wenn die Fehlerrate bei der automatischen Handhabung dieser zumindest einen Ware mit dem Greifer der ersten Art (also bei der automatischen Entnahme einer Ware des ersten Auftrags-Subteils von einem ersten Quell-Ladehilfsmittel, der automatischen Abgabe einer Ware des ersten Auftrags-Subteils in oder auf ein erstes Ziel-Ladehilfsmittel oder beim automatischen Umladen einer Ware des ersten Auftrags-Subteils von einem ersten Quell-Ladehilfsmittel in oder auf ein erstes Ziel-Ladehilfsmittel) den ersten Untergruppen-Schwellwert überschreitet.

Weiterhin ist es möglich, dass eine dritte Warentypenuntergruppe vorgesehen wird und dass Warentypen, bei denen eine Fehlerrate bei automatischer Handhabung mit dem Greifer der ersten Art (also bei der automatischen Entnahme einer Ware des ersten Auftrags-Subteils von einem ersten Quell-Ladehilfsmittel, der automatischen Abgabe einer Ware des ersten Auftrags-Subteils in oder auf ein erstes Ziel-Ladehilfsmittel oder beim automatischen Umladen einer Ware des ersten Auftrags-Subteils von einem ersten Quell-Ladehilfsmittel in oder auf ein erstes Ziel-Ladehilfsmittel) kleiner einem ersten Untergruppen-Schwellwert ist, der ersten Warentypenuntergruppe zugeteilt werden, Warentypen, bei denen eine Fehlerrate bei automatischer Handhabung mit dem Greifer der ersten Art (also bei der automatischen Entnahme einer Ware des ersten Auftrags-Subteils von einem ersten Quell-Ladehilfsmittel, der automatischen Abgabe einer Ware des ersten Auftrags-Subteils in oder auf ein erstes Ziel-Ladehilfsmittel oder beim automatischen Umladen einer Ware des ersten Auftrags-Subteils von einem ersten Quell-Ladehilfsmittel in oder auf ein erstes Ziel-Ladehilfsmittel) größer einem zweiten Untergruppen-Schwellwert ist, der zweiten Warentypenuntergruppe zugeteilt werden, und die übrigen Warentypen, bei denen die Fehlerrate bei automatischer Handhabung mit dem Greifer der ersten Art größer gleich dem ersten Untergruppen-Schwellwert und kleiner gleich dem zweiten Untergruppen-Schwellwert ist, einer dritten Warentypenuntergruppe zugeteilt werden, wobei Waren der dritten Warentypenuntergruppe in einem Auftrag wahlweise dem ersten Auftrags-Subteil oder dem zweiten Auftrags-Subteil zugeordnet werden können.

Weiterhin ist es möglich, dass eine Zuteilung der Warentypen zu der ersten Warentypenuntergruppe und zu der zweiten Warentypenuntergruppe und zu der dritten Warentypenuntergruppe

I) vor oder bei Durchführung des Schritts a) erfolgt und/oder
II) bei Durchführung eines der Schritte e) oder f) oder g) erfolgt und/oder
III) unabhängig von den Schritten b) bis g) erfolgt.

Insbesondere ist es möglich, dass eine Warentype zumindest einer Ware des ersten Auftrags-Subteils, welche vorerst der ersten Warentypenuntergruppe zugeteilt ist, im Fall II) der zweiten Warentypenuntergruppe neu zugeteilt wird, wenn die Fehlerrate bei der automatischen Handhabung dieser zumindest einen Ware mit dem Greifer der ersten Art (also bei der automatischen Entnahme einer Ware des ersten Auftrags-Subteils von einem ersten Quell-Ladehilfsmittel, der automatischen Abgabe einer Ware des ersten Auftrags-Subteils in oder auf ein erstes Ziel-Ladehilfsmittel oder beim automatischen Umladen einer Ware des ersten Auftrags-Subteils von einem ersten Quell-Ladehilfsmittel in oder auf ein erstes Ziel-Ladehilfsmittel) den zweiten Untergruppen-Schwellwert überschreitet, und der dritten Warentypenuntergruppe neu zugeteilt wird, wenn die Fehlerrate bei der automatischen Handhabung dieser zumindest einen Ware mit dem Greifer der ersten (also bei der automatischen Entnahme einer Ware des ersten Auftrags-Subteils von einem ersten Quell-Ladehilfsmittel, der automatischen Abgabe einer Ware des ersten Auftrags-Subteils in oder auf ein erstes Ziel-Ladehilfsmittel oder beim automatischen Umladen einer Ware des ersten Auftrags-Subteils von einem ersten Quell-Ladehilfsmittel in oder auf ein erstes Ziel-Ladehilfsmittel) den ersten Untergruppen-Schwellwert, nicht jedoch den zweiten Untergruppen-Schwellwert überschreitet.

Insbesondere ist es möglich, dass die zumindest eine Ware des ersten Auftrags-Subteils, welche die Neuzuteilung der Warentype dieser Ware zur zweiten Warentypenuntergruppe bewirkt, beim ersten Auftrags-Subteils verbleibt.

Insbesondere ist es aber auch möglich, dass die zumindest eine Ware des ersten Auftrags-Subteils, welche die Neuzuteilung der Warentype dieser Ware zur zweiten Warentypenuntergruppe bewirkt, dem zweiten Auftrags-Subteil zugeteilt und entsprechend kommissioniert wird.

Weiterhin ist es möglich, dass eine Ware des ersten Auftrags-Subteils dem zweiten Auftrags-Subteil zugeordnet und mit dem Greifer der zweiten Art manipuliert wird (und die Warentype dieser Ware insbesondere bei der ersten Warentypenuntergruppe verbleibt), wenn die Anzahl an Fehlhandhabungen (genau) dieser Ware mit dem Greifer der ersten Art einen Fehlhandhabungs-Untergruppen-Schwellwert überschreitet.

Weiterhin ist es möglich, dass als Fehlerrate

- der Quotient der Anzahl der fehlgeschlagenen automatischen Entnahmen von Waren von einem ersten Quell-Ladehilfsmittel mit dem Greifer der ersten Art dividiert durch die Gesamtanzahl an (fehlgeschlagenen und erfolgreichen) automatischen Entnahmen von Waren von einem ersten Quell-Ladehilfsmittel mit dem Greifer der ersten Art oder
- der Quotient der Anzahl der fehlgeschlagenen automatischen Abgaben von Waren in oder auf ein Ziel-Ladehilfsmittel mit dem Greifer der ersten Art dividiert durch die Gesamtanzahl an (fehlgeschlagenen und erfolgreichen) automatischen Abgaben von Waren in oder auf ein Ziel-Ladehilfsmittel mit dem Greifer der ersten Art oder
- der Quotient der Anzahl der fehlgeschlagenen automatischen Umladevorgänge von Waren von einem Quell-Ladehilfsmittel in oder auf ein Ziel-Ladehilfsmittel mit dem Greifer der ersten Art dividiert durch die Gesamtanzahl an (fehlgeschlagenen und erfolgreichen) automatischen Umladevorgängen von Waren von einem Quell-Ladehilfsmittel in oder auf ein Ziel-Ladehilfsmittel mit dem Greifer der ersten Art oder
- eine von den obigen Quotienten abgeleitete Maßzahl

vorgesehen ist.

Weiterhin ist es möglich, dass Abläufe an der ersten automatischen Kommissionierstation oder an der ersten automatischen Kommissionier-Substation durch ein Überprüfungssystem überwacht werden und eine (insbesondere im Zuge des Kommissioniervorgangs oder auch unabhängig davon ausgeführte) Handhabung mit dem Greifer der ersten Art vom Überprüfungssystem als Fehlhandhabung klassifiziert wird, wenn die Handhabung mit dem Greifer der ersten Art in ungeplanter Weise ausgeführt oder abgebrochen wird und fehlschlägt.

Weiterhin ist es möglich, dass der erste Untergruppen-Schwellwert anhand einer Kapazität einer Gruppe von ersten automatischen Kommissionierstationen oder von ersten und zweiten automatischen Kommissionier-Substationen ermittelt wird, welche für die Ausführung mehrerer Aufträge mit dem Greifer der ersten Art und mit dem Greifer der zweiten Art in einem vorgebbaren Zeitraum verfügbar ist.

Insbesondere ist es möglich, dass

- mehrere Aufträge zum Kommissionieren von Waren erfasst und die für diese Aufträge benötigten Waren bestimmt (und vorteilhaft anhand ihrer Fehlerrate bei der Handhabung mit dem Greifer der ersten Art sortiert) werden,
- eine für die Ausführung dieser Aufträge in einem vorgebbaren Zeitraum erste benötigte Kapazität der Greifer der ersten Art für die Kommissionierung der Waren der ersten Warentypenuntergruppe und eine in diesem Zeitraum zweite benötigte Kapazität der Greifer der zweiten Art für die Kommissionierung der Waren der zweiten Warentypenuntergruppe für verschiedene erste Untergruppen-Schwellwerte berechnet wird,
- eine in diesem Zeitraum erste verfügbare Kapazität der Greifer der ersten Art und eine in diesem Zeitraum zweite verfügbare Kapazität der Greifer der zweiten Art ermittelt wird und
- jener erste Untergruppen-Schwellwert für die Ausführung der genannten Aufträge gewählt wird, für welchen die geringste Abweichung zwischen der ersten benötigten Kapazität und der ersten verfügbaren Kapazität sowie zwischen der zweiten benötigten Kapazität und der zweiten verfügbaren Kapazität ermittelt wird.

Weiterhin ist es möglich, dass der erste Untergruppen-Schwellwert und der zweite Untergruppen-Schwellwert anhand einer Kapazität einer Gruppe von ersten automatischen Kommissionierstationen oder von ersten und zweiten automatischen Kommissionier-Substationen ermittelt werden, welche für die Ausführung mehrerer Aufträge mit dem Greifer der ersten Art und mit dem Greifer der zweiten Art in einem vorgebbaren Zeitraum verfügbar ist.

Insbesondere ist es möglich, dass

- mehrere Aufträge zum Kommissionieren von Waren erfasst und die für diese Aufträge benötigten Waren bestimmt (und vorteilhaft anhand ihrer Fehlerrate bei Handhabung mit dem Greifer der ersten Art sortiert) werden,
- die (vorteilhaft nach der besagten Fehlerrate sortierte) dritte Warentypenuntergruppe bei einem dritten Untergruppen-Schwellwert in voraussichtlich mit dem Greifer der ersten Art automatisch zu kommissionierende Waren mit der Fehlerrate kleiner gleich dem dritten Untergruppen-Schwellwert und voraussichtlich mit dem Greifer der zweiten Art automatisch zu kommissionierende Waren mit der Fehlerrate größer dem dritten Untergruppen-Schwellwert aufgeteilt wird,
- eine für die Ausführung dieser Aufträge in einem vorgebbaren Zeitraum erste benötigte Kapazität der Greifer der ersten Art für die Kommissionierung der Waren der ersten Warentypenuntergruppe inklusive der voraussichtlich mit dem Greifer der ersten Art automatisch zu kommissionierenden Waren der dritten Warentypenuntergruppe und eine in diesem Zeitraum zweite benötigte Kapazität der Greifer der zweiten Art für die Kommissionierung der Waren der zweiten Warentypenuntergruppe inklusive der voraussichtlich mit dem Greifer der zweiten Art automatisch zu kommissionierenden Waren der dritten Warentypenuntergruppe für verschiedene dritte Untergruppen-Schwellwerte (das heißt für verschiedene Aufteilungen der dritten Warentypenuntergruppe) berechnet wird,
- eine in diesem Zeitraum erste verfügbare Kapazität der Greifer der ersten Art und eine in diesem Zeitraum zweite verfügbare Kapazität der Greifer der zweiten Art ermittelt wird,
- jener dritte Untergruppen-Schwellwert (das heißt jene Aufteilung der dritten Warentypenuntergruppe) für die Ausführung der genannten Aufträge gewählt wird, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird und
- der erste Untergruppen-Schwellwert in einem gewählten ersten Reserve-Abstand unterhalb des dritten Untergruppen-Schwellwerts und der zweite Untergruppen-Schwellwert in einem gewählten zweiten Reserve-Abstand oberhalb des dritten Untergruppen-Schwellwerts gesetzt wird.

Weiterhin ist es möglich, dass eine Teilmenge an auszuführenden Aufträgen anhand einer Kapazität einer Gruppe von ersten automatischen Kommissionierstationen oder von ersten und zweiten automatischen Kommissionier-Substationen ermittelt wird, welche für die Ausführung dieser Teilmenge an auszuführenden Aufträgen mit dem Greifer der ersten Art und mit dem Greifer der zweiten Art in einem vorgebbaren Zeitraum verfügbar ist.

Insbesondere ist es möglich, dass die Teilmenge an auszuführenden Aufträgen bei vorgegebenem ersten Untergruppen-Schwellwert ermittelt wird.

Besonders vorteilhaft ist es, wenn der erste Untergruppen-Schwellwert (und gegebenenfalls der zweite Untergruppen-Schwellwert) anhand einer Kapazität einer Gruppe von ersten automatischen Kommissionierstationen oder von ersten und zweiten automatischen Kommissionier-Substationen für eine Teilmenge an auszuführenden Aufträgen ermittelt wird, wobei die besagte Teilmenge an auszuführenden Aufträgen zuvor anhand der Kapazität der Gruppe der ersten automatischen Kommissionierstationen oder der ersten und zweiten automatischen Kommissionier-Substationen ermittelt wurde.

Weiterhin ist es möglich, dass

- mehrere Aufträge zum Kommissionieren von Waren erfasst und die für diese Aufträge benötigten Waren bestimmt werden,

- eine für die Ausführung dieser Aufträge erste benötigte Kapazität der Greifer der ersten Art für die Kommissionierung der Waren der ersten Warentypenuntergruppe (gegebenenfalls inklusive der voraussichtlich mit dem Greifer der ersten Art automatisch zu kommissionierenden Waren der dritten Warentypenuntergruppe mit einer Fehlerrate für die Handhabung der Waren mit dem Greifer der ersten Art kleiner gleich dem dritten Untergruppen-Schwellwert) und eine in diesem Zeitraum zweite benötigte Kapazität der Greifer der zweiten Art für die Kommissionierung der Waren der zweiten Warentypenuntergruppe (gegebenenfalls inklusive der voraussichtlich mit dem Greifer der zweiten Art automatisch zu kommissionierenden Waren der dritten Warentypenuntergruppe mit einer Fehlerrate für die Handhabung der Waren mit dem Greifer der ersten Art größer dem dritten Untergruppen-Schwellwert) für verschiedene Teilmengen der genannten Aufträge (insbesondere bei vorgegebenem ersten oder dritten Untergruppen-Schwellwert) berechnet wird,
- eine in einem vorgebbaren Zeitraum erste verfügbare Kapazität der Greifer der ersten Art und eine in diesem Zeitraum zweite verfügbare Kapazität der Greifer der zweiten Art ermittelt wird und
- jene Teilmenge an genannten Aufträgen im gewählten Zeitraum ausgeführt wird, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird.

Insbesondere ist es möglich, dass der erste Untergruppen-Schwellwert (und gegebenenfalls der zweite Untergruppen-Schwellwert) anhand einer Kapazität einer Gruppe von ersten automatischen Kommissionierstationen oder von ersten und zweiten automatischen Kommissionier-Substationen für eine Teilmenge an auszuführenden Aufträgen ermittelt wird, wobei die besagte Teilmenge an auszuführenden Aufträgen zuvor anhand der Kapazität der Gruppe der ersten automatischen Kommissionierstationen oder der ersten und zweiten automatischen Kommissionier-Substationen ermittelt wurde.

Weiterhin ist es möglich, dass eine Teilmenge der genannten Aufträge durch zufällige Auswahl von einigen der mehreren Aufträge bestimmt wird.

Weiterhin ist es möglich, dass

- ein Verfügbarkeits-Anteil der ersten verfügbaren Kapazität durch Division der ersten verfügbaren Kapazität durch die Summe aus der ersten und der zweiten verfügbaren Kapazität berechnet wird,
- für jeden der mehreren Aufträge ein Bedarfs-Anteil für die erste benötigte Kapazität durch Division der ersten benötigten Kapazität durch die Summe aus der ersten und der zweiten benötigten Kapazität berechnet wird und
- der Anteil an Aufträgen mit einem Bedarfs-Anteil über dem Verfügbarkeits-Anteil maximal um 10% vom Anteil an Aufträgen mit einem Bedarfs-Anteil unter dem Verfügbarkeits-Anteil abweicht.

Weiterhin ist es möglich, dass die genannten mehreren Aufträge anhand eines Sortierparameters sortiert werden und bei der Bestimmung einer Teilmenge eine Gleichverteilung hinsichtlich des Sortierparameters angestrebt wird, wobei als Sortierparameter

- eine in einem Auftrag vorhandene Stückzahl an Waren der ersten Warentypenuntergruppe (gegebenenfalls inklusive der voraussichtlich automatisch zu kommissionierenden Waren der dritten Warentypenuntergruppe mit einer Fehlerrate für die Handhabung der Waren mit dem Greifer der ersten Art kleiner gleich dem dritten Untergruppen-Schwellwert) vorgesehen ist oder
- ein in einem Auftrag vorhandener relativer Anteil an Waren der ersten Warentypenuntergruppe (gegebenenfalls inklusive der voraussichtlich automatisch zu kommissionierenden Waren der dritten Warentypenuntergruppe mit einer Fehlerrate für die Handhabung der Waren mit dem Greifer der ersten Art kleiner gleich dem dritten Untergruppen-Schwellwert) vorgesehen ist, welcher durch Division der Stückzahl an Waren der ersten Warentypenuntergruppe eines Auftrags durch die Stückzahl aller Waren dieses Auftrags berechnet wird.

Weiterhin ist es möglich, dass (Aufträge nach einer Priorität sortiert werden, nach der die Aufträge ausgeführt werden sollen und) für eine Teilmenge Aufträge mit höherer Priorität bevorzugt ausgewählt werden.

Weiterhin ist es möglich, dass das erste Quell-Ladehilfsmittel mit der zumindest einen Ware des ersten Auftrags-Subteils dem zweiten Auftrags-Subteil zugeteilt wird und in Folge die zumindest eine genannte Ware des zweiten Auftrags-Subteils mit dem Greifer der zweiten Art automatisch in oder auf ein erstes oder zweites Ziel-Ladehilfsmittel geladen wird,

- wenn die Abgabe mehrerer Waren der zweiten Warentypenuntergruppe des zweiten Auftrags-Subteils in das erste oder zweite Ziel-Ladehilfsmittel schneller erfolgt als die Abgabe derselben Anzahl an Waren des ersten Auftrags-Subteils in das erste Ziel-Ladehilfsmittel oder
- wenn bereits alle Waren der zweiten Warentypenuntergruppe des zweiten Auftrags-Subteils in erste oder zweite Ziel-Ladehilfsmittel geladen wurden.

Insbesondere ist es möglich, dass das erste Quell-Ladehilfsmittel mit der zumindest einen Ware des ersten Auftrags-Subteils dem zweiten Auftrags-Subteil zugeteilt wird und in Folge die zumindest eine genannte Ware des zweiten Auftrags-Subteils mit dem Greifer der zweiten Art automatisch in oder auf ein erstes oder zweites Ziel-Ladehilfsmittel geladen wird,

- wenn die Abgabe mehrerer Waren der zweiten Warentypenuntergruppe des zweiten Auftrags-Subteils in das erste oder zweite Ziel-Ladehilfsmittel mit dem Greifer der zweiten Art schneller erfolgt als die Abgabe derselben Anzahl an Waren des ersten Auftrags-Subteils in das erste Ziel-Ladehilfsmittel mit dem Greifer der ersten Art oder
- wenn bereits alle Waren der zweiten Warentypenuntergruppe des zweiten Auftrags-Subteils mit dem Greifer der zweiten Art in erste oder zweite Ziel-Ladehilfsmittel geladen wurden.

Weiterhin ist es möglich, dass dem ersten Auftrags-Subteil zumindest eine Ware der dritten Warentypenuntergruppe zugeteilt wird und mit dem Greifer der ersten Art automatisch in erste Ziel-Ladehilfsmittel geladen wird,

- wenn die Beladung der ersten Ziel-Ladehilfsmittel mit mehreren Waren der ersten Warentypenuntergruppe des ersten Auftrags-Subteils mit dem Greifer der ersten Art schneller erfolgt als die Beladung der ersten oder zweiten Ziel-Ladehilfsmittel mit derselben Anzahl an Waren des zweiten Auftrags-Subteils mit dem Greifer der zweiten Art oder
- wenn bereits alle Waren der ersten Warentypenuntergruppe des ersten Auftrags-Subteils mit dem Greifer der ersten Art in erste Ziel-Ladehilfsmittel geladen wurden.

Insbesondere ist es möglich, dass dem ersten Auftrags-Subteil zumindest eine Ware der dritten Warentypenuntergruppe zugeteilt wird und mit dem Greifer der ersten Art automatisch in erste Ziel-Ladehilfsmittel geladen wird,

- wenn die Beladung der ersten Ziel-Ladehilfsmittel mit mehreren Waren der ersten Warentypenuntergruppe des ersten Auftrags-Subteils mit dem Greifer der ersten Art schneller erfolgt als die Beladung der ersten oder zweiten Ziel-Ladehilfsmittel mit derselben Anzahl an Waren des zweiten Auftrags-Subteils mit dem Greifer der zweiten Art oder
- wenn bereits alle Waren der ersten Warentypenuntergruppe des ersten Auftrags-Subteils mit dem Greifer der ersten Art in erste Ziel-Ladehilfsmittel geladen wurden.

Weiterhin ist es möglich, dass dem zweiten Auftrags-Subteil zumindest eine Ware der dritten Warentypenuntergruppe zugeteilt wird und in Folge die zumindest eine genannte Ware des zweiten Auftrags-Subteils mit dem Greifer der zweiten Art automatisch in erste oder zweite Ziel-Ladehilfsmittel geladen wird,

- wenn die Beladung der ersten oder zweiten Ziel-Ladehilfsmittel mit mehreren Waren der zweiten Warentypenuntergruppe des zweiten Auftrags-Subteils mit dem Greifer der zweiten Art schneller erfolgt als die Beladung der ersten Ziel-Ladehilfsmittel mit derselben Anzahl an Waren des ersten Auftrags-Subteils mit dem Greifer der ersten Art oder
- wenn bereits alle Waren der zweiten Warentypenuntergruppe des zweiten Auftrags-Subteils mit dem Greifer der zweiten Art in erste oder zweite Ziel-Ladehilfsmittel geladen wurden.

Insbesondere ist es möglich, dass dem zweiten Auftrags-Subteil zumindest eine Ware der dritten Warentypenuntergruppe zugeteilt wird und in Folge die zumindest eine genannte Ware des zweiten Auftrags-Subteils mit dem Greifer der zweiten Art automatisch in erste oder zweite Ziel-Ladehilfsmittel geladen wird,

- wenn die Beladung der ersten oder zweiten Ziel-Ladehilfsmittel mit mehreren Waren der zweiten Warentypenuntergruppe des zweiten Auftrags-Subteils mit dem Greifer der zweiten Art schneller erfolgt als die Beladung der ersten Ziel-Ladehilfsmittel mit derselben Anzahl an Waren des ersten Auftrags-Subteils mit dem Greifer der ersten Art oder
- wenn bereits alle Waren der zweiten Warentypenuntergruppe des zweiten Auftrags-Subteils mit dem Greifer der zweiten Art in erste oder zweite Ziel-Ladehilfsmittel geladen wurden.

Weiterhin ist es möglich, dass

- dem zweiten Auftrags-Subteil zumindest eine Ware der dritten Warentypenuntergruppe zugeteilt wird und in Folge die zumindest eine genannte Ware des zweiten Auftrags-Subteils mit dem Greifer der zweiten Art automatisch in erste oder zweite Ziel-Ladehilfsmittel geladen wird, solange Waren der dritten Warentypenuntergruppe vorhanden sind und wenn die Beladung der ersten oder zweiten Ziel-Ladehilfsmittel mit mehreren Waren der zweiten Warentypenuntergruppe des zweiten Auftrags-Subteils mit dem Greifer der zweiten Art schneller erfolgt als die Beladung der ersten Ziel-Ladehilfsmittel mit derselben Anzahl an Waren des ersten Auftrags-Subteils mit dem Greifer der ersten Art oder wenn bereits alle Waren der zweiten Warentypenuntergruppe des zweiten Auftrags-Subteils mit dem Greifer der zweiten Art in erste oder zweite Ziel-Ladehilfsmittel geladen wurden, und dann

- zumindest eine Ware des ersten Auftrags-Subteils dem zweiten Auftrags-Subteil zugeteilt wird und in Folge die zumindest eine genannte Ware des zweiten Auftrags-Subteils mit dem Greifer der zweiten Art automatisch in erste oder zweite Ziel-Ladehilfsmittel geladen wird, wenn die Beladung der ersten oder zweiten Ziel-Ladehilfsmittel mit mehreren Waren der zweiten Warentypenuntergruppe des zweiten Auftrags-Subteils mit dem Greifer der zweiten Art schneller erfolgt als die Beladung der ersten Ziel-Ladehilfsmittel mit derselben Anzahl an Waren des ersten Auftrags-Subteils mit dem Greifer der ersten Art oder wenn bereits alle Waren der zweiten Warentypenuntergruppe des zweiten Auftrags-Subteils mit dem Greifer der zweiten Art in erste oder zweite Ziel-Ladehilfsmittel geladen wurden.

Weiterhin ist es möglich, dass

- dem ersten Auftrags-Subteil zumindest eine Ware der dritten Warentypenuntergruppe zugeteilt wird und in Folge die zumindest eine genannte Ware des ersten Auftrags-Subteils mit dem Greifer der ersten Art automatisch in erste Ziel-Ladehilfsmittel geladen wird, solange Waren der dritten Warentypenuntergruppe vorhanden sind und wenn die Beladung der ersten Ziel-Ladehilfsmittel mit mehreren Waren der ersten Warentypenuntergruppe des ersten Auftrags-Subteils mit dem Greifer der ersten Art schneller erfolgt als die Beladung der ersten oder zweiten Ziel-Ladehilfsmittel mit derselben Anzahl an Waren des zweiten Auftrags-Subteils mit dem Greifer der zweiten Art oder wenn bereits alle Waren der ersten Warentypenuntergruppe des ersten Auftrags-Subteils mit dem Greifer der ersten Art in erste Ziel-Ladehilfsmittel geladen wurden, und dann
- zumindest eine Ware des zweiten Auftrags-Subteils dem ersten Auftrags-Subteil zugeteilt wird und in Folge die zumindest eine genannte Ware des ersten Auftrags-Subteils mit dem Greifer der ersten Art automatisch in erste Ziel-Ladehilfsmittel geladen wird, wenn die Beladung der ersten Ziel-Ladehilfsmittel mit mehreren Waren der ersten Warentypenuntergruppe des ersten Auftrags-Subteils mit dem Greifer der ersten Art schneller erfolgt als die Beladung der ersten oder zweiten Ziel-Ladehilfsmittel mit derselben Anzahl an Waren des zweiten Auftrags-Subteils mit dem Greifer der zweiten Art oder wenn bereits alle Waren der ersten Warentypenuntergruppe des ersten Auftrags- Subteils mit dem Greifer der ersten Art in erste Ziel-Ladehilfsmittel geladen wurden.

Weiterhin ist es möglich, dass das erste Quell-Ladehilfsmittel mit der zumindest einen Ware des ersten Auftrags- Subteils dem zweiten Auftrags-Subteil zugeteilt wird, und die zumindest eine genannte Ware des zweiten Auftrags- Subteils mit dem Greifer der zweiten Art automatisch in oder auf ein erstes oder zweites Ziel-Ladehilfsmittel geladen wird,

- wenn für die zumindest eine Ware des ersten Auftrags-Subteils in der betreffenden Auftragszeile eine Stückzahl angegeben ist, welche einen Stückzahl-Untergruppen-Schwellwert überschreitet.

Weiterhin ist es möglich,

- dass das Bereitstellen mehrerer Waren des ersten Auftrags-Subteils an der ersten automatischen Kommissionierstation oder an der ersten automatischen Kommissionier-Substation (und das Auslagern und das Transportieren der genannten Waren) sortiert nach der in den Auftragszeilen für die Waren des ersten Auftrags-Subteils angegebenen Stückzahl erfolgt, wobei das Bereitstellen (und das Auslagern und das Transportieren) der Waren des ersten Auftrags-Subteils von niedrigen zu aufsteigenden Stückzahlen hin erfolgt und
- dass das Bereitstellen mehrerer Waren des zweiten Auftrags-Subteils an der ersten automatischen Kommissionierstation oder an der zweiten automatischen Kommissionier-Substation (und das Auslagern und das Transportieren der genannten Waren) sortiert nach der in den Auftragszeilen für die Waren des zweiten Auftrags-Subteils angegebenen Stückzahl erfolgt, wobei das Bereitstellen (und das Auslagern und das Transportieren) der Waren des zweiten Auftrags-Subteils von hohen zu absteigenden Stückzahlen hin erfolgt.

Weiterhin ist es möglich,

- dass das Entnehmen mehrerer Waren des ersten Auftrags-Subteils von zumindest einem ersten Quell-Ladehilfsmittel und das Abgeben dieser Waren in oder auf zumindest ein erstes Ziel-Ladehilfsmittel (das heißt das Umladen mehrerer Waren des ersten Auftrags-Subteils von zumindest einem ersten Quell-Ladehilfsmittel in oder auf zumindest ein erstes Ziel-Ladehilfsmittel) sortiert nach der in den Auftragszeilen für die Waren des ersten Auftrags-Subteils angegebenen Stückzahl erfolgt, wobei das Entnehmen und Abgeben (beziehungsweise das Umladen) von niedrigen zu aufsteigenden Stückzahlen hin erfolgt und

- dass das Entnehmen mehrerer Waren des zweiten Auftrags-Subteils von zumindest einem dritten Quell-Ladehilfsmittel und das Abgeben dieser Waren in oder auf zumindest ein erstes oder zweites Ziel-Ladehilfsmittel (das heißt das Umladen mehrerer Waren des zweiten Auftrags-Subteils von zumindest einem dritten Quell-Ladehilfsmittel in oder auf zumindest ein erstes oder zweites Ziel-Ladehilfsmittel) sortiert nach der in den Auftragszeilen für die Waren des zweiten Auftrags-Subteils angegebenen Stückzahl erfolgt, wobei das Entnehmen und Abgeben (beziehungsweise das Umladen) von hohen zu absteigenden Stückzahlen hin erfolgt.

Weiterhin ist es möglich, dass die Zuteilung mehrerer Waren der dritten Warentypenuntergruppe zum ersten Auftrags-Subteil oder zum zweiten Auftrags-Subteil sortiert nach der in den Auftragszeilen für diese Waren angegebenen Stückzahl erfolgt, wobei die Zuteilung von Waren der dritten Warentypenuntergruppe zum ersten Auftrags-Subteil von niedrigen zu aufsteigenden Stückzahlen hin erfolgt und die Zuteilung von Waren der dritten Warentypenuntergruppe zum zweiten Auftrags-Subteil von hohen zu absteigenden Stückzahlen hin erfolgt.

Weiterhin ist es möglich,

- dass einer Warentype eine Fehlerrate für die automatische Handhabung der Waren mit dem Greifer der ersten Art zugeordnet ist,
- dass das Bereitstellen mehrerer Waren des ersten Auftrags-Subteils an der ersten automatischen Kommissionierstation oder an der ersten automatischen Kommissionier-Substation (und das Auslagern und das Transportieren der genannten Waren) sortiert nach der in den Auftragszeilen für die Waren des ersten Auftrags-Subteils angegebenen Fehlerrate für die automatische Handhabung der Waren mit dem Greifer der ersten Art oder sortiert nach einem Parameter, der aus der besagten Fehlerrate und der in den Auftragszeilen für die Waren des ersten Auftrags-Subteils angegebenen Stückzahl abgeleitet ist, erfolgt, wobei das Bereitstellen (und das Auslagern und das Transportieren) der Waren des ersten Auftrags-Subteils bei einer Sortierung nach der besagten Fehlerrate von niedrigen zu aufsteigenden Fehlerraten hin oder bei einer Sortierung nach dem genannten Parameter von niedrigen zu aufsteigenden Parametern hin erfolgt und
- dass das Bereitstellen mehrerer Waren des zweiten Auftrags-Subteils an der ersten automatischen Kommissionierstation oder an der zweiten automatischen Kommissionier-Substation (und das Auslagern und das Transportieren der genannten Waren) sortiert nach der in den Auftragszeilen für die Waren des zweiten Auftrags-Subteils angegebenen Fehlerrate für die automatische Handhabung der Waren mit dem Greifer der ersten Art oder sortiert nach einem Parameter, der aus der besagten Fehlerrate und der in den Auftragszeilen für die Waren des zweiten Auftrags-Subteils angegebenen Stückzahl abgeleitet ist, erfolgt, wobei das Bereitstellen (und das Auslagern und das Transportieren) der Waren des zweiten Auftrags-Subteils bei einer Sortierung nach der besagten Fehlerrate von hohen zu absteigenden Fehlerraten hin oder bei einer Sortierung nach dem Parameter von hohen zu absteigenden Parametern hin erfolgt.

Weiterhin ist es möglich,

- dass einer Warentype eine Fehlerrate für die automatische Handhabung der Waren mit dem Greifer der ersten Art zugeordnet ist,
- dass das Entnehmen mehrerer Waren des ersten Auftrags-Subteils von zumindest einem ersten Quell-Ladehilfsmittel und das Abgeben dieser Waren in oder auf zumindest ein erstes Ziel-Ladehilfsmittel (das heißt das Umladen mehrerer Waren des ersten Auftrags-Subteils von zumindest einem ersten Quell-Ladehilfsmittel in oder auf zumindest ein erstes Ziel-Ladehilfsmittel) sortiert nach der in den Auftragszeilen für die Waren des ersten Auftrags-Subteils angegebenen Fehlerrate für die automatische Handhabung der Waren mit dem Greifer der ersten Art oder sortiert nach einem Parameter, der aus der besagten Fehlerrate und der in den Auftragszeilen für die Waren des ersten Auftrags-Subteils angegebenen Stückzahl abgeleitet ist, erfolgt, wobei das Entnehmen und Abgeben (beziehungsweise das Umladen) bei einer Sortierung nach der besagten Fehlerrate von niedrigen zu aufsteigenden Fehlerraten hin oder bei einer Sortierung nach dem genannten Parameter von niedrigen zu aufsteigenden Parametern hin erfolgt und
- dass das Entnehmen mehrerer Waren des zweiten Auftrags-Subteils von zumindest einem dritten Quell-Ladehilfsmittel und das Abgeben dieser Waren in oder auf zumindest ein erstes oder zweites Ziel-Ladehilfsmittel (das heißt das Umladen mehrerer Waren des zweiten Auftrags-Subteils von zumindest einem dritten Quell-Ladehilfsmittel in oder auf zumindest ein erstes oder zweites Ziel-Ladehilfsmittel) sortiert nach der in den Auftragszeilen für die Waren des zweiten Auftrags-Subteils angegebenen Fehlerrate für die automatische Handhabung der Waren mit dem Greifer der ersten Art oder sortiert nach einem Parameter, der aus der besagten Fehlerrate und der in den Auftragszeilen für die Waren des zweiten Auftrags-Subteils angegebenen Stückzahl abgeleitet ist, erfolgt, wobei das Entnehmen und Abgeben (beziehungsweise das Umladen) bei einer Sortierung nach der besagten Fehlerrate von hohen zu absteigenden Fehlerraten hin oder bei einer Sortierung nach dem Parameter von hohen zu absteigenden Parametern hin erfolgt.

Weiterhin ist es möglich,

- dass einer Warentype eine Fehlerrate für die automatische Handhabung der Waren mit dem Greifer der ersten Art zugeordnet ist und
- dass die Zuteilung mehrerer Waren der dritten Warentypenuntergruppe zum ersten Auftrags-Subteil oder zum zweiten Auftrags-Subteil sortiert nach der in den Auftragszeilen für diese Waren angegebenen Fehlerrate für die automatische Handhabung der Waren mit dem Greifer der ersten Art oder sortiert nach einem Parameter, der aus der besagten Fehlerrate und der in den Auftragszeilen für diese Waren angegebenen Stückzahl abgeleitet ist, erfolgt, wobei die Zuteilung von Waren der dritten Warentypenuntergruppe zum ersten Auftrags-Subteil bei einer Sortierung nach der besagten Fehlerrate von niedrigen zu aufsteigenden Fehlerraten hin oder bei einer Sortierung nach dem genannten Parameter von niedrigen zu aufsteigenden Parametern hin erfolgt und die Zuteilung von Waren der dritten Warentypenuntergruppe zum zweiten Auftrags-Subteil bei einer Sortierung nach der besagten Fehlerrate von hohen zu absteigenden Fehlerraten hin oder bei einer Sortierung nach dem genannten Parameter von hohen zu absteigenden Parametern hin erfolgt.

Weiterhin ist es möglich, dass die Waren der ersten Warentypenuntergruppe artikelrein in den ersten Quell-Ladehilfsmitteln lagern und/oder die Waren der zweiten Warentypenuntergruppe artikelrein in den dritten Quell-Ladehilfsmitteln lagern.

An dieser Stelle wird angemerkt, dass sich die zum vorgestellten Lager- und Kommissioniersystem offenbarten Varianten und Vorteile gleichermaßen auf das vorgestellte Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:

Fig. 1      den prinzipiellen Zusammenhang zwischen Warentypengruppen und Auftragsteilen;

Fig. 2      schematisch den Ablauf beim Kommissionieren von Waren gemäß einer ersten Ausführungsvariante, bei der ein Ziel-Ladehilfsmittel zuerst mit Waren des ersten Auftragsteils und dann mit Waren des zweiten Auftragsteils beladen wird;

Fig. 3      schematisch den Ablauf beim Kommissionieren von Waren gemäß einer zweiten Ausführungsvariante, bei der ein Ziel-Ladehilfsmittel zuerst mit Waren des zweiten Auftragsteils und dann mit Waren des ersten Auftragsteils beladen wird;

Fig. 4      schematisch den Ablauf beim Kommissionieren von Waren gemäß einer weiteren Ausführungsvariante, bei der ein erstes Ziel-Ladehilfsmittel mit Waren des ersten Auftragsteils und ein zweites Ziel-Ladehilfsmittel mit Waren des zweiten Auftragsteils beladen wird und die Waren im Anschluss in das erste ZielLadehilfsmittel konsolidiert werden;

Fig. 5      wie Fig. 4, nur dass die Waren in ein zweites Ziel-Ladehilfsmittel konsolidiert werden;

Fig. 6      wie Fig. 4, nur dass die Waren in ein drittes Ziel-Ladehilfsmittel konsolidiert werden;

Fig. 7      schematisch die Aufteilung eines Warensortiments in zwei Warentypengruppen anhand einer Fehlerrate;

Fig. 8      schematisch die Aufteilung eines Warensortiments in drei Warentypengruppen anhand einer Fehlerrate;

Fig. 9      schematisch die Zuteilung von Waren einer bestimmten Warentypengruppe zu einem ersten oder zweiten Auftragsteil;

Fig. 10     die beiden Auftragsteile eines Auftrags sortiert nach den in den Auftragszeilen jeweils enthaltenen Stückzahlen, sowie symbolisch die optimierte Kommissionierung der Waren des Auftrags im Hinblick auf die in den Auftragszeilen enthaltene Stückzahl;

Fig. 11     ähnlich wie Fig. 10, jedoch mit einer dritten Warentypengruppe;

Fig. 12  die Möglichkeit, eine Fehlerrate für eine Handhabung einer Ware in der betreffenden Auftragszeile zu speichern;

Fig. 13  die beiden Auftragsteile eines Auftrags sortiert nach den in den Auftragszeilen jeweils enthaltenen Fehlerraten, sowie symbolisch die optimierte Kommissionierung der Waren des Auftrags im Hinblick auf die in den Auftragszeilen enthaltene Fehlerrate;

Fig. 14  ähnlich wie Fig. 13, jedoch mit einer dritten Warentypengruppe;

Fig. 15  die Ermittlung einer Teilmenge an Aufträgen, welche im Lager- und Kommissioniersystem in einem vorgebbaren Zeitraum ausgeführt werden können, sowie die Ermittlung eines ersten Schwellwerts, welcher der Leistungsfähigkeit der automatischen und manuellen Kommissionierstationen angepasst ist;

Fig. 16  eine Unterteilung der ersten Warentypengruppe in zwei Warentypenuntergruppen, deren Waren von Greifern unterschiedlicher Art automatisch handhabbar sind, anhand der dabei auftretenden Fehlerrate;

Fig. 17  wie Fig. 16, jedoch mit einer dritten Warentypenuntergruppe;

Fig. 18  schematisch den Ablauf beim Kommissionieren von Waren gemäß einer Ausführungsvariante mit zwei automatischen Kommissionier-Substationen, bei der Waren zuerst mit einem Greifer einer ersten Art, dann Waren mit einem Greifer einer zweiten Art und dann Waren manuell in ein Ziel-Ladehilfsmittel geladen werden;

Fig. 19  schematisch den Ablauf beim Kommissionieren von Waren gemäß einer weiteren Ausführungsvariante mit zwei automatischen Kommissionier-Substationen, bei der Waren zuerst manuell, dann Waren mit einem Greifer einer ersten Art und dann Waren mit einem Greifer einer zweiten Art in ein Ziel-Ladehilfsmittel geladen werden;

Fig. 20  schematisch den Ablauf beim Kommissionieren von Waren, bei dem Waren mit Greifern unterschiedlicher Art in ein erstes Ziel-Ladehilfsmittel geladen werden, Waren manuell in ein zweites Ziel-Ladehilfsmittel geladen werden und alle genannten Waren in ein drittes Ziel-Ladehilfsmittel konsolidiert werden und

Fig. 21  eine Draufsicht auf ein beispielhaftes und schematisch dargestelltes Lager- und Kommissioniersystem mit einer Ringförderbahn und mehreren automatischen und manuellen Kommissionierstationen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

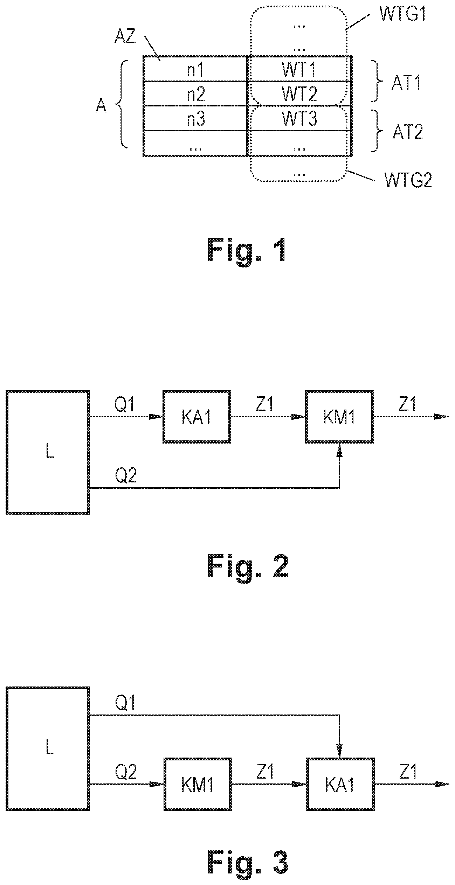

Fig. 1 zeigt den prinzipiellen Zusammenhang zwischen Warentypengruppen und Auftragsteilen. Konkret ist in Fig. 1 ein Auftrag A dargestellt, der mehrere Auftragszeilen AZ umfasst. In jeder Auftragszeile AZ ist die (bestellte) Ware nach ihrer Stückzahl n1..n3 und ihrer Warentype WT1..WT3 spezifiziert. Konkret sind in den Auftragszeilen AZ: n1 Stück Waren der Warentype WT1, n2 Stück Waren der Warentype WT2, n3 Stück Waren der Warentype WT3 usw. angegeben. Die Warentypen WT1 und WT2 (und weitere Warentypen) sind wiederum einer ersten Warentypengruppe WT1 zugeordnet, die Warentype WT3 (und weitere Warentypen) der zweiten Warentypengruppe WT2. Die beiden Warentypengruppen WT1 und WT2 bilden ein Warensortiment. Aus der Fig. 1 geht auch hervor, dass ein erster Auftragsteil AT1 jene Waren des Auftrags A umfasst, welche der ersten Warentypengruppe WT1 zugeordnet sind, und dass ein zweiter Auftragsteil AT2 jene Waren des Auftrags A umfasst, welche der zweiten Warentypengruppe WT2 zugeordnet sind.

Fig. 2 zeigt schematisch den Ablauf beim Kommissionieren von Waren gemäß einer ersten Ausführungsvariante. Dabei wird ein erstes Quell-Ladehilfsmittel Q1 mit einer Ware des ersten Auftragsteils AT1 aus einem Lagerbereich L eines Lager- und Kommissioniersystems ausgelagert und das erste Quell-Ladehilfsmittel Q1 zu einer ersten automatischen Kommissionierstation KA1 transportiert und dort bereitgestellt. In Folge wird die Ware des ersten Auftragsteils AT1 an der ersten automatischen Kommissionierstation KA1 vom ersten Quell-Ladehilfsmittel Q1 automatisch entnommen und in oder auf ein erstes Ziel-Ladehilfsmittel Z1 abgegeben. Dann wird das mit der Ware des ersten Auftragsteils AT1 beladene erste Ziel-Ladehilfsmittel Z1 zur ersten manuellen Kommissionierstation KM1 transportiert und dort bereitgestellt. In Folge wird die Ware des zweiten Auftragsteils AT2 an der ersten manuellen Kommissionierstation KM1 manuell in das erste Ziel-Ladehilfsmittel Z1 hinzu geladen. Auf diese Weise kann eine besonders hohe Packungsdichte im ersten Ziel-Ladehilfsmittel Z1 erreicht werden, da ein menschlicher Kommissionierer üblicherweise umfangreichere Fähigkeiten beim Beladen eines Ladehilfsmittels aufweist als ein Roboter. Insbesondere ist ein menschlicher Kommissionierer in der Lage, Waren im ersten Ziel-Ladehilfsmittel Z1 umzuschlichten. Das erste Ziel-Ladehilfsmittel Z1 kann abschließend in einen Versandbereich des Lager- und Kommissioniersystems transportiert und versendet werden. Alternativ kann der kommissionierte Inhalt des ersten Ziel-Ladehilfsmittels Z1 in ein (anderes) Versandladehilfsmittel umgeladen werden.

Zusammenfassend werden beim Kommissionieren von Waren folgende Schritte ausgeführt:

a) Bereitstellen der Waren in oder auf Quell-Ladehilfsmitteln Q1, Q2 im Lagerbereich L,

b) Erfassen von Aufträgen A zum Kommissionieren von Waren und Bestimmen der für diese Aufträge A benötigten Waren, wobei wenigstens ein Auftrag A der Aufträge A mehrere Auftragszeilen AZ umfasst und wobei jede Auftragszeile AZ zumindest eine Ware nach ihrer Warentype WT1..WT3 und ihrer zu kommissionierenden Stückzahl n1..n3 spezifiziert,

c) Ermitteln der Zugehörigkeit der für die Bearbeitung des genannten Auftrags benötigten Waren zu Warentypengruppen WTG1, WTG2, welche jeweils mehrere Warentypen WT1..WT3 umfassen, wobei eine erste Warentypengruppe WTG1 Warentypen WT1..WT3 enthält, die automatisch handhabbar sind, und eine zweite Warentypengruppe WTG2 Warentypen WT1..WT3 enthält, die nicht oder nur eingeschränkt automatisch, jedoch manuell handhabbar sind,

d) Bestimmen eines ersten Auftragsteils AT1, dessen zumindest eine Ware der ersten Warentypengruppe WTG1 angehört und demnach automatisch handhabbar ist, und eines zweiten Auftragsteils AT2, dessen zumindest eine Ware der zweiten Warentypengruppe WTG2 angehört und demnach nicht oder nur eingeschränkt automatisch, jedoch manuell handhabbar ist,

e) Auslagern eines ersten Quell-Ladehilfsmittels Q1 mit der zumindest einen Ware des ersten Auftragsteils AT1 aus dem Lagerbereich L des Lager- und Kommissioniersystems, Transportieren des ersten Quell-Ladehilfsmittels Q1 zu einer ersten automatischen Kommissionierstation KA1, Bereitstellen des ersten Quell-Ladehilfsmittels Q1 an der ersten automatischen Kommissionierstation KA1 und automatisches Entnehmen der zumindest einen Ware des ersten Auftragsteils AT1 vom ersten Quell-Ladehilfsmittel Q1 an der ersten automatischen Kommissionierstation KA1,

f) Auslagern eines zweiten Quell-Ladehilfsmittels Q2 mit der zumindest einen Ware des zweiten Auftragsteils AT2 aus dem Lagerbereich L des Lager- und Kommissioniersystems, Transportieren des zweiten Quell-Ladehilfsmittels Q2 zu einer ersten manuellen Kommissionierstation KM1, Bereitstellen des zweiten Quell-Ladehilfsmittels Q2 an der ersten manuellen Kommissionierstation KM1 und manuelles Entnehmen der zumindest einen Ware des zweiten Auftragsteils AT2 vom zweiten Quell-Ladehilfsmittel Q2 an der ersten manuellen Kommissionierstation KM1 und

g) Abgeben der zumindest einen Ware des ersten Auftragsteils AT1 und der zumindest einen Ware des zweiten Auftragsteils AT2 in oder auf ein Ziel-Ladehilfsmittel Z1.

Für den Schritt a) ist ein Lagerbereich L des Lager- und Kommissioniersystems vorgesehen. Für die Ausführung der Schritte b) bis d) ist insbesondere ein Steuerungssystem des Lagerund Kommissioniersystems vorgesehen, und für die Schritte e) und f) ist eine Fördertechnik des Lager- und Kommissioniersystems vorgesehen. An der Ausführung der Schritte e) bis g) sind zudem die erste automatische Kommissionierstation KA1 und die erste manuelle Kommissionierstation KM1 beteiligt.

Fig. 3 zeigt schematisch den Ablauf beim Kommissionieren von Waren gemäß einer zweiten Ausführungsvariante, welche dem in Fig. 2 dargestellten Ablauf sehr ähnlich ist. Dabei wird zuerst ein zweites Quell-Ladehilfsmittel Q2 mit einer Ware des zweiten Auftragsteils AT2 aus dem Lagerbereich L eines Lager- und Kommissioniersystems ausgelagert und das zweite Quell-Ladehilfsmittel Q2 zu einer ersten manuellen Kommissionierstation KM1 transportiert und dort bereitgestellt. In Folge wird die Ware des zweiten Auftragsteils AT2 an der ersten manuellen Kommissionierstation KM1 vom zweiten Quell-Ladehilfsmittel Q2 manuell entnommen und in oder auf ein erstes Ziel-Ladehilfsmittel Z1 abgegeben. Dann wird das mit der Ware des zweiten Auftragsteils AT2 beladene erste Ziel-Ladehilfsmittel Z1 zur ersten automatischen Kommissionierstation KA1 transportiert und dort bereitgestellt. In Folge wird die Ware des ersten Auftragsteils AT1 an der ersten automatischen Kommissionierstation KA1 automatisch in das erste Ziel-Ladehilfsmittel Z1 hinzu geladen. Auf diese Weise kann ein hoher Automatisierungsgrad im Lager- und Kommissioniersystem erreicht werden, da das Hinzuladen der Ware des zweiten Auftragsteils AT2 in das erste Ladehilfsmittel Z1 automatisch erfolgt.

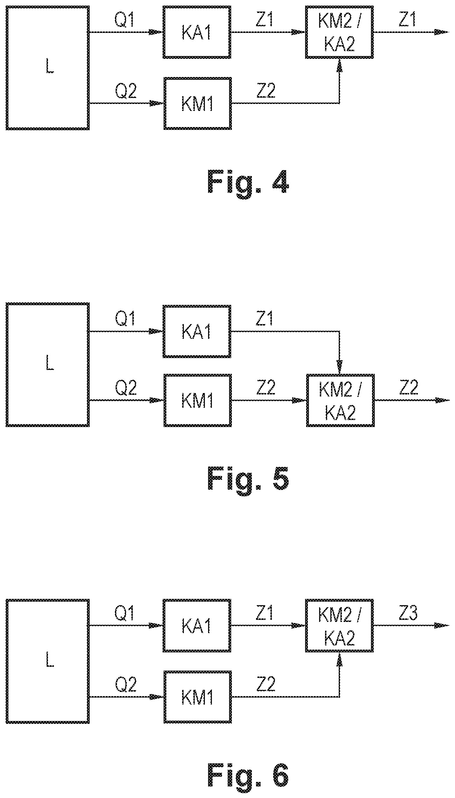

Fig. 4 zeigt schematisch den Ablauf beim Kommissionieren von Waren gemäß einer dritten Ausführungsvariante. Dabei wird ein erstes Quell-Ladehilfsmittel Q1 mit einer Ware des ersten Auftragsteils AT1 aus einem Lagerbereich L eines Lager- und Kommissioniersystems ausgelagert und zu einer ersten automatischen Kommissionierstation KA1 transportiert und dort bereitgestellt. In Folge wird die Ware des ersten Auftragsteils AT1 an der ersten automatischen Kommissionierstation KA1 vom ersten Quell-Ladehilfsmittel Q1 automatisch entnommen und in oder auf ein erstes Ziel-Ladehilfsmittel Z1 abgegeben. Weiterhin wird ein zweites Quell-Ladehilfsmittel Q2 mit einer Ware des zweiten Auftrag-

teils AT2 aus dem Lagerbereich L eines Lager- und Kommissioniersystems ausgelagert und zu einer ersten manuellen Kommissionierstation KM1 transportiert und dort bereitgestellt. In Folge wird die Ware des zweiten Auftragsteils AT2 an der ersten manuellen Kommissionierstation KM1 vom zweiten Quell-Ladehilfsmittel Q2 manuell entnommen und in oder auf ein zweites Ziel-Ladehilfsmittel Z2 abgegeben. In Folge werden das mit der Ware des ersten Auftragsteils AT1 beladene erste Ziel-Ladehilfsmittel Z1 und das mit der Ware des zweiten Auftragsteils AT2 beladene zweite Ziel-Ladehilfsmittel Z2 entweder zu einer zweiten automatischen Kommissionierstation KA2 oder zu einer zweiten manuellen Kommissionierstation KM2 transportiert. Schließlich wird die Ware des zweiten Auftragsteils AT2 an der zweiten automatischen/manuellen Kommissionierstation KM2/KA2 automatisch/manuell in das erste Ziel-Ladehilfsmittel Z1 hinzu geladen. Das erste Ziel-Ladehilfsmittel Z1 kann abschließend in einen Versandbereich des Lager- und Kommissioniersystems transportiert und versendet werden. Ein Umladen des kommissionierten Inhalts des ersten Ziel-Ladehilfsmittels Z1 in ein (anderes) Versandladehilfsmittel ist wiederum möglich.

Fig. 5 zeigt schematisch den Ablauf beim Kommissionieren von Waren gemäß einer vierten Ausführungsvariante, welche dem in Fig. 4 dargestellten Ablauf sehr ähnlich ist. Im Unterschied wird jedoch die Ware des ersten Auftragsteils AT1 an der zweiten automatischen/manuellen Kommissionierstation KM2/KA2 automatisch/manuell in das zweite Ziel-Ladehilfsmittel Z2 hinzu geladen.

Fig. 6 zeigt schematisch den Ablauf beim Kommissionieren von Waren gemäß einer fünften Ausführungsvariante, welche den in Fig. 4 und Fig. 5 dargestellten Abläufen sehr ähnlich ist.

Im Unterschied werden jedoch die Waren des ersten Auftragsteils AT1 und des zweiten Auftragsteils AT2 an der zweiten automatischen/manuellen Kommissionierstation KM2/KA2 automatisch/manuell in ein drittes Ziel-Ladehilfsmittel Z3 geladen.

Bei allen drei Varianten werden sowohl der erste Auftragsteil AT1 als auch der zweite Auftragsteil AT2 zuerst in oder auf ein erstes Ziel-Ladehilfsmittel Z1 beziehungsweise in oder auf ein zweites Ziel-Ladehilfsmittel Z2 verladen. In einem weiteren Schritt wird dann die zumindest eine Ware des zweiten Auftragsteils AT1 zum ersten Ziel-Ladehilfsmittel Z1 hinzu geladen (Fig. 4), oder es wird die zumindest eine Ware des ersten Auftragsteils AT1 in einem weiteren Schritt zum zweiten Ziel-Ladehilfsmittel Z2 hinzu geladen (Fig. 5), oder es werden die Waren des ersten Auftragsteils AT1 und des zweiten Auftragsteils AT2 in ein drittes Ziel-Ladehilfsmittel Z3 geladen (Fig. 6). Dieses Zusammenführen von Warenströmen ist auch unter dem Begriff "Konsolidieren" bekannt.

In einer vorteilhaften Ausführungsvariante erfolgt das Beladen an der zweiten automatischen Kommissionierstation KA2 automatisch und auf einmal (d.h. in einem Schritt).

Demzufolge werden bei der in Fig. 4 dargestellten Ausführungsvariante dann alle im oder auf dem zweiten Ziel-Ladehilfsmittel Z2 geladenen Waren des zweiten Auftragsteils AT2 an der zweiten automatischen Kommissionierstation KA2 automatisch und auf einmal (d.h. in einem Schritt) in oder auf das erste Ziel-Ladehilfsmittel Z1 abgegeben. Konkret können die Waren des zweiten Auftragsteils AT2 an der zweiten automatischen Kommissionierstation KA2 mit Hilfe einer Kippmechanik vom zweiten Ziel-Ladehilfsmittel Z2 in das erste Ziel-Ladehilfsmittel Z1 gekippt werden oder mit Hilfe einer Abwurfmechanik vom zweiten Ziel-Ladehilfsmittel Z2 in oder auf das erste Ziel-Ladehilfsmittel Z1 abgeworfen werden oder mit Hilfe einer Abstreifmechanik vom zweiten Ziel-Ladehilfsmittel Z2 in oder auf das erste Ziel-Ladehilfsmittel Z1 abgestreift werden.

Bei der in Fig. 5 dargestellten Ausführungsvariante werden dann alle im oder auf dem ersten Ziel-Ladehilfsmittel Z1 geladenen Waren des ersten Auftragsteils AT1 an der zweiten automatischen Kommissionierstation KA2 automatisch und auf einmal (d.h. in einem Schritt) in oder auf das zweite Ziel-Ladehilfsmittel Z2 abgegeben werden. Konkret können die Waren des ersten Auftragsteils AT1 an der zweiten automatischen Kommissionierstation KA2 mit Hilfe einer Kippmechanik vom ersten Ziel-Ladehilfsmittel Z1 in das zweite Ziel-Ladehilfsmittel Z2 gekippt werden oder mit Hilfe einer Abwurfmechanik vom ersten Ziel-Ladehilfsmittel Z1 in das zweite Ziel-Ladehilfsmittel Z2 abgeworfen werden oder mit Hilfe einer Abstreifmechanik vom ersten Ziel-Ladehilfsmittel Z1 in oder auf das zweite Ziel-Ladehilfsmittel Z2 abgestreift werden.

Bei der in Fig. 6 dargestellten Ausführungsvariante werden dann alle im oder auf dem ersten Ziel-Ladehilfsmittel Z1 geladenen Waren des ersten Auftragsteils AT1 und alle im oder auf dem zweiten Ziel-Ladehilfsmittel Z21 geladenen Waren des zweiten Auftragsteils AT2 an der zweiten automatischen Kommissionierstation KA2 automatisch und auf einmal (d.h. in einem Schritt) in oder auf das dritte Ziel-Ladehilfsmittel Z3 abgegeben. Konkret können die Waren des ersten Auftragsteils AT1 / des zweiten Auftragsteils AT2 an der zweiten automatischen Kommissionierstation KA2 mit Hilfe einer Kippmechanik vom ersten Ziel-Ladehilfsmittel Z1 / vom zweiten Ziel-Ladehilfsmittel Z2 in das dritte Ziel-Ladehilfsmittel Z3 gekippt werden oder mit Hilfe einer Abwurfmechanik vom ersten Ziel-Ladehilfsmittel Z1 / vom zweiten Ziel-Ladehilfsmittel Z2 in das dritte Ziel-Ladehilfsmittel Z3 abgeworfen werden oder mit Hilfe einer Abstreifmechanik vom ersten Ziel-Ladehilfsmittel Z1 / vom zweiten Ziel-Ladehilfsmittel Z2 in oder auf das dritte Ziel-Ladehilfsmittel Z3 abgestreift werden.

Auf diese Weise kann ein besonders hoher Automatisierungsgrad beim Kommissionierverfahren erzielt werden, da die Beladung an der zweiten automatischen Kommissionierstation KA2 automatisch und in einem Schritt erfolgt im Gegensatz zu einer Einzelstück-Kommissionierung mit einem Greifroboter, welcher die Waren in diesem Fall Stück für Stück von einem Quell-Ladehilfsmittel Q1, Q2 entnimmt und in oder auf dem Ziel-Ladehilfsmittel Z1, Z2, Z3 ablegt. Somit werden selbst jene Waren des zweiten Auftragsteils AT2, die eigentlich nur manuell kommissioniert werden können, an der zweiten automatischen Kommissionierstation KA2 automatisch kommissioniert. Diese Ausführungsvariante eignet sich insbesondere für unempfindliche Waren, beispielsweise in Folienbeutel, insbesondere in Form von sogenannten "Polybags", abgefüllte Waren.

Auch wenn ein Greifroboter Waren in der Regel Stück für Stück kommissioniert, kann auch vorgesehen sein, dass dieser ein Quell-Ladehilfsmittel Q1, Q2 als Ganzes ergreift und dessen Inhalt in ein Ziel-Ladehilfsmittel Z1, Z2, Z3 kippt. Desgleichen kann vorgesehen sein, dass ein Roboter mit seinem Arm mehrere Waren auf einmal von einem Quell-Ladehilfsmittel Q1, Q2 in ein Ziel-Ladehilfsmittel Z1, Z2, Z3 abstreift. Denkbar ist auch, dass der Roboter ein Quell-Ladehilfsmittel Q1, Q2 als Ganzes ergreift, über das Ziel-Ladehilfsmittel Z1, Z2, Z3 bewegt und den Inhalt des Quell-Ladehilfsmittels Q1, Q2 durch Betätigung einer Bodenöffnung in das Ziel-Ladehilfsmittel Z1, Z2, Z3 abwirft. Auf diese Weise kann ebenfalls eine Kippmechanik, Abstreifmechanik oder Abwurfmechanik realisiert sein.

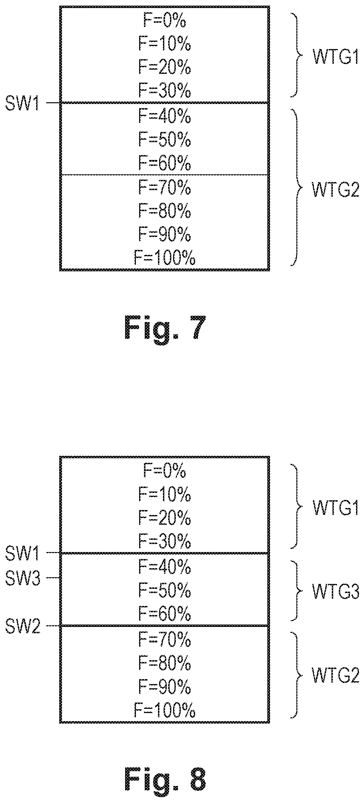

Fig. 7 zeigt nun schematisch die Aufteilung eines Warensortiments in Warentypengruppen WTG1, WTG2 anhand einer Fehlerrate F. Warentypen WT1..WT3, bei denen eine Fehlerrate F bei automatischer Handhabung (an der ersten automatischen Kommissionierstation KA1) kleiner gleich einem ersten Schwellwert SW 1 ist, werden dabei der ersten Warentypengruppe WTG1 zugeteilt und Warentypen WT1..WT3, bei denen eine Fehlerrate F bei automatischer Handhabung größer als der erste Schwellwert SW1 ist, werden der zweiten Warentypengruppe WTG2 zugeteilt. In der Fig. 7 sind die Warentypen WT1..WT3 sortiert nach ihrer Fehlerrate F, beginnend bei 0% bis 100%, dargestellt. Der erste Schwellwert SW1 liegt im gezeigten Beispiel zwischen einer Fehlerrate F von 30% bis 40%.

Fig. 8 zeigt eine Aufteilung eines Warensortiments in drei Warentypengruppen WTG1..WTG3 anhand einer Fehlerrate F. Warentypen WT1..WT3, bei denen eine Fehlerrate F bei automatischer Handhabung (an der ersten automatischen Kommissionierstation KA1) kleiner einem ersten Schwellwert SW1 ist, werden wiederum der ersten Warentypengruppe WTG1 zugeteilt. Warentypen WT1..WT3, bei denen eine Fehlerrate F bei automatischer Handhabung (an der ersten automatischen Kommissionierstation KA1) größer einem zweiten Schwellwert SW2 ist, werden der zweiten Warentypengruppe WTG2 zugeteilt. Die übrigen Warentypen WT1..WT3, bei denen die Fehlerrate F größer gleich dem ersten Schwellwert SW1 und kleiner gleich dem zweiten Schwellwert SW2 ist, werden einer dritten Warentypengruppe WTG3 zugeteilt. In der Fig. 8 sind die Warentypen WT1..WT3 wiederum sortiert nach ihrer Fehlerrate F, beginnend bei 0% bis 100%, dargestellt. Der erste Schwellwert SW1 liegt im gezeigten Beispiel wieder zwischen einer Fehlerrate F von 30% bis 40%, der zweite Schwellwert SW2 zwischen einer Fehlerrate F von 60% bis 70%. In der Fig. 8 ist auch ein dritter Schwellwert SW3 dargestellt, dessen Funktion später erläutert wird.

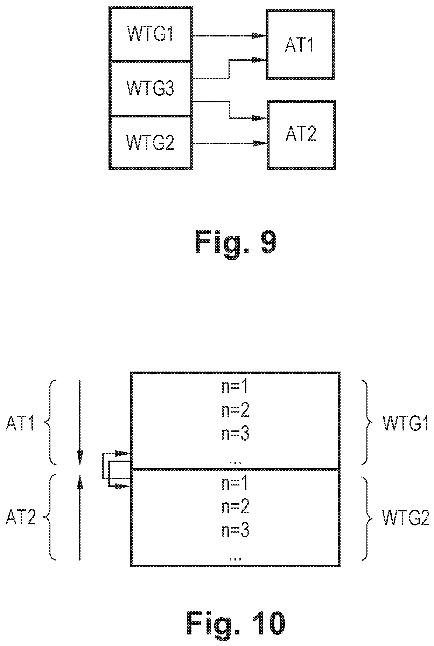

Bei der Ausführungsvariante nach Fig. 8 wird dem Umstand Rechnung getragen, dass Waren bei akzeptabler Fehlerrate F sowohl automatisch als auch manuell kommissionierbar sind. Waren der dritten Warentypengruppe WTG3 können in einem Auftrag A wahl- oder bedarfsweise dem ersten Auftragsteil AT1 oder dem zweiten Auftragsteil AT2 zugeordnet werden, so wie dies symbolhaft in der Fig. 9 dargestellt ist. Damit kann die Auslastung der ersten automatischen Kommissionierstationen KA1 und der ersten manuellen Kommissionierstationen KM1 gezielt beeinflusst werden. Dies ist insbesondere dann von Vorteil, wenn ein Auftrag A unverhältnismäßig viele Waren der ersten Warentypengruppe WTG1, jedoch sehr wenige Waren der zweiten Warentypengruppe WTG2 aufweist, oder unverhältnismäßig wenige Waren der ersten Warentypengruppe WTG1, jedoch sehr viele Waren der zweiten Warentypengruppe WTG2 aufweist. Durch die vorgeschlagenen Maßnahmen kann eine ungleiche Belastung der ersten automatischen Kommissionierstationen KA1 und der ersten manuellen Kommissionierstationen KM1, die durch das angesprochene Ungleichgewicht der ersten Warentypengruppe WTG1 und der zweiten Warentypengruppe WTG2 zu erwarten wäre, durch entsprechende Zuteilung der Waren der dritten Warentypengruppe WTG3 ganz oder zumindest zum Teil ausgeglichen werden.

Als Fehlerrate F ist generell der Quotient der bei der (automatischen) Kommissionierung auftretenden Fehlhandhabungen dividiert durch die Gesamtanzahl der Handhabungen vorgesehen. Konkret können als Fehlerrate F die folgenden Maßzahlen vorgesehen sein:

- der Quotient der Anzahl der fehlgeschlagenen automatischen Entnahmen von Waren von einem Quell-Ladehilfsmittel Q1, Q2 dividiert durch die Gesamtanzahl an (fehlgeschlagenen und erfolgreichen) automatischen Entnahmen von Waren von einem Quell-Ladehilfsmittel Q1, Q2 oder
- der Quotient der Anzahl der fehlgeschlagenen automatischen Abgaben von Waren in oder auf ein Ziel-Ladehilfsmittel Z1, Z2, Z3 dividiert durch die Gesamtanzahl an (fehlgeschlagenen und erfolgreichen) automatischen Abgaben von Waren in oder auf ein Ziel-Ladehilfsmittel Z1, Z2, Z3 oder
- der Quotient der Anzahl der fehlgeschlagenen automatischen Umladevorgänge von Waren von einem Quell-Ladehilfsmittel Q1, Q2 in oder auf ein Ziel-Ladehilfsmittel Z1, Z2, Z3 dividiert durch die Gesamtanzahl an (fehlgeschlagenen und erfolgreichen) automatischen Umladevorgängen von Waren von einem Quell-Ladehilfsmittel Q1, Q2 in oder auf ein Ziel-Ladehilfsmittel Z1, Z2, Z3 oder
- eine von den obigen Quotienten abgeleitete Maßzahl.

Demgemäß sind Waren der ersten Warentypengruppe WTG1 mit hoher Wahrscheinlichkeit fehlerfrei oder bei nur geringer Fehlerrate F automatisch handhabbar, wohingegen Waren der zweiten Warentypengruppe WTG2 mit hoher Wahrscheinlichkeit nicht fehlerfrei oder nur bei sehr hoher Fehlerrate F automatisch handhabbar wären, und daher manuell kommissioniert werden.

Eine Zuteilung der Warentypen WT1..WT3 zur ersten Warentypengruppe WTG1, zur zweiten Warentypengruppe WTG2 und gegebenenfalls zur dritten Warentypengruppe WTG3 kann vorteilhaft zu den folgenden Zeitpunkten erfolgen:

I) vor oder bei Durchführung des Schritts a) und/oder
II) bei Durchführung eines der Schritte e) oder f) oder g) und/oder
III) unabhängig von den Schritten b) bis g).

Gemäß der Ausführungsvariante I) erfolgt die Zuteilung einer Warentype WT1..WT3 zu einer Warentypengruppe WTG1..WTG3 also vor oder beim Einlagern einer Ware dieser Warentype WT1..WT3, jedenfalls aber vor dem Ermitteln der Zugehörigkeit der für die Bearbeitung eines Auftrags A benötigten Waren zu Warentypengruppen WTG1..WTG3 im Schritt c). Die Zuteilung einer Warentype WT1..WT3 zu einer Warentypengruppe WTG1..WTG3 erfolgt in diesem Fall somit initial und vor dem eigentlichen Kommissioniervorgang, beispielsweise mit Hilfe von empirischen Versuchen, durch Erfahrung mit ähnlichen Warentypen WT1..WT3 oder auch indem der Lieferant einer Ware Informationen zur automatischen Handhabbarkeit dieser Ware bereitstellt.

Gemäß der Ausführungsvariante II) erfolgt die Zuteilung einer Warentype WT1..WT3 zu einer Warentypengruppe WTG1..WTG3 beim Kommissioniervorgang, also "online". Die Zuteilung einer Warentype WT1..WT3 zu einer Warentypengruppe WTG1..WTG3 erfolgt in diesem Fall somit adaptiv, das heißt eine ursprünglich manuell handhabbare Warentype WT2 kann als automatisch handhabbar klassifiziert werden und umgekehrt.

Konkret können im Fall II) als Fehlerrate F die folgenden Maßzahlen vorgesehen sein:

- der Quotient der Anzahl der fehlgeschlagenen automatischen Entnahmen von Waren von einem Quell-Ladehilfsmittel Q1, Q2 an der ersten automatischen Kommissionierstation KA1 dividiert durch die Gesamtanzahl an (fehlgeschlagenen und erfolgreichen) automatischen Entnahmen von Waren von einem Quell-Ladehilfsmittel Q1, Q2 an der ersten automatischen Kommissionierstation KA1 oder
- der Quotient der Anzahl der fehlgeschlagenen automatischen Abgaben von Waren in oder auf ein Ziel-Ladehilfsmittel Z1, Z2, Z3 an der ersten automatischen Kommissionierstation KA1 dividiert durch die Gesamtanzahl an (fehlgeschlagenen und erfolgreichen) automatischen Abgaben von Waren in oder auf ein Ziel-Ladehilfsmittel Z1, Z2, Z3 an der ersten automatischen Kommissionierstation KA1 oder
- der Quotient der Anzahl der fehlgeschlagenen automatischen Umladevorgänge von Waren von einem Quell-Ladehilfsmittel Q1, Q2 in oder auf ein Ziel-Ladehilfsmittel Z1, Z2, Z3 an der ersten automatischen Kommissionierstation KA1 dividiert durch die Gesamtanzahl an (fehlgeschlagenen und erfolgreichen) automatischen Umladevorgängen von Waren von einem Quell-Ladehilfsmittel Q1, Q2 in oder auf ein Ziel-Ladehilfsmittel Z1, Z2, Z3 an der ersten automatischen Kommissionierstation KA1 oder
- eine von den obigen Quotienten abgeleitete Maßzahl.

Gemäß der Ausführungsvariante III) erfolgt die Zuteilung einer Warentype WT1..WT3 zu einer Warentypengruppe WTG1..WTG3 parallel zu einem Kommissioniervorgang, also "offline". Die Zuteilung einer Warentype WT1..WT3 zu einer Warentypengruppe WTG1..WTG3 erfolgt somit auch in diesem Fall adaptiv, das heißt eine ursprünglich manuell handhabbare Warentype WT2 kann als automatisch handhabbar klassifiziert werden und umgekehrt. Beispielsweise können hierfür automatische Kommissionierstationen KA1 eingerichtet werden, die nur zu Testzwecken genutzt werden. Denkbar ist aber auch, dass erste automatische Kommissionierstationen KA1 genutzt werden, die für die Kommissionierung gerade nicht benötigt werden, beispielweise in Zeiten niedriger Leistungsanforderung (etwa in der Nacht).

Wie erwähnt, kann die Zuteilung einer Warentype WT1..WT3 zu einer Warentypengruppe WTG1..WTG3 an sich ändernde Gegebenheiten angepasst werden, zum Beispiel weil sich die Eigenschaften einer Ware geändert haben (beispielsweise aufgrund der Lagerung oder weil der Lieferant der Ware die Art einer Verpackung geändert hat) oder weil sich die Eigenschaften eines Greifers eines Roboters geändert haben (beispielsweise weil die Greifflächen verschmutzt sind oder weil das Material der Greifflächen gealtert ist).

Insbesondere kann eine Warentype WT1..WT3 zumindest einer Ware des ersten Auftragsteils AT1, welche vorerst der ersten Warentypengruppe WTG1 zugeteilt ist, im Fall II) der zweiten Warentypengruppe WTG2 neu zugeteilt werden, wenn die Fehlerrate F bei der automatischen Handhabung dieser zumindest einen Ware an der ersten automatischen Kommissionierstation KA1 den ersten Schwellwert SW1 überschreitet.

Alternativ ist auch denkbar, dass eine Warentype WT1..WT3 zumindest einer Ware des ersten Auftragsteils AT1, welche vorerst der ersten Warentypengruppe WTG1 zugeteilt ist, im Fall II) der zweiten Warentypengruppe WTG2 neu zugeteilt wird, wenn die Fehlerrate F bei der automatischen Handhabung dieser zumindest einen Ware WQ1', WZ1, WZ1' an der ersten automatischen Kommissionierstation KA1 den zweiten Schwellwert SW2 überschreitet, und der dritten Warentypengruppe WTG3 neu zugeteilt wird, wenn die Fehlerrate F bei der automatischen Handhabung dieser zumindest einen Ware WQ1', WZ1, WZ1' an der ersten automatischen Kommissionierstation KA1 den ersten Schwellwert SW1, nicht jedoch den zweiten Schwellwert SW2 überschreitet.

Bei der Neuzuteilung von Warentypen WT1..WT3 zu Warentypengruppen WTG1..WTG3 sind darüber hinaus insbesondere folgende Varianten denkbar.

Beispielsweise kann eine Ware des ersten Auftragsteils AT1, welche die Neuzuteilung der Warentype WT1..WT3 dieser Ware zur zweiten Warentypengruppe WTG2 bewirkt, beim ersten Auftragsteil AT1 verbleiben. Bei dieser Variante wirkt sich die Neuzuteilung einer Warentype WT1..WT3 einer Ware des ersten Auftragsteils AT1 zur zweiten Warentypengruppe WTG2 nicht auf den aktuellen Kommissioniervorgang aus. Die Neuzuteilung der Warentype der Ware des ersten Auftragsteils AT1 zur zweiten Warentypengruppe WTG2 führt erst dann zu einer Änderung im Ablauf des Kommissionierverfahrens, wenn der Schritt c) (Ermitteln der Zugehörigkeit der für die Bearbeitung eines Auftrags A benötigten Waren zu Warentypengruppen WTG1..WTG3) nach der genannten Neuzuteilung zum nächsten Mal ausgeführt wird. Vorteilhaft wird der aktuelle Kommissioniervorgang durch die genannte Neuzuteilung nicht gestört. Insbesondere bietet sich eine solche Vorgangsweise dann an, wenn ein Umleiten der Ware des ersten Auftragsteils AT1, welche die genannte Neuzuteilung der Warentype WT1..WT3 zur zweiten Warentypengruppe WTG2 bewirkt, zu einer ersten manuellen Kommissionierstation KM1 nicht möglich ist oder mit erheblichen Nachteilen verbunden ist.

Denkbar ist aber auch, dass die Ware des ersten Auftragsteils AT1, welche die Neuzuteilung der Warentype WT1..WT3 dieser Ware zur zweiten Warentypengruppe WTG2 bewirkt, dem zweiten Auftragsteil AT2 zugeteilt und entsprechend kommissioniert wird. Bei dieser Variante wirkt sich die Neuzuteilung einer Warentype WT1..WT3 einer Ware des ersten Auftragsteils AT1 zur zweiten Warentypengruppe WTG2 direkt auf den aktuellen Kommissioniervorgang aus. Die Neuzuteilung der Warentype WT1..WT3 der Ware des ersten Auftragsteils AT1 zur zweiten Warentypengruppe WTG2 führt unmittelbar auch zu einer Neuzuteilung der betreffenden Ware zum zweiten Auftragsteil AT2. Vorteilhaft wird die genannte Neuzuteilung sofort wirksam. Insbesondere bietet sich eine solche Vorgangsweise dann an, wenn jene Ware, welche die genannte Neuzuteilung der Warentype WT1..WT3 zur zweiten Warentypengruppe WTG2 bewirkt, zu einer erheblichen Störung im Ablauf des aktuellen Kommissioniervorgangs führen würde, wenn sie nach wie vor beim ersten Auftragsteil AT1 verbleiben würde.

Generell ist auch vorstellbar, dass eine Ware des ersten Auftragsteils AT1 dem zweiten Auftragsteil AT2 zugeordnet und zu einer ersten manuellen Kommissionierstation KM1 gefördert wird (und die Warentype WT1..WT3 dieser Ware insbesondere bei der ersten Warentypengruppe WTG1 verbleibt), wenn die Anzahl an Fehlhandhabungen (genau) dieser Ware an der ersten automatischen Kommissionierstation KA1 einen Fehlhandhabungs-Schwellwert überschreitet. Auf diese Weise wird vermieden, dass Waren des ersten Auftragsteils AT1, die in Ausnahmefällen an der ersten automatischen Kommissionierstation KA1 nicht in angemessener Zeit automatisch gehandhabt werden können, die betreffende erste automatische Kommissionierstation KA1 blockieren. Stattdessen werden diese Waren des ersten Auftragsteils AT1 an eine erste manuelle Kommissionierstation KM1 gefördert. Eine Zuteilung dieser Ware zur zweiten Warentypengruppe WTG2 oder dritten Warentypengruppe WTG3 ist bei dieser Ausführungsvariante im Grunde nicht vorgesehen. Es kann jedoch passieren, dass diese Ware auch das Überschreiten des ersten Schwellwerts SW1 verursacht (beispielsweise wenn schon viele andere grenzwertige Handhabungen in einem Beobachtungszeitraum erfolgt sind) und es daher zu einer Neuzuordnung der Warentype WT1..WT3 der betreffenden Ware kommt.

Generell kann auch die Zuteilung einer Ware zu einem Auftragsteil AT1, AT2 flexibel sein. Das heißt, eine Ware, die ursprünglich Teil des ersten Auftragsteils AT1 ist, kann dem zweiten Auftragsteil AT2 neu zugeteilt werden und umgekehrt.

Beispielsweise kann das erste Quell-Ladehilfsmittel Q1 mit der Ware des ersten Auftragsteils AT1 dem zweiten Auftragsteil AT2 zugeteilt werden, zu einer ersten manuellen Kommissionierstation KM1 transportiert und dort bereitgestellt werden und in Folge die Ware des zweiten Auftragsteils AT2 manuell in oder auf ein erstes oder zweites Ziel-Ladehilfsmittel Z1, Z2 geladen werden,

- wenn die Abgabe mehrerer Waren der zweiten Warentypengruppe WTG2 des zweiten Auftragsteils AT2 in das erste oder zweite Ziel-Ladehilfsmittel Z1, Z2 an der ersten manuellen Kommissionierstation KM1 schneller erfolgt als die Abgabe derselben Anzahl an Waren des ersten Auftragsteils AT1 in das erste Ziel-Ladehilfsmittel Z1 an der ersten automatischen Kommissionierstation KA1 oder
- wenn bereits alle Waren der zweiten Warentypengruppe WTG2 des zweiten Auftragsteils AT2 an der ersten manuellen Kommissionierstation KM1 in erste oder zweite Ziel-Ladehilfsmittel Z1, Z2 geladen wurden.

Auf diese Weise kann die Zeit, die für die Abarbeitung eines Kommissionierauftrags A nötig ist, gering gehalten werden, da Waren des ersten Auftragsteils AT1, die nicht nur automatisch sondern grundsätzlich auch manuell kommissionierbar sind, über die erste manuelle Kommissionierstation KM1 kommissioniert werden, wenn die Kommissionierung des zweiten Auftragsteils AT2 schneller erfolgt als die Kommissionierung des ersten Auftragsteils AT1 oder der zweite Auftragsteil AT2 überhaupt fertig kommissioniert ist.

Wie bereits erwähnt, können Waren der dritten Warentypengruppe WTG3 in einem Auftrag A wahl- oder bedarfsweise dem ersten Auftragsteil AT1 oder dem zweiten Auftragsteil AT2 zugeordnet werden, so wie dies symbolhaft in der Fig. 9 dargestellt ist. Auch dies kann der flexiblen Zuteilung einer Ware zu einem Auftragsteil AT1, AT2 dienen.

Vorteilhaft wird dem ersten Auftragsteil AT1 eine Ware der dritten Warentypengruppe WTG3 zugeteilt, zu einer ersten automatischen Kommissionierstation KA1 transportiert und dort automatisch in erste Ziel-Ladehilfsmittel Z1 geladen,

- wenn die Beladung der ersten Ziel-Ladehilfsmittel Z1 mit mehreren Waren der ersten Warentypengruppe WTG1 des ersten Auftragsteils AT1 an der ersten automatischen Kommissionierstation KA1 schneller erfolgt als die Beladung der ersten oder zweiten Ziel-Ladehilfsmittel Z1, Z2 mit derselben Anzahl an Waren des zweiten Auftragsteils AT2 an der ersten manuellen Kommissionierstation KM1 oder
- wenn bereits alle Waren der ersten Warentypengruppe WTG1 des ersten Auftragsteils AT1 an der ersten automatischen Kommissionierstation KA1 in erste Ziel-Ladehilfsmittel Z1 geladen wurden.

Auf diese Weise wird die Zeit, die für die Abarbeitung eines Kommissionierauftrags A nötig ist, gering gehalten, da noch nicht kommissionierte Waren der dritten Warentypengruppe WTG3 dem ersten Auftragsteil AT1 zugerechnet werden, wenn die Kommissionierung der Waren der ersten Warentypengruppe WTG1 schneller erfolgt als die Kommissionierung der Waren der zweiten Warentypengruppe WTG2 oder alle Waren der ersten Warentypengruppe WTG1 bereits kommissioniert sind. Dadurch werden die ersten manuellen Kommissionierstationen KM1 entlastet, da Waren der dritten Warentypengruppe WTG3 an diesen ersten manuellen Kommissionierstationen KM1 nicht oder nur zu einem geringen Teil kommissioniert werden müssen.

Umgekehrt kann dem zweiten Auftragsteil AT2 eine Ware der dritten Warentypengruppe WTG3 zugeteilt werden, diese eine Ware zu einer ersten manuellen Kommissionierstation KM1 transportiert und dort bereitgestellt werden und in Folge die genannte Ware des zweiten Auftragsteils AT2 manuell in erste oder zweite Ziel-Ladehilfsmittel Z1, Z2 geladen werden,

- wenn die Beladung der ersten oder zweiten Ziel-Ladehilfsmittel Z1, Z2 mit mehreren Waren der zweiten Warentypengruppe WTG2 des zweiten Auftragsteils AT2 an der ersten manuellen Kommissionierstation KM1 schneller erfolgt als die Beladung der ersten Ziel-Ladehilfsmittel Z1 mit derselben Anzahl an Waren des ersten Auftragsteils AT1 an der ersten automatischen Kommissionierstation KA1 oder
- wenn bereits alle Waren der zweiten Warentypengruppe WTG2 des zweiten Auftragsteils AT2 an der ersten manuellen Kommissionierstation KM1 in erste oder zweite Ziel-Ladehilfsmittel Z1, Z2 geladen wurden.

Auf diese Weise wird die Zeit, die für die Abarbeitung eines Kommissionierauftrags A nötig ist, ebenfalls gering gehalten, da noch nicht kommissionierte Waren der dritten Warentypengruppe WTG3 dem zweiten Auftragsteil AT2 zugerechnet werden, wenn die Kommissionierung der Waren der zweiten Warentypengruppe WTG2 schneller erfolgt als die Kommissionierung der Waren der ersten Warentypengruppe WTG1 oder alle Waren der zweiten Warentypengruppe WTG2 bereits kommissioniert sind. Dadurch werden die ersten automatischen Kommissionierstationen KA1 entlastet, da Waren der dritten Warentypengruppe WTG3 an diesen ersten automatischen Kommissionierstationen KA1 nicht oder nur zu einem geringen Teil kommissioniert werden müssen.

Besonders gut können erste automatische Kommissionierstationen KA1 entlastet werden, sofern die Abarbeitung des Kommissionierauftrags an den ersten manuellen Kommissionierstation KM1 besonders schnell erfolgt, wenn

- dem zweiten Auftragsteil AT2 zumindest eine Ware der dritten Warentypengruppe WTG3 zugeteilt wird, diese zumindest eine Ware zu einer ersten manuellen Kommissionierstation KM1 transportiert und dort bereitgestellt wird und in Folge die zumindest eine genannte Ware des zweiten Auftragsteils AT2 manuell in erste oder zweite Ziel-Ladehilfsmittel Z1, Z2 geladen wird, solange Waren der dritten Warentypengruppe WTG3 vorhanden sind und wenn die Beladung der ersten oder zweiten Ziel-Ladehilfsmittel Z1, Z2 mit mehreren Waren der zweiten Warentypengruppe WTG2 des zweiten Auftragsteils AT2 an der ersten manuellen Kommissionierstation KM1 schneller erfolgt als die Beladung der ersten Ziel-Ladehilfsmittel Z1 mit derselben Anzahl an Waren des ersten Auftragsteils AT1 an der ersten automatischen Kommissionierstation KA1 oder wenn bereits alle Waren der zweiten Warentypengruppe WTG2 des zweiten Auftragsteils AT2 an der ersten manuellen Kommissionierstation KM1 in erste oder zweite Ziel-Ladehilfsmittel Z1, Z2 geladen wurden, und dann
- zumindest eine Ware des ersten Auftragsteils AT1 dem zweiten Auftragsteil AT2 zugeteilt wird, zu einer ersten manuellen Kommissionierstation KM1 transportiert und dort bereitgestellt wird und in Folge die zumindest eine genannte Ware des zweiten Auftragsteils AT2 manuell in erste oder zweite Ziel-Ladehilfsmittel Z1, Z2 geladen wird, wenn die Beladung der ersten oder zweiten Ziel-Ladehilfsmittel Z1, Z2 mit mehreren Waren der zweiten Warentypengruppe WTG2 des zweiten Auftragsteils AT2 an der ersten manuellen Kommissionierstation KM1 schneller erfolgt als die Beladung der ersten Ziel-Ladehilfsmittel Z1 mit derselben Anzahl an Waren des ersten Auftragsteils AT1 an der ersten automatischen Kommissionierstation KA1 oder wenn bereits alle Waren der zweiten Warentypengruppe WTG2 des zweiten Auftragsteils AT2 an der ersten manuellen Kommissionierstation KM1 in erste oder zweite Ziel-Ladehilfsmittel Z1, Z2 geladen wurden.

Besonders gut können erste manuelle Kommissionierstationen KM1 entlastet werden, sofern die Abarbeitung des Kommissionierauftrags an den ersten automatischen Kommissionierstation KA1 besonders schnell erfolgt, wenn

- dem ersten Auftragsteil AT1 zumindest eine Ware der dritten Warentypengruppe WTG3 zugeteilt wird, diese zumindest eine Ware zu einer ersten automatischen Kommissionierstation KA1 transportiert und dort bereitgestellt wird und in Folge die zumindest eine genannte Ware des ersten Auftragsteils AT1 automatisch in erste Ziel-Ladehilfsmittel Z1 geladen wird, solange Waren der dritten Warentypengruppe WTG3 vorhanden sind und wenn die Beladung der ersten Ziel-Ladehilfsmittel Z1 mit mehreren Waren der ersten Warentypengruppe WTG1 des ersten Auftragsteils AT1 an der ersten automatischen Kommissionierstation KA1 schneller erfolgt als die Beladung der ersten oder zweiten Ziel-Ladehilfsmittel Z1, Z2 mit derselben Anzahl an Waren des zweiten Auftragsteils AT2 an der ersten manuellen Kommissionierstation KM1 oder wenn bereits alle Waren der ersten Warentypengruppe WTG1 des ersten Auftragsteils AT1 an der ersten automatischen Kommissionierstation KA1 in erste Ziel-Ladehilfsmittel Z1 geladen wurden, und dann

- zumindest eine Ware des zweiten Auftragsteils AT2 dem ersten Auftragsteil AT1 zugeteilt wird, zu einer ersten automatischen Kommissionierstation KA1 transportiert und dort bereitgestellt wird und in Folge die zumindest eine genannte Ware des ersten Auftragsteils AT1 automatische in erste Ziel-Ladehilfsmittel Z1 geladen wird, wenn die Beladung der ersten Ziel-Ladehilfsmittel Z1 mit mehreren Waren der ersten Warentypengruppe WTG1 des ersten Auftragsteils AT1 an der ersten automatischen Kommissionierstation KA1 schneller erfolgt als die Beladung der ersten oder zweiten Ziel-Ladehilfsmittel Z1, Z2 mit derselben Anzahl an Waren des zweiten Auftragsteils AT2 an der ersten manuellen Kommissionierstation KM1 oder wenn bereits alle Waren der ersten Warentypengruppe WTG1 des ersten Auftragsteils AT1 an der ersten automatisch Kommissionierstation KA1 in erste Ziel-Ladehilfsmittel Z1 geladen wurden.

Bei der Zuteilung von Waren des zweiten Auftragsteils AT2 zum ersten Auftragsteil AT1 ist darauf zu achten, dass die genannten Waren grundsätzlich automatisch kommissionierbar sind. Konkret trifft dies zu, wenn die Fehlerrate F der Warentype WT1..WT3 der betreffenden Waren unter einem Zuteil-Schwellwert liegt, insbesondere unter dem ersten Schwellwert SW1.

Vorteilhaft ist es weiterhin, wenn das erste Quell-Ladehilfsmittel Q1 mit der zumindest einen Ware des ersten Auftragsteils AT1 dem zweiten Auftragsteil AT2 zugeteilt wird, zu einer ersten manuellen Kommissionierstation KM1 transportiert und dort bereitgestellt wird und in Folge die zumindest eine genannte Ware des zweiten Auftragsteils AT2 manuell in oder auf ein erstes oder zweites Ziel-Ladehilfsmittel Z1, Z2 geladen wird,

- wenn für die zumindest eine Ware des ersten Auftragsteils AT1 in der betreffenden Auftragszeile AZ eine Stückzahl n1..n3 angegeben ist, welche einen Stückzahl-Schwellwert überschreitet.

Auf diese Weise wird vermieden, dass Waren einer Auftragszeile AZ mit einer hohen Stückzahl n1..n3, die zwar grundsätzlich automatisch kommissionierbar sind und daher dem ersten Auftragsteil AT1 angehören, deren automatische Kommissionierung aber aufgrund der hohen Stückzahl n1..n3 ungünstig ist, zu einer ersten automatischen Kommissionierstation KA1 transportiert und dort bereitgestellt werden. Diese Waren werden dem zweiten Auftragsteil AT2 zugeordnet und in Folge an der ersten manuellen Kommissionierstation KM1 manuell kommissioniert.

Bei dieser Variante macht man sich den Umstand zunutze, dass menschliche Kommissionierer beim Kommissioniervorgang häufig mehrere Waren gleichzeitig manipulieren, das heißt von einem Quell-Ladehilfsmittel Q2 in oder auf ein Ziel-Ladehilfsmittel Z1, Z2 umladen, wohingegen Roboter häufig nur eine oder nur einige wenige Waren gleichzeitig manipulieren beziehungsweise umladen können. Dies stellt eine Abkehr von jenem Prinzip dar, nach dem ein Roboter möglichst hohe Stückzahlen n1..n3 kommissionieren soll. Insgesamt kann die Zeit, die für die Abarbeitung eines Kommissionierauftrags A nötig ist, durch diese Abkehr bei nur geringer Fehlerrate F kurz gehalten werden.

Fig. 10 zeigt nun eine besondere Ausführungsvariante, welche optimiert im Hinblick auf die in den Auftragszeilen AZ enthaltene Stückzahl n1..n3 abläuft. Konkret sind in der Fig. 10 die beiden Auftragsteile AT1, AT2 eines Auftrags A sortiert nach den in den Auftragszeilen AZ jeweils enthaltenen Stückzahlen n dargestellt. Das Bereitstellen mehrerer Waren des ersten Auftragsteils AT1 an der ersten automatischen Kommissionierstation KA1 (und das Auslagern und das Transportieren der genannten Waren) erfolgt bei dieser Ausführungsvariante sortiert nach der in den Auftragszeilen

AZ für die Waren des ersten Auftragsteils AT1 angegebenen Stückzahl n, und zwar von niedrigen zu aufsteigenden Stückzahlen n hin. Dies ist in der Fig. 10 mit dem nach unten zeigenden Pfeil dargestellt. Das Bereitstellen mehrerer Waren des zweiten Auftragsteils AT2 an der ersten manuellen Kommissionierstation KM1 (und das Auslagern und das Transportieren der genannten Waren) erfolgt sortiert nach der in den Auftragszeilen AZ für die Waren des zweiten Auftragsteils AT2 angegebenen Stückzahl n, und zwar von hohen zu absteigenden Stückzahlen n hin. Dies ist in der Fig. 10 mit dem nach oben zeigenden Pfeil dargestellt.

Läuft die Kommissionierung an den ersten manuellen Kommissionierstationen KM1 schneller als erwartet ab, so können dem zweiten Auftragsteil AT2 "übrig gebliebene" Waren des ersten Auftragsteils AT1 zugeordnet und in Folge manuell kommissioniert werden. Das heißt, es kommt zu einer Umleitung der Warenströme von einer ersten automatischen Kommissionierstation KA1 zu einer ersten manuellen Kommissionierstation KM1. Dieser Vorgang ist in der Fig. 10 mit dem vom ersten Auftragsteil AT1 zum zweiten Auftragsteil AT2 weisenden Pfeil visuell dargestellt. Durch die besondere Vorgangsweise sind von der Neuzuordnung Auftragszeilen AZ mit eher höheren Stückzahlen n betroffen, welche für die manuelle Kommissionierung günstig sind, wohingegen Auftragszeilen AT mit einer geringeren Stückzahl n bereits vorteilhaft an der ersten automatischen Kommissionierstation KA1 abgearbeitet wurden.

Umgekehrt können dem ersten Auftragsteil AT1 "übrig gebliebene" Waren des zweiten Auftragsteils AT2 zugeordnet und in Folge automatisch kommissioniert werden, wenn die Kommissionierung an den ersten manuellen Kommissionierstationen KM1 langsamer als erwartet abläuft. Dieser Vorgang ist in der Fig. 10 mit dem vom zweiten Auftragsteil AT2 zum ersten Auftragsteil AT1 weisenden Pfeil visuell dargestellt. Durch die besondere Vorgangsweise sind von der Neuzuordnung dann Auftragszeilen AT mit eher niedrigen Stückzahlen n betroffen, die für die automatische Kommissionierung günstig sind.

Dies stellt eine Abkehr von jenem Prinzip dar, nach dem ein Roboter möglichst hohe Stückzahlen n kommissionieren soll. Insgesamt kann die Zeit, die für die Abarbeitung eines Kommissionierauftrags A nötig ist, durch diese Abkehr kurz gehalten werden.

Bei der Zuteilung von Waren des zweiten Auftragsteils AT2 zum ersten Auftragsteil AT1 ist darauf zu achten, dass die genannten Waren grundsätzlich automatisch kommissionierbar sind. Konkret trifft dies zu, wenn die Fehlerrate F der Warentype WT1..WT3 der betreffenden Waren unter einem Zuteil-Schwellwert liegt, insbesondere unter dem ersten Schwellwert SW1.

In einer besonderen Ausführungsvariante werden die Auftragszeilen AZ in nachfolgenden (tieferen) Sortierebenen noch nach einem anderen Sortierkriterium als nach der Stückzahl n sortiert, nach dem Gewicht einer Ware oder nach der Größe oder dem Volumen einer Ware. Weisen mehrere Auftragszeilen AZ dieselbe Stückzahl n auf, so können diese zum Beispiel nach dem Gewicht einer Ware sortiert werden und mehrere Waren mit derselben Stückzahl n und demselben Gewicht nach dem Volumen einer Ware. Das heißt, die Sortierung erfolgt nach dem Schema Stückzahl → Gewicht → Volumen. Durch die vorgeschlagenen Maßnahmen können schwere, große und/oder voluminöse Waren zuerst im Ziel-Ladehilfsmittel Z1, Z2 abgelegt werden und befinden sich im Ziel-Ladehilfsmittel Z1, Z2 daher weiter unten, was für die Beförderung des Ziel-Ladehilfsmittels Z1, Z2 von Vorteil ist. Selbstverständlich ist auch eine andere Aufteilung der Sortierebenen möglich, beispielsweise Stückzahl ---> Gewicht ---> Volumen.

Die Sortierung kann sich generell auf einen (einzelnen) Auftrag A beziehen oder auf eine Gruppe von Aufträgen A. Bezieht sich die Sortierung auf eine Gruppe von Aufträgen A, so kann das sortierte Bereitstellen von Quell-Behältern Q1, Q2 über Auftragsgrenzen hinweg beziehungsweise ohne Berücksichtigung von Auftragsgrenzen erfolgen. Das heißt, an einer ersten automatischen oder manuellen Kommissionierstation KA1, KM1 werden die Aufträge A nicht sequentiell, sondern quasi-parallel entsprechend der Sortierung der Auftragszeilen AZ abgearbeitet.

Der optimierte Ablauf des Kommissionierverfahrens kann grundsätzlich ohne die Bestimmung eines Stückzahl-Schwellwerts im Rahmen einer Planung des Kommissionierverfahrens erfolgen. Dennoch kann die weiter oben offenbarte Bestimmung eines Stückzahl-Schwellwerts auch in Kombination mit dieser Variante des Kommissionierverfahrens von Vorteil sein. In diesem Fall erfolgt die Aufteilung der Waren im Rahmen einer Planung anhand eines Stückzahl-Schwellwerts, bei der Ausführung des Plans erfolgt das Bereitstellen von Waren sortiert nach Stückzahlen n. Dadurch kann das Kommissionierverfahren auch dann noch optimal weiterlaufen, wenn es bei der Ausführung des Kommissionierverfahrens zu einer Abweichung vom Plan kommt.

Bei der obigen Variante wurde auf das Bereitstellen eines Quell-Ladehilfsmittels Q1, Q2 an einer ersten automatischen oder manuellen Kommissionierstation KA1, KM1 Bezug genommen. Dies ist aber nicht die einzige Möglichkeit. Denkbar ist vielmehr auch, dass auf das Abgeben der in einem Quell-Ladehilfsmittel Q1, Q2 enthaltenen Waren an sich abgestellt wird, insbesondere wenn ein Quell-Ladehilfsmittel Waren Q1, Q2 unterschiedlicher Warentypen WT1..WT3 enthält. Bei dieser Variante erfolgt

- das Entnehmen mehrerer Waren des ersten Auftragsteils AT1 von zumindest einem ersten Quell-Ladehilfsmittel Q1 und das Abgeben dieser Waren in oder auf zumindest ein erstes Ziel-Ladehilfsmittel Z1 sortiert nach der in den Auftragszeilen AZ für die Waren des ersten Auftragsteils AT1 angegebenen Stückzahl n, und zwar von niedrigen zu aufsteigenden Stückzahlen n hin, und

- das Entnehmen mehrerer Waren des zweiten Auftragsteils AT2 von zumindest einem zweiten Quell-Ladehilfsmittel Q2 und das Abgeben dieser Waren in oder auf zumindest ein erstes oder zweites Ziel-Ladehilfsmittel Z1, Z2 sortiert nach der in den Auftragszeilen AZ für die Waren des zweiten Auftragsteils AT2 angegebenen Stückzahl n, und zwar von hohen zu absteigenden Stückzahlen n hin.

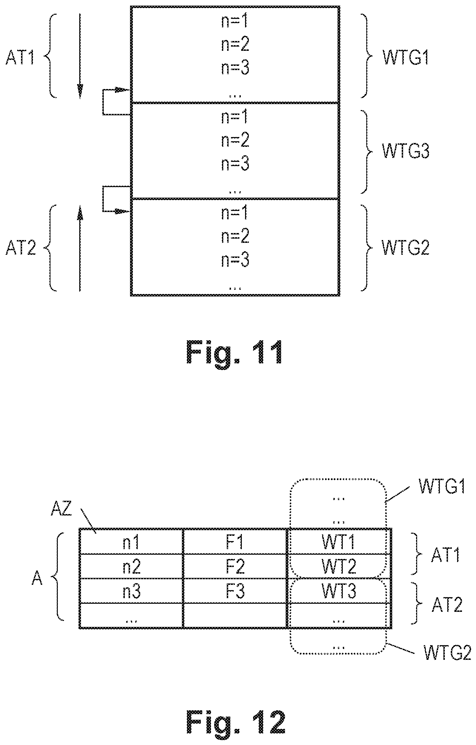

Fig. 11 zeigt eine besondere Ausführungsvariante, welche ähnlich zu der im Rahmen der Fig. 10 offenbarten Ausführungsvariante ist und ebenfalls optimiert im Hinblick auf die in den Auftragszeilen AZ enthaltene Stückzahl n abläuft. Im Unterschied dazu, wird bei dieser Variante aber auch die dritte Warentypengruppe WTG3 in das Verfahren mit einbezogen. Konkret erfolgt die Zuteilung mehrerer Waren der dritten Warentypengruppe WTG3 zum ersten Auftragsteil AT1 oder zum zweiten Auftragsteil AT2 sortiert nach der in den Auftragszeilen AZ für diese Waren angegebenen Stückzahl n, wobei die Zuteilung von Waren der dritten Warentypengruppe WTG3 zum ersten Auftragsteil AT1 von niedrigen zu aufsteigenden Stückzahlen n hin erfolgt und die Zuteilung von Waren der dritten Warentypengruppe WTG3 zum zweiten Auftragsteil AT2 von hohen zu absteigenden Stückzahlen n hin erfolgt. Bei dieser Variante macht man sich wiederum den Umstand zunutze, dass menschliche Kommissionierer beim Kommissioniervorgang häufig mehrere Waren gleichzeitig manipulieren, wohingegen Roboter häufig nur eine oder nur einige wenige Waren gleichzeitig manipulieren können. Dazu werden dem ersten Auftragsteil AT1 bevorzugt Auftragszeilen AT der dritten Warentypengruppe WTG3 mit vergleichsweise geringer Stückzahl n pro Auftragszeile AZ zugeordnet, welche für die automatische Kommissionierung vorteilhaft sind (siehe den von der dritten Warentypengruppe WTG3 zum ersten Auftragsteil AT1 weisenden Pfeil), wohingegen dem zweiten Auftragsteil AT2 bevorzugt Auftragszeilen AZ der dritten Warentypengruppe WTG3 mit vergleichsweise hoher Stückzahl n pro Auftragszeile AZ zugeordnet werden, welche für die manuelle Kommissionierung vorteilhaft sind (siehe den von der dritten Warentypengruppe WTG3 zum zweiten Auftragsteil AT2 weisenden Pfeil). Durch die vorgeschlagenen Maßnahmen kann wiederum eine vorteilhafte Betriebsweise der ersten automatischen Kommissionierstationen KA1 und ersten manuellen Kommissionierstationen KM1 erreicht werden, insbesondere wenn die Kommissionierung des zweiten Auftragsteils AT2 schneller erfolgt als die Kommissionierung des ersten Auftragsteils AT1 oder umgekehrt. Insgesamt kann auf diese Weise die Zeit, die für die Abarbeitung eines Kommissionierauftrags A nötig ist, wiederum kurz gehalten werden.

Fig. 12 zeigt eine Datenstruktur der Auftragszeilen AZ, welche der in Fig. 1 dargestellten Datenstruktur sehr ähnlich ist. Im Unterschied dazu, ist einer Warentype WT1..WT3 aber auch eine Fehlerrate F zugeordnet. Konkret ist für die Warentype WT1 eine Fehlerrate F1, für die Warentype WT2 eine Fehlerrate F2 und für die Warentype WT3 eine Fehlerrate F3 gespeichert. Durch die vorgeschlagenen Maßnahmen kann die Planung des Verfahrens zum Kommissionieren von Waren noch differenzierter erfolgen. Insbesondere können Auftragszeilen AZ vorteilhaft anhand ihrer Fehlerrate F, F1..F3 sortiert werden.

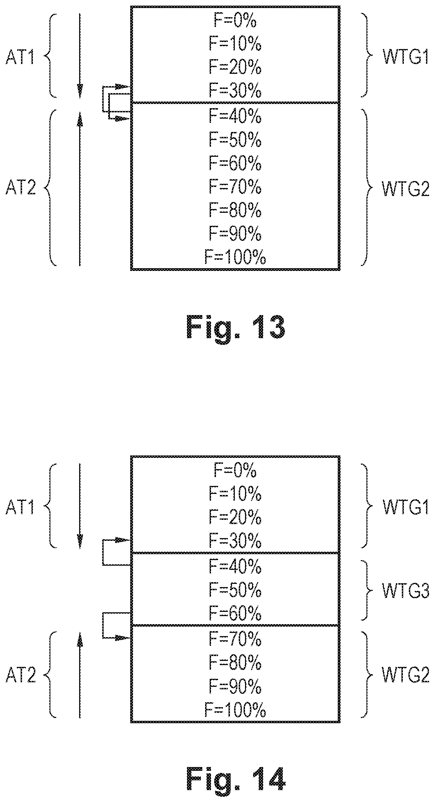

Fig. 13 zeigt eine besondere Ausführungsvariante, welche ähnlich zu der im Rahmen der Fig. 10 offenbarten Ausführungsvariante ist, jedoch optimiert im Hinblick auf die in den Auftragszeilen AZ enthaltene Fehlerrate F abläuft (siehe hierzu auch Fig. 12). Konkret sind in der Fig. 13 die beiden Auftragsteile AT1, AT2 eines Auftrags A sortiert nach den in den Auftragszeilen AZ jeweils enthaltenen Fehlerraten F dargestellt (siehe auch Fig. 7). Das Bereitstellen mehrerer Waren des ersten Auftragsteils AT1 an der ersten automatischen Kommissionierstation KA1 (und das Auslagern und das Transportieren der genannten Waren) erfolgt bei dieser Ausführungsvariante sortiert nach der in den Auftragszeilen AZ für die Waren des ersten Auftragsteils AT1 angegebenen Fehlerrate F oder sortiert nach einem Parameter, der aus der besagten Fehlerrate F und der in den Auftragszeilen AZ für die Waren des ersten Auftragsteils AT1 angegebenen Stückzahl n, n1..n3 abgeleitet ist (vergleiche Fig. 10). Im Detail erfolgt das Bereitstellen (und das Auslagern und das Transportieren) der Waren des ersten Auftragsteils AT1 bei einer Sortierung nach der Fehlerrate F von niedrigen zu aufsteigenden Fehlerraten F hin oder bei einer Sortierung nach dem genannten Parameter von niedrigen zu aufsteigenden Parametern hin, so wie das in der Fig. 13 durch den nach unten weisenden Pfeil symbolisiert ist. Weiterhin erfolgt das Bereitstellen mehrerer Waren des zweiten Auftragsteils AT2 an der ersten manuellen Kommissionierstation KM1 (und das Auslagern und das Transportieren der genannten Waren) sortiert nach der in den Auftragszeilen AZ für die Waren des zweiten Auftragsteils AT2 angegebenen Fehlerrate F oder sortiert nach einem Parameter, der aus der besagten Fehlerrate F und der in den Auftragszeilen AZ für die Waren des zweiten Auftragsteils AT2 angegebenen Stückzahl n, n1..n3 abgeleitet ist. Konkret erfolgt das Bereitstellen (und das Auslagern und das Transportieren) der Waren des zweiten Auftragsteils AT2 bei einer Sortierung nach der Fehlerrate F von hohen zu absteigenden Fehlerraten F hin oder bei einer Sortierung nach dem Parameter von hohen zu absteigenden Parametern hin, so wie das in der Fig. 13 durch den nach oben weisenden Pfeil symbolisiert ist.

Durch die vorgeschlagenen Maßnahmen wird wieder dann eine vorteilhafte Betriebsweise des Lager- und Kommissioniersystems erreicht, wenn es zu einer Umleitung der Warenströme von einer ersten automatischen Kommissionierstation KA1 zu einer ersten manuellen Kommissionierstation KM1 kommt. Das heißt, stellt sich heraus, dass die Kommissionierung des zweiten Auftragsteils AT2 schneller erfolgt als die Kommissionierung des ersten Auftragsteils AT1, werden dem zweiten Auftragsteil AT2 Waren des ersten Auftragsteils AT1 zugeteilt und zu einer ersten manuellen Kommissionierstation KM1 geleitet (siehe den vom ersten Auftragsteil AT1 zum zweiten Auftragsteil AT2 weisenden Pfeil in der Fig. 13), dann ist die Wahrscheinlichkeit hoch, dass an der ersten manuellen Kommissionierstation KM1 Auftragszeilen AZ mit höherer Fehlerrate F zu bearbeiten sind, welche für die automatische Kommissionierung nachteilig sind. Auftragszeilen AZ mit geringer Fehlerrate F wurden dagegen bereits vorteilhaft an der ersten automatischen Kommissionierstation KA1 abgearbeitet. Denkbar ist natürlich auch der umgekehrte Fall, nämlich dass dem ersten Auftragsteil AT1 Waren des zweiten Auftragsteils AT2 zugeteilt und zu einer ersten automatischen Kommissionierstation KA1 geleitet werden (siehe den vom zweiten Auftragsteil AT2 zum ersten Auftragsteil AT1 weisenden Pfeil in der Fig. 13). Insgesamt kann auf diese Weise die Zeit, die für die Abarbeitung eines Kommissionierauftrags A nötig ist, bei nur geringer Fehlerrate F kurz gehalten werden.

Der Parameter, der aus der besagten Fehlerrate F und der in den Auftragszeilen AZ für die Waren gespeicherten Stückzahl n, n1..n3 abgeleitet ist, kann beispielsweise das Produkt der Stückzahl n, n1..n3 und der Fehlerrate F sein oder die (gewichtete) Summe aus Stückzahl n, n1..n3 und Fehlerrate F, beispielsweise:

$$\text{Fehlerrate} \times \text{Stückzahl}$$

oder

$$0{,}5 \times \text{Fehlerrate} + 1{,}0 \times \text{Stückzahl}$$

Weitere Sortierparameter, die in die genannte gewichtete Summe einfließen können, sind das (normierte) Gewicht, die (normierte) Größe und/oder das (normierte) Volumen einer Ware. Der Sortierung kann zum Beispiel die gewichtete Summe $1{,}0 \times$ Fehlerrate $+ 0{,}4 \times$ Stückzahl $+ 0{,}2 \times$ normiertes Volumen $+ 0{,}2 \times$ normiertes Gewicht zugrunde gelegt werden.

Denkbar ist auch wieder, dass die Auftragszeilen AZ in nachfolgenden (tieferen) Sortierebenen noch nach einem anderen Sortierkriterium als nach der Fehlerrate F oder dem genannten, abgeleiteten Parameter sortiert werden, beispielsweise nach dem Gewicht einer Ware oder nach der Größe oder dem Volumen einer Ware. Weisen mehrere Auftragszeilen AZ dieselbe Fehlerrate F auf, so können diese zum Beispiel nach dem Gewicht einer Ware sortiert werden, mehrere Waren mit derselben Fehlerrate F und demselben Gewicht nach dem Volumen einer Ware. Das heißt, die Sortierung erfolgt nach dem Schema Fehlerrate → Gewicht → Volumen. Selbstverständlich ist auch eine andere Aufteilung der Sortierebenen möglich, beispielsweise Fehlerrate → Volumen → Gewicht. Durch die vorgeschlagenen Maßnahmen werden schwere, große und/oder voluminöse Waren wiederum zuerst im Ziel-Ladehilfsmittel Z1, Z2 abgelegt und befinden sich im Ziel-Ladehilfsmittel Z1, Z2 daher weiter unten, was für die Beförderung des Ziel-Ladehilfsmittels Z1, Z2 von Vorteil ist.

Die Sortierung kann sich generell auf einen (einzelnen) Auftrag A beziehen oder auf eine Gruppe von Aufträgen A. Bezieht sich die Sortierung auf eine Gruppe von Aufträgen A, so kann das sortierte Bereitstellen über Auftragsgrenzen hinweg beziehungsweise ohne Berücksichtigung von Auftragsgrenzen erfolgen. Das heißt, an einer ersten automatischen oder manuellen Kommissionierstation KA1, KM1 werden die Aufträge A nicht sequentiell, sondern quasi-parallel entsprechend der Sortierung der Auftragszeilen AZ erledigt.

Bei der obigen Variante wurde auf das Bereitstellen eines Quell-Ladehilfsmittels Q1, Q2 an einer ersten automatischen oder manuellen Kommissionierstation KA1, KM1 Bezug genommen. Dies ist aber nicht die einzige Möglichkeit. Denkbar ist vielmehr auch, dass auf das Abgeben der in einem Quell-Ladehilfsmittel Q1, Q2 enthaltenen Waren an sich abgestellt wird, insbesondere wenn ein Quell-Ladehilfsmittel Q1, Q2 Waren unterschiedlicher Warentypen WT1..WT3 enthält. Bei dieser Variante erfolgt das Entnehmen mehrerer Waren des ersten Auftragsteils AT1 von zumindest einem ersten Quell-Ladehilfsmittel Q1 und das Abgeben dieser Waren in oder auf zumindest ein erstes Ziel-Ladehilfsmittel Z1 sortiert nach der in den Auftragszeilen AZ für die Waren des ersten Auftragsteils AT1 angegebenen Fehlerrate F oder sortiert nach einem Parameter, der aus der besagten Fehlerrate F und der in den Auftragszeilen AZ für die Waren des ersten Auftragsteils AT1 angegebenen Stückzahl n, n1..n3 abgeleitet ist. Konkret erfolgt das Entnehmen und Abgeben der Waren (beziehungsweise das Umladen) bei einer Sortierung nach der Fehlerrate F von niedrigen zu aufsteigenden Fehlerraten F hin oder bei einer Sortierung nach dem genannten Parameter von niedrigen zu aufsteigenden Parametern hin. Weiterhin erfolgt das Entnehmen mehrerer Waren des zweiten Auftragsteils AT2 von zumindest einem zweiten Quell-Ladehilfsmittel Q2 und das Abgeben dieser Waren in oder auf zumindest ein erstes oder zweites Ziel-Ladehilfsmittel Z1, Z2 sortiert nach der in den Auftragszeilen AZ für die Waren des zweiten Auftragsteils AT2 angegebenen Fehlerrate F oder sortiert nach einem Parameter, der aus der besagten Fehlerrate F und der in den Auftragszeilen AZ für die Waren des zweiten Auftragsteils AT2 angegebenen Stückzahl n, n1..n3 abgeleitet ist. Konkret erfolgt das Entnehmen und Abgeben der Waren (beziehungsweise das Umladen) bei einer Sortierung nach der Fehlerrate F von hohen zu absteigenden Fehlerraten F hin oder bei einer Sortierung nach dem Parameter von hohen zu absteigenden Parametern hin (siehe hierzu wiederum die Fig. 13). Diese Ausführungsvariante ist wiederum insbesondere dann von Relevanz, wenn ein Quell-Ladehilfsmittel Q1, Q2 Waren unterschiedlicher Warentypen W1T..WT3 enthält.

Fig. 14 zeigt eine besondere Ausführungsvariante, welche ähnlich zu der im Rahmen der Fig. 13 offenbarten Ausführungsvariante ist und ebenfalls optimiert im Hinblick auf die in den Auftragszeilen AZ enthaltene Fehlerrate F oder einen davon abgeleiteten Parameter abläuft. Im Unterschied dazu, wird bei dieser Variante aber auch die dritte Warentypengruppe WTG3 in das Verfahren mit einbezogen. Dabei erfolgt die Zuteilung mehrerer Waren der dritten Warentypengruppe WTG3 zum ersten Auftragsteil AT1 oder zum zweiten Auftragsteil AT2 sortiert nach der in den Auftragszeilen AZ für diese Waren angegebenen Fehlerrate F oder sortiert nach einem Parameter, der aus der besagten Fehlerrate F und der in den Auftragszeilen AZ für diese Waren angegebenen Stückzahl n, n1..n3 abgeleitet ist. Im Detail erfolgt die Zuteilung von Waren der dritten Warentypengruppe WTG3 zum ersten Auftragsteil AT1 (siehe den von der dritten Warentypengruppe WTG3 zum ersten Auftragsteil AT1 führenden Pfeil in der Fig. 14) bei einer Sortierung nach der Fehlerrate F von niedrigen zu aufsteigenden Fehlerraten F hin oder bei einer Sortierung nach dem genannten Parameter von niedrigen zu aufsteigenden Parametern hin (siehe den nach unten weisenden Pfeil in der Fig. 14). Die Zuteilung von Waren der dritten Warentypengruppe WTG3 zum zweiten Auftragsteil AT2 (siehe den von der dritten Warentypengruppe WTG3 zum zweiten Auftragsteil AT2 führenden Pfeil in der Fig. 14) erfolgt dagegen bei einer Sortierung nach der Fehlerrate F von hohen zu absteigenden Fehlerraten F hin oder bei einer Sortierung nach dem genannten Parameter von hohen zu absteigenden Parametern hin (siehe den nach oben weisenden Pfeil in der Fig. 14).

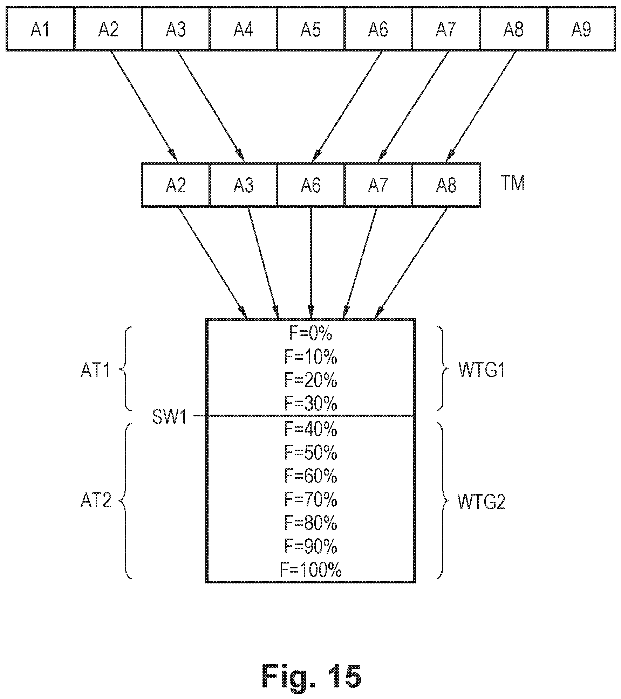

Fig. 15 zeigt nun eine Ausführungsvariante, bei der eine Teilmenge TM an auszuführenden Aufträgen A anhand einer Kapazität einer Gruppe von ersten automatischen oder manuellen Kommissionierstationen KA1, KM1 ermittelt wird, welche für die Ausführung dieser Teilmenge TM an auszuführenden Aufträgen A in einem vorgebbaren Zeitraum verfügbar ist. Bei dieser Variante wird also nach einer passenden Teilmenge TM an Aufträgen A gesucht, die aus der Gesamtheit der anstehenden und abzuarbeitenden Aufträge A ausgewählt wird und in einem vorgebbaren Zeitraum voraussichtlich oder im Wesentlichen von der Gruppe von ersten automatischen oder manuellen Kommissionierstationen KA1, KM1 abgearbeitet werden kann.

Beispielsweise werden für die Bestimmung der Teilmenge TM in einem ersten Schritt mehrere Aufträge A zum Kommissionieren von Waren erfasst und die für diese Aufträge A benötigten Waren bestimmt. In einem weiteren Schritt wird eine für die Ausführung dieser Aufträge A erste benötigte Kapazität der ersten automatischen Kommissionierstationen KA1 der Gruppe für die Kommissionierung der Waren der ersten Warentypengruppe WTG1 (gegebenenfalls inklusive der voraussichtlich automatisch zu kommissionierenden Waren der dritten Warentypengruppe WTG3 mit einer Fehlerrate F kleiner gleich dem dritten Schwellwert SW3) und eine in diesem Zeitraum zweite benötigte Kapazität der ersten manuellen Kommissionierstationen KM1 der Gruppe für die Kommissionierung der Waren der zweiten Warentypengruppe WTG2 (gegebenenfalls inklusive der voraussichtlich manuell zu kommissionierenden Waren der dritten Warentypengruppe WTG3 mit einer Fehlerrate F grö-ßer dem dritten Schwellwert SW3) für verschiedene Teilmengen TM der genannten Aufträge A berechnet. Insbesondere geschieht dies bei vorgegebenem ersten Schwellwert SW1 oder bei vorgegebenem dritten Schwellwert SW3. Darüber hinaus wird eine in einem vorgebbaren Zeitraum erste verfügbare Kapazität der ersten automatischen Kommissionierstationen KA1 der Gruppe und eine in diesem Zeitraum zweite verfügbare Kapazität der ersten manuellen Kommissionierstationen KM1 der Gruppe ermittelt. Schließlich wird jene Teilmenge TM an genannten Aufträgen A für eine Ausführung des Kommissionierverfahrens im gewählten Zeitraum ausgewählt, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird.

In der Fig. 15 sind dazu beispielsweise die Aufträge A1..A9 einem vorgebbaren Zeitraum abzuarbeiten. Durch Ausführung des oben genannten Verfahrens stellt sich heraus, dass der Kapazitätsbedarf für Teilmenge TM, welche die Aufträge A2, A3, A6, A7 und A8 umfasst, am besten zu der verfügbaren Kapazität passt. In Folge können die Aufträge A2, A3, A6, A7 und A8 der Teilmenge TM ausgeführt werden.

Denkbar wäre aber auch, dass für die Teilmenge TM in einem weiteren Schritt eine passende Aufteilung der Warentypengruppen WTG1 und WTG2 und damit eine passende Aufteilung der Auftragsteile AT1 und AT2 ermittelt wird. Mit anderen Worten wird dazu der erste Schwellwert SW1 (oder auch der dritte Schwellwert SW3) anhand einer Kapazität einer Gruppe von ersten automatischen oder manuellen Kommissionierstationen KA1, KM1 ermittelt, für die Ausführung mehrerer Aufträge A, A1..A9 in einem vorgebbaren Zeitraum verfügbar ist.

Vorteilhaft kann ein Ungleichgewicht der (prozentuellen) Auslastung der ersten automatischen Kommissionierstationen KA1 und der ersten manuellen Kommissionierstationen KM1 der Gruppe vermieden werden, insbesondere wenn der Kapazitätsbedarf der ermittelte Teilmenge TM nicht hundertprozentig zur verfügbaren Kapazität passt.

Beispielsweise werden für die Bestimmung des ersten Schwellwerts SW1 in einem ersten Schritt mehrere Aufträge A, A1..A9 zum Kommissionieren von Waren erfasst und die für diese Aufträge A, A1..A9 benötigten Waren bestimmt (und vorteilhaft anhand ihrer Fehlerrate F sortiert). In einem weiteren Schritt wird eine für die Ausführung dieser Aufträge A, A1..A9 in einem vorgebbaren Zeitraum erste benötigte Kapazität der ersten automatischen Kommissionierstationen KA1 der Gruppe für die Kommissionierung der Waren der ersten Warentypengruppe WTG1 und eine in diesem Zeitraum zweite benötigte Kapazität der ersten manuellen Kommissionierstationen KM1 der Gruppe für die Kommissionierung der Waren der zweiten Warentypengruppe WTG2 für verschiedene erste Schwellwerte SW1 (oder für verschiedene dritte Schwellwerte SW3) berechnet. Darüber hinaus wird eine in diesem Zeitraum erste verfügbare Kapazität der ersten automatischen Kommissionierstationen KA1 der Gruppe und eine in diesem Zeitraum zweite verfügbare Kapazität der ersten manuellen Kommissionierstationen KM1 der Gruppe ermittelt. Schließlich wird jener erster Schwellwert SW1 für die Ausführung der genannten Aufträge A, A1..A9 ausgewählt, für welchen die geringste Abweichung zwischen der ersten benötigten Kapazität und der ersten verfügbaren Kapazität sowie zwischen der zweiten benötigten Kapazität und der zweiten verfügbaren Kapazität ermittelt wird.

Für die Ermittlung der geringsten Abweichung zwischen der ersten benötigten Kapazität und der ersten verfügbaren Kapazität sowie zwischen der zweiten benötigten Kapazität und der zweiten verfügbaren Kapazität kann in beiden Fällen (also sowohl bei der Bestimmung der Teilmenge TM als auch bei der Bestimmung des ersten Schwellwerts SW1 oder des dritten Schwellwerts SW3) die Summe der Abweichung zwischen der ersten verfügbaren Kapazität und der ersten benötigten Kapazität und der Abweichung zwischen der zweiten verfügbaren Kapazität und der zweiten benötigten Kapazität berechnet werden. Die geringste Abweichung ist dann die kleinste der genannten und für verschiedene erste Schwellwerte SW1 (oder für verschiedene dritte Schwellwerte SW3) berechnete Summen.

Geringste Abweichung = Minimum(erste verfügbare Kapazität - erste benötigte Kapazität +

zweite verfügbare Kapazität - zweite benötigte Kapazität)

Denkbar ist auch, dass das Produkt aus der Abweichung zwischen der ersten verfügbaren Kapazität und der ersten benötigten Kapazität und der Abweichung zwischen der zweiten verfügbaren Kapazität und der zweiten benötigten Kapazität berechnet wird. Die geringste Abweichung ist dann das kleinste der genannten und für verschiedene erste Schwellwerte SW1 (oder für verschiedene dritte Schwellwerte SW3) berechneten Produkte.

Geringste Abweichung = Minimum((erste verfügbare Kapazität - erste benötigte Kapazität)

x (zweite verfügbare Kapazität - zweite benötigte Kapazität))

In der Fig. 15 ist nur jener Fall dargestellt, bei der eine erste Warentypengruppe WTG1 und eine zweite Warentypengruppe WTG2 vorgesehen sind. Der anhand der Fig. 15 vorgestellte Ablauf ist aber auch dann sinngemäß anwendbar, wenn für das Kommissionierverfahren zusätzlich eine dritte Warentypengruppe WTG3 vorgesehen wird. Dabei wird der erste Schwellwert SW1 in einem gewählten ersten Reserve-Abstand unterhalb des dritten Schwellwerts SW3 und der zweite Schwellwert SW2 in einem gewählten zweiten Reserve-Abstand oberhalb des dritten Schwellwerts SW3 gesetzt.

Der erste Reserve-Abstand legt dabei die Größe des Teils der dritten Warentypengruppe WTG3 fest, welcher die voraussichtlich automatisch zu kommissionierenden Waren umfasst, und damit die Reserve, um auf ungeplante und unerwartete Abweichungen der real ablaufenden Ausführung der genannten Aufträge an den ersten automatischen Kommissionierstationen KA1 von der Berechnung reagieren zu können.

Der zweite Reserve-Abstand legt die Größe des Teils der dritten Warentypengruppe WTG3 fest, welcher die voraussichtlich manuell zu kommissionierenden Waren umfasst, und damit die Reserve, um auf ungeplante und unerwartete Abweichungen der real ablaufenden Ausführung der genannten Aufträge an den ersten manuellen Kommissionierstationen KM1 von der Berechnung reagieren zu können.

Denkbar ist generell, dass eine Teilmenge TM der genannten Aufträge A, A1..A9 durch zufällige Auswahl von einigen der mehreren Aufträge A, A1..A9 bestimmt wird. Auf diese Weise soll vermieden werden, dass für die Teilmengen TM nur Aufträge A, A1..A9 mit hohem Anteil an automatisch zu kommissionierenden Waren oder nur Aufträge A, A1..A9 mit hohem Anteil an manuell zu kommissionierenden Waren ausgewählt werden und es dann zu einer Schieflast in dem Lager- und Kommissioniersystem kommen könnte.

Für die Bestimmung einer Teilmenge TM ist auch denkbar, dass

- ein Verfügbarkeits-Anteil der ersten verfügbaren Kapazität durch Division der ersten verfügbaren Kapazität durch die Summe aus der ersten und der zweiten verfügbaren Kapazität berechnet wird,
- für jeden der mehreren Aufträge A, A1..A9 ein Bedarfs-Anteil für die erste benötigte Kapazität durch Division der ersten benötigten Kapazität durch die Summe aus der ersten und der zweiten benötigten Kapazität berechnet wird und
- der Anteil an Aufträgen A, A1..A9 mit einem Bedarfs-Anteil über dem Verfügbarkeits-Anteil maximal um 10% vom Anteil an Aufträgen A, A1..A9 mit einem Bedarfs-Anteil unter dem Verfügbarkeits-Anteil abweicht.

Auf diese Weise soll eine möglichst passende Auswahl an Aufträgen A, A1..A9 erreicht werden. Insbesondere kann auf diese Weise eine Ungleichheit zwischen der ersten verfügbaren Kapazität der ersten automatischen Kommissionierstationen KA1 und der zweiten verfügbaren Kapazität der ersten manuellen Kommissionierstationen KM1 gut berücksichtigt werden.

Denkbar ist weiterhin, dass die genannten mehreren Aufträge A, A1..A9 anhand eines Sortierparameters sortiert werden und bei der Bestimmung einer Teilmenge TM eine Gleichverteilung hinsichtlich des Sortierparameters angestrebt wird, wobei als Sortierparameter

- eine in einem Auftrag vorhandene Stückzahl n, n1..n3 an Waren der ersten Warentypengruppe WTG1 (gegebenenfalls inklusive der voraussichtlich automatisch zu kommissionierenden Waren der dritten Warentypengruppe WTG3 mit einer Fehlerrate F kleiner gleich dem dritten Schwellwert SW3) vorgesehen ist oder
- ein in einem Auftrag vorhandener relativer Anteil an Waren der ersten Warentypengruppe WTG1 (gegebenenfalls inklusive der voraussichtlich automatisch zu kommissionierenden Waren der dritten Warentypengruppe WTG3 mit einer Fehlerrate F kleiner gleich dem dritten Schwellwert SW3) vorgesehen ist, welcher durch Division der Stückzahl n, n1..n3 an Waren er ersten Warentypengruppe WTG1 eines Auftrags A, A1..A9 durch die Stückzahl n, n1..n3 aller Waren dieses Auftrags A, A1..A9 berechnet wird.

Auf diese Weise soll wiederum vermieden werden, dass für die Teilmengen TM nur Aufträge A, A1..A9 mit hoher Stückzahl n, n1..n3 oder nur Aufträge A, A1..A9 mit niedriger Stückzahl n, n1..n3 ausgewählt werden und es dann zu einer ungünstigen Auslastung im Lager- und Kommissioniersystem kommen könnte.

Schließlich kann auch vorgesehen sein, dass für eine Teilmenge TM Aufträge A, A1..A9 mit höherer Priorität bevorzugt ausgewählt werden. Auf diese Weise soll verhindert werden, dass Aufträge A, A1..A9, die schnell ausgeführt werden müssen, aufgrund von anderen Auswahlkriterien erst verspätet zur Kommissionierung gelangen.

Generell ist auch festzuhalten, dass die Bestimmung einer Teilmenge TM und die Berechnung eines ersten Schwellwerts SW1 (und gegebenenfalls eines zweiten Schwellwerts SW2) nicht zwingend in Kombination ausgeführt werden müssen, so wie dies in der Fig. 15 dargestellt ist. Vielmehr ist es möglich, eine Teilmenge TM ohne nachfolgende Berechnung eines Schwellwerts SW1, SW2 zu bestimmen oder einen Schwellwert SW1, SW2 ohne vorangehende Bestimmung einer Teilmenge TM zu berechnen.

In den vorangegangenen Beispielen wurde ein Warensortiment in eine erste Warentypengruppe WTG1, deren Warentypen WT1, WT2 automatisch kommissionierbar sind und daher einem ersten Auftragteil AT1 zugeordnet werden, und in eine zweite Warentypengruppe WTG2, deren Warentypen WT3 manuell kommissionierbar sind und daher einem zweiten Auftragteil AT2 zugeordnet werden, eingeteilt. Gegebenenfalls war auch eine dritte Warentypengruppe WTG3 vorgesehen, deren Warentypen WT1..WT3 sowohl automatisch als auch manuell kommissionierbar sind und daher wahlweise dem ersten Auftragteil AT1 oder dem zweiten Auftragteil AT2 zugeordnet werden.

Die in den Figuren 1 bis 15 beschriebenen Abläufe sind jedoch nicht auf die oben genannte Konstellation beschränkt, sondern sie kann auch rekursiv auf eine weitere Unterteilung der ersten Warentypengruppe WTG1 beziehungsweise des ersten Auftragsteils AT1 angewandt werden.

Dazu wird angenommen, dass die erste Warentypengruppe WTG1 eine erste Warentypenuntergruppe WTUG1 umfasst, die Warentypen WT1..WT3 enthält, die mit einem Greifer einer ersten Art automatisch handhabbar sind, und eine zweite Warentypenuntergruppe WTUG2 umfasst, die Warentypen WT1..WT3 enthält, die nicht oder nur eingeschränkt mit dem Greifer der ersten Art automatisch, jedoch mit einem Greifer einer anderen, zweiten Art automatisch handhabbar sind. Die Grenze zwischen der ersten Warentypenuntergruppe WTUG1 und der zweiten Warentypenuntergruppe WTUG2 wird dabei durch einen ersten Untergruppen-Schwellwert SWU1 bestimmt.

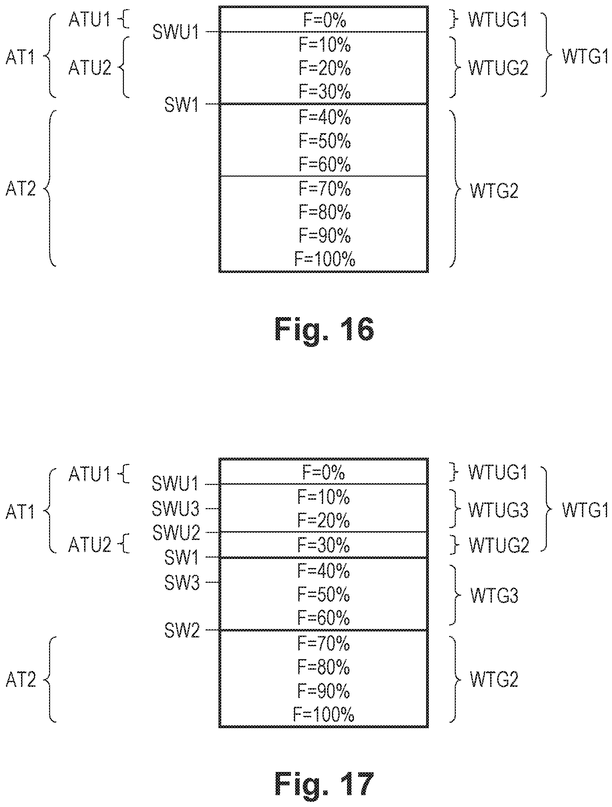

Bei dieser Ausführungsvariante wird die erste Warentypengruppe WTG1 und der erste Auftragsteil AT1 (also die Warentypen WT1, WT2 oder Waren, die automatisch handhabbar sind) somit in Warentypenuntergruppen WTUG1..WTUG3 und Auftrags-Subteile ATU1, ATU2 unterteilt, so wie das in der Fig. 16 in Anlehnung an die Fig. 13 dargestellt ist. Beispielsweise kann die erste automatische Kommissionierstation KA1 mit dem Greifer der ersten Art und dem Greifer der zweiten Art ausgestattet sein und je nach Bedarf zwischen den beiden Greifern wechseln. Der Greifer der ersten Art kann als Sauggreifer ausgebildet sein und der Greifer der zweiten Art als mechanischer Greifer (z.B. als Greifzange oder als Roboterhand).

Denkbar ist weiterhin, dass eine dritte Warentypenuntergruppe WTUG3 vorgesehen wird, deren Warentypen WT1..WT3 sowohl mit dem Greifer der ersten Art als auch mit dem Greifer der zweiten Art automatisch handhabbar sind. Die Waren der dritten Warentypenuntergruppe WTUG3 können in einem Auftrag A, A1..A9 in Folge wahlweise dem ersten Auftrags-Subteil ATU1 oder dem zweiten Auftrags-Subteil ATU2 zugeordnet werden. Beide Auftrags-Subteile ATU1, ATU2 gehören dabei wiederum dem ersten Auftragsteil AT1 an. Die Grenze zwischen der ersten Warentypenuntergruppe WTUG1 und der dritten Warentypenuntergruppe WTUG3 wird dabei durch den ersten Untergruppen-Schwellwert SWU1 bestimmt, die Grenze zwischen der zweiten Warentypenuntergruppe WTUG2 und der dritten Warentypenuntergruppe WTUG3 durch den zweiten Untergruppen-Schwellwert SWU2. Die dritte Warentypenuntergruppe WTUG3 selbst kann bei einem dritten Untergruppen-Schwellwert SWU3 in voraussichtlich mit dem Greifer der ersten Art automatisch kommissionierte Waren und in voraussichtlich mit dem Greifer der zweiten Art automatisch kommissionierte Waren unterteilt werden, so wie das in der Fig. 17 in Anlehnung an die Fig. 14 dargestellt ist.

Sowohl in der Fig. 16, als auch in der Fig. 17 sind die Warentypen WT1..WT3, so wie in den Fig. 13 und 14 entsprechend ihrer Fehlerrate F sortiert. Diese Fehlerrate F bezieht sich nun aber auf die automatische Handhabung der Waren mit dem Greifer der ersten Art.

Zusammenfassend werden bei der genannten rekursiven Anwendung der in Fig. 1 bis 15 offenbarten Verfahren die folgenden Ersetzungen vorgenommen:

- der erste Auftrags-Subteil ATU1 tritt an die Stelle des ersten Auftragsteils AT1,
- der zweite Auftrags-Subteil ATU2 tritt an die Stelle des zweiten Auftragsteils AT2,
- die erste Warentypenuntergruppe WTUG1 tritt an die Stelle der ersten Warentypengruppe WTG1,
- die zweite Warentypenuntergruppe WTUG2 tritt an die Stelle der zweiten Warentypengruppe WTG2,
- die dritte Warentypenuntergruppe WTUG3 tritt an die Stelle der dritten Warentypengruppe WTG3,
- ein erster Untergruppen-Schwellwert SWU1 tritt an die Stelle des ersten Schwellwerts SW1,
- ein zweiter Untergruppen-Schwellwert SWU2 tritt an die Stelle des zweiten Schwellwerts SW2,
- ein dritter Untergruppen-Schwellwert SWU3 tritt an die Stelle des dritten Schwellwerts SW3 und
- eine Fehlerrate F, F1..F3 für die Handhabung von Waren mit dem Greifer der ersten Art tritt an die Stelle der Fehlerrate F, F1..F3 für die automatische Handhabung von Waren.

Generell ist denkbar, dass die erste automatische Kommissionierstation KA1 mit dem Greifer der ersten Art und dem Greifer der zweiten Art ausgestattet ist. Denkbar ist aber auch, dass die erste automatische Kommissionierstation KA1 eine erste automatische Kommissionier-Substation KAU1 und eine zweite automatische Kommissionier-Substation KAU2 umfasst, wobei die erste automatische Kommissionier-Substation KAU1 mit einem Greifer einer ersten Art und die zweite automatische Kommissionier-Substation KAU2 mit einem Greifer einer anderen, zweiten Art ausgestattet ist.

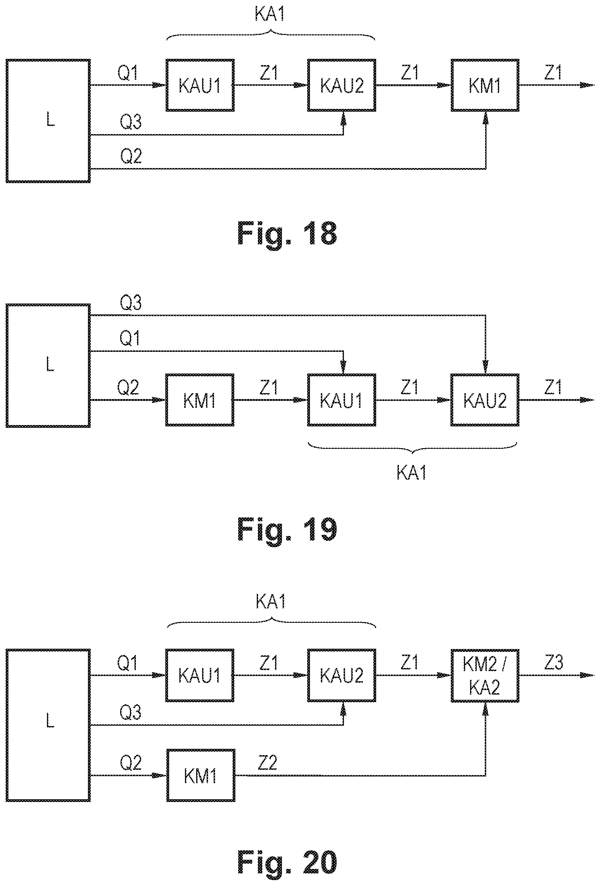

In Anlehnung an Fig. 2 zeigt die Fig. 18 dazu eine weitere Ausführungsvariante für den Ablauf beim Kommissionieren von Waren. Dabei wird ein erstes Quell-Ladehilfsmittel Q1 mit der Ware des ersten Auftrags-Subteils ATU1 aus dem Lagerbereich L des Lager- und Kommissioniersystems ausgelagert und zur ersten automatischen Kommissionier-Substation KAU1 transportiert und dort bereitgestellt. In Folge wird die Ware des ersten Auftrags-Subteils ATU1 an der ersten automatischen Kommissionier-Substation KAU1 mit dem Greifer der ersten Art automatisch vom ersten Quell-Ladehilfsmittel Q1 entnommen und in oder auf ein erstes Ziel-Ladehilfsmittel Z1 abgegeben. Dann wird das mit der Ware des ersten Auftrags-Subteils ATU1 beladene erste Ziel-Ladehilfsmittel Z1 zur zweiten automatischen Kommissionier-Substation KAU2 transportiert und dort bereitgestellt. Außerdem wird ein drittes Quell-Ladehilfsmittel Q3 mit der Ware des zweiten Auftrags-Subteils ATU2 aus dem Lagerbereich L des Lager- und Kommissioniersystems ausgelagert und zur zweiten automatischen Kommissionier-Substation KAU2 transportiert und dort bereitgestellt. In Folge wird die Ware des zweiten Auftrags-Subteils ATU2 an der zweiten automatischen Kommissionier-Substation KAU2 mit dem Greifer der zweiten Art automatisch vom dritten Quell-Ladehilfsmittel Q3 entnommen und in oder auf das erste Ziel-Ladehilfsmittel Z1 hinzu geladen. Dann wird das mit der Ware des ersten Auftrags-Subteils ATU1 und mit der Ware des zweiten Auftrags-Subteils ATU2 beladene erste Ziel-Ladehilfsmittel Z1 zur ersten manuellen Kommissionierstation KM1 transportiert und dort bereitgestellt. Außerdem wird ein zweites Quell-Ladehilfsmittel Q2 mit der zumindest einen Ware des zweiten Auftragsteils AT2 aus dem Lagerbereich L des Lager- und Kommissioniersystems ausgelagert und das zweite Quell-Ladehilfsmittel Q2 zu einer ersten manuellen Kommissionierstation KM1 transportiert und dort bereitgestellt. In Folge wird die Ware des zweiten Auftragsteils AT2 vom zweiten Quell-Ladehilfsmittel Q2 an der ersten manuellen Kommissionierstation KM1 manuell entnommen und in oder auf das erste Ziel-Ladehilfsmittel Z1 hinzu geladen. Das erste Ziel-Ladehilfsmittel Z1 kann abschließend in einen Versandbereich des Lager- und Kommissioniersystems transportiert und versendet werden. Alternativ kann der kommissionierte Inhalt des ersten Ziel-Ladehilfsmittels Z1 in ein (anderes) Versandladehilfsmittel umgeladen werden.

Zusammenfassend werden beim Kommissionieren von Waren nach der genannten Verfahrensvariante folgende Schritte ausgeführt:

a) Bereitstellen der Waren in oder auf Quell-Ladehilfsmitteln Q1, Q2 im Lagerbereich L,
b) Erfassen von Aufträgen A, A1..A9 zum Kommissionieren von Waren und Bestimmen der für diese Aufträge A, A1..A9 benötigten Waren, wobei wenigstens ein Auftrag A, A1..A9 der Aufträge A, A1..A9 mehrere Auftragszeilen AZ umfasst und wobei jede Auftragszeile AZ zumindest eine Ware nach ihrer Warentype WT1..WT3 und ihrer zu kommissionierenden Stückzahl n, n1..n3 spezifiziert,
c) Ermitteln der Zugehörigkeit der für die Bearbeitung des genannten Auftrags benötigten Waren zu Warentypengruppen WTG1..WTG3, welche jeweils mehrere Warentypen WT1..WT3 umfassen, wobei eine erste Warentypengruppe WTG1 Warentypen WT1..WT3 enthält, die automatisch handhabbar sind, und eine zweite Warentypengruppe WTG2 Warentypen WT1..WT3 enthält, die nicht oder nur eingeschränkt automatisch, jedoch manuell handhabbar sind und zusätzlich Ermitteln der Zugehörigkeit der für die Bearbeitung des genannten Auftrags benötigten Waren zur ersten Warentypenuntergruppe WTUG1 und zur zweiten Warentypenuntergruppe WTUG2,

d) Bestimmen eines ersten Auftragsteils AT1, dessen zumindest eine Ware der ersten Warentypengruppe WTG1 angehört und demnach automatisch handhabbar ist, und eines zweiten Auftragsteils AT2, dessen zumindest eine Ware der zweiten Warentypengruppe WTG2 angehört und demnach nicht oder nur eingeschränkt automatisch, jedoch manuell handhabbar ist, und zusätzlich Bestimmen eines ersten Auftrags-Subteils ATU1 des ersten Auftragsteils AT1, dessen zumindest eine Ware der ersten Warentypenuntergruppe WTUG1 angehört und demnach mit einem Greifer der ersten Art automatisch handhabbar ist, und eines zweiten Auftrags-Subteils ATU2 des ersten Auftragsteils AT1, dessen zumindest eine Ware der zweiten Warentypenuntergruppe WTUG2 angehört und demnach nicht oder nur eingeschränkt mit dem Greifer der ersten Art, jedoch mit dem Greifer der zweiten Art automatisch handhabbar ist,

e1) Auslagern eines ersten Quell-Ladehilfsmittels Q1 mit der zumindest einen Ware des ersten Auftrags-Subteils ATU1 aus dem Lagerbereich L des Lager- und Kommissioniersystems, Transportieren des ersten Quell-Ladehilfsmittels Q1 zur ersten automatischen Kommissionier-Substation KAU1, Bereitstellen des ersten Quell-Ladehilfsmittels Q1 an der ersten automatischen Kommissionier-Substation KAU1 und automatisches Entnehmen der zumindest eine Ware des ersten Auftrags-Subteils ATU1 an der ersten automatischen Kommissionier-Substation KAU1 mit dem Greifer der ersten Art vom ersten Quell-Ladehilfsmittel Q1,

e1) Auslagern eines dritten Quell-Ladehilfsmittels Q3 mit der zumindest einen Ware des zweiten Auftrags-Subteils ATU2 aus dem Lagerbereich L des Lager- und Kommissioniersystems, Transportieren des dritten Quell-Ladehilfsmittels Q3 zur zweiten automatischen Kommissionier-Substation KAU2, Bereitstellen des dritten Quell-Ladehilfsmittels Q3 an der zweiten automatischen Kommissionier-Substation KAU2 und automatisches Entnehmen der zumindest einen Ware des zweiten Auftrags-Subteils ATU2 an der zweiten automatischen Kommissionier-Substation KAU2 mit dem Greifer der zweiten Art vom dritten Quell-Ladehilfsmittel Q3,

f) Auslagern eines zweiten Quell-Ladehilfsmittels Q2 mit der zumindest einen Ware des zweiten Auftragsteils AT2 aus dem Lagerbereich L des Lager- und Kommissioniersystems, Transportieren des zweiten Quell-Ladehilfsmittels Q2 zu einer ersten manuellen Kommissionierstation KM1, Bereitstellen des zweiten Quell-Ladehilfsmittels Q2 an der ersten manuellen Kommissionierstation KM1 und manuelles Entnehmen der zumindest einen Ware des zweiten Auftragsteils AT2 vom zweiten Quell-Ladehilfsmittel Q2 an der ersten manuellen Kommissionierstation KM1 und

g) Abgeben der zumindest einen Ware des ersten Auftrags-Subteils ATU1, der zumindest einen Ware des zweiten Auftrags-Subteils ATU2 und der zumindest einen Ware des zweiten Auftragsteils AT2 in oder auf ein Ziel-Ladehilfsmittel Z1.

Für den Schritt a) ist ein Lagerbereich L des Lager- und Kommissioniersystems vorgesehen. Für die Ausführung der Schritte b) bis d) ist insbesondere ein Steuerungssystem des Lagerund Kommissioniersystems vorgesehen, und für die Schritte e1), e2 und f) ist eine Fördertechnik des Lager- und Kommissioniersystems vorgesehen. An der Ausführung der Schritte e1) bis g) sind zudem die erste automatische Kommissionier-Substation KAU1, die zweite automatische Kommissionier-Substation KAU2 und die erste manuelle Kommissionierstation KM1 beteiligt.

Zusammenfassend werden bei der genannten rekursiven Anwendung der in Fig. 1 bis 15 offenbarten Verfahren somit auch die folgenden Ersetzungen vorgenommen:

- die erste automatische Kommissionier-Substation KAU1 tritt an die Stelle der ersten automatischen Kommissionierstation KA1,
- die zweite automatische Kommissionier-Substation KAU2 tritt an die Stelle der ersten manuellen Kommissionierstation KM1,
- eine automatische Handhabung der Waren mit dem Greifer der ersten Art (an der ersten automatischen Kommissionier-Substation KAU1) tritt an die Stelle einer automatischen Handhabung der Waren an der ersten automatischen Kommissionierstation KA1,
- eine automatische Handhabung der Waren mit dem Greifer der zweiten Art (an der zweiten automatischen Kommissionier-Substation KAU2) tritt an die Stelle einer manuellen Handhabung der Waren an der ersten manuellen Kommissionierstation KM1 und
- das dritte Quell-Ladehilfsmittel Q3 tritt an die Stelle des zweiten Quell-Ladehilfsmittels Q2.

In der in Fig. 18 vorgesehenen Variante umfasst die erste automatische Kommissionierstation KA1 eine erste automatische Kommissionier-Substation KAU1 und eine zweite automatische Kommissionier-Substation KAU2. Denkbar ist aber auch, dass die erste automatische Kommissionierstation KA1 selbst mit dem Greifer der ersten Art und dem Greifer der zweiten Art ausgestattet ist. Trifft dies zu, so wird im Schritt e1) ein erstes Quell-Ladehilfsmittel Q1 mit der zumindest einen Ware des ersten Auftrags-Subteils ATU1 aus dem Lagerbereich L des Lager- und Kommissioniersystems ausgelagert und zur ersten automatischen Kommissionierstation KA1 transportiert und dort bereitgestellt. In Folge wird die Ware des ersten Auftrags-Subteils ATU1 an der ersten automatischen Kommissionierstation KA1 mit dem Greifer der ersten Art automatisch vom ersten Quell-Ladehilfsmittel Q1 entnommen.

Weiterhin wird im Schritt e2) ein drittes Quell-Ladehilfsmittel Q3 mit der zumindest einen Ware des zweiten Auftrags-Subteils ATU2 aus dem Lagerbereich L des Lager- und Kommissioniersystems ausgelagert und zur ersten automatischen Kommissionierstation KA1 transportiert und dort bereitgestellt. In Folge wird die Ware des zweiten Auftrags-Subteils ATU2 an der ersten automatischen Kommissionierstation KA1 mit dem Greifer der zweiten Art automatisch vom dritten Quell-Ladehilfsmittel Q3 entnommen.

Schließlich wird die zumindest eine Ware des ersten Auftrags-Subteils ATU1 und die zumindest eine Ware des zweiten Auftrags-Subteils ATU2 in oder auf ein Ziel-Ladehilfsmittel Z1 abgegeben (beziehungsweise geladen).

In Anlehnung an die Fig. 3 zeigt die Fig. 19 nun eine weitere Ausführungsvariante für den Ablauf beim Kommissionieren von Waren, welcher dem in Fig. 18 dargestellten Ablauf sehr ähnlich ist. Dabei wird zuerst ein zweites Quell-Ladehilfsmittel Q2 mit einer Ware des zweiten Auftragsteils AT2 aus dem Lagerbereich L eines Lager- und Kommissioniersystems ausgelagert und das zweite Quell-Ladehilfsmittel Q2 zu einer ersten manuellen Kommissionierstation KM1 transportiert und dort bereitgestellt. In Folge wird die Ware des zweiten Auftragsteils AT2 an der ersten manuellen Kommissionierstation KM1 vom zweiten Quell-Ladehilfsmittel Q2 manuell entnommen und in oder auf ein erstes Ziel-Ladehilfsmittel Z1 abgegeben. Dann wird das mit der Ware des zweiten Auftragsteils AT2 beladene erste Ziel-Ladehilfsmittel Z1 zur ersten automatischen Kommissionier-Substation KAU1 transportiert und dort bereitgestellt. In Folge wird die Ware des ersten Auftrags-Subteils ATU1 an der ersten automatischen Kommissionier-Substation KAU1 automatisch in das erste Ziel-Ladehilfsmittel Z1 hinzu geladen. Dann wird das mit der Ware des zweiten Auftragsteils AT2 und das mit der Ware des ersten Auftrags-Subteils ATU1 beladene erste Ziel-Ladehilfsmittel Z1 zur zweiten automatischen Kommissionier-Substation KAU2 transportiert und dort bereitgestellt. In Folge wird die Ware des zweiten Auftrags-Subteils ATU2 an der zweiten automatischen Kommissionier-Substation KAU2 automatisch in das erste Ziel-Ladehilfsmittel Z1 hinzu geladen. Das erste Ziel-Ladehilfsmittel Z1 kann abschließend in einen Versandbereich des Lager- und Kommissioniersystems transportiert und versendet werden. Alternativ kann der kommissionierte Inhalt des ersten Ziel-Ladehilfsmittels Z1 in ein (anderes) Versandladehilfsmittel umgeladen werden.

Weiterhin zeigt die Fig. 20 in Anlehnung an die Fig. 6 eine weitere Ausführungsvariante für den Ablauf beim Kommissionieren von Waren. Dabei wird ein erstes Quell-Ladehilfsmittel Q1 mit der Ware des ersten Auftrags-Subteils ATU1 aus dem Lagerbereich L des Lager- und Kommissioniersystems ausgelagert und zur ersten automatischen Kommissionier-Substation KAU1 transportiert und dort bereitgestellt. In Folge wird die Ware des ersten Auftrags-Subteils ATU1 an der ersten automatischen Kommissionier-Substation KAU1 mit dem Greifer der ersten Art automatisch vom ersten Quell-Ladehilfsmittel Q1 entnommen und in oder auf ein erstes Ziel-Ladehilfsmittel Z1 abgegeben. Dann wird das mit der Ware des ersten Auftrags-Subteils ATU1 beladene erste Ziel-Ladehilfsmittel Z1 zur zweiten automatischen Kommissionier-Substation KAU2 transportiert und dort bereitgestellt. Außerdem wird ein drittes Quell-Ladehilfsmittel Q3 mit der Ware des zweiten Auftrags-Subteils ATU2 aus dem Lagerbereich L des Lager- und Kommissioniersystems ausgelagert und zur zweiten automatischen Kommissionier-Substation KAU2 transportiert und dort bereitgestellt. In Folge wird die Ware des zweiten Auftrags-Subteils ATU2 an der zweiten automatischen Kommissionier-Substation KAU2 mit dem Greifer der zweiten Art automatisch vom dritten Quell-Ladehilfsmittel Q3 entnommen und in oder auf das erste Ziel-Ladehilfsmittel Z1 hinzu geladen. Dann wird das mit der Ware des ersten Auftrags-Subteils ATU1 und mit der Ware des zweiten Auftrags-Subteils ATU2 beladene erste Ziel-Ladehilfsmittel Z1 entweder zu einer zweiten automatischen Kommissionierstation KA2 oder zu einer zweiten manuellen Kommissionierstation KM2 transportiert. Dort wird die Ware des ersten Auftrags-Subteils ATU1 und die Ware des zweiten Auftrags-Subteils ATU2 in das dritte Ziel-Ladehilfsmittel Z3 umgeladen. Schließlich wird die Ware des zweiten Auftragsteils AT2 an der zweiten automatischen/manuellen Kommissionierstation KM2/KA2 automatisch/manuell in das dritte Ziel-Ladehilfsmittel Z3 geladen. Das dritte Ziel-Ladehilfsmittel Z3 kann abschließend in einen Versandbereich des Lager- und Kommissioniersystems transportiert und versendet werden.

Ein Umladen des kommissionierten Inhalts des dritten Ziel-Ladehilfsmittels Z3 in ein (anderes) Versandladehilfsmittel ist wiederum möglich.

Die Figuren 18 bis 20 zeigen lediglich ausgewählte Beispiele für die Ausführung des Kommissionierverfahrens im Zusammenhang mit einer ersten automatischen Kommissionier-Substation KAU1 und einer zweiten automatischen Kommissionier-Substation KAU2, und es sind auch noch andere Varianten möglich, insbesondere jene, die äquivalent zu den in den Fig. 4 und 5 sind.

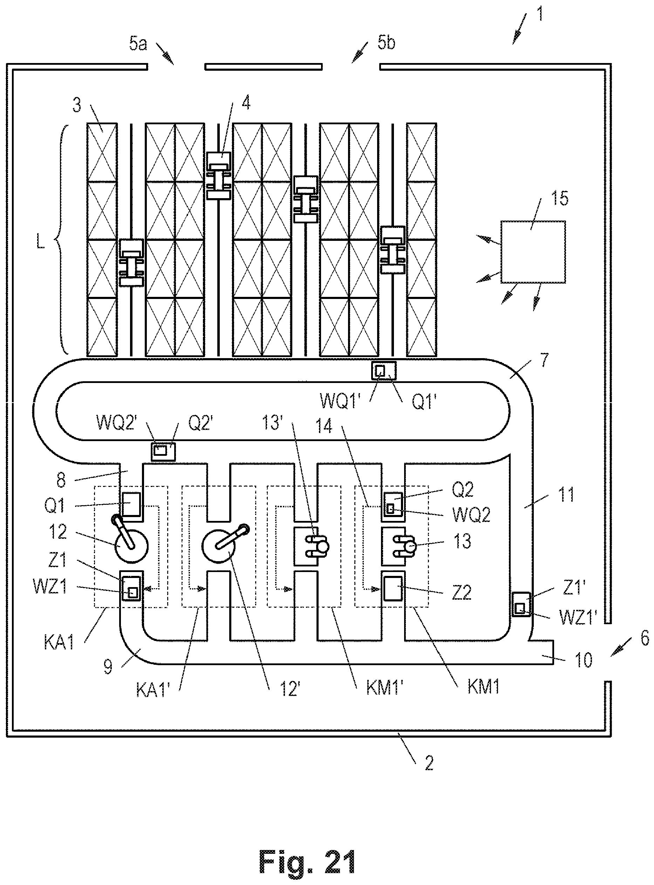

Die Fig. 21 zeigt nun eine etwas detailliertere Darstellung eines beispielhaften Lager- und Kommissioniersystem 1 zum Kommissionieren von Waren in schematisierter Draufsicht. Das Lager- und Kommissioniersystem 1 weist ein Gebäude 2 auf, einen Lagerbereich L mit Lagerregalen 3 sowie Regalbediengeräte 4, die in zwischen den Lagerregalen 3 verlaufenden Regalgassen verfahren. Ein solcher Lagerbereich L ist beispielsweise aus der WO 2016/033628 A1 bekannt. Darüber hinaus umfasst das Lager- und Kommissioniersystem 1 Tore an Warenübernahmebereichen 5a, 5b und an einem Warenübergabebereich 6.

Den Lagerregalen 3 und Regalbediengeräten 4 fördertechnisch nachgelagert umfasst das Lager- und Kommissioniersystem 1 eine Ringförderbahn 7, welche die Regalbediengeräte 4 über Zuförderbahnen 8 mit ersten automatischen Kommissionierstationen KA1, KA1' und mit ersten manuellen Kommissionierstationen KM1, KM1' verbindet. Über Abförderbahnen 9 sind die ersten automatischen Kommissionierstationen KA1, KA1' und die ersten manuellen Kommissionierstationen KM1, KM1' mit einer Auslagerförderbahn 10 verbunden, die zum Warenübergabebereich 6 führt. Zusätzlich zweigt eine Rückförderbahn 11 von der Auslagerförderbahn 10 ab, die wieder in die Ringförderbahn 7 mündet.

An den ersten automatischen Kommissionierstationen KA1, KA1' befinden sich Roboter 12, 12', die in diesem Beispiel als Knickarmroboter mit Greifer ausgebildet sind. Eine solche automatische Kommissionierstation KA1, KA1' ist beispielsweise aus der WO 2018/132855 A1 oder aus den österreichischen Patentanmeldungen AT 50207/2018 oder AT 50217/2018 bekannt. Dies ist aber nicht zwingend, und die Roboter 12, 12' könnten beispielsweise auch als Portalroboter mit Greifer ausgebildet sein. Eine solche automatische Kommissionierstation KA1, KA1' ist beispielsweise aus der österreichischen Patentanmeldung AT 50886/2018 bekannt. An den ersten manuellen Kommissionierstationen KM1, KM1' befinden sich Arbeitsplätze für Arbeiter 13, 13'. Eine solche manuelle Kommissionierstation KM1, KM1' ist beispielsweise aus der WO 2013/090969 A1 bekannt. Die ersten automatischen Kommissionierstationen KA1, KA1' und die ersten manuellen Kommissionierstationen KM1, KM1' sind darüber hinaus mit optionalen Bypass-Strecken 14 ausgestattet, welche eine Zuförderbahn 8 und eine Abförderbahn 9 jeweils direkt verbinden.

Schließlich umfasst das Lager- und Kommissioniersystem 1 ein Steuerungssystem 15.

Die Funktion des in der Fig. 21 dargestellten Lager- und Kommissioniersystems 1 ist nun wie folgt: Waren WQ1', WQ2, WQ2', WZ1, WZ1', WZ2 werden an den Warenübernahmebereichen 5a, 5b angeliefert und mithilfe der Regalbediengeräte 4 in Quell-Ladehilfsmitteln Q1, Q1', Q2, Q2', Q3 in eines der Lagerregale 3 eingelagert. Werden die Waren WQ1', WQ2, WQ2', WZ1, WZ1', WZ2 nicht direkt in Quell-Ladehilfsmitteln Q1, Q1', Q2, Q2', Q3 angeliefert, so können die Waren in Quell-Ladehilfsmitteln Q1, Q1', Q2, Q2', Q3 umgepackt werden, bevor sie mithilfe der Regalbediengeräte 4 in die Lageregale 3 eingelagert werden. Insbesondere können die Waren WQ1', WQ2, WQ2', WZ1, WZ1', WZ2 vereinzelt werden, bevor sie in Quell-Ladehilfsmitteln Q1, Q1', Q2, Q2', Q3 umgepackt werden.

Die Quell-Ladehilfsmitteln Q1, Q1', Q2, Q2', Q3 nehmen insbesondere eine Vielzahl an Waren WQ1', WQ2, WQ2', WZ1, WZ1', WZ2 auf und sind beispielsweise als Behälter, Karton, Tablar, Palette, Beutel (insbesondere ein "Polybag"), Tasche, Sack oder Hängetasche ausgebildet. Insbesondere lagern die Waren WQ1', WQ2, WQ2', WZ1, WZ1', WZ2 in den Quell-Ladehilfsmitteln Q1, Q1', Q2, Q2', Q3 artikelrein. Dazu können die Quell-Ladehilfsmittel Q1, Q1', Q2, Q2', Q3 auch mehrere Fächer zur Aufnahme der Waren WQ1', WQ2, WQ2', WZ1, WZ1', WZ2 aufweisen.

Im Lagerbereich L werden generell Waren WQ1', WQ2, WQ2', WZ1, WZ1', WZ2 unterschiedlicher Warentype WT1..WT3 eingelagert. Die Gesamtheit der eingelagerten Warentypen WT1..WT3 entspricht einem verfügbaren Warensortiment.

Wird ein Kommissionierauftrag A, A1..A9 zum Kommissionieren von Waren WQ1', WQ2, WQ2', WZ1', WZ2 erhalten, so werden der für diesen Kommissionierauftrag A, A1..A9 benötigte erste Auftragsteil AT1 und der für diesen Kommissionierauftrag A, A1..A9 benötigte zweite Auftragsteil AT2 bestimmt. In Folge werden die zugehörigen Waren WQ1', WQ2, WQ2', WZ1, WZ1', WZ2 beziehungsweise Quell-Ladehilfsmittel Q1, Q2 mit Hilfe der Regalbediengeräte 4 aus den Lagerregalen 3 ausgelagert und auf die Fördertechnik übergeben. Im gezeigten Ausführungsbeispiel werden die Waren WQ1', WQ2, WQ2', WZ1, WZ1', WZ2 beziehungsweise Quell-Ladehilfsmittel Q1, Q2 auf die Ringförderbahn 7 übergeben, welche von der Fördertechnik umfasst sein kann.

In dem konkret dargestellten Beispiel wurde ein erstes Quell-Ladehilfsmittel Q1 an eine erste Andienposition der ersten automatischen Kommissionierstationen KA1 transportiert und dort bereitgestellt (angedient). Ebenso wurde ein erstes Ziel-Ladehilfsmittel Z1 an einer zweiten Andienposition der ersten automatischen Kommissionierstationen KA1 bereitgestellt (angedient). Eine Ware WZ1 wurde mit Hilfe des Roboters 12 bereits vom ersten Quell-Ladehilfsmittel Q1 entnommen und in das erste Ziel-Ladehilfsmittel Z1 abgegeben.

In ganz ähnlicher Weise wurde in dem in Fig. 21 dargestellten Beispiel ein zweites Quell-Ladehilfsmittel Q2 an eine erste Andienposition der ersten manuellen Kommissionierstationen KM1 transportiert und dort bereitgestellt (angedient). Ebenso wurde ein zweites Ziel-Ladehilfsmittel Z2 an einer zweiten Andienposition der ersten manuellen Kommissionierstationen KM1 bereitgestellt (angedient). Eine Ware WQ2 wird nun in Folge vom Arbeiter 13 vom zweiten Quell-Ladehilfsmittel Q2 entnommen und in das zweite Ziel-Ladehilfsmittel Z2 abgegeben.

Weiterhin ist in der Fig. 21 ein erstes Ziel-Ladehilfsmittel Z1' mit einer Ware WZ1' auf der Rückförderbahn 11 dargestellt, ein erstes Quell-Ladehilfsmittel Q1' mit einer Ware WQ1' auf der Ringförderbahn 7 im Bereich der Regalbediengeräte 4 und ein zweites Quell-Ladehilfsmittel Q2' mit einer Ware WQ2' auf der Ringförderbahn 7 im Bereich einer Zuförderbahn 8. Beispielsweise kann das erste Quell-Ladehilfsmittel Q1' gerade vom Regalbediengerät 4 auf die Ringförderbahn 7 übergeben worden sein, das zweite Quell-Ladehilfsmittel Q2' auf dem Weg zur ersten manuellen Kommissionierstation KM1' sein und das erste Ziel-Ladehilfsmittel Z1' von der ersten automatischen Kommissionierstation KA1' auf dem Weg zurück zur Ringförderbahn 7 sein.

Im Folgenden wird der in der Fig. 2 schematisch dargestellte Ablauf anhand des in Fig. 21 dargestellten Lager- und Kommissioniersystems 1 erläutert.

In einem ersten Schritt wird das erste Quell-Ladehilfsmittel Q1 mit einer Ware WZ1 des ersten Auftragsteils AT1 mit Hilfe eines Regalbediengeräts 4 aus einem Lagerregal 3 ausgelagert und auf die Fördertechnik (Ringförderbahn 7) übergeben. Sodann wird das erste Quell-Ladehilfsmittel Q1 an die erste Andienposition der ersten automatischen Kommissionierstationen KA1 transportiert und dort bereitgestellt (angedient). Ebenso wird das erste Ziel-Ladehilfsmittel Z1 an der zweiten Andienposition der ersten automatischen Kommissionierstationen KA1 bereitgestellt (angedient). Dann wird die Ware WZ1 des ersten Auftragsteils AT1 mit Hilfe des Roboters 12 vom ersten Quell-Ladehilfsmittel Q1 entnommen und in das erste Ziel-Ladehilfsmittel Z1 abgegeben.

In Folge wird das erste Ziel-Ladehilfsmittel Z1 über die Fördertechnik zur ersten automatischen Kommissionierstation KM1' transportiert. Konkret wird das erste Ziel-Ladehilfsmittel Z1 über die Rückförderbahn 11 zurück zur Ringförderbahn 7 und dann über die Zuförderbahn 8 zur ersten automatischen Kommissionierstation KM1' transportiert. Dort gelangt es über die Bypass-Strecke 14 zur zweiten (unteren) Andienposition der ersten manuellen Kommissionierstationen KM1' und wird dort bereitgestellt.

In einem weiteren Schritt wird das zweite Quell-Ladehilfsmittel Q2' mit einer Ware WQ2' des zweiten Auftragsteils AT2 mit Hilfe eines Regalbediengeräts 4 aus einem Lagerregal 3 ausgelagert und auf die Fördertechnik (Ringförderbahn 7) übergeben. Sodann wird das zweite Quell-Ladehilfsmittel Q2' an die erste Andienposition der ersten manuellen Kommissionierstationen KM1' transportiert und dort bereitgestellt (angedient). Dann wird die Ware WQ2' des zweiten Auftragsteils AT2 vom Arbeiter 13' vom zweiten Quell-Ladehilfsmittel Q2' entnommen und in das erste Ziel-Ladehilfsmittel Z1, das bereits an der zweiten Andienposition der ersten manuellen Kommissionierstationen KM1 bereitgestellt ist, abgegeben.

Das erste Ziel-Ladehilfsmittel Z1, das nun die Ware WZ1 des ersten Auftragsteils AT1 und die Ware WQ2' des zweiten Auftragsteils AT2 enthält, kann in Folge zum Warenübergabebereich 6 transportiert und versendet werden. Zuvor kann der Inhalt des ersten Ziel-Ladehilfsmittels Z1 noch in ein Versandladehilfsmittel umgeladen werden.

In ganz ähnlicher Weise kann der in Fig. 3 schematisch dargestellte Ablauf in dem in Fig. 21 dargestellten Lager- und Kommissioniersystems 1 abgebildet werden. Dazu braucht das erste Ziel-Ladehilfsmittel Z1 nur zuerst an der ersten manuellen Kommissionierstationen KM1' mit der Ware WQ2' des zweiten Auftragsteils AT2 beladen werden bevor es in einem weiteren Schritt an der ersten automatischen Kommissionierstationen KA1 mit der Ware WZ1 des ersten Auftragsteils AT1 beladen wird.

Auch die in den Fig. 4 bis 6 schematisch dargestellten Abläufe können in ganz ähnlicher Weise in dem in Fig. 21 dargestellten Lager- und Kommissioniersystems 1 abgebildet werden.

Beispielsweise kann der in Fig. 4 schematisch dargestellte Ablauf in dem in Fig. 21 dargestellten Lager- und Kommissioniersystems 1 dadurch erfolgen, dass das erste Quell-Ladehilfsmittel Q1 in einem ersten Schritt mit einer Ware WZ1 des ersten Auftragsteils AT1 mit Hilfe eines Regalbediengeräts 4 aus einem Lagerregal 3 ausgelagert und auf die Fördertechnik (Ringförderbahn 7) übergeben wird. Sodann wird das erste Quell-Ladehilfsmittel Q1 an die erste Andienposition der ersten automatischen Kommissionierstationen KA1 transportiert und dort bereitgestellt (angedient). Ebenso wird das erste Ziel-Ladehilfsmittel Z1 an der zweiten Andienposition der ersten automatischen Kommissionierstationen KA1 bereitgestellt (angedient). Dann wird die Ware WZ1 des ersten Auftragsteils AT1 mit Hilfe des Roboters 12 vom ersten Quell-Ladehilfsmittel Q1 entnommen und in das erste Ziel-Ladehilfsmittel Z1 abgegeben.

In einem weiteren Schritt wird das zweite Quell-Ladehilfsmittel Q2 mit einer Ware WQ2 des zweiten Auftragsteils AT2 mit Hilfe eines Regalbediengeräts 4 aus einem Lagerregal 3 ausgelagert und auf die Ringförderbahn 7 übergeben. Sodann wird das zweite Quell-Ladehilfsmittel Q2 an die erste Andienposition der ersten manuellen Kommissionierstationen KM1 transportiert und dort bereitgestellt (angedient). Dann wird die Ware WQ2 des zweiten Auftragsteils AT2 vom Arbeiter 13 vom zweiten Quell-Ladehilfsmittel Q2 entnommen und in ein an der zweiten Andienposition der ersten manuellen Kommissionierstationen KM1 bereitgestelltes zweites Ziel-Ladehilfsmittel Z2 abgegeben.

Das erste Ziel-Ladehilfsmittel Z1, das nun die Ware WZ1 des ersten Auftragsteils AT1 enthält, und das zweite Ziel-Ladehilfsmittel Z2, das die Ware WQ2 des zweiten Auftragsteils AT2 enthält, werden nun an eine zweite manuelle/automatische Kommissionierstation KM2/KA2 transportiert, wo die Ware WQ2 des zweiten Auftragsteils AT2 vom zweiten Ziel-Ladehilfsmittel Z2 zur Ware WZ1 des ersten Auftragsteils AT1 in das erste Ziel-Ladehilfsmittel Z1 hinzu geladen wird. Diese zweite manuelle/automatische Kommissionierstation KM2/KA2 kann eine spezielle Kommissionierstation sein, oder es wird für diesen Zweck eine der in Fig. 21 dargestellten, ersten automatischen Kommissionierstationen KA1, KA1' oder ersten manuellen Kommissionierstationen KM1, KM1' verwendet.

Beispielsweise kann das erste Ziel-Ladehilfsmittel Z1 über die Bypass-Strecke 14 zur zweiten (unteren) Andienposition der ersten manuellen Kommissionierstation KM1' transportiert und dort bereitgestellt werden, und das zweite Ziel-Ladehilfsmittel Z2 wird zur ersten (oberen) Andienposition der ersten manuellen Kommissionierstation KM1' transportiert und dort bereitgestellt. In Folge kann die Ware WQ2 des zweiten Auftragsteils AT2 vom Arbeiter 13' vom zweiten Ziel-Ladehilfsmittel Z2 entnommen und zur Ware WZ1 des ersten Auftragsteils AT1 in das erste Ziel-Ladehilfsmittel Z1 hinzu geladen werden.

In gleicher Weise könnte natürlich auch das erste Ziel-Ladehilfsmittel Z1 über die Bypass-Strecke 14 zur zweiten (unteren) Andienposition der ersten automatischen Kommissionierstation KA1' transportiert und dort bereitgestellt werden, und das zweite Ziel-Ladehilfsmittel Z2 wird zur ersten (oberen) Andienposition der ersten automatischen Kommissionierstation KA1' transportiert und dort bereitgestellt. In Folge kann die Ware WQ2 des zweiten Auftragsteils AT2 vom Roboter 12' vom zweiten Ziel-Ladehilfsmittel Z2 entnommen und zur Ware WZ1 des ersten Auftragsteils AT1 hinzu geladen werden, insbesondere dadurch, dass einfach der gesamte Inhalt des zweiten Ziel-Ladehilfsmittels Z2 in das erste Ziel-Ladehilfsmittel Z1 hinein gekippt wird. Der Roboter 12' ergreift in diesem Fall nicht einzelne Waren WQ2 des zweiten Auftragsteils AT2, sondern direkt das zweite Ziel-Ladehilfsmittel Z2.

In einer alternativen Ausführungsvariante kann das erste Ziel-Ladehilfsmittel Z1 nach dem Beladen mit der Ware WZ1 des ersten Auftragsteils AT1 an der zweiten Kommissionierandienposition der ersten automatischen Kommissionierstation KA1 verbleiben, das zweite Ziel-Ladehilfsmittel Z2 nach dem Beladen mit der Ware WQ2 des zweiten Auftragsteils AT2 an der ersten manuellen Kommissionierstation KM1 über die Fördertechnik (konkret die Rückförderbahn 11 und die Ringförderbahn 7) zur ersten Kommissionierandienposition der ersten automatischen Kommissionierstation KA1 transportiert werden und in Folge der Inhalt des zweiten Ziel-Ladehilfsmittels Z2 mit dem Roboter 12 in das erste Ziel-Ladehilfsmittel Z1 geladen werden.

In einer weiteren alternativen Ausführungsvariante kann das zweite Ziel-Ladehilfsmittel Z2 nach dem Beladen mit der WQ2 des zweiten Auftragsteils AT2 an der zweiten Kommissionierandienposition der ersten manuellen Kommissionierstation KM1 verbleiben, das erste Ziel-Ladehilfsmittel Z1 nach dem Beladen mit der Ware WZ1 des ersten Auftragsteils AT1 an der ersten automatischen Kommissionierstation KA1 über die Fördertechnik (konkret die Rückförderbahn 11 und die Ringförderbahn 7) zur ersten Kommissionierandienposition der ersten manuellen Kommissionierstation KM1 transportiert werden und in Folge der Inhalt des ersten Ziel-Ladehilfsmittels Z1 vom Arbeiter 13 in das zweite Ziel-Ladehilfsmittel Z2 geladen werden. Dieser Ablauf entspricht dann den in der Fig. 5 schematisch dargestellten Ablauf.

Schließlich ist es auch denkbar, dass das mit der Ware WZ1 des ersten Auftragsteils AT1 beladene erste Ziel-Ladehilfsmittel Z1 und das mit der Ware WQ2 des zweiten Auftragsteils AT2 beladene zweite Ziel-Ladehilfsmittel Z2 an Kommissionierandienpositionen einer ersten automatischen Kommissionierstation KA1 oder einer ersten manuellen Kommissionierstation KM1 bereitgestellt werden und die betreffenden Waren WZ1, WQ2 dort in ein drittes Ziel-Ladehilfsmittel Z3 geladen werden. Dieser Ablauf entspricht dann dem in der Fig. 6 schematisch dargestellten Ablauf.

Aus dem Gesagten wird klar, dass die zweite manuelle/automatische Kommissionierstation KM2/KA2 nicht nur baulich einer ersten automatischen Kommissionierstation KA1, KA1' oder einer ersten manuellen Kommissionierstation KM1, KM1' entsprechen kann, sondern überhaupt mit dieser identisch sein kann. Das heißt eine erste automatische Kommissionierstation KA1, KA1' oder eine erste manuelle Kommissionierstation KM1, KM1' kann zu einem späteren Zeitpunkt die Rolle einer zweiten manuellen/automatischen Kommissionierstation KM2/KA2 übernehmen.

Sinngemäß können die oben beschriebenen Abläufe auf die in den Fig. 18 bis 20 schematisch dargestellten Abläufe angewandt werden. Beispielsweise kann eine erste automatische Kommissionier-Substation KAU1 mit einem Greifer einer ersten Art in der Fig. 21 an die Stelle der ersten automatischen Kommissionierstation KA1 treten und eine zweite automatische Kommissionier-Substation KAU2 mit einem Greifer einer zweiten Art an die Stelle der ersten automatischen Kommissionierstation KA1'. Denkbar ist auch, dass die erste automatische Kommissionierstation KA1 und/oder die erste automatische Kommissionierstation KA1' mit Greifern unterschiedlicher Art ausgestattet sind.

Durch die Fördertechnik (konkret die Ringförderbahn 17 und die Rückförderbahn 11) können Quell-Ladehilfsmittel Q1, Q1', Q2, Q2', Q3 und Ziel-Ladehilfsmittel Z1, Z1', Z2, Z3 in nahezu beliebiger Abfolge an die ersten automatischen Kommissionierstation KA1, KA1', die ersten manuellen Kommissionierstation KM1, KM1', die zweiten manuellen/automatischen Kommissionierstationen KM2/KA2, die ersten automatischen Kommissionier-Substationen KAU1 sowie an die zweiten automatischen Kommissionier-Substationen KAU2 transportiert und dort für einen Teilschritt im Kommissioniervorgang bereitgestellt werden. Das in der Fig. 21 dargestellte Lager- und Kommissioniersystem 1 kann daher in besonders flexibler Weise betrieben werden. Insbesondere ist durch die besondere Struktur ein Umbau oder eine Erweiterung des Lager- und Kommissioniersystems 1 auf besonders einfache Weise möglich, beispielsweise indem weitere erste automatische Kommissionierstationen KA1, KA1' oder weitere erste manuelle Kommissionierstation KM1, KM1' hinzugefügt werden oder indem erste automatische Kommissionierstationen KA1, KA1' durch erste manuelle Kommissionierstation KM1, KM1' oder erste manuelle Kommissionierstation KM1, KM1' durch erste automatische Kommissionierstationen KA1, KA1' ersetzt werden. Dadurch kann das Verhältnis zwischen der Anzahl der ersten automatischen Kommissionierstationen KA1, KA1' und der Anzahl der ersten manuellen Kommissionierstationen KM1, KM1' leicht angepasst werden.

Generell ist es von Vorteil, wenn das Verhältnis zwischen der Anzahl der ersten automatischen Kommissionierstationen KA1, KA1' und der Anzahl der ersten manuellen Kommissionierstationen KM1, KM1' kleiner gleich 1 ist. Auf diese Weise können eine Vielzahl an unterschiedlichen Waren WQ1', WQ2, WQ2', WZ1, WZ1', WZ2 kommissioniert werden, da durch die ersten manuellen Kommissionierstationen KM1, KM1' gut auf Veränderungen reagiert werden kann. Das heißt, diese Variante eignet sich besonders dann, wenn im Lagerbereich L viele unterschiedliche Warentypen WT1..WT3 lagern.

Denkbar ist aber auch, dass das Verhältnis zwischen der Anzahl der ersten automatischen Kommissionierstationen KA1, KA1' und der Anzahl der ersten manuellen Kommissionierstationen KM1, KM1' größer gleich 1 ist. Auf diese Weise kann der Kommissioniervorgang hochautomatisiert erfolgen, da eine Vielzahl an ersten automatischen Kommissionierstationen KA1, KA1' zur Verfügung steht. Diese Variante eignet sich besonders dann, wenn im Lagerbereich L eher weniger unterschiedliche Warentypen WT1..WT3 lagern.

Wie aus der Fig. 21 ersichtlich ist, ist die Fördertechnik 4, 7..11 des Lager- und Kommissioniersystems 1 insbesondere für folgende Aufgaben ausgebildet:

- zum Transport der ersten Quell-Ladehilfsmitteln Q1, Q1' zwischen dem Lagerbereich L und der ersten automatischen Kommissionierstationen KA1, KA1'
- zum Transport der zweiten Quell-Ladehilfsmitteln Q2, Q2' zwischen dem Lagerbereich L und der ersten manuellen Kommissionierstationen KM1, KM1'
- zum Transport der ersten Ziel-Ladehilfsmitteln Z1, Z1' zwischen der ersten automatischen Kommissionierstationen KA1, KA1' und der ersten manuellen Kommissionierstationen KM1, KM1' oder zwischen der ersten automatischen Kommissionierstationen KA1, KA1' und der zweiten automatischen oder manuellen Kommissionierstationen KA2, KM2,
- zum Transport der zweiten Ziel-Ladehilfsmitteln Z2 zwischen der ersten manuellen Kommissionierstationen KM1, KM1' und der zweiten automatischen oder manuellen Kommissionierstationen KA2, KM2,
- zum Transport der ersten Ziel-Ladehilfsmitteln Z1, Z1' von der ersten automatischen Kommissionierstation KA1, KA1' von der ersten manuellen Kommissionierstationen KM1, KM1' oder von der zweiten automatischen oder manuellen Kommissionierstationen KA2, KM2,
- zum Transport der zweiten Ziel-Ladehilfsmitteln Z2 von der zweiten automatischen oder manuellen Kommissionierstationen KA2, KM2 und
- zum Transport der dritten Ziel-Ladehilfsmitteln Z3 von der zweiten automatischen oder manuellen Kommissionierstationen KA2, KM2.

Die Roboter 12, 12' können dazu ausgebildet sein,

- den Inhalt des ersten Ziel-Ladehilfsmittels Z1, Z1' in das zweite Ziel-Ladehilfsmittel Z2 auf einmal (d.h. in einem Schritt) umzuladen und/oder
- den Inhalt des ersten Ziel-Ladehilfsmittels Z1, Z1' in das dritte Ziel-Ladehilfsmittel Z3 auf einmal (d.h. in einem Schritt) umzuladen und/oder
- den Inhalt des zweiten Ziel-Ladehilfsmittels Z2 in das erste Ziel-Ladehilfsmittel Z1, Z1' auf einmal (d.h. in einem Schritt) umzuladen und/oder
- den Inhalt des zweiten Ziel-Ladehilfsmittels Z2 in das dritte Ziel-Ladehilfsmittel Z3 auf einmal (d.h. in einem Schritt) umzuladen.

Denkbar ist natürlich auch, dass für den beschriebenen Zweck spezielle Vorrichtungen im Lager- und Kommissioniersystem 1 vorhanden sind.

Generell können die Abläufe an der ersten automatischen Kommissionierstation KA1, KA1' und gegebenenfalls die Abläufe an den automatischen Kommissionier-Substationen KAU1, KAU2 durch ein Überprüfungssystem überwacht werden und eine Handhabung einer Ware WQ1', WQ2, WQ2', WZ1, WZ1', WZ2 vom Überprüfungssystem als Fehlhandhabung klassifiziert werden, wenn die Handhabung in ungeplanter Weise ausgeführt oder abgebrochen wird und fehlschlägt. Das Überwachungssystem kann insbesondere optische Sensoren (z.B. eine Kamera), taktile Sensoren (z.B. Drucksensoren an einem Robotergreifer) und eine mit den Sensoren verbundene Auswerteeinheit (z.B. einen Mikrocontroller) aufweisen, wobei letztere die Sensorsignale auswertet und die eigentliche Klassifizierung der Handhabungen durchführt. In gleicher Weise können natürlich auch die Vorgänge an den ersten manuellen Kommissionierstationen KM1, KM1' überwacht und klassifiziert werden.

Denkbar ist auch, dass das Lager- und Kommissioniersystem 1 eine optionale Sortiereinrichtung umfasst (nicht dargestellt), mit der Waren WQ1', WQ2, WQ2', WZ1, WZ1', WZ2 in eine vorgebbare Reihenfolge gebracht werden können, sofern eine solche nicht schon bei der Auslagerung der Waren WQ1', WQ2, WQ2', WZ1, WZ1', WZ2 beziehungsweise der Quell-Ladehilfsmitteln Q1, Q1', Q2, Q2' aus dem zweiten Lagerbereich L und/oder durch die Fördertechnik 4, 7..11 hergestellt werden kann. Im Speziellen kann diese Sortiereinrichtung im Verlauf der Auslagerförderbahn 10 angeordnet sein, aber auch eine Ankopplung an die Ringförderbahn 7, die Zuförderbahn 8, die Abförderbahn 9 oder die Rückförderbahn 11 wäre natürlich möglich.

Für die Steuerung der oben genannten Prozesse ist in der Fig. 21 das Steuerungssystem 15 vorgesehen, so wie das in der Fig. 21 mit den Pfeilen angedeutet ist. Insbesondere ist das Steuerungssystem 15 für die Steuerung der Regalbediengeräte 4 und der Fördertechnik (konkret der Ringförderbahn 7, der Zuförderbahnen 8, der Abförderbahnen 9, der Auslagerförderbahn 10 und der Rückförderbahn 11) vorgesehen. Zudem kann das Steuerungssystem 15 für die Ansteuerung der ersten automatischen Kommissionierstation KA1, KA1', der ersten manuellen Kommissionierstation KM1, KM1' der zweiten manuellen/automatischen Kommissionierstationen KM2/KA2 sowie der automatischen Kommissionier-Substationen KAU1, KAU2 vorgesehen sein, insbesondere für die Steuerung der Roboter 12, 12' und für die Steuerung einer Ausgabeeinheit, einer Eingabeeinheit und/oder einer Erfassungseinheit der ersten manuellen Kommissionierstation KM1, KM1'.

Das Steuerungssystem 15 kann auch

- zum Erfassen von Aufträgen A und Bestimmen der für diese Aufträge A benötigten Waren WQ1', WQ2, WQ2', WZ1, WZ1', WZ2
- zum Ermitteln der Zugehörigkeit der für die Bearbeitung des genannten Auftrags benötigten Waren WQ1', WQ2, WQ2', WZ1, WZ1', WZ2 zu Warentypengruppen WTG1..WTG3 und
- zum Bestimmen eines ersten Auftragsteils AT1 und eines zweiten Auftragsteils AT2 vorgesehen sein. Grundsätzlich könnten diese Aufgaben aber auch von einem eigenen Auftragsrechner übernommen werden, der steuerungstechnisch mit dem Steuerungssystem 15 verbunden ist.

Im Lager- und Kommissioniersystem 1 erfolgt der Transport der Quell-Ladehilfsmittel Q1, Q1', Q2, Q2', Q3 und der Ziel-Ladehilfsmittel Z1, Z1', Z2, Z3 in dem in Fig. 21 dargestellten Beispiel durch die ortsfeste Fördertechnik 4, 7..11 des Lager- und Kommissioniersystems 1. Denkbar ist aber auch, dass diese Fördertechnik 4, 7..11 ganz oder teilweise durch autonome Flurförderfahrzeuge (Automated Guided Vehicles - kurz "AGVs") ersetzt wird. An die Stelle ortsfester Fördertechnik 4, 7..11 treten dann die auf einer Fahrfläche fahrenden autonomen Flurförderfahrzeuge (AGVs).

Weiterhin dient die Fördertechnik 4, 7..11 des Lager- und Kommissioniersystems 1 in der Fig. 21 dem Transport behälterförmiger Quell-Ladehilfsmittel Q1, Q1', Q2, Q2', Q3 und Ziel-Ladehilfsmittel Z1, Z1', Z2, Z3. Denkbar ist aber auch, dass im Lager- und Kommissioniersystems 1 (alternativ oder zusätzlich) Hängeware und/oder Hängetaschen (als Quell-Ladehilfsmittel Q1, Q1', Q2, Q2', Q3 und/oder Ziel-Ladehilfsmittel Z1, Z1', Z2, Z3) verwendet werden. Im Lager- und Kommissioniersystems 1 können im Lagerbereich L demzufolge auch Lager-Hängebahnen und im Kommissionierbereich auch Transport-Hängebahnen vorgesehen sein. Bei der Verwendung von autonomen Flurförderfahrzeugen (AGVs) können diese auch für den Transport von Hängewaren und/oder Hängetaschen ausgebildet sein.

Denkbar ist weiterhin, dass die Quell-Ladehilfsmittel Q1, Q1', Q2, Q2', Q3 und/oder Ziel-Ladehilfsmittel Z1, Z1', Z2, Z3 als mobile Regale mit Aufnahmeplätzen für Waren WQ1', WQ2, WQ2', WZ1, WZ1', WZ2 in übereinanderliegenden Lagerebenen ausgebildet sind. Die mobilen Regale können selbstfahrend sein (und damit im Grunde autonome Förderfahrzeuge bilden) oder von autonomen Flurförderfahrzeugen bewegt werden.

An dieser Stelle wird auch festgehalten, dass in dem in Fig. 21 dargestellten Lager- und Kommissioniersystem 1 keine eigene Fördertechnik (nur) für leere Quell-Ladehilfsmittel Q1, Q1', Q2, Q2', Q3 und/oder (nur) für leere Ziel-Ladehilfsmittel Z1, Z1', Z2, Z3 dargestellt ist. Nichts desto trotz wäre es möglich, dass das in Fig. 21 dargestellte Lager- und Kommissioniersystem 1 eine Fördertechnik für diesen Zweck aufweist. Auch Lagerbereiche (nur) für leere Quell-Ladehilfsmittel Q1, Q1', Q2, Q2', Q3 und/oder (nur) für leere Ziel-Ladehilfsmittel Z1, Z1', Z2, Z3 könnten vorgesehen sein.

Weiterhin wird angemerkt, dass obwohl das gezeigte Lager- und Kommissioniersystem 1 zwei automatische Kommissionierstationen KA1, KA1' und zwei manuelle Kommissionierstation KM1, KM1' umfasst, ein Lager- und Kommissioniersystem 1 auch eine andere Anzahl an automatischen Kommissionierstationen KA1, KA1' und eine andere Anzahl an manuellen Kommissionierstation KM1, KM1' aufweisen kann. Beispielsweise kann das Lager- und Kommissioniersystem 1 eine (einzige) automatische Kommissionierstation KA1, KA1' und/oder eine (einzige) manuelle Kommissionierstation KM1, KM1' aufweisen, oder das Lager- und Kommissioniersystem 1 kann auch mehr als zwei automatische Kommissionierstationen KA1, KA1' und/oder mehr als zwei manuelle Kommissionierstationen KM1, KM1' umfassen.

In gleicher Weise kann ein Lager- und Kommissioniersystem 1 eine (einzige) erste automatische Kommissionier-Substation KAU1 oder mehrere erste automatische Kommissionier-Substationen KAU1 aufweisen sowie eine (einzige) zweite automatische Kommissionier-Substation KAU2 oder mehrere zweite automatische Kommissionier-Substationen KAU2.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

Bezugszeichenliste

| | |
|---|---|
| 1 | Lager- und Kommissioniersystem |
| 2 | Gebäude |
| 3 | Lagerregal |
| 4 | Regalbediengerät |
| 5a, 5b | Warenübernahmebereich |
| 6 | Warenübergabebereich |
| 7 | Ringförderbahn |
| 8 | Zuförderbahn |
| 9 | Abförderbahn |
| 10 | Auslagerförderbahn |
| 11 | Rückförderbahn |
| 12, 12' | Roboter |
| 13, 13' | Arbeiter |
| 14 | Bypass-Strecke |
| 15 | Steuerungssystem |
| A, A1..A9 | Auftrag |
| AT1, AT2 | Auftragsteil |
| ATU1, ATU2 | Auftrags-Subteil |
| AZ | Auftragszeile |
| F, F1..F3 | Fehlerrate |
| KA1, KA1', KA2 | automatische Kommissionierstation |
| KAU1, KAU2 | automatische Kommissionier-Substation |
| KM1, KM1', KM2 | manuelle Kommissionierstation |
| L | Lagerbereich |
| n, n1..n3 | Stückzahl |
| Q1, Q1', Q2, Q2', Q3 | Quell-Ladehilfsmittel |
| SW1..SW3 | Schwellwert |
| SWU1..SWU3 | Untergruppen-Schwellwert |
| TM | Teilmenge an Aufträgen |
| WQ1', WQ2, WQ2' | Ware (im/auf Quell-Ladehilfsmittel) |
| WT1..WT3 | Warentype |
| WTG1..WTG3 | Warentypengruppe |
| WTUG1..WTUG3 | Warentypenuntergruppe |
| WZ1, WZ1', WZ2 | Ware (im/auf Ziel-Ladehilfsmittel) |
| Z1, Z1', Z2, Z3 | Ziel-Ladehilfsmittel |

**Patentansprüche**

1. Verfahren zum Kommissionieren von Waren (WQ1', WQ2, WQ2', WZ1, WZ1', WZ2) von Quell-Ladehilfsmitteln (Q1, Q1', Q2, Q2') in oder auf Ziel-Ladehilfsmittel (Z1, Z1', Z2, Z3) in einem Lager- und Kommissioniersystem (1), umfassend die Schritte

   a) Bereitstellen der Waren (WQ1', WQ2, WQ2', WZ1, WZ1', WZ2) in oder auf Quell-Ladehilfsmitteln (Q1, Q1', Q2, Q2') in einem Lagerbereich (L),
   b) Erfassen von Aufträgen (A, A1..A9) zum Kommissionieren von Waren (WQ1', WQ2, WQ2', WZ1, WZ1', WZ2) und Bestimmen der für diese Aufträge (A, A1..A9) benötigten Waren (WQ1', WQ2, WQ2', WZ1, WZ1', WZ2), wobei wenigstens ein Auftrag (A, A1..A9) der Aufträge (A, A1..A9) mehrere Auftragszeilen (AZ) umfasst und wobei jede Auftragszeile (AZ) zumindest eine Ware (WQ1', WQ2, WQ2', WZ1, WZ1', WZ2) nach ihrer Warentype (WT1..WT3) und ihrer zu kommissionierenden Stückzahl (n, n1..n3) spezifiziert,

c) Ermitteln der Zugehörigkeit der für die Bearbeitung des genannten Auftrags benötigten Waren (WQ1', WQ2, WQ2', WZ1, WZ1', WZ2) zu Warentypengruppen (WTG1..WTG3), welche jeweils mehrere Warentypen (WT1..WT3) umfassen, wobei eine erste Warentypengruppe (WTG1) Warentypen (WT1..WT3) enthält, die automatisch handhabbar sind, und eine zweite Warentypengruppe (WTG2) Warentypen (WT1..WT3) enthält, die nicht oder nur eingeschränkt automatisch, jedoch manuell handhabbar sind,

d) Bestimmen eines ersten Auftragsteils (AT1), dessen zumindest eine Ware (WQ1', WZ1, WZ1') der ersten Warentypengruppe (WTG1) angehört und demnach automatisch handhabbar ist, und eines zweiten Auftragsteils (AT2), dessen zumindest eine Ware (WQ2, WQ2', WZ2) der zweiten Warentypengruppe (WTG2) angehört und demnach nicht oder nur eingeschränkt automatisch, jedoch manuell handhabbar ist,

e) Auslagern eines ersten Quell-Ladehilfsmittels (Q1, Q1') mit der zumindest einen Ware (WQ1', WZ1, WZ1') des ersten Auftragsteils (AT1) aus dem Lagerbereich (L) des Lager- und Kommissioniersystems (1), Transportieren des ersten Quell-Ladehilfsmittels (Q1, Q1') zu einer ersten automatischen Kommissionierstation (KA1, KA1'), Bereitstellen des ersten Quell-Ladehilfsmittels (Q1, Q1') an der ersten automatischen Kommissionierstation (KA1, KA1') und automatisches Entnehmen der zumindest einen Ware (WQ1', WZ1, WZ1') des ersten Auftragsteils (AT1) vom ersten Quell-Ladehilfsmittel (Q1, Q1') an der ersten automatischen Kommissionierstation (KA1, KA1'),

f) Auslagern eines zweiten Quell-Ladehilfsmittels (Q2, Q2') mit der zumindest einen Ware (WQ2, WQ2', WZ2) des zweiten Auftragsteils (AT2) aus dem Lagerbereich (L) des Lager- und Kommissioniersystems (1), Transportieren des zweiten Quell-Ladehilfsmittels (Q2, Q2') zu einer ersten manuellen Kommissionierstation (KM1, KM1'), Bereitstellen des zweiten Quell-Ladehilfsmittels (Q2, Q2') an der ersten manuellen Kommissionierstation (KM1, KM1') und manuelles Entnehmen der zumindest einen Ware (WQ2, WQ2', WZ2) des zweiten Auftragsteils (AT2) vom zweiten Quell-Ladehilfsmittel (Q2, Q2') an der ersten manuellen Kommissionierstation (KM1, KM1') und

g) Abgeben der zumindest einen Ware (WQ1', WZ1, WZ1') des ersten Auftragsteils (AT1) und der zumindest einen Ware (WQ2, WQ2', WZ2) des zweiten Auftragsteils (AT2) in oder auf ein Ziel-Ladehilfsmittel (Z1, Z1', Z2, Z3),

**dadurch gekennzeichnet, dass**

das erste Quell-Ladehilfsmittel (Q1, Q1') mit der zumindest einen Ware (WQ1', WZ1, WZ1') des ersten Auftragsteils (AT1) dem zweiten Auftragsteil (AT2) zugeteilt wird, zu einer ersten manuellen Kommissionierstation (KM1, KM1') transportiert und dort bereitgestellt wird und in Folge die zumindest eine genannte Ware (WQ1', WZ1, WZ1') des zweiten Auftragsteils manuell in oder auf ein Ziel-Ladehilfsmittel (Z1, Z1', Z2) geladen wird, wenn für die zumindest eine Ware (WQ1', WZ1, WZ1') des ersten Auftragsteils (AT1) in der betreffenden Auftragszeile (AZ) eine Stückzahl (n, n1..n3) angegeben ist, welche einen Stückzahl-Schwellwert überschreitet.

2. Verfahren nach Anspruch 1, **dadurch gekennzeichnet, dass** die zumindest eine Ware (WQ1', WZ1, WZ1') des ersten Auftragsteils (AT1) im Schritt g) an der ersten automatischen Kommissionierstation (KA1, KA1') automatisch in oder auf ein erstes Ziel-Ladehilfsmittel (Z1, Z1') geladen wird, das mit der zumindest einen Ware (WQ1', WZ1, WZ1') des ersten Auftragsteils (AT1) beladene erste Ziel-Ladehilfsmittel (Z1, Z1') zur ersten manuellen Kommissionierstation (KM1, KM1') transportiert wird und die zumindest eine Ware (WQ2, WQ2', WZ2) des zweiten Auftragsteils (AT2) an der ersten manuellen Kommissionierstation (KM1, KM1') manuell in das erste Ziel-Ladehilfsmittel (Z1, Z1') hinzu geladen wird.

3. Verfahren nach Anspruch 1, **dadurch gekennzeichnet, dass** die zumindest eine Ware (WQ2, WQ2', WZ2) des zweiten Auftragsteils (AT2) im Schritt g) an der ersten manuellen Kommissionierstation (KM1, KM1') manuell in oder auf ein erstes Ziel-Ladehilfsmittel (Z1, Z1') geladen wird, das mit der zumindest einen Ware (WQ2, WQ2', WZ2) des zweiten Auftragsteils (AT2) beladene erste Ziel-Ladehilfsmittel (Z1, Z1') zur ersten automatischen Kommissionierstation (KA1, KA1') transportiert wird und die zumindest eine Ware (WQ1', WZ1, WZ1') des ersten Auftragsteils (AT1) an der ersten automatischen Kommissionierstation (KA1, KA1') automatisch in das erste Ziel-Ladehilfsmittel (Z1, Z1') hinzu geladen wird.

4. Verfahren nach Anspruch 1, **dadurch gekennzeichnet, dass** die zumindest eine Ware (WQ1', WZ1, WZ1') des ersten Auftragsteils (AT1) im Schritt g) an der ersten automatischen Kommissionierstation (KA1, KA1') automatisch in oder auf ein erstes Ziel-Ladehilfsmittel (Z1, Z1') geladen wird, die zumindest eine Ware (WQ2, WQ2', WZ2) des zweiten Auftragsteils (AT2) an der ersten manuellen Kommissionierstation (KM1, KM1') manuell in oder auf ein zweites Ziel-Ladehilfsmittel (Z2) geladen wird, das mit der zumindest einen Ware (WQ1', WZ1, WZ1') des ersten Auftragsteils (AT1) beladene erste Ziel-Ladehilfsmittel (Z1, Z1') und das mit der zumindest einen Ware (WQ2, WQ2', WZ2) des zweiten Auftragsteils (AT2) beladene zweite Ziel-Ladehilfsmittel (Z2) entweder zu einer zweiten automatischen Kommissionierstation (KA2) oder zu einer zweiten manuellen Kommissionierstation (KM2) transportiert werden und

i) die zumindest eine Ware (WQ2, WQ2', WZ2) des zweiten Auftragsteils (AT2) an der zweiten automatischen/manuellen Kommissionierstation (KM2/KA2) automatisch/manuell in das erste Ziel-Ladehilfsmittel (Z1, Z1') geladen wird oder
ii) die zumindest eine Ware (WQ1', WZ1, WZ1') des ersten Auftragsteils (AT1) an der zweiten automatischen/manuellen Kommissionierstation (KM2/KA2) automatisch/manuell in das zweite Ziel-Ladehilfsmittel (Z2) geladen wird.

5. Verfahren nach Anspruch 1, **dadurch gekennzeichnet, dass** die zumindest eine Ware (WQ1', WZ1, WZ1') des ersten Auftragsteils (AT1) im Schritt g) an der ersten automatischen Kommissionierstation (KA1, KA1') automatisch in oder auf ein erstes Ziel-Ladehilfsmittel (Z1, Z1') geladen wird, die zumindest eine Ware (WQ2, WQ2', WZ2) des zweiten Auftragsteils (AT2) an der ersten manuellen Kommissionierstation (KM1, KM1') manuell in oder auf ein zweites Ziel-Ladehilfsmittel (Z2) geladen wird, das mit der zumindest einen Ware (WQ1', WZ1, WZ1') des ersten Auftragsteils (AT1) beladene erste Ziel-Ladehilfsmittel (Z1, Z1') und das mit der zumindest einen Ware (WQ2, WQ2', WZ2) des zweiten Auftragsteils (AT2) beladene zweite Ziel-Ladehilfsmittel (Z2) entweder zu einer zweiten automatischen Kommissionierstation (KA2) oder zu einer zweiten manuellen Kommissionierstation (KM2) transportiert werden und die zumindest eine Ware (WQ1', WZ1, WZ1') des ersten Auftragsteils (AT1) sowie die zumindest eine Ware (WQ2, WQ2', WZ2) des zweiten Auftragsteils (AT2) an der zweiten automatischen/manuellen Kommissionierstation (KM2/KA2) automatisch/manuell in oder auf ein drittes Ziel-Ladehilfsmittel (Z3) geladen werden.

6. Verfahren nach einem der Ansprüche 1 bis 5, **dadurch gekennzeichnet, dass** Warentypen (WT1..WT3), bei denen eine Fehlerrate (F, F1..F3) bei automatischer Handhabung kleiner gleich einem ersten Schwellwert (SW1) ist, der ersten Warentypengruppe (WTG1) zugeteilt werden und Warentypen (WT1..WT3), bei denen eine Fehlerrate (F, F1..F3) bei automatischer Handhabung größer als der erste Schwellwert (SW1) ist, der zweiten Warentypengruppe (WTG2) zugeteilt werden, wobei als Fehlerrate (F, F1..F3) der Quotient der bei der Kommissionierung auftretenden Fehlhandhabungen dividiert durch die Gesamtanzahl der Handhabungen vorgesehen ist.

7. Verfahren nach einem der Ansprüche 1 bis 6, **dadurch gekennzeichnet, dass** eine dritte Warentypengruppe (WTG3) vorgesehen wird und dass Warentypen (WT1..WT3), bei denen eine Fehlerrate (F, F1..F3) bei automatischer Handhabung kleiner einem ersten Schwellwert (SW1) ist, der ersten Warentypengruppe (WTG1) zugeteilt werden, Warentypen (WT1..WT3), bei denen eine Fehlerrate (F, F1..F3) bei automatischer Handhabung größer einem zweiten Schwellwert (SW2) ist, der zweiten Warentypengruppe (WTG2) zugeteilt werden, und die übrigen Warentypen (WT1..WT3), bei denen die Fehlerrate (F, F1..F3) grö-ßer gleich dem ersten Schwellwert (SW1) und kleiner gleich dem zweiten Schwellwert (SW2) ist, einer dritten Warentypengruppe (WTG3) zugeteilt werden, wobei Waren (WQ1', WQ2, WQ2', WZ1, WZ1', WZ2) der dritten Warentypengruppe (WTG3) in einem Auftrag (A, A1..A9) wahlweise dem ersten Auftragsteil (AT1) oder dem zweiten Auftragsteil (AT2) zugeordnet werden können.

8. Verfahren nach einem der Ansprüche 1 bis 7, **dadurch gekennzeichnet, dass** eine Ware (WQ1', WQ2, WQ2', WZ1, WZ1', WZ2) des ersten Auftragsteils (AT1) dem zweiten Auftragsteil (AT2) zugeordnet und zu einer ersten manuellen Kommissionierstation (KM1, KM1') gefördert wird, wenn die Anzahl an Fehlhandhabungen dieser Ware (WQ1', WQ2, WQ2', WZ1, WZ1', WZ2) an der ersten automatischen Kommissionierstation (KA1, KA1') einen Fehlhandhabungs-Schwellwert überschreitet.

9. Verfahren nach einem der Ansprüche 6 bis 8, **dadurch gekennzeichnet, dass** Abläufe an der ersten automatischen Kommissionierstation (KA1, KA1') durch ein Überprüfungssystem überwacht werden und eine Handhabung vom Überprüfungssystem als Fehlhandhabung klassifiziert wird, wenn die Handhabung in ungeplanter Weise ausgeführt oder abgebrochen wird und fehlschlägt.

10. Verfahren nach einem der Ansprüche 6 bis 9, **dadurch gekennzeichnet, dass** der erste Schwellwert (SW1) anhand einer Kapazität einer Gruppe von Kommissionierstationen (KA1, KA1', KM1, KM1') ermittelt wird, welche zumindest eine erste automatische Kommissionierstation (KA1, KA1') und zumindest eine erste manuelle Kommissionierstation (KM1, KM1') umfasst und welche für die Ausführung mehrerer Aufträge (A, A1..A9) in einem vorgebbaren Zeitraum verfügbar ist.

11. Verfahren nach Anspruch 10, **dadurch gekennzeichnet, dass**

- mehrere Aufträge (A, A1..A9) zum Kommissionieren von Waren (WQ1', WQ2, WQ2', WZ1, WZ1', WZ2) erfasst und die für diese Aufträge (A, A1..A9) benötigten Waren (WQ1', WQ2, WQ2', WZ1, WZ1', WZ2) bestimmt werden,

- eine für die Ausführung dieser Aufträge (A, A1..A9) in einem vorgebbaren Zeitraum erste benötigte Kapazität der ersten automatischen Kommissionierstationen (KA1, KA1') der Gruppe für die Kommissionierung der Waren (WQ1', WQ2, WQ2', WZ1, WZ1', WZ2) der ersten Warentypengruppe (WTG1) und eine in diesem Zeitraum zweite benötigte Kapazität der ersten manuellen Kommissionierstationen (KM1, KM1') der Gruppe für die Kommissionierung der Waren (WQ1', WQ2, WQ2', WZ1, WZ1', WZ2) der zweiten Warentypengruppe (WTG2) für verschiedene erste Schwellwerte (SW1) berechnet wird,

- eine in diesem Zeitraum erste verfügbare Kapazität der ersten automatischen Kommissionierstationen (KA1, KA1') der Gruppe und eine in diesem Zeitraum zweite verfügbare Kapazität der ersten manuellen Kommissionierstationen (KM1, KM1') der Gruppe ermittelt wird und

- jener erste Schwellwert (SW1) für die Ausführung der genannten Aufträge (A, A1..A9) gewählt wird, für welchen die geringste Abweichung zwischen der ersten benötigten Kapazität und der ersten verfügbaren Kapazität sowie zwischen der zweiten benötigten Kapazität und der zweiten verfügbaren Kapazität ermittelt wird.

12. Verfahren nach einem der Ansprüche 1 bis 11, **dadurch gekennzeichnet, dass** eine Teilmenge (TM) an auszuführenden Aufträgen (A, A1..A9) anhand einer Kapazität einer Gruppe von Kommissionierstationen (KA1, KA1', KM1, KM1') ermittelt wird, welche zumindest eine erste automatische Kommissionierstation (KA1, KA1') und zumindest eine erste manuelle Kommissionierstation (KM1, KM1') umfasst und welche für die Ausführung dieser Teilmenge (TM) an auszuführenden Aufträgen (A, A1..A9) in einem vorgebbaren Zeitraum verfügbar ist.

13. Verfahren nach Anspruch 12, **dadurch gekennzeichnet, dass**

- mehrere Aufträge (A, A1..A9) zum Kommissionieren von Waren (WQ1', WQ2, WQ2', WZ1, WZ1', WZ2) erfasst und die für diese Aufträge (A, A1..A9) benötigten Waren (WQ1', WQ2, WQ2', WZ1, WZ1', WZ2) bestimmt werden,

- eine für die Ausführung dieser Aufträge (A, A1..A9) erste benötigte Kapazität der ersten automatischen Kommissionierstationen (KA1, KA1') der Gruppe für die Kommissionierung der Waren (WQ1', WQ2, WQ2', WZ1, WZ1', WZ2) der ersten Warentypengruppe (WTG1) und eine in diesem Zeitraum zweite benötigte Kapazität der ersten manuellen Kommissionierstationen (KM1, KM1') der Gruppe für die Kommissionierung der Waren (WQ1', WQ2, WQ2', WZ1, WZ1', WZ2) der zweiten Warentypengruppe (WTG2) für verschiedene Teilmengen (TM) der genannten Aufträge (A, A1..A9) berechnet wird,

- eine in einem vorgebbaren Zeitraum erste verfügbare Kapazität der ersten automatischen Kommissionierstationen (KA1, KA1') der Gruppe und eine in diesem Zeitraum zweite verfügbare Kapazität der ersten manuellen Kommissionierstationen (KM1, KM1') der Gruppe ermittelt wird und

- jene Teilmenge (TM) an genannten Aufträgen (A, A1..A9) im gewählten Zeitraum ausgeführt wird, für welche die geringste Abweichung zwischen der ersten benötigten Kapazität und der ersten verfügbaren Kapazität sowie zwischen der zweiten benötigten Kapazität und der zweiten verfügbaren Kapazität ermittelt wird.

14. Verfahren nach Anspruch 13, **dadurch gekennzeichnet, dass** die genannten mehreren Aufträge (A, A1..A9) anhand eines Sortierparameters sortiert werden und bei der Bestimmung einer Teilmenge (TM) eine Gleichverteilung hinsichtlich des Sortierparameters angestrebt wird, wobei als Sortierparameter

- eine in einem Auftrag vorhandene Stückzahl (n, n1..n3) an Waren (WQ1', WQ2, WQ2', WZ1, WZ1', WZ2) der ersten Warentypengruppe (WTG1) vorgesehen ist oder

- ein in einem Auftrag vorhandener relativer Anteil an Waren (WQ1', WQ2, WQ2', WZ1, WZ1', WZ2) der ersten Warentypengruppe (WTG1) vorgesehen ist, welcher durch Division der Stückzahl (n, n1..n3) an Waren (WQ1', WQ2, WQ2', WZ1, WZ1', WZ2) der ersten Warentypengruppe (WTG1) eines Auftrag (A, A1..A9) durch die Stückzahl (n, n1..n3) aller Waren (WQ1', WQ2, WQ2', WZ1, WZ1', WZ2) dieses Auftrags (A, A1..A9) berechnet wird.

15. Verfahren nach einem der Ansprüche 1 bis 14, **dadurch gekennzeichnet, dass** das erste Quell-Ladehilfsmittel (Q1, Q1') mit der zumindest einen Ware (WQ1', WZ1, WZ1') des ersten Auftragsteils (AT1) dem zweiten Auftragteil (AT2) zugeteilt wird, zu einer ersten manuellen Kommissionierstation (KM1, KM1') transportiert und dort bereitgestellt wird und in Folge die zumindest eine genannte Ware (WQ1', WZ1, WZ1') des zweiten Auftragsteils manuell in oder auf ein erstes oder zweites Ziel-Ladehilfsmittel (Z1, Z1', Z2) geladen wird,

- wenn die Abgabe mehrerer Waren (WQ2, WQ2', WZ2) der zweiten Warentypengruppe (WTG2) des zweiten Auftragsteils (AT2) in das erste oder zweite Ziel-Ladehilfsmittel (Z1, Z1', Z2) an der ersten manuellen Kommissionierstation (KM1, KM1') schneller erfolgt als die Abgabe derselben Anzahl an Waren (WQ1', WZ1, WZ1') des ersten Auftragsteils (AT1) in das erste Ziel-Ladehilfsmittel (Z1, Z1') an der ersten automatischen Kommissionierstation (KA1, KA1') oder

- wenn bereits alle Waren (WQ2, WQ2', WZ2) der zweiten Warentypengruppe (WTG2) des zweiten Auftragsteils (AT2) an der ersten manuellen Kommissionierstation (KM1, KM1') in erste oder zweite Ziel-Ladehilfsmittel (Z1, Z1', Z2) geladen wurden.

16. Verfahren nach einem der Ansprüche 1 bis 15, **dadurch gekennzeichnet,**

- **dass** das Bereitstellen mehrerer Waren (WQ1', WZ1, WZ1') des ersten Auftragsteils (AT1) an der ersten automatischen Kommissionierstation (KA1, KA1') sortiert nach der in den Auftragszeilen (AZ) für die Waren (WQ1', WZ1, WZ1') des ersten Auftragsteils (AT1) angegebenen Stückzahl (n, n1..n3) erfolgt, wobei das Bereitstellen der Waren (WQ1', WZ1, WZ1') des ersten Auftragsteils (AT1) von niedrigen zu aufsteigenden Stückzahlen (n, n1..n3) hin erfolgt und

- **dass** das Bereitstellen mehrerer Waren (WQ2, WQ2', WZ2) des zweiten Auftragsteils (AT2) an der ersten manuellen Kommissionierstation (KM1) sortiert nach der in den Auftragszeilen (AZ) für die Waren (WQ2, WQ2', WZ2) des zweiten Auftragsteils (AT2) angegebenen Stückzahl (n, n1..n3) erfolgt, wobei das Bereitstellen der Waren (WQ2, WQ2', WZ2) des zweiten Auftragsteils (AT2) von hohen zu absteigenden Stückzahlen (n, n1..n3) hin erfolgt.

17. Verfahren nach einem der Ansprüche 1 bis 15, **dadurch gekennzeichnet,**

- **dass** das Entnehmen mehrerer Waren (WQ1', WZ1, WZ1') des ersten Auftragsteils (AT1) von zumindest einem ersten Quell-Ladehilfsmittel (Q1, Q1') und das Abgeben dieser Waren (WQ1', WZ1, WZ1') in oder auf zumindest ein erstes Ziel-Ladehilfsmittel (Z1, Z1') sortiert nach der in den Auftragszeilen (AZ) für die Waren (WQ1', WZ1, WZ1') des ersten Auftragsteils (AT1) angegebenen Stückzahl (n, n1..n3) erfolgt, wobei das Entnehmen und Abgeben von niedrigen zu aufsteigenden Stückzahlen (n, n1..n3) hin erfolgt und

- **dass** das Entnehmen mehrerer Waren (WQ2, WQ2', WZ2) des zweiten Auftragsteils (AT2) von zumindest einem zweiten Quell-Ladehilfsmittel (Q2, Q2') und das Abgeben dieser Waren (WQ2, WQ2', WZ2) in oder auf zumindest ein erstes oder zweites Ziel-Ladehilfsmittel (Z1, Z1', Z2) sortiert nach der in den Auftragszeilen (AZ) für die Waren (WQ2, WQ2', WZ2) des zweiten Auftragsteils (AT2) angegebenen Stückzahl (n, n1..n3) erfolgt, wobei das Entnehmen und Abgeben von hohen zu absteigenden Stückzahlen (n, n1..n3) hin erfolgt.

18. Verfahren nach einem der Ansprüche 1 bis 15, **dadurch gekennzeichnet,**

- **dass** einer Warentype (WT1..WT3) eine Fehlerrate (F, F1..F3) zugeordnet ist,

- **dass** das Bereitstellen mehrerer Waren (WQ1', WZ1, WZ1') des ersten Auftragsteils (AT1) an der ersten automatischen Kommissionierstation (KA1, KA1') sortiert nach der in den Auftragszeilen (AZ) für die Waren (WQ1', WZ1, WZ1') des ersten Auftragsteils (AT1) angegebenen Fehlerrate (F, F1..F3) oder sortiert nach einem Parameter, der aus der besagten Fehlerrate (F, F1..F3) und der in den Auftragszeilen (AZ) für die Waren (WQ2, WQ2', WZ2) des ersten Auftragsteils (AT1) angegebenen Stückzahl (n, n1..n3) abgeleitet ist, erfolgt, wobei das Bereitstellen der Waren (WQ1', WZ1, WZ1') des ersten Auftragsteils (AT1) bei einer Sortierung nach der Fehlerrate (F, F1..F3) von niedrigen zu aufsteigenden Fehlerraten (F, F1..F3) hin oder bei einer Sortierung nach dem genannten Parameter von niedrigen zu aufsteigenden Parametern hin erfolgt und

- **dass** das Bereitstellen mehrerer Waren (WQ2, WQ2', WZ2) des zweiten Auftragsteils (AT2) an der ersten manuellen Kommissionierstation (KM1) sortiert nach der in den Auftragszeilen (AZ) für die Waren (WQ2, WQ2', WZ2) des zweiten Auftragsteils (AT2) angegebenen Fehlerrate (F, F1..F3) oder sortiert nach einem Parameter, der aus der besagten Fehlerrate (F, F1..F3) und der in den Auftragszeilen (AZ) für die Waren (WQ2, WQ2', WZ2) des zweiten Auftragsteils (AT2) angegebenen Stückzahl (n, n1..n3) abgeleitet ist, erfolgt, wobei das Bereitstellen der Waren (WQ2, WQ2', WZ2) des zweiten Auftragsteils (AT2) bei einer Sortierung nach der Fehlerrate (F, F1..F3) von hohen zu absteigenden Fehlerraten (F, F1..F3) hin oder bei einer Sortierung nach dem Parameter von hohen zu absteigenden Parametern hin erfolgt.

19. Verfahren nach einem der Ansprüche 1 bis 15 oder nach Anspruch 18, **dadurch gekennzeichnet,**

- **dass** einer Warentype (WT1..WT3) eine Fehlerrate (F, F1..F3) zugeordnet ist,

- **dass** das Entnehmen mehrerer Waren (WQ1', WZ1, WZ1') des ersten Auftragsteils (AT1) von zumindest einem ersten Quell-Ladehilfsmittel (Q1, Q1') und das Abgeben dieser Waren (WQ1', WZ1, WZ1') in oder auf zumindest ein erstes Ziel-Ladehilfsmittel (Z1, Z1') sortiert nach der in den Auftragszeilen (AZ) für die Waren (WQ1', WZ1, WZ1') des ersten Auftragsteils (AT1) angegebenen Fehlerrate (F, F1..F3) oder sortiert nach einem Parameter, der aus der besagten Fehlerrate (F, F1..F3) und der in den Auftragszeilen (AZ) für die Waren (WQ2, WQ2', WZ2) des ersten Auftragsteils (AT1) angegebenen Stückzahl (n, n1..n3) abgeleitet ist, erfolgt, wobei das Entnehmen und Abgeben bei einer Sortierung nach der Fehlerrate (F, F1..F3) von niedrigen zu aufsteigenden Fehlerraten (F, F1..F3) hin oder bei einer Sortierung nach dem genannten Parameter von niedrigen zu aufsteigenden Parametern hin erfolgt und
- **dass** das Entnehmen mehrerer Waren (WQ2, WQ2', WZ2) des zweiten Auftragsteils (AT2) von zumindest einem zweiten Quell-Ladehilfsmittel (Q2, Q2') und das Abgeben dieser Waren (WQ2, WQ2', WZ2) in oder auf zumindest ein erstes oder zweites Ziel-Ladehilfsmittel (Z1, Z1', Z2) sortiert nach der in den Auftragszeilen (AZ) für die Waren (WQ2, WQ2', WZ2) des zweiten Auftragsteils (AT2) angegebenen Fehlerrate (F, F1..F3) oder sortiert nach einem Parameter, der aus der besagten Fehlerrate (F, F1..F3) und der in den Auftragszeilen (AZ) für die Waren (WQ2, WQ2', WZ2) des zweiten Auftragsteils (AT2) angegebenen Stückzahl (n, n1..n3) abgeleitet ist, erfolgt, wobei das Entnehmen und Abgeben bei einer Sortierung nach der Fehlerrate (F, F1..F3) von hohen zu absteigenden Fehlerraten (F, F1..F3) hin oder bei einer Sortierung nach dem Parameter von hohen zu absteigenden Parametern hin erfolgt.

20. Verfahren nach einem der Ansprüche 1 bis 19, **dadurch gekennzeichnet, dass**

- die erste Warentypengruppe (WTG1) eine erste Warentypenuntergruppe (WTUG1) umfasst, die Warentypen (WT1..WT3) enthält, die mit einem Greifer einer ersten Art automatisch handhabbar sind, und eine zweite Warentypenuntergruppe (WTUG2) umfasst, die Warentypen (WT1..WT3) enthält, die nicht oder nur eingeschränkt mit dem Greifer der ersten Art automatisch, jedoch mit einem Greifer einer anderen, zweiten Art automatisch handhabbar sind,
- im Schritt c) zusätzlich die Zugehörigkeit der für die Bearbeitung des genannten Auftrags benötigten Waren (WQ1', WQ2, WQ2', WZ1, WZ1', WZ2) zur ersten Warentypenuntergruppe (WTUG1) und zur zweiten Warentypenuntergruppe (WTUG2) ermittelt wird und
- im Schritt d) zusätzlich ein erster Auftrags-Subteil (ATU1) des ersten Auftragsteils (AT1) bestimmt wird, dessen zumindest eine Ware (WQ1', WZ1, WZ1') der ersten Warentypenuntergruppe (WTUG1) angehört und demnach mit einem Greifer der ersten Art automatisch handhabbar ist, und ein zweiter Auftrags-Subteil (ATU2) des ersten Auftragsteils (AT1) bestimmt wird, dessen zumindest eine Ware (WQ2, WQ2', WZ2) der zweiten Warentypenuntergruppe (WTUG2) angehört und demnach nicht oder nur eingeschränkt mit dem Greifer der ersten Art, jedoch mit dem Greifer der zweiten Art automatisch handhabbar ist.

21. Lager- und Kommissioniersystem (1) zum Kommissionieren von Waren (WQ1', WQ2, WQ2', WZ1, WZ1', WZ2) von Quell-Ladehilfsmitteln (Q1, Q1', Q2, Q2') in oder auf Ziel-Ladehilfsmittel (Z1, Z1', Z2, Z3), umfassend

einen Lagerbereich (L) zum

- Bereitstellen der Waren (WQ1', WQ2, WQ2', WZ1, WZ1', WZ2) in oder auf Quell-Ladehilfsmitteln (Q1, Q1', Q2, Q2'),

ein Steuerungssystem (15) zum

- Erfassen von Aufträgen (A, A1..A9) zum Kommissionieren von Waren (WQ1', WQ2, WQ2', WZ1, WZ1', WZ2) und Bestimmen der für diese Aufträge (A, A1..A9) benötigten Waren (WQ1', WQ2, WQ2', WZ1, WZ1', WZ2), wobei wenigstens ein Auftrag (A, A1..A9) der Aufträge (A, A1..A9) mehrere Auftragszeilen (AZ) umfasst und wobei jede Auftragszeile (AZ) zumindest eine Ware (WQ1', WQ2, WQ2', WZ1, WZ1', WZ2) nach ihrer Warentype (WT1..WT3) und ihrer zu kommissionierenden Stückzahl (n, n1..n3) spezifiziert,
- Ermitteln der Zugehörigkeit der für die Bearbeitung des genannten Auftrags benötigten Waren (WQ1', WQ2, WQ2', WZ1, WZ1', WZ2) zu Warentypengruppen (WTG1..WTG3), welche jeweils mehrere Warentypen (WT1..WT3) umfassen, wobei eine erste Warentypengruppe (WTG1) Warentypen (WT1..WT3) enthält, die automatisch handhabbar sind, und eine zweite Warentypengruppe (WTG2) Warentypen (WT1..WT3) enthält, die nicht oder nur eingeschränkt automatisch, jedoch manuell handhabbar sind, und
- Bestimmen eines ersten Auftragsteils (AT1), dessen zumindest eine Ware (WQ1', WZ1, WZ1') der ersten Warentypengruppe (WTG1) angehört und demnach automatisch handhabbar ist und eines zweiten Auftragsteils (AT2), dessen zumindest eine Ware (WQ2, WQ2', WZ2) der zweiten Warentypengruppe (WTG2) angehört und demnach nicht oder nur eingeschränkt automatisch, jedoch manuell handhabbar ist, und

eine Fördertechnik zum

- Auslagern eines ersten Quell-Ladehilfsmittels (Q1, Q1') mit der zumindest einen Ware (WQ1', WZ1, WZ1') des ersten Auftragsteils (AT1) aus dem Lagerbereich (L) des Lager- und Kommissioniersystems (1), Transportieren des ersten Quell-Ladehilfsmittels (Q1, Q1') zu einer ersten automatischen Kommissionierstation (KA1, KA1'), Bereitstellen des ersten Quell-Ladehilfsmittels (Q1, Q1') an der ersten automatischen Kommissionierstation (KA1, KA1'), an der die zumindest eine Ware (WQ1', WZ1, WZ1') des ersten Auftragsteils (AT1) vom ersten Quell-Ladehilfsmittel (Q1, Q1') automatisch entnehmbar ist, und
- Auslagern eines zweiten Quell-Ladehilfsmittels (Q2, Q2') mit der zumindest einen Ware (WQ2, WQ2', WZ2) des zweiten Auftragsteils (AT2) aus dem Lagerbereich (L) des Lager- und Kommissioniersystems (1), Transportieren des zweiten Quell-Ladehilfsmittels (Q2, Q2') zu einer ersten manuellen Kommissionierstation (KM1, KM1') und Bereitstellen des zweiten Quell-Ladehilfsmittels (Q2, Q2') an der ersten manuellen Kommissionierstation (KM1, KM1'), an der die zumindest eine Ware (WQ2, WQ2', WZ2) des zweiten Auftragsteils (AT2) vom zweiten Quell-Ladehilfsmittel (Q2, Q2') manuell entnehmbar ist, wobei die erste automatische Kommissionierstation (KA1, KA1') für ein automatisches Abgeben der zumindest einen Ware (WQ1', WZ1, WZ1') des ersten Auftragsteils (AT1) und die erste manuelle Kommissionierstation (KM1, KM1') für ein manuelles Abgeben der zumindest einen Ware (WQ2, WQ2', WZ2) des zweiten Auftragsteils (AT2) in oder auf ein Ziel-Ladehilfsmittel (Z1, Z1', Z2, Z3) ausgebildet ist,

**dadurch gekennzeichnet, dass**
das Steuerungssystem (15) zusätzlich dazu ausgebildet ist, das erste Quell-Ladehilfsmittel (Q1, Q1') mit der zumindest einen Ware (WQ1', WZ1, WZ1') des ersten Auftragsteils (AT1) dem zweiten Auftragsteil (AT2) zuzuteilen, mithilfe der Fördertechnik zu der ersten manuellen Kommissionierstation (KM1, KM1') zu transportieren und dort bereitzustellen und in Folge ein Laden der zumindest einen genannten Ware (WQ1', WZ1, WZ1') des zweiten Auftragsteils manuell in oder auf ein Ziel-Ladehilfsmittel (Z1, Z1', Z2) anzuweisen, wenn für die zumindest eine Ware (WQ1', WZ1, WZ1') des ersten Auftragsteils (AT1) in der betreffenden Auftragszeile (AZ) eine Stückzahl (n, n1..n3) angegeben ist, welche einen Stückzahl-Schwellwert überschreitet.

22. Lager- und Kommissioniersystem (1) nach Anspruch 21, **dadurch gekennzeichnet, dass** die Fördertechnik (4, 7..11)

- zum Transport der ersten Quell-Ladehilfsmitteln (Q1, Q1') zwischen dem Lagerbereich (L) und der ersten automatischen Kommissionierstation (KA1, KA1') und/oder
- zum Transport der zweiten Quell-Ladehilfsmitteln (Q2, Q2') zwischen dem Lagerbereich (L) und der ersten manuellen Kommissionierstation (KM1, KM1') und/oder
- zum Transport der ersten Ziel-Ladehilfsmitteln (Z1, Z1') zwischen der ersten automatischen Kommissionierstation (KA1, KA1') und der ersten manuellen Kommissionierstation (KM1, KM1') oder zwischen der ersten automatischen Kommissionierstation (KA1, KA1') und der zweiten automatischen oder manuellen Kommissionierstation (KA2, KM2) und/oder
- zum Transport der zweiten Ziel-Ladehilfsmitteln (Z2) zwischen der ersten manuellen Kommissionierstation (KM1, KM1') und der zweiten automatischen oder manuellen Kommissionierstation (KA2, KM2) und/oder
- zum Transport der ersten Ziel-Ladehilfsmitteln (Z1, Z1') von der ersten automatischen Kommissionierstation (KA1, KA1'), von der ersten manuellen Kommissionierstation (KM1, KM1') oder von der zweiten automatischen oder manuellen Kommissionierstation (KA2, KM2) und/oder
- zum Transport der zweiten Ziel-Ladehilfsmitteln (Z2) von der zweiten automatischen oder manuellen Kommissionierstation (KA2, KM2) und/oder
- zum Transport der dritten Ziel-Ladehilfsmitteln (Z3) von der zweiten automatischen oder manuellen Kommissionierstation (KA2, KM2) ausgebildet ist.

23. Lager- und Kommissioniersystem (1) nach Anspruch 21 oder 22, **dadurch gekennzeichnet, dass** an der zweiten automatischen Kommissionierstation (KA2) eine Mechanik zum automatischen Abgeben des gesamten Inhalts

- des ersten Ziel-Ladehilfsmittels (Z1, Z1') in das zweite Ziel-Ladehilfsmittel (Z2) und/oder
- des ersten Ziel-Ladehilfsmittels (Z1, Z1') in das dritte Ziel-Ladehilfsmittel (Z3) und/oder
- des zweiten Ziel-Ladehilfsmittels (Z2) in das erste Ziel-Ladehilfsmittel (Z1, Z1') und/oder

- des zweiten Ziel-Ladehilfsmittels (Z2) in das dritte Ziel-Ladehilfsmittel (Z3) auf einmal vorgesehen ist.

24. Lager- und Kommissioniersystem (1) nach einem der Ansprüche 21 bis 23, **dadurch gekennzeichnet, dass**

- die erste Warentypengruppe (WTG1) eine erste Warentypenuntergruppe (WTUG1) umfasst, die Warentypen (WT1..WT3) enthält, die mit einem Greifer einer ersten Art automatisch handhabbar sind, und eine zweite Warentypenuntergruppe (WTUG2) umfasst, die Warentypen (WT1..WT3) enthält, die nicht oder nur eingeschränkt mit dem Greifer der ersten Art automatisch, jedoch mit einem Greifer einer anderen, zweiten Art automatisch handhabbar sind und

das Steuerungssystem (15) zusätzlich zum

- Ermitteln der Zugehörigkeit der für die Bearbeitung des genannten Auftrags benötigten Waren (WQ1', WQ2, WQ2', WZ1, WZ1', WZ2) zur ersten Warentypenuntergruppe (WTUG1) und zur zweiten Warentypengruppe (WTG2) ausgebildet ist und
- Bestimmen eines ersten Auftrags-Subteils (ATU1) des ersten Auftragsteils (AT1) ausgebildet ist, dessen zumindest eine Ware (WQ1', WZ1, WZ1') der ersten Warentypenuntergruppe (WTUG1) angehört und demnach mit einem Greifer der ersten Art automatisch handhabbar ist, und zum Bestimmen eines zweiten Auftrags-Subteils (ATU2) des ersten Auftragsteils (AT1) ausgebildet ist, dessen zumindest eine Ware (WQ2, WQ2', WZ2) der zweiten Warentypenuntergruppe (WTUG2) angehört und demnach nicht oder nur eingeschränkt mit dem Greifer der ersten Art, jedoch mit dem Greifer der zweiten Art automatisch handhabbar ist.

## Claims

1. A method for order-picking articles (WQ1', WQ2, WQ2', WZ1, WZ1', WZ2) from source loading aids (Q1, Q1', Q2, Q2') into or onto target loading aids (Z1, Z1', Z2, Z3) in a storage and order-picking system (1), comprising the steps

   a) provisioning the articles (WQ1', WQ2, WQ2', WZ1, WZ1', WZ2) in or on source loading aids (Q1, Q1', Q2, Q2') in a storage zone (L),
   b) acquiring orders (A, A1..A9) for order-picking articles (WQ1', WQ2, WQ2', WZ1, WZ1', WZ2) and determining the articles (WQ1', WQ2, WQ2', WZ1, WZ1', WZ2) required for these orders (A, A1..A9), wherein at least one order (A, A1..A9) of the orders (A, A1..A9) comprises multiple order lines (AZ) and wherein each order line (AZ) specifies at least one article (WQ1', WQ2, WQ2', WZ1, WZ1', WZ2) according to its type of article (WT1..WT3) and its number of pieces (n, n1..n3) to be order-picked,
   c) ascertaining the classification of the articles (WQ1', WQ2, WQ2', WZ1, WZ1', WZ2) required for the processing of said order in groups of types of article (WTG1..WTG3), each of which comprises multiple types of article (WT1..WT3), wherein a first group of types of article (WTG1) contains types of article (WT1..WT3) which can be handled automatically and a second group of types of article (WTG2) contains types of article (WT1..WT3) which cannot, or only to a limited extent, be handled automatically but can be handled manually,
   d) determining a first order part (AT1), whose at least one article (WQ1', WZ1, WZ1') belongs to the first group of types of article (WTG1) and can accordingly be handled automatically, and a second order part (AT2), whose at least one article (WQ2, WQ2', WZ2) belongs to the second group of types of article (WTG2) and can accordingly not, or only to a limited extent, be handled automatically but can be handled manually,
   e) retrieving a first source loading aid (Q1, Q1') with the at least one article (WQ1', WZ1, WZ1') of the first order part (AT1) from the storage zone (L) of the storage and order-picking system (1), transporting the first source loading aid (Q1, Q1') to a first automatic order-picking station (KA1, KA1'), provisioning the first source loading aid (Q1, Q1') at the first automatic order-picking station (KA1, KA1') and removing automatically the at least one article (WQ1', WZ1, WZ1') of the first order part (AT1) from the first source loading aid (Q1, Q1') at the first automatic order-picking station (KA1, KA1'),
   f) retrieving a second source loading aid (Q2, Q2') with the at least one article (WQ2, WQ2', WZ2) of the second order part (AT2) from the storage zone (L) of the storage and order-picking system (1), transporting the second source loading aid (Q2, Q2') to a first manual order-picking station (KM1, KM1'), provisioning the second source loading aid (Q2, Q2') at the first manual order-picking station (KM1, KM1') and removing manually the at least one article (WQ2, WQ2', WZ2) of the second order part (AT2) from the second source loading aid (Q2, Q2') at the first manual order-picking station (KM1, KM1') and
   g) depositing the at least one article (WQ1', WZ1, WZ1') of the first order part (AT1) and the at least one article (WQ2, WQ2', WZ2) of the second order part (AT2) into or onto a target loading aid (Z1, Z1', Z2, Z3)

**characterized in that**
the first source loading aid (Q1, Q1') with the at least one article (WQ1', WZ1, WZ1') of the first order part (AT1) is allocated to the second order part (AT2), transported to a first manual order-picking station (KM1, KM1') and provisioned there and then said at least one article (WQ1', WZ1, WZ1') of the second order part (AT2) is loaded manually into or onto a target loading aid (Z1, Z1', Z2) if a number of pieces (n, n1..n3) is specified in the respective order line (AZ) for the at least one article (WQ1', WZ1, WZ1') of the first order part (AT1) which exceeds a threshold value of number of pieces.

2. The method according to claim 1, **characterized in that** the at least one article (WQ1', WZ1, WZ1') of the first order part (AT1), in the step g), is loaded automatically into or onto a first target loading aid (Z1, Z1') at the first automatic order-picking station (KA1, KA1'), the first target loading aid (Z1, Z1') loaded with the at least one article (WQ1', WZ1, WZ1') of the first order part (AT1) is transported to the first manual order-picking station (KM1, KM1') and the at least one article (WQ2, WQ2', WZ2) of the second order part (AT2) is additionally loaded manually into the first target loading aid (Z1, Z1') at the first manual order-picking station (KM1, KM1').

3. The method according to claim 1, **characterized in that** the at least one article (WQ2, WQ2', WZ2) of the second order part (AT2), in the step g), is loaded manually into or onto a first target loading aid (Z1, Z1') at the first manual order-picking station (KM1, KM1'), the first target loading aid (Z1, Z1') loaded with the at least one article (WQ2, WQ2', WZ2) of the second order part (AT2) is transported to the first automatic order-picking station (KA1, KA1') and the at least one article (WQ1', WZ1, WZ1') of the first order part (AT1) is additionally loaded automatically into the first target loading aid (Z1, Z1') at the first automatic order-picking station (KA1, KA1').

4. The method according to claim 1, **characterized in that** the at least one article (WQ1', WZ1, WZ1') of the first order part (AT1), in the step g), is loaded automatically into or onto a first target loading aid (Z1, Z1') at the first automatic order-picking station (KA1, KA1'), the at least one article (WQ2, WQ2', WZ2) of the second order part (AT2) is loaded manually into or onto a second target loading aid (Z2) at the first manual order-picking station (KM1, KM1'), the first target loading aid (Z1, Z1') loaded with the at least one article (WQ1', WZ1, WZ1') of the first order part (AT1) and the second target loading aid (Z2) loaded with the at least one article (WQ2, WQ2', WZ2) of the second order part (AT2) are transported either to a second automatic order-picking station (KA2) or to a second manual order-picking station (KM2) and

   i) the at least one article (WQ2, WQ2', WZ2) of the second order part (AT2) is loaded automatically/manually into the first target loading aid (Z1, Z1') at the second automatic/manual order-picking station (KM2/KA2) or
   ii) the at least one article (WQ1', WZ1, WZ1') of the first order part (AT1) is loaded automatically/manually into the second target loading aid (Z2) at the second automatic/manual order-picking station (KM2/KA2).

5. The method according to claim 1, **characterized in that** the at least one article (WQ1', WZ1, WZ1') of the first order part (AT1), in the step g), is loaded automatically into or onto a first target loading aid (Z1, Z1') at the first automatic order-picking station (KA1, KA1'), the at least one article (WQ2, WQ2', WZ2) of the second order part (AT2) is loaded manually into or onto a second target loading aid (Z2) at the first manual order-picking station (KM1, KM1'), the first target loading aid (Z1, Z1') loaded with the at least one article (WQ1', WZ1, WZ1') of the first order part (AT1) and the second target loading aid (Z2) loaded with the at least one article (WQ2, WQ2', WZ2) of the second order part (AT2) are transported either to a second automatic order-picking station (KA2) or to a second manual order-picking station (KM2) and the at least one article (WQ1', WZ1, WZ1') of the first order part (AT1) as well as the at least one article (WQ2, WQ2', WZ2) of the second order part (AT2) are loaded automatically/manually into or onto a third target loading aid (Z3) at the second automatic/manual order-picking station (KM2/KA2).

6. The method according to any one of the claims 1 to 5, **characterized in that** types of article (WT1..WT3) in which an error rate (F, F1..F3) during automatic handling is smaller than or equal to a first threshold value (SW1) are allocated to the first group of types of article (WTG1) and types of article (WT1..WT3) in which an error rate (F, F1..F3) during automatic handling is larger than the first threshold value (SW1) are allocated to the second group of types of article (WTG2), wherein the quotient of the erroneous handling operations occurring during the order-picking divided by the total number of the handling operations is provided as error rate (F, F1..F3).

7. The method according to any one of the claims 1 to 6, **characterized in that** a third group of types of article (WTG3) is provided and that types of article (WT1..WT3) in which an error rate (F, F1..F3) during automatic handling is smaller than a first threshold value (SW1) are allocated to the first group of types of article (WTG1), types of article (WT1..WT3) in which an error rate (F, F1..F3) during automatic handling is larger than a second threshold value (SW2) are allocated to the second group of types of article (WTG2) and the remaining types of article (WT1..WT3), in which the error rate (F, F1..F3) is larger than or equal to the first threshold value (SW1) and smaller than or equal to the second threshold value (SW2), are allocated to a third group of types of article (WTG3), wherein articles (WQ1', WQ2, WQ2', WZ1, WZ1', WZ2) of the third group of types of article (WTG3) in an order (A, A1..A9) can be assigned optionally to the first order part (AT1) or to the second order part (AT2).

8. The method according to any one of the claims 1 to 7, **characterized in that** an article (WQ1', WQ2, WQ2', WZ1, WZ1', WZ2) of the first order part (AT1) is assigned to the second order part (AT2) and conveyed to a first manual order-picking station (KM1, KM1') if the number of erroneous handling operations of this article (WQ1', WQ2, WQ2', WZ1, WZ1', WZ2) at the first automatic order-picking station (KA1, KA1') exceeds an erroneous-handling threshold value.

9. The method according to any one of the claims 6 to 8, **characterized in that** procedures at the first automatic order-picking station (KA1, KA1') are monitored by a checking system, and a handling is classified as erroneous handling by the checking system if the handling is executed in an unplanned manner or is aborted and fails.

10. The method according to any one of the claims 6 to 9, **characterized in that** the first threshold value (SW1) is ascertained on the basis of a capacity of a group of order-picking stations (KA1, KA1', KM1, KM1') which comprises at least one first automatic order-picking station (KA1, KA1') and at least one first manual order-picking station (KM1, KM1') and which is available in a specifiable time period for the execution of multiple orders (A, A1..A9).

11. The method according to claim 10, **characterized in that**

- multiple orders (A, A1..A9) for order-picking articles (WQ1', WQ2, WQ2', WZ1, WZ1', WZ2) are acquired and the articles (WQ1', WQ2, WQ2', WZ1, WZ1', WZ2) required for these orders (A, A1..A9) are determined,
- for the execution of these orders (A, A1..A9) in a specifiable time period, a first required capacity of the first automatic order-picking stations (KA1, KA1') of the group for the order-picking of the articles (WQ1', WQ2, WQ2', WZ1, WZ1', WZ2) of the first group of types of article (WTG1) and, in this time period, a second required capacity of the first manual order-picking stations (KM1, KM1') of the group for the order-picking of the articles (WQ1', WQ2, WQ2', WZ1, WZ1', WZ2) of the second group of types of article (WTG2) is computed for various first threshold values (SW1),
- a first available capacity of the first automatic order-picking stations (KA1, KA1') of the group available in this time period and a second available capacity of the first manual order-picking stations (KM1, KM1') of the group available in this time period is ascertained and
- that first threshold value (SW1) for the execution of said orders (A, A1..A9) is selected for which the smallest deviation between the first required capacity and the first available capacity as well as between the second required capacity and the second available capacity is ascertained.

12. The method according to any one of the claims 1 to 11, **characterized in that** a partial quantity (TM) of orders to be executed (A, A1..A9) is ascertained on the basis of a capacity of a group of order-picking stations (KA1, KA1', KM1, KM1') which comprises at least one first automatic order-picking station (KA1, KA1') and at least one first manual order-picking station (KM1, KM1') and which is available in a specifiable time period for the execution of this partial quantity (TM) of orders (A, A1..A9) to be executed.

13. The method according to claim 12, **characterized in that**

- multiple orders (A, A1..A9) for order-picking articles (WQ1', WQ2, WQ2', WZ1, WZ1', WZ2) are acquired and the articles (WQ1', WQ2, WQ2', WZ1, WZ1', WZ2) required for these orders (A, A1..A9) are determined,
- for the execution of these orders (A, A1..A9), a first required capacity of the first automatic order-picking stations (KA1, KA1') of the group for the order-picking of the articles (WQ1', WQ2, WQ2', WZ1, WZ1', WZ2) of the first group of types of article (WTG1) and a second required capacity of the first manual order-picking stations (KM1, KM1') of the group for the order-picking of the articles (WQ1', WQ2, WQ2', WZ1, WZ1', WZ2) of the second group of types of article (WTG2) required in this time period is computed for various partial quantities (TM) of said orders (A, A1..A9),
- a first available capacity of the first automatic order-picking stations (KA1, KA1') of the group available in a specifiable time period and a second available capacity of the first manual order-picking stations (KM1, KM1') of the group available in this time period is ascertained and
- that partial quantity (TM) of said orders (A, A1..A9) is executed in the selected time period for which the smallest deviation between the first required capacity and the first available capacity as well as between the second required capacity and the second available capacity is ascertained.

14. The method according to claim 13, **characterized in that** said multiple orders (A, A1..A9) are sorted on the basis of a sorting parameter and an even distribution with regard to the sorting parameter is aimed at when determining a partial quantity (TM), wherein

- a number of pieces (n, n1..n3) of articles (WQ1', WQ2, WQ2', WZ1, WZ1', WZ2) of the first group of types of article (WTG1) in an order is provided as sorting parameter or
- a relative portion of articles (WQ1', WQ2, WQ2', WZ1, WZ1', WZ2) of the first group of types of article (WTG1) in an order is provided as sorting parameter, which is computed by division of the number of pieces (n, n1..n3) of articles (WQ1', WQ2, WQ2', WZ1, WZ1', WZ2) of the first group of types of article (WTG1) of an order (A, A1..A9) by the number of pieces (n, n1..n3) of all articles (WQ1', WQ2, WQ2', WZ1, WZ1', WZ2) of this order (A, A1..A9).

15. The method according to any one of the claims 1 to 14, **characterized in that** the first source loading aid (Q1, Q1') with the at least one article (WQ1', WZ1, WZ1') of the first order part (AT1) is allocated to the second order part (AT2), transported to a first manual order-picking station (KM1, KM1') and provisioned there and then said at least one article (WQ1', WZ1, WZ1') of the second order part is loaded manually into or onto a first or second target loading aid (Z1, Z1', Z2)

- if the depositing of multiple articles (WQ2, WQ2', WZ2) of the second group of types of article (WTG2) of the second order part (AT2) into the first or second target loading aid (Z1, Z1', Z2) at the first manual order-picking station (KM1, KM1') takes place more swiftly than the depositing of the same number of articles (WQ1', WZ1, WZ1') of the first order part (AT1) into the first target loading aid (Z1, Z1') at the first automatic order-picking station (KA1, KA1') or
- if all articles (WQ2, WQ2', WZ2) of the second group of types of article (WTG2) of the second order part (AT2) have already been loaded into first or second target loading aids (Z1, Z1', Z2) at the first manual order-picking station (KM1, KM1').

16. The method according to any one of the claims 1 to 15, **characterized in**

- **that** the provisioning of multiple articles (WQ1', WZ1, WZ1') of the first order part (AT1) at the first automatic order-picking station (KA1, KA1') takes place in a manner sorted according to the number of pieces (n, n1..n3) specified in the order lines (AZ) for the articles (WQ1', WZ1, WZ1') of the first order part (AT1), wherein the provisioning of the articles (WQ1', WZ1, WZ1') of the first order part (AT1) takes place from low toward ascending numbers of pieces (n, n1..n3) and
- **that** the provisioning of multiple articles (WQ2, WQ2', WZ2) of the second order part (AT2) at the first manual order-picking station (KM1) takes place in a manner sorted according to the number of pieces (n, n1..n3) specified in the order lines (AZ) for the articles (WQ2, WQ2', WZ2) of the second order part (AT2), wherein the provisioning of the articles (WQ2, WQ2', WZ2) of the second order part (AT2) takes place from high toward descending numbers of pieces (n, n1..n3).

17. The method according to any one of the claims 1 to 15, **characterized in**

- **that** the removing of multiple articles (WQ1', WZ1, WZ1') of the first order part (AT1) from at least one first source loading aid (Q1, Q1') and the depositing of these articles (WQ1', WZ1, WZ1') into or onto at least one first target loading aid (Z1, Z1') takes place in a manner sorted according to the number of pieces (n, n1..n3) specified in the order lines (AZ) for the articles (WQ1', WZ1, WZ1') of the first order part (AT1), wherein the removing and depositing takes place from low toward ascending numbers of pieces (n, n1..n3) and
- **that** the removing of multiple articles (WQ2, WQ2', WZ2) of the second order part (AT2) from at least one second source loading aid (Q2, Q2') and the depositing of these articles (WQ2, WQ2', WZ2) into or onto at least one first or second target loading aid (Z1, Z1', Z2) takes place in a manner sorted according to the number of pieces (n, n1..n3) specified in the order lines (AZ) for the articles (WQ2, WQ2', WZ2) of the second order part (AT2), wherein the removing and depositing takes place from high toward descending numbers of pieces (n, n1..n3).

18. The method according to any one of the claims 1 to 15, **characterized in**

- **that** an error rate (F, F1..F3) is assigned to a type of article (WT1..WT3),
- **that** the provisioning of multiple articles (WQ1', WZ1, WZ1') of the first order part (AT1) at the first automatic order-picking station (KA1, KA1') takes place in a manner sorted according to the error rate (F, F1..F3) specified in the order lines (AZ) for the articles (WQ1', WZ1, WZ1') of the first order part (AT1) or sorted according to a parameter which is derived from said error rate (F, F1..F3) and the number of pieces (n, n1..n3) specified in the order lines (AZ) for the articles (WQ2, WQ2', WZ2) of the first order part (AT1), wherein the provisioning of the articles (WQ1', WZ1, WZ1') of the first order part (AT1), in case of a sorting according to the error rate (F, F1..F3), takes place from low toward ascending error rates (F, F1..F3) or, in case of a sorting according to said parameter, takes place from low toward ascending parameters and
- **that** the provisioning of multiple articles (WQ2, WQ2', WZ2) of the second order part (AT2) at the first manual order-picking station (KM1) takes place in a manner sorted according to the error rate (F, F1..F3) specified in the order lines (AZ) for the articles (WQ2, WQ2', WZ2) of the second order part (AT2) or sorted according to a parameter which is derived from said error rate (F, F1..F3) and the number of pieces (n, n1..n3) specified in the order lines (AZ) for the articles (WQ2, WQ2', WZ2) of the second order part (AT2), wherein the provisioning of the articles (WQ2, WQ2', WZ2) of the second order part (AT2), in case of a sorting according to the error rate (F, F1..F3), takes place from high toward descending error rates (F, F1..F3) or, in case of a sorting according to the parameter, takes place from high toward descending parameters.

19. The method according to any one of the claims 1 to 15 or according to claim 18, **characterized in**

- **that** an error rate (F, F1..F3) is assigned to a type of article (WT1..WT3),
- **that** the removing of multiple articles (WQ1', WZ1, WZ1') of the first order part (AT1) from at least one first source loading aid (Q1, Q1') and the depositing of these articles (WQ1', WZ1, WZ1') into or onto at least one first target loading aid (Z1, Z1') takes place in a manner sorted according to the error rate (F, F1..F3) specified in the order lines (AZ) for the articles (WQ1', WZ1, WZ1') of the first order part (AT1) or sorted according to a parameter which is derived from said error rate (F, F1..F3) and the number of pieces (n, n1..n3) specified in the order lines (AZ) for the articles (WQ2, WQ2', WZ2) of the first order part (AT1), wherein the removing and depositing, in case of a sorting according to the error rate (F, F1..F3), takes place from low toward ascending error rates (F, F1..F3) or, in case of a sorting according to said parameter, takes place from low toward ascending parameters and
- **that** the removing of multiple articles (WQ2, WQ2', WZ2) of the second order part (AT2) from at least one second source loading aid (Q2, Q2') and the depositing of these articles (WQ2, WQ2', WZ2) into or onto at least one first or second target loading aid (Z1, Z1', Z2) takes place in a manner sorted according to the error rate (F, F1..F3) specified in the order lines (AZ) for the articles (WQ2, WQ2', WZ2) of the second order part (AT2) or sorted according to a parameter which is derived from said error rate (F, F1..F3) and the number of pieces (n, n1..n3) specified in the order lines (AZ) for the articles (WQ2, WQ2', WZ2) of the second order part (AT2), wherein the removing and depositing, in case of a sorting according to the error rate (F, F1..F3), takes place from high toward descending error rates (F, F1..F3) or, in case of a sorting according to the parameter, takes place from high toward descending parameters.

20. The method according to any one of the claims 1 to 19, **characterized in that**

- the first group of types of article (WTG1) comprises a first subgroup of types of article (WTUG1) which contains types of article (WT1..WT3) which can be handled automatically with a gripper of a first kind and comprises a second subgroup of types of article (WTUG2) which contains types of article (WT1..WT3) which cannot, or only to a limited extent, be handled automatically with the gripper of the first kind but can be handled automatically with a gripper of a different, second kind,
- in the step c), the classification of the articles (WQ1', WQ2, WQ2', WZ1, WZ1', WZ2) required for the processing of said order in the first subgroup of types of article (WTUG1) and in the second subgroup of types of article (WTUG2) is additionally ascertained and
- in the step d), a first order subpart (ATU1) of the first order part (AT1) is additionally determined whose at least one article (WQ1', WZ1, WZ1') belongs to the first subgroup of types of article (WTUG1) and can accordingly be handled automatically with a gripper of the first kind and a second order subpart (ATU2) of the first order part (AT1) is determined whose at least one article (WQ2, WQ2', WZ2) belongs to the second subgroup of types of article (WTUG2) and can accordingly not, or only to a limited extent, be handled automatically with the gripper of the first kind but can be handled automatically with the gripper of the second kind.

21. A storage and order-picking system (1) for order-picking articles (WQ1', WQ2, WQ2', WZ1, WZ1', WZ2) from source loading aids (Q1, Q1', Q2, Q2') into or onto target loading aids (Z1, Z1', Z2, Z3), comprising

a storage zone (L) for provisioning the articles (WQ1', WQ2, WQ2', WZ1, WZ1', WZ2) in or on source loading aids (Q1, Q1', Q2, Q2'),
a control system (15) for

- acquiring orders (A, A1..A9) for order-picking articles (WQ1', WQ2, WQ2', WZ1, WZ1', WZ2) and determining the articles (WQ1', WQ2, WQ2', WZ1, WZ1', WZ2) required for these orders (A, A1..A9), wherein at least one order (A, A1..A9) of the orders (A, A1..A9) comprises multiple order lines (AZ) and wherein each order line (AZ) specifies at least one article (WQ1', WQ2, WQ2', WZ1, WZ1', WZ2) according to its type of article (WT1..WT3) and its number of pieces to be order-picked (n, n1..n3),
- ascertaining the classification of the articles (WQ1', WQ2, WQ2', WZ1, WZ1', WZ2) required for the processing of said order in groups of types of article (WTG1..WTG3), each of which comprises multiple types of article (WT1..WT3), wherein a first group of types of article (WTG1) contains types of article (WT1..WT3) which can be handled automatically and a second group of types of article (WTG2) contains types of article (WT1..WT3) which cannot, or only to a limited extent, be handled automatically but can be handled manually and
- determining a first order part (AT1), whose at least one article (WQ1', WZ1, WZ1') belongs to the first group of types of article (WTG1) and can accordingly be handled automatically, and a second order part (AT2), whose at least one article (WQ2, WQ2', WZ2) belongs to the second group of types of article (WTG2) and can accordingly not, or only to a limited extent, be handled automatically but can be handled manually, and

a conveying system for

- retrieving a first source loading aid (Q1, Q1') with the at least one article (WQ1', WZ1, WZ1') of the first order part (AT1) from the storage zone (L) of the storage and order-picking system (1), transporting the first source loading aid (Q1, Q1') to a first automatic order-picking station (KA1, KA1'), provisioning the first source loading aid (Q1, Q1') at the first automatic order-picking station (KA1, KA1'), at which the at least one article (WQ1', WZ1, WZ1') of the first order part (AT1) is removable automatically from the first source loading aid (Q1, Q1'), and
- retrieving a second source loading aid (Q2, Q2') with the at least one article (WQ2, WQ2', WZ2) of the second order part (AT2) from the storage zone (L) of the storage and order-picking system (1), transporting the second source loading aid (Q2, Q2') to a first manual order-picking station (KM1, KM1') and provisioning the second source loading aid (Q2, Q2') at the first manual order-picking station (KM1, KM1'), at which the at least one article (WQ2, WQ2', WZ2) of the second order part (AT2) is removable manually from the second source loading aid (Q2, Q2'),

wherein the first automatic order-picking station (KA1, KA1') is configured for depositing automatically the at least one article (WQ1', WZ1, WZ1') of the first order part (AT1) and the first manual order-picking station (KM1, KM1') is configured for depositing manually the at least one article (WQ2, WQ2', WZ2) of the second order part (AT2) into or onto a target loading aid (Z1, Z1', Z2, Z3), **characterized in that**
the control system (15) is additionally configured for allocating the first source loading aid (Q1, Q1') with the at least one article (WQ1', WZ1, WZ1') of the first order part (AT1) to the second order part (AT2), transporting it to a first manual order-picking station (KM1, KM1') and provisioning it there and then instructing a manual loading of said at least one article (WQ1', WZ1, WZ1') of the second order part into or onto a target loading aid (Z1, Z1', Z2) if a number of pieces (n, n1..n3) is specified in the respective order line (AZ) for the at least one article (WQ1', WZ1, WZ1') of the first order part (AT1) which exceeds a threshold value of number of pieces.

22. The storage and order-picking system (1) according to claim 21, **characterized in that** the conveying system (4, 7..11) is configured

- for the transport of the first source loading aids (Q1, Q1') between the storage zone (L) and the first automatic order-picking station (KA1, KA1') and/or
- for the transport of the second source loading aids (Q2, Q2') between the storage zone (L) and the first manual order-picking station (KM1, KM1') and/or
- for the transport of the first target loading aids (Z1, Z1') between the first automatic order-picking station (KA1, KA1') and the first manual order-picking station (KM1, KM1') or between the first automatic order-picking station (KA1, KA1') and the second automatic or manual order-picking station (KA2, KM2) and/or

- for the transport of the second target loading aids (Z2) between the first manual order-picking station (KM1, KM1') and the second automatic or manual order-picking station (KA2, KM2) and/or
- for the transport of the first target loading aids (Z1, Z1') from the first automatic order-picking station (KA1, KA1'), from the first manual order-picking station (KM1, KM1') or from the second automatic or manual order-picking station (KA2, KM2) and/or
- for the transport of the second target loading aids (Z2) from the second automatic or manual order-picking station (KA2, KM2) and/or
- for the transport of the third target loading aids (Z3) from the second automatic or manual order-picking station (KA2, KM2).

23. The storage and order-picking system (1) according to claim 21 or 22, **characterized in that** a mechanical device for the automatic depositing of the entire content

- of the first target loading aid (Z1, Z1') into the second target loading aid (Z2) and/or
- of the first target loading aid (Z1, Z1') into the third target loading aid (Z3) and/or
- of the second target loading aid (Z2) into the first target loading aid (Z1, Z1') and/or
- of the second target loading aid (Z2) into the third target loading aid (Z3) all at once is provided at the second automatic order-picking station (KA2).

24. The storage and order-picking system (1) according to any one of the claims 21 to 23, **characterized in that**

- the first group of types of article (WTG1) comprises a first subgroup of types of article (WTUG1), which contains types of article (WT1..WT3) which can be handled automatically with a gripper of a first kind, and comprises a second subgroup of types of article (WTUG2), which contains types of article (WT1..WT3) which cannot, or only to a limited extent, be handled automatically with the gripper of the first kind but can be handled automatically with a gripper of a different, second kind, and

the control system (15) is additionally configured for

- ascertaining the classification of the articles (WQ1', WQ2, WQ2', WZ1, WZ1', WZ2) required for the processing of said order in the first subgroup of types of article (WTUG1) and in the second group of types of article (WTG2) and
- determining a first order subpart (ATU1) of the first order part (AT1), whose at least one article (WQ1', WZ1, WZ1') belongs to the first subgroup of types of article (WTUG1) and can accordingly be handled automatically with a gripper of the first kind, and is configured for determining a second order subpart (ATU2) of the first order part (AT1), whose at least one article (WQ2, WQ2', WZ2) belongs to the second subgroup of types of article (WTUG2) and can accordingly not, or only to a limited extent, be handled automatically with the gripper of the first kind but can be handled automatically with the gripper of the second kind.

**Revendications**

1. Procédé de préparation de commandes d'objets (WQ1', WQ2, WQ2', WZ1, WZ1', WZ2), d'équipements de chargement sources (Q1, Q1', Q2, Q2') vers ou sur des équipements de chargement cibles (Z1, Z1', Z2, Z3) dans un système de stockage et de préparation de commandes (1), comprenant les étapes suivantes :

a) mise à disposition des objets (WQ1', WQ2, WQ2', WZ1, WZ1', WZ2) dans ou sur des équipements de chargement sources (Q1, Q1', Q2, Q2') dans une zone de stockage (L),
b) saisie des tâches (A, A1... A9) de préparation de commande d'objets (WQ1', WQ2, WQ2', WZ1, WZ1', WZ2) et détermination des objets (WQ1', WQ2, WQ2', WZ1, WZ1', WZ2) nécessaires pour ces tâches (A, A1... A9), dans lequel au moins une tâche (A, A1... A9) parmi les tâches (A, A1... A9) comprend plusieurs lignes de tâche (AZ) et dans lequel chaque ligne de tâche (AZ) spécifie au moins un objet (WQ1', WQ2, WQ2', WZ1, WZ1', WZ2) selon le type d'objets (WT1... WT3) et le nombre de pièces à préparer (n, n1... n3),
c) détermination de l'appartenance des objets (WQ1', WQ2, WQ2', WZ1, WZ1', WZ2) nécessaires pour le traitement de la tâche mentionnée à des groupes de types d'objets (WTG1... WTG3), qui comprennent chacun plusieurs types d'objets (WT1.. WT3), dans lequel un premier groupe de types d'objets (WTG1) contient des types d'objets (WT1... WT3) qui peuvent être manipulés automatiquement, et un deuxième groupe de types d'objets (WTG2) contient des types d'objets (WT1... WT3) qui ne peuvent pas être manipulés automatiquement ou de manière seulement limitée, mais qui peuvent être manipulés manuellement,

d) détermination d'une première partie de tâche (AT1) dont au moins un objet (WQ1', WZ1, WZ1') appartient au premier groupe de types d'objets (WTG1) et peut donc être manipulé automatiquement, et d'une deuxième partie de tâche (AT2), dont au moins un objet (WQ2, WQ2', WZ2) appartient au deuxième groupe de types d'objets (WTG2) et ne peut pas être manipulé automatiquement ou de manière seulement limitée, mais peut être manipulé manuellement,

e) sortie d'un premier équipement de chargement source (Q1, Q1') avec l'au moins un objet (WQ1', WZ1, WZ1') de la première partie de tâche (AT1) hors de la zone de stockage (L) du système de stockage et de préparation de commandes (1), transport du premier équipement de chargement source (Q1, Q1') vers un premier poste de préparation de commandes automatique (KA1, KA1'), mise à disposition du premier équipement de chargement source (Q1, Q1') sur le premier poste de préparation de commandes automatique (KA1, KA1') et retrait automatique de l'au moins un objet (WQ1', WZ1, WZ1') de la première partie de tâche (AT1) du premier équipement de chargement source (Q1, Q1') sur le premier poste de préparation de commandes automatique (KA1, KA1'),

f) sortie d'un deuxième équipement de chargement source (Q2, Q2') avec l'au moins un objet (WQ2, WQ2', WZ2) de la deuxième partie de tâche (AT2) hors de la zone de stockage (L) du système de stockage et de préparation de commandes (1), transport du deuxième équipement de chargement source (Q2, Q2') vers un premier poste de préparation de commandes manuel (KM1, KM1'), mise à disposition du deuxième équipement de chargement source (Q2, Q2') sur le premier poste de préparation de commandes manuel (KM1, KM1') et retrait manuel de l'au moins un objet (WQ2, WQ2', WZ2) de la deuxième partie de tâche (AT2) du deuxième équipement de chargement source (Q2, Q2') sur le premier poste de préparation de commandes manuel (KM1, KM1') et

g) dépôt de l'au moins un objet (WQ1', WZ1, WZ1') de la première partie de tâche (AT1) et de l'au moins un objet (WQ2, WQ2', WZ2) de la deuxième partie de tâche (AT2) dans ou sur un équipement de chargement cible (Z1, Z1', Z2, Z3),

**caractérisé en ce que**
le premier équipement de chargement source (Q1, Q1') avec l'au moins un objet (WQ1', WZ1, WZ1') de la première partie de tâche (AT1) est affecté à la deuxième partie de tâche (AT2), transporté vers un premier poste de préparation de commandes manuel (KM1, KM1') et y est mis à disposition puis l'au moins un objet mentionné (WQ1', WZ1, WZ1') de la deuxième partie de tâche est chargé manuellement dans ou sur un équipement de chargement cible (Z1, Z1', Z2) lorsque, pour l'au moins un objet (WQ1', WZ1, WZ1') de la première partie de tâche (AT1), dans la ligne de tâche (AZ) concernée, un nombre de pièces (n, n1... n3) indiqué dépasse une valeur seuil de nombre de pièces.

2. Procédé selon la revendication 1, **caractérisé en ce que** l'au moins un objet (WQ1', WZ1, WZ1') de la première partie de tâche (AT1) est chargé automatiquement, à l'étape g), au niveau du premier poste de préparation de commandes automatique (KA1, KA1'), dans ou sur un premier équipement de chargement cible (Z1, Z1'), le premier équipement de chargement cible (Z1, Z1'), chargé avec l'au moins un objet (WQ1', WZ1, WZ1') de la première partie de tâche (AT1), est transporté vers le premier poste de préparation de commandes manuel (KM1, KM1') et l'au moins un objet (WQ2, WQ2', WZ2) de la deuxième partie de tâche (AT2) est en outre chargé manuellement, au niveau du premier poste de préparation de commandes manuel (KM1, KM1'), dans le premier équipement de chargement cible (Z1, Z1').

3. Procédé selon la revendication 1, **caractérisé en ce que** l'au moins un objet (WQ2, WQ2', WZ2) de la deuxième partie de tâche (AT2) est chargé manuellement, à l'étape g), au niveau du premier poste de préparation de commandes manuel (KM1, KM1'), dans ou sur un premier équipement de chargement cible (Z1, Z1'), le premier équipement de chargement cible (Z1, Z1'), chargé avec l'au moins un objet (WQ2, WQ2', WZ2) de la deuxième partie de tâche (AT2), est transporté vers le premier poste de préparation de commandes automatique (KA1, KA1') et l'au moins un objet (WQ1', WZ1, WZ1') de la première partie de tâche (AT1) est en outre chargé automatiquement, au niveau du premier poste de préparation de commandes automatique (KA1, KA1'), dans le premier équipement de chargement cible (Z1, Z1').

4. Procédé selon la revendication 1, **caractérisé en ce que** l'au moins un objet (WQ1', WZ1, WZ1') de la première partie de tâche (AT1) est chargé automatiquement, à l'étape g), au niveau du premier poste de préparation de commandes automatique (KA1, KA1'), dans ou sur un premier équipement de chargement cible (Z1, Z1'), l'au moins un objet (WQ2, WQ2', WZ2) de la deuxième partie de tâche (AT2) est chargé manuellement, au niveau du premier poste de préparation de commandes manuel (KM1, KM1'), dans ou sur un deuxième équipement de chargement cible (Z2), le premier équipement de chargement cible (Z1, Z1'), chargé avec l'au moins un objet (WQ1', WZ1, WZ1') de la première partie de tâche (AT1) et le deuxième équipement de chargement cible (Z2), chargé avec l'au moins un objet (WQ2, WQ2', WZ2) de la deuxième partie de tâche (AT2), sont transportés soit vers un deuxième poste de préparation de commandes automatique (KA2) soit vers un deuxième poste de préparation de commande manuel (KM2) et

i) l'au moins un objet (WQ2, WQ2', WZ2) de la deuxième partie de tâche (AT2) est chargé automatiquement/manuellement, au niveau du deuxième poste de préparation de commande automatique/manuel (KM2/KA2), dans le premier équipement de chargement cible (Z1, Z1') ou

ii) l'au moins un objet (WQ1', WZ1, WZ1') de la première partie de tâche (AT1) est chargé automatiquement/manuellement, au niveau du deuxième poste de préparation de commande automatique/manuel (KM2/KA2), dans le deuxième équipement de chargement cible (Z2).

5. Procédé selon la revendication 1, **caractérisé en ce que** l'au moins un objet (WQ1', WZ1, WZ1') de la première partie de tâche (AT1) est chargé automatiquement, à l'étape g), au niveau du premier poste de préparation de commandes automatique (KA1, KA1'), dans ou sur un premier équipement de chargement cible (Z1, Z1'), l'au moins un objet (WQ2, WQ2', WZ2) de la deuxième partie de tâche (AT2) est chargé manuellement, au niveau du premier poste de préparation de commandes manuel (KM1, KM1'), dans ou sur un deuxième équipement de chargement cible (Z2), le premier équipement de chargement cible (Z1, Z1'), chargé avec l'au moins un objet (WQ1', WZ1, WZ1') de la première partie de tâche (AT1) et le deuxième équipement de chargement cible (Z2), chargé avec l'au moins un objet (WQ2, WQ2', WZ2) de la deuxième partie de tâche (AT2), sont transportés soit vers un deuxième poste de préparation de commandes automatique (KA2) soit vers un deuxième poste de préparation de commande manuel (KM2) et l'au moins un objet (WQ1', WZ1, WZ1') de la première partie de tâche (AT1) ainsi que l'au moins un objet (WQ2, WQ2', WZ2) de la deuxième partie de tâche (AT2) sont chargés automatiquement/manuellement, au niveau du deuxième poste de préparation de commande automatique/manuel (KM2/KA2), dans ou sur un troisième équipement de chargement cible (Z3).

6. Procédé selon l'une des revendications 1 à 5, **caractérisé en ce que** les types d'objets (WT1... WT3) pour lesquels un taux d'erreur (F, F1... F3) lors d'une manipulation automatique est inférieur ou égal à une première valeur seuil (SW1) sont classés dans le premier groupe de types d'objets (WTG1) et les types d'objets (WT1... WT3) pour lesquels un taux d'erreur (F, F1... F3) lors d'une manipulation automatique est supérieur à la première valeur seuil (SW1) sont classés dans le deuxième groupe de types d'objets (WTG2), dans lequel, le taux d'erreur (F, F1... F3) est le rapport entre les manipulations erronées survenant lors de la préparation de commandes et le nombre total de manipulations.

7. Procédé selon l'une des revendications 1 à 6, **caractérisé en ce qu'**un troisième groupe de types d'objets (WTG3) est prévu et **en ce que** les types d'objets (WT1... WT3) pour lesquels un taux d'erreur (F, F1... F3) lors d'une manipulation automatique est inférieur à une première valeur seuil (SW1) sont classés dans le premier groupe de types d'objets (WTG1), les types d'objets (WT1... WT3) pour lesquels un taux d'erreur (F, F1... F3) lors d'une manipulation automatique est supérieur à une deuxième valeur seuil (SW2) sont classés dans le deuxième groupe de types d'objets (WTG2) et les autres types d'objets (WT1... WT3) pour lesquels le taux d'erreur (F, F1... F3) lors d'une manipulation automatique est supérieure ou égal à la première valeur seuil (SW1) et inférieur ou égal à la deuxième valeur seuil (SW2) sont classés dans le troisième groupe de types d'objets (WTG3), dans lequel les objets (WQ1', WQ2, WQ2', WZ1, WZ1', WZ2) du troisième groupe de types d'objets (WTG3) peuvent être attribuées, dans une tâche (A, A1... A9), soit à la première partie de tâche (AT1) soit à la deuxième partie de tâche (AT2).

8. Procédé selon l'une des revendications 1 à 7, **caractérisé en ce qu'**un objet (WQ1', WQ2, WQ2', WZ1, WZ1', WZ2) de la première partie de tâche (AT1) est attribué à la deuxième partie de tâche (AT2) et est convoyé vers un premier poste de préparation de commandes manuel (KM1, KM1') lorsque le nombre de manipulations erronées de cet objet (WQ1', WQ2, WQ2', WZ1, WZ1', WZ2) au niveau du premier poste de préparation de commandes automatique (KA1, KA1') dépasse une valeur de manipulations erronées.

9. Procédé selon l'une des revendications 6 à 8, **caractérisé en ce que** les processus au niveau du premier poste de préparation de commandes automatique (KA1, KA1') sont surveillés par un système de contrôle et une manipulation du système de contrôle est classifié comme une manipulation erronée lorsque la manipulation est effectuée ou interrompue de manière non planifiée et a échoué.

**10.** Procédé selon l'une des revendications 6 à 9, **caractérisé en ce que** la première valeur seuil (SW1) est déterminée à l'aide d'une capacité d'un groupe de postes de préparation de commandes (KA1, KA1', KM1, KM1') qui comprend au moins un premier poste de préparation de commandes automatique (KA1, KA1') et au moins un premier poste de préparation de commandes manuel (KM1, KM1') et qui est disponible pour l'exécution de plusieurs tâches (A, A1... A9) dans une période prédéterminée.

**11.** Procédé selon la revendication 10, **caractérisé en ce que**

- plusieurs tâches (A, A1... A9) pour la préparation de commandes d'objets (WQ1', WQ2, WQ2', WZ1, WZ1', WZ2) sont saisies et les objets (WQ1', WQ2, WQ2', WZ1, WZ1', WZ2) nécessaires pour ces tâches (A, A1... A9) sont déterminés,
- une première capacité du premier poste de préparation de commandes automatique (KA1, KA1') du groupe pour la préparation de commande des objets (WQ1', WQ2, WQ2', WZ1, WZ1', WZ2) du premier groupe de types d'objets (WTG1), nécessaire pour l'exécution de ces tâches (A, A1... A9) dans une période prédéterminée, et une deuxième capacité du premier poste de préparation de commandes manuel (KM1, KM1') du groupe pour la préparation de commande des objets (WQ1', WQ2, WQ2', WZ1, WZ1', WZ2) du deuxième groupe de types d'objets (WTG2) sont calculées pour différentes premières valeurs seuils (SW1),
- une première capacité du premier poste de préparation de commandes automatique (KA1, KA1') du groupe dans cette période et une deuxième capacité disponible du premier poste de préparation de commandes manuel (KM1, KM1') du groupe, disponibles dans cette période, sont déterminées et
- la première valeur seuil (SW1) qui est choisie pour l'exécution des tâches (A, A1... A9) mentionnées est celle pour laquelle l'écart le plus faible est déterminé entre la première capacité nécessaire et la première capacité disponible ainsi qu'entre la deuxième capacité nécessaire et la deuxième capacité disponible.

**12.** Procédé selon l'une des revendications 1 à 11, **caractérisé en ce qu'**une quantité partielle (TM) de tâches à effectuer (A, A1... A9) est déterminée à l'aide d'une capacité d'un groupe de postes de préparation de commandes (KA1, KA1', KM1, KM1'), qui comprend au moins un premier poste de préparation de commandes automatique (KA1, KA1') et un premier poste de préparation de commandes manuel (KM1, KM1') et qui est disponible pour l'exécution de cette quantité partielle (TM) de tâches à effectuer (A, A1... A9) dans une période prédéterminée.

**13.** Procédé selon la revendication 12, **caractérisé en ce que**

- plusieurs tâches (A, A1... A9) sont saisies pour la préparation de commandes d'objets (WQ1', WQ2, WQ2', WZ1, WZ1', WZ2) et les objets (WQ1', WQ2, WQ2', WZ1, WZ1', WZ2) nécessaires pour ces tâches (A, A1... A9) sont déterminés,
- une première capacité du premier poste de préparation de commandes automatique (KA1, KA1') du groupe pour la préparation de commande des objets (WQ1', WQ2, WQ2', WZ1, WZ1', WZ2) du premier groupe de types d'objets (WTG1), nécessaire pour l'exécution de ces tâches (A, A1... A9) dans une période prédéterminée, et une deuxième capacité du premier poste de préparation de commandes manuel (KM1, KM1') du groupe pour la préparation de commande des objets (WQ1', WQ2, WQ2', WZ1, WZ1', WZ2) du deuxième groupe de types d'objets (WTG2) dans cette période sont calculées pour différentes quantités partielles (TM) des tâches mentionnées (A, A1... A9),
- une première capacité disponible du premier poste de préparation de commandes automatique (KA1, KA1') du groupe dans une période prédéterminée et une deuxième capacité disponible du premier poste de préparation de commandes manuel (KM1, KM1') du groupe, disponibles dans cette période, sont déterminées et
- la quantité partielle (TM) de tâches mentionnées (A, A1... A9) qui sont exécutées dans la période choisie est celle pour laquelle l'écart le plus faible est déterminé entre la première capacité nécessaire et la première capacité disponible ainsi qu'entre la deuxième capacité nécessaire et la deuxième capacité disponible.

**14.** Procédé selon la revendication 13, **caractérisé en ce que** les plusieurs tâches mentionnées (A, A1... A9) sont triées à l'aide d'un paramètre de tri et, lors de la détermination d'une quantité partielle (TM), une répartition uniforme en ce qui concerne le paramètre de tri est visée, dans lequel le paramètre de tri est

- un nombre (n, n1... n3) d'objets (WQ1', WQ2, WQ2', WZ1, WZ1', WZ2) du premier groupe de types d'objets (WTG1) existant dans une tâche ou
- une part relative d'objets (WQ1', WQ2, WQ2', WZ1, WZ1', WZ2) du premier groupe de types d'objets (WTG1) existant dans une tâche, qui est calculée en divisant le nombre (n, n1... n3) d'objets (WQ1', WQ2, WQ2', WZ1, WZ1', WZ2) du premier groupe de types d'objets (WTG1) d'une tâche (A, A1... A9) par le nombre (n, n1... n3) de tous les objets (WQ1', WQ2, WQ2', WZ1, WZ1', WZ2) de cette tâche (A, A1... A9).

**15.** Procédé selon l'une des revendications 1 à 14, **caractérisé en ce que** le premier équipement de chargement source (Q1, Q1') avec l'au moins un objet (WQ1', WZ1, WZ1') de la première partie de tâche (AT1) est attribué à la deuxième partie de tâche (AT2), transportée vers un premier poste de préparation de commandes manuel (KM1, KM1') et y est mis à disposition puis l'au moins un objet (WQ1', WZ1, WZ1') mentionné de la deuxième partie de tâche est chargé manuellement dans ou sur un premier ou un deuxième équipement de chargement cible (Z1, Z1', Z2),

- lorsque le dépôt de plusieurs objets (WQ2, WQ2', WZ2) du deuxième groupe de types d'objets (WTG2) de la deuxième partie de tâche (AT2) dans le premier ou deuxième équipement de chargement cible (Z1, Z1', Z2) au niveau du premier poste de préparation de commandes manuel (KM1, KM1') a lieu plus rapidement que le dépôt du même nombre d'objets (WQ1', WZ1, WZ1') de la première partie de tâche (AT1) dans le premier équipement de chargement cible (Z1, Z1') au niveau du premier poste de préparation de commandes automatique (KA1, KA1') ou
- lorsque tous les objets (WQ2, WQ2', WZ2) du deuxième groupe de types d'objets (WTG2) de la deuxième partie de tâche (AT2) ont déjà été chargés, au niveau du premier poste de préparation de commandes manuel (KM1, KM1') dans un premier ou deuxième équipement de chargement cible (Z1, Z1', Z2).

**16.** Procédé selon l'une des revendications 1 à 15, **caractérisé en ce que**

- la mise à disposition de plusieurs objets (WQ1', WZ1, WZ1') de la première partie de tâche (AT1) au niveau du premier poste de préparation de commandes automatique (KA1, KA1') a lieu avec un tri selon le nombre de pièces (n, n1... n3), indiqué dans les lignes de la tâche (AZ), pour les objets (WQ1', WZ1, WZ1') de la première partie de tâche (AT1), à partir du nombre le plus faible par ordre croissant des nombres de pièces (n, n1... n3) et
- la mise à disposition de plusieurs objets (WQ2, WQ2', WZ2) de la deuxième partie de tâche (AT2) au niveau du premier poste de préparation de commandes manuel (KM1, KM1') a lieu avec un tri selon le nombre de pièces (n, n1... n3), indiqué dans les lignes de la tâche (AZ), pour les objets (WQ2, WQ2', WZ2) de la deuxième partie de tâche (AT2), à partir du nombre le plus élevé par ordre décroissant des nombres de pièces (n, n1... n3).

**17.** Procédé selon l'une des revendications 1 à 15, **caractérisé en ce que**

- le retrait de plusieurs objets (WQ1', WZ1, WZ1') de la première partie de tâche (AT1) d'au moins un premier équipement de chargement source (Q1, Q1') et le dépôt de ces objets (WQ1', WZ1, WZ1') dans ou sur au moins un premier équipement de chargement cible (Z1, Z1') a lieu avec un tri selon le nombre de pièces (n, n1... n3), indiqué dans les lignes de la tâche (AZ), pour les objets (WQ1', WZ1, WZ1') de la première partie de tâche (AT1), dans lequel le retrait et le dépôt ont lieu à partir du nombre le plus faible par ordre croissant des nombres de pièces (n, n1... n3) et
- le retrait de plusieurs objets (WQ2, WQ2', WZ2) de la deuxième partie de tâche (AT2) d'au moins un deuxième équipement de chargement source (Q2, Q2') et le dépôt de ces objets (WQ2, WQ2', WZ2) dans ou sur au moins un premier ou deuxième équipement de chargement cible (Z1, Z1', Z2) a lieu avec un tri selon le nombre de pièces (n, n1... n3), indiqué dans les lignes de la tâche (AZ), pour les objets (WQ2, WQ2', WZ2) de la deuxième partie de tâche (AT2), dans lequel le retrait et le dépôt ont lieu à partir du nombre le plus élevé par ordre décroissant des nombres de pièces (n, n1... n3).

**18.** Procédé selon l'une des revendications 1 à 15, **caractérisé en ce que**

- à un type d'objets (WT1... WT3) est attribué un taux d'erreur (F, F1... F3),
- la mise à disposition de plusieurs objets (WQ1', WZ1, WZ1') de la première partie de tâche (AT1) au niveau du premier poste de préparation de commandes automatique (KA1, KA1') a lieu avec un tri selon le taux d'erreur (F, F1... F3), indiqué dans les lignes de la tâche (AZ) pour les objets (WQ1', WQZ1, WZ1') de la première partie de tâche (AT1) ou selon un paramètre dérivé du taux d'erreur mentionné (F, F1... F3) et du nombre de pièces (n, n1... n3), indiqué dans les lignes de la tâche (AZ), pour les objets (WQ2, WQ2', WZ2) de la première partie de tâche (AT1), dans lequel la mise à disposition des objets (WQ1', WZ1, WZ1') de la première partie de tâche (AT1) a lieu, dans le cas d'un tri selon le taux d'erreur (F, F1... F3), à partir du plus faible par ordre croissant des taux d'erreur (F, F1... F3) ou, dans le cas d'un tri selon le paramètre mentionné, à partir de la valeur la plus faible par ordre croissant des paramètres et
- la mise à disposition de plusieurs objets (WQ2, WQ2', WZ2) de la deuxième partie de tâche (AT2) au niveau du premier poste de préparation de commandes manuel (KM1) a lieu avec un tri selon le taux d'erreur (F, F1... F3), indiqué dans les lignes de la tâche (AZ) pour les objets (WQ2, WQ2', WZ2) de la deuxième partie de tâche (AT2) ou selon un paramètre dérivé du taux d'erreur mentionné (F, F1... F3) et du nombre de pièces (n, n1... n3), indiqué dans les lignes de la tâche (AZ), pour les objets (WQ2, WQ2', WZ2) de la deuxième partie de tâche (AT2), dans lequel la mise à disposition des objets (WQ2, WQ2', WZ2) de la deuxième partie de tâche (AT2) a lieu, dans le cas d'un tri selon le taux d'erreur (F, F1... F3), à partir du plus faible par ordre croissant des taux d'erreur (F, F1... F3) ou, dans le cas d'un tri selon le paramètre mentionné, à partir de la valeur la plus faible par ordre croissant des paramètres.

**19.** Procédé selon l'une des revendications 1 à 15 ou selon la revendication 18, **caractérisé en ce que**

- à un type d'objets (WT1... WT3) est attribué un taux d'erreur (F, F1... F3),
- le retrait de plusieurs objets (WQ1', WZ1, WZ1') de la première partie de tâche (AT1) d'au moins un premier équipement de chargement source (Q1, Q1') et le dépôt de ces objets (WQ1', WZ1, WZ1') dans ou sur au moins un premier équipement de chargement cible (Z1, Z1') a lieu avec un tri selon le taux d'erreur (F, F1... F3), indiqué dans les lignes de la tâche (AZ) pour les objets (WQ1', WQZ1, WZ1') de la première partie de tâche (AT1) ou selon un paramètre dérivé du taux d'erreur mentionné (F, F1... F3) et du nombre de pièces (n, n1... n3), indiqué dans les lignes de la tâche (AZ), pour les objets (WQ2, WQ2', WZ2) de la première partie de tâche (AT1), dans lequel le retrait et le dépôt ont lieu, dans le cas d'un tri selon le taux d'erreur (F, F1... F3), à partir du plus faible par ordre croissant des taux d'erreur (F, F1... F3) ou, dans le cas d'un tri selon le paramètre mentionné, à partir de la valeur la plus faible par ordre croissant des paramètres et
- le retrait de plusieurs objets (WQ2, WQ2', WZ2) de la deuxième partie de tâche (AT2) d'au moins un deuxième équipement de chargement source (Q2, Q2') et le dépôt de ces objets (WQ2, WQ2', WZ2) dans ou sur au moins un premier ou deuxième équipement de chargement cible (Z1, Z1', Z2) a lieu avec un tri selon le taux d'erreur (F, F1... F3), indiqué dans les lignes de la tâche (AZ) pour les objets (WQ2, WQ2', WZ2) de la deuxième partie de tâche (AT2) ou selon un paramètre dérivé du taux d'erreur mentionné (F, F1... F3) et du nombre de pièces (n, n1... n3), indiqué dans les lignes de la tâche (AZ), pour les objets (WQ2, WQ2', WZ2) de la deuxième partie de tâche (AT2), dans lequel le retrait et le dépôt ont lieu, dans le cas d'un tri selon le taux d'erreur (F, F1... F3), à partir du plus élevé par ordre décroissant des taux d'erreur (F, F1... F3) ou, dans le cas d'un tri selon le paramètre mentionné, à partir de la valeur la plus élevée par ordre décroissant des paramètres.

**20.** Procédé selon l'une des revendications 1 à 19, **caractérisé en ce que**

- le premier groupe de types d'objets (WTG1) comprend un premier sous-groupe de types d'objets (WTUG1), qui contient les types d'objets (WT1... WT3) qui peuvent être manipulés automatiquement avec une pince d'un premier type et un deuxième sous-groupe de types d'objets (WTUG2), qui contient les types d'objets (WT1... WT3) qui ne peuvent pas être manipulés automatiquement avec la pince du premier type ou de manière seulement limitée, mais qui peuvent être manipulés automatiquement avec une pince d'un deuxième type,
- à l'étape c), l'appartenance des objets (WQ1', WQ2, WQ2', WZ1, WZ1', WZ2) au premier sous-groupe de types d'objets (WTUG1) et au deuxième sous-groupe de types d'objets (WTUG2) est en outre déterminée et
- à l'étape d), une première sous-partie de tâche (ATU1) de la première partie de tâche (AT1) est déterminée, dont au moins un objet (WQ1', WZ1, WZ1') appartient au premier sous-groupe de types d'objets (WTUG1) et peut donc être manipulé automatiquement avec une pince du premier type, et une deuxième sous-partie de tâche (ATU2) de la première partie de tâche (AT1) est déterminée, dont au moins un objet (WQ2, WQ2', WZ2) appartient au deuxième sous-groupe de types d'objets (WTUG2) et ne peut donc pas être manipulée automatiquement avec la pince du premier type ou de manière seulement limitée, mais qui peut être manipulée automatiquement avec la pince du deuxième type.

**21.** Système de stockage et de préparation de commandes (1) pour la préparation de commandes d'objets (WQ1', WQ2, WQ2', WZ1, WZ1', WZ2) d'équipements de chargement sources (Q1, Q1', Q2, Q2') dans ou sur des équipements de chargement cibles (Z1, Z1', Z2, Z3), comprenant

une zone de stockage (L)

- pour la mise à disposition des objets (WQ1', WQ2, WQ2', WZ1, WZ1', WZ2) dans ou sur des équipements de chargement sources (Q1, Q1', Q2, Q2'), un système de commande (15) pour
- la saisie de tâches (A, A1... A9) pour la préparation de commandes d'objets (WQ1', WQ2, WQ2', WZ1, WZ1', WZ2) et détermination des objets (WQ1', WQ2, WQ2', WZ1, WZ1', WZ2) nécessaires pour ces tâches (A, A1... A9), dans lequel au moins une tâche (A, A1... A9) parmi les tâches (A, A1... A9) comprend plusieurs lignes de tâche (AZ) et dans lequel chaque ligne de tâche (AZ) spécifie au moins un objet (WQ1', WQ2, WQ2', WZ1, WZ1', WZ2) selon son type d'objet (WT1... WT3) et le nombre de pièces (n, n1... n3) à préparer,

- la détermination de l'appartenance des objets (WQ1', WQ2, WQ2', WZ1, WZ1', WZ2) nécessaires pour le traitement de la tâche mentionnée à des groupes de types d'objets (WTG1... WTG3), qui comprennent chacun plusieurs types d'objets (WT1... WT3), dans lequel un premier groupe de types d'objets (WTG1) contient des types d'objets (WT1... WT3) qui peuvent être manipulés automatiquement, et un deuxième groupe de types d'objets (WTG2) contient des types d'objets (WT1... WT3) qui ne peuvent pas être manipulés automatiquement ou de manière seulement limitée, mais qui peuvent être manipulés manuellement et

- détermination d'une première partie de tâche (AT1) dont au moins un objet (WQ1', WZ1, WZ1') appartient au premier groupe de types d'objets (WTG1) et peut donc être manipulé automatiquement, et d'une deuxième partie de tâche (AT2), dont au moins un objet (WQ2, WQ2', WZ2) appartient au deuxième groupe de types d'objets (WTG2) et ne peut pas être manipulé automatiquement ou de manière seulement limitée, mais peut être manipulé manuellement et

un système de convoyage pour

- la sortie d'un premier équipement de chargement source (Q1, Q1') avec l'au moins un objet (WQ1', WZ1, WZ1') de la première partie de tâche (AT1) hors de la zone de stockage (L) du système de stockage et de préparation de commandes (1), le transport du premier équipement de chargement source (Q1, Q1') vers un premier poste de préparation de commandes automatique (KA1, KA1'), la mise à disposition du premier équipement de chargement source (Q1, Q1') sur le premier poste de préparation de commandes automatique (KA1, KA1'), au niveau duquel l'au moins un objet (WQ1', WZ1, WZ1') de la première partie de tâche (AT1) peut être retiré automatiquement du premier équipement de chargement source (Q1, Q1') et

- la sortie d'un deuxième équipement de chargement source (Q2, Q2') avec l'au moins un objet (WQ2, WQ2', WZ2) de la deuxième partie de tâche (AT2) hors de la zone de stockage (L) du système de stockage et de préparation de commandes (1), le transport du deuxième équipement de chargement source (Q2, Q2') vers un premier poste de préparation de commandes manuel (KM1, KM1'), la mise à disposition du deuxième équipement de chargement source (Q2, Q2') sur le premier poste de préparation de commandes manuel (KM1, KM1') , au niveau duquel l'au moins un objet (WQ2, WQ2', WZ2) de la deuxième partie de tâche (AT2) peut être retiré manuellement du deuxième équipement de chargement source (Q2, Q2'),

dans lequel le premier poste de préparation de commandes automatique (KA1, KA1') est conçu pour un dépôt automatique de l'au moins un objet (WQ1', WZ1, WZ1') de la première partie de tâche (AT1) et le premier poste de préparation de commandes manuel (KM1, KM1') est conçu pour un dépôt manuel de l'au moins un objet (WQ2, WQ2', WZ2) de la deuxième partie de tâche (AT2) dans ou sur un équipement de chargement cible (Z1, Z1', Z2, Z3),

**caractérisé en ce que**

le système de commande (15) est en outre conçu pour affecter le premier équipement de chargement source (Q1, Q1') avec l'au moins un objet (WQ1', WZ1, WZ1') de la première partie de tâche (AT1) à la deuxième partie de tâche (AT2), le transporter, à l'aide du système de convoyage, vers le premier poste de préparation de commandes manuel (KM1, KM1') et de l'y mettre à disposition, puis pour ordonner un chargement manuel de l'au moins un objet (WQ1', WZ1, WZ1') de la deuxième partie de tâche dans ou sur un équipement de chargement cible (Z1, Z1', Z2), lorsque, pour l'au moins un objet (WQ1', WZ1, WZ1') de la première partie de tâche (AT1), dans la ligne de tâche (AZ) correspondante, un nombre de pièces (n, n1... n3) ets indiqué, qui dépasse une valeur seuil du nombre de pièces.

**22.** Système de stockage et de préparation de commandes (1) selon la revendication 21, **caractérisé en ce que** le système de convoyage (4, 7... 11) est conçu

- pour le transport des premiers équipements de chargement sources (Q1, Q1') entre la zone de stockage (L) et le premier poste de préparation de commandes automatique (KA1, KA1') et/ou

- pour le transport des deuxièmes équipements de chargement sources (Q2, Q2') entre la zone de stockage (L) et le premier poste de préparation de commandes manuel (KM1, KM1') et/ou

- pour le transport des premiers équipements de chargement cibles (Z1, Z1') entre le premier poste de préparation de commandes automatique (KA1, KA1') et le premier poste de préparation de commandes manuel (KM1, KM1') ou entre le premier poste de préparation de commandes automatique (KA1, KA1') et le deuxième poste de préparation de commandes automatique ou manuel (KA2, KM2) et/ou

- pour le transport des deuxièmes équipements de chargement cibles (Z2) entre le premier poste de préparation de commandes manuel (KM1, KM1') et le deuxième poste de préparation de commandes automatique ou manuel (KA2, KM2) et/ou

- pour le transport des premiers équipements de chargement cibles (Z1, Z1') à partir du premier poste de préparation de commandes automatique (KA1, KA1'), à partir du premier poste de préparation de commandes manuel (KM1, KM1') ou à partir du deuxième poste de préparation de commandes automatique ou manuel (KA2, KM2) et/ou

- pour le transport des deuxièmes équipements de chargement cibles (Z2) à partir du deuxième poste de préparation de commandes automatique ou manuel (KA2, KM2) et/ou

- pour le transport des troisièmes équipements de chargement cibles (Z3) à partir du deuxième poste de préparation de commandes automatique ou manuel (KA2, KM2).

23. Système de stockage et de préparation de commandes (1) selon la revendication 21 ou 22, **caractérisé en ce que**, au niveau du deuxième poste de préparation de commandes automatique (KA2), est prévu un mécanisme pour le dépôt automatique de l'ensemble du contenu

- du premier équipement de chargement cible (Z1, Z1') dans le deuxième équipement de chargement cible (Z2) et/ou

- du premier équipement de chargement cible (Z1, Z1') dans le troisième équipement de chargement cible (Z3) et/ou

- du deuxième équipement de chargement cible (Z2) dans le premier équipement de chargement cible (Z1, Z1') et/ou

- du deuxième équipement de chargement cible (Z2) dans le troisième équipement de chargement cible (Z3),

en une seule fois.

24. Système de stockage et de préparation de commandes (1) selon l'une des revendications 21 à 23, **caractérisé en ce que**

- le premier groupe de types d'objets (WTG1) comprend un premier sous-groupe de types d'objets (WTUG1), qui contient les types d'objets (WT1... WT3) qui peuvent être manipulés automatiquement avec une pince d'un premier type et un deuxième sous-groupe de types d'objets (WTUG2), qui contient les types d'objets (WT1... WT3) qui ne peuvent pas être manipulés automatiquement avec la pince du premier type ou de manière seulement limitée, mais qui peuvent être manipulés automatiquement avec une pince d'un deuxième type et

le système de commande (15) est en outre conçu pour

- la détermination de l'appartenance des objets (WQ1', WQ2, WQ2', WZ1, WZ1', WZ2) nécessaires pour le traitement de la tâche mentionnée au premier sous-groupe de types d'objets (WTUG1) et au deuxième sous-groupe de types d'objets (WTUG2) et

- la détermination d'une première sous-partie de tâche (ATU1) de la première partie de tâche (AT1), dont au moins un objet (WQ1', WZ1, WZ1') appartient au premier sous-groupe de types d'objets (WTUG1) et peut donc être manipulé automatiquement avec une pince du premier type, et pour la détermination d'une deuxième sous-partie de tâche (ATU2) de la première partie de tâche (AT1), dont au moins un objet (WQ2, WQ2', WZ2) appartient au deuxième sous-groupe de types d'objets (WTUG2) et ne peut donc pas être manipulé automatiquement avec la pince du premier type ou de manière seulement limitée, mais qui peut être manipulé automatiquement avec la pince du deuxième type.

# Fig. 1

# Fig. 2

# Fig. 3

**Fig. 4**

**Fig. 5**

**Fig. 6**

F=0%
F=10%
F=20%
F=30%

WTG1

SW1

F=40%
F=50%
F=60%
F=70%
F=80%
F=90%
F=100%

WTG2

**Fig. 7**

F=0%
F=10%
F=20%
F=30%

WTG1

SW1
SW3

F=40%
F=50%
F=60%

WTG3

SW2

F=70%
F=80%
F=90%
F=100%

WTG2

**Fig. 8**

# Fig. 9

# Fig. 10

**Fig. 11**

**Fig. 12**

**Fig. 13**

**Fig. 14**

**Fig. 15**

Fig. 16

Fig. 17

KA1

L | Q1 → | KAU1 | Z1 → | KAU2 | Z1 → | KM1 | Z1 →
Q3
Q2

**Fig. 18**

Q3
Q1
L | Q2 → | KM1 | Z1 → | KAU1 | Z1 → | KAU2 | Z1 →

KA1

**Fig. 19**

KA1

L | Q1 → | KAU1 | Z1 → | KAU2 | Z1 → | KM2 / KA2 | Z3 →
Q3
Q2 → | KM1 | Z2

**Fig. 20**

**Fig. 21**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2297005 B1
- WO 2017198280 A1
- WO 2016033628 A1
- WO 2018132855 A1
- AT 502072018
- AT 502172018
- AT 508862018
- WO 2013090969 A1